(19) Europäisches Patentamt / European Patent Office / Office européen des brevets

(11) **EP 4 518 183 A1**

(12) **EUROPEAN PATENT APPLICATION**
published in accordance with Art. 153(4) EPC

(43) Date of publication:
05.03.2025 Bulletin 2025/10

(21) Application number: 23795913.5

(22) Date of filing: 03.03.2023

(51) International Patent Classification (IPC):
$H04B\ 7/08$ (2006.01)    $H04B\ 7/06$ (2006.01)
$H04L\ 5/02$ (2006.01)    $H04W\ 16/28$ (2009.01)
$H04W\ 88/02$ (2009.01)

(52) Cooperative Patent Classification (CPC):
H04B 7/06; H04B 7/08; H04L 5/02; H04W 16/28;
H04W 88/02

(86) International application number:
PCT/JP2023/008142

(87) International publication number:
WO 2023/210165 (02.11.2023 Gazette 2023/44)

(84) Designated Contracting States:
AL AT BE BG CH CY CZ DE DK EE ES FI FR GB
GR HR HU IE IS IT LI LT LU LV MC ME MK MT NL
NO PL PT RO RS SE SI SK SM TR
Designated Extension States:
BA
Designated Validation States:
KH MA MD TN

(30) Priority: 25.04.2022 JP 2022071808

(71) Applicant: **Panasonic Intellectual Property**
**Corporation**
**of America**
**Torrance, CA 90504 (US)**

(72) Inventor: **MURAKAMI, Yutaka**
**Kadoma-shi, Osaka 571-0057 (JP)**

(74) Representative: **Grünecker Patent- und**
**Rechtsanwälte**
**PartG mbB**
**Leopoldstraße 4**
**80802 München (DE)**

(54) **COMMUNICATION DEVICE AND COMMUNICATION METHOD**

(57)    This communication device performs communication with a plurality of communication counterpart devices, and comprises: a reception unit which generates a reception beam and uses the reception beam to receive a modulation signal transmitted by any of the plurality of communication counterpart devices; and a transmission unit which generates a transmission beam and uses the transmission beam to transmit a modulation signal to any of the plurality of communication counterpart devices. The reception unit, in a first time of a first frequency band, uses the reception beam to receive a modulation signal from a first communication counterpart device. The transmission unit, in the first time of the first frequency band, uses the transmission beam to transmit a modulation signal to a second communication counterpart device.

FIG. 11

## Description

Technical Field

The present disclosure relates to a communication apparatus and a communication method.

Background Art

For example, a communication method of improving data transmission efficiency in a radio communication system and improving delay in communication includes Full Duplex communication.

An example of the Full Duplex communication is disclosed in Patent Literature (hereinafter referred to as "PTL") 1.

In the radio communication system described in PTL 1, access point 11 can perform Full Duplex communication, and at the same frequency band (same channel), it is possible to perform frame reception from radio terminal 1 and frame transmission to radio terminal 2 simultaneously. In addition, the frame reception at access point 11 from radio terminal 2 and the frame transmission from access point 11 to radio terminal 1 are performed simultaneously at the same frequency band.

Citation List

Patent Literature

PTL 1
Japanese Unexamined Patent Application Publication (Translation of PCT Application) No. 2018-152723

Summary of Invention

Technical Problem

However, access point 11 of PTL 1 needs to be provided with a mechanism for canceling a self-interference signal generated in its own apparatus during the Full Duplex communication. That is, during the Full Duplex communication, signals wrap around from a transmitter to a receiver of access point 11, or signal reflection occurs, which involves a problem in that these signals become self-interference signals and thus deteriorate a characteristic of a received signal.

A non-limiting and exemplary embodiment of the present disclosure facilitates providing a technology for achieving a higher possibility of separating a transmission beam and a received beam, a reduced self-interference, and an improved quality of data in a received signal.

Solution to Problem

A communicarton apparatus according to one aspect of the present disclosure is a communicarton apparatus performing communication with a plurality of communication counterpart apparatuses, the communication apparatus including: a receiver that generates a received beam and receives, using the received beam, a modulation signal transmitted by any of the plurality of communication counterpart apparatuses; and a transmitter that generates a transmission beam and transmits, using the transmission beam, a modulation signal to any of the plurality of communication counterpart apparatuses, in which: the receiver receives, using the received beam, a modulation signal from a first communication counterpart apparatus in a first time of a first frequency band, and the transmitter transmits, using the transmission beam, a modulation signal to a second communication counterpart apparatus in the first time of the first frequency band.

A communication method according to one aspect of the present disclosure is for a communication apparatus performing communication with a plurality of communication counterpart apparatuses, the communication method including: generating a received beam and receiving, using the received beam, a modulation signal transmitted by any of the plurality of communication counterpart apparatuses; and generating a transmission beam and transmitting, using the transmission beam, a modulation signal to any of the plurality of communication counterpart apparatuses, in which, when communication is performed: receiving, using the received beam, a modulation signal from a first communication counterpart apparatus in a first time of a first frequency band, and transmitting, using the transmission beam, a modulation signal to a second communication counterpart apparatus in the first time of the first frequency band.

It should be noted that general or specific embodiments may be implemented as a system, an apparatus, a method, an integrated circuit, a computer program, a storage medium, or any selective combination thereof.

Advantageous Effects of Invention

According to a non-limiting and exemplary embodiment of the present disclosure, it is possible to achieve a higher possibility of separating a transmission beam and a received beam, a reduced self-interference, and an improved quality of data in a received signal.

Additional benefits and advantages of the disclosed embodiments will become apparent from the specification and drawings. The benefits and/or advantages may be individually obtained by the various embodiments and features of the specification and drawings, which need not all be provided in order to obtain one or more of such benefits and/or advantages.

Brief Description of Drawings

FIG. 1A illustrates an exemplary configuration of a communication apparatus in Embodiment 1;

FIG. 1B illustrates an exemplary configuration of the communication apparatus different from the configuration in FIG. 1A in Embodiment 1;

FIG. 1C illustrates an exemplary configuration of the communication apparatus different from the configurations in FIGS. 1A and 1B in Embodiment 1;

FIG. 2 illustrates an exemplary configuration of an i-th transmitter;

FIG. 3 illustrates an exemplary configuration of transmission panel antenna i in FIGS. 1A, 1B, and 1C;

FIG. 4 illustrates an exemplary configuration of reception panel antenna i in FIGS. 1A, 1B, and 1C;

FIG. 5 illustrates an exemplary configuration of a transmission apparatus in a case of using an OFDM scheme;

FIG. 6 illustrates an exemplary configuration of a reception apparatus in a case of using an OFDM scheme;

FIG. 7 illustrates an exemplary configuration of the reception apparatus in a case of using a single-carrier scheme based on DFT;

FIG. 8 illustrates an exemplary configuration of the reception apparatus in a case of using a single-carrier scheme based on time domain;

FIG. 9 illustrates an exemplary configuration of gNB and NR-UE;

FIG. 10 illustrates an exemplary modulation signal transmitted bubase station #1 in FIG. 9;

FIG. 11 illustrates an exemplary radio system related to the present invention;

FIG. 12A illustrates exemplary communication statuses of TRP 1, TRP 2, and NR-UE 1 in a frequency axis in FIG. 11;

FIG. 12B illustrates exemplary transmission statuses of TRP 1 and NR-UE 1 in a time axis in FIG. 11 and FIG. 12A;

FIG. 12C illustrates exemplary transmission statuses of TRP 1 and NR-UE 1 in the time axis in FIG. 11 and FIG. 12A, which are different from those in FIG. 12B;

FIG. 12D illustrates other exemplary transmission statuses of TRP1 and NR-UE 1 in the time axis in FIG. 11 and FIG. 12A, which are different from those in FIG. 12B;

FIG. 12E illustrates still other exemplary transmission statuses of TRP1 and NR-UE 1 in the time axis in FIG. 11 and FIG. 12A, which are different from those in FIG. 12B;

FIG. 12F illustrates yet other exemplary transmission statuses of TRP1 and NR-UE 1 in the time axis in FIG. 11 and FIG. 12A, which are different from those in FIG. 12B;

FIG. 13A illustrates an exemplary configuration of an apparatus of TRP 1;

FIG. 13B illustrates an exemplary configuration of an apparatus of TRP 2;

FIG. 14 illustrates an exemplary configuration of an apparatus of NR-UE 1;

FIG. 15 illustrates an exemplary radio system different from that in FIG. 11;

FIG. 16A illustrates exemplary communication statuses of TRP 1, TRP 2, NR-UE 1, NR-UE 2, and NR-UE 3 in a frequency axis in FIG. 15;

FIG. 16B illustrates exemplary transmission statuses of TRP and NR-UE 2 in time axis in FIG. 15 and FIG. 16A;

FIG. 16C illustrates exemplary transmission statuses of TRP and NR-UE 2 in the time axis in FIG. 15 and FIG. 16A, which are different from those in FIG. 16B;

FIG. 16D illustrates other exemplary transmission statuses of TRP and NR-UE 2 in the time axis in FIG. 15 and FIG. 16A, which are different from those in FIG. 16B;

FIG. 16E illustrates still other exemplary transmission statuses of TRP and NR-UE 2 in the time axis in FIG. 15 and FIG. 16A, which are different from those in FIG. 16B;

FIG. 16F illustrates yet other exemplary transmission statuses of TRP and NR-UE 2 in the time axis in FIG. 15 and FIG. 16A, which are different from those in FIG. 16B;

FIG. 16G illustrates exemplary transmission statuses of TRP 2 and NR-UE 3 in the time axis in FIG. 15 and FIG. 16A;

FIG. 16H illustrates exemplary transmission statuses of TRP 2 and NR-UE 3 in the time axis in FIG. 15 and FIG. 16A, which are different from those in FIG. 16G;

FIG. 16I illustrates other exemplary transmission statuses of TRP 2 and NR-UE 3 in the time axis in FIG. 15 and FIG. 16A, which are different from those in FIG. 16G;

FIG. 16J illustrates still other exemplary transmission statuses of TRP 2 and NR-UE 3 in the time axis in FIG. 15 and FIG. 16A, which are different from those in FIG. 16G;

FIG. 16K illustrates yet other exemplary transmission statuses of TRP 2 and NR-UE 3 in the time axis in FIG. 15 and FIG. 16A, which are different from those in FIG. 16G;

FIG. 17 illustrates exemplary communication statuses of TRP 1, TRP 2, NR-UE 1, NR-UE 2, and NR-UE 3 in the frequency axis in FIG. 15, which are different from those in FIG. 16A;

FIG. 18 illustrates exemplary communication statuses of TRP 1, TRP 2, NR-UE 1, NR-UE 2, and NR-UE 3 in the frequency axis in FIG. 15, which are different from those in FIG. 16A and FIG. 17;

FIG. 19 illustrates an exemplary configuration of TRP 1 or TRP 2 in FIG. 15;

FIG. 20A illustrates an example of signal transmission performed by each of apparatuses of TRP X,

TRP Y, and NR-UE Z in a time axis;

FIG. 20B illustrates an example of signal transmission performed by each of apparatuses of TRP X, TRP Y, and NR-UE Z in the time axis, which is different from that in FIG. 20A;

FIG. 20C illustrates an example of signal transmission performed by each of apparatuses of TRP X, TRP Y, and NR-UE Z in the time axis, which is different from that in FIG. 20A and FIG. 20B;

FIG. 21 illustrates an exemplary radio system different from those in FIG. 11 and FIG. 15;

FIG. 22 illustrates exemplary communication statuses of TRP 1, TRP 2, and NR-UE 1 in a frequency axis in FIG. 21;

FIG. 23A illustrates exemplary communication statuses of TRP 1 and NR-UE 1 in the frequency axis in FIG. 21;

FIG. 23B illustrates exemplary communication statuses of TRP 2 and NR-UE 1 in the frequency axis in FIG. 21;

FIG. 23C illustrates exemplary communication statuses of TRP 1, TRP 2, and NR-UE 1 in the frequency axis in FIG. 21;

FIG. 24 illustrates an example when an NR-UE and a TRP perform TDD communication;

FIG. 25A illustrates a first example when an NR-UE and a TRP perform FDD communication;

FIG. 25B illustrates a second example when the NR-UE and the TRP perform the FDD communication;

FIG. 25C illustrates a third example when the NR-UE and the TRP perform the FDD communication;

FIG. 25D illustrates a fourth example when the NR-UE and the TRP perform the FDD communication;

FIG. 26 illustrates an exemplary radio system in Embodiment 2;

FIG. 27A illustrates exemplary communication statuses of TRP 1, TRP 2, NR-UE 1, NR-UE 4, and NR-UE 5 in a frequency axis in FIG. 26;

FIG. 27B illustrates exemplary presence sections of a downlink modulation signal transmitted by a TRP and an uplink modulation signal transmitted by an NR-UE in a time axis in situations of FIG. 26 and FIG. 27A;

FIG. 27C illustrates exemplary presence sections, which are different from those in FIG. 27B, of the downlink modulation signal transmitted by the TRP and the uplink modulation signal transmitted by the NR-UE in the time axis in the situations of FIG. 26 and FIG. 27A;

FIG. 27D illustrates other exemplary presence sections, which are different from those in FIG. 27B, of the downlink modulation signal transmitted by the TRP and the uplink modulation signal transmitted by the NR-UE in the time axis in the situations of FIG. 26 and FIG. 27A;

FIG. 27E illustrates still other exemplary presence sections, which are different from those in FIG. 27B, of the downlink modulation signal transmitted by the TRP and the uplink modulation signal transmitted by the NR-UE in the time axis in the situations of FIG. 26 and FIG. 27A;

FIG. 27F illustrates yet other exemplary presence sections, which are different from those in FIG. 27B, of the downlink modulation signal transmitted by the TRP and the uplink modulation signal transmitted by the NR-UE in the time axis in the situations of FIG. 26 and FIG. 27A;

FIG. 28 illustrates exemplary configurations in a time axis of the downlink modulation signal presence section and the uplink modulation signal presence section in FIG. 27B, FIG. 27C, FIG. 27D, FIG. 27E, or FIG. 27F;

FIG. 29 illustrates an exemplary radio system in Embodiment 3;

FIG. 30A illustrates an exemplary usage status of a first frequency (band) in a time axis;

FIG. 30B illustrates an exemplary usage status, which is different from that in FIG. 30A, of the first frequency (band) in the time axis;

FIG. 30C illustrates another exemplary usage status, which is different from that in FIG. 30A, of the first frequency (band) in the time axis;

FIG. 30D illustrates still another exemplary usage status, which is different from that in FIG. 30A, of the first frequency (band) in the time axis;

FIG. 30E illustrates yet another exemplary usage status, which is different from that in FIG. 30A, of the first frequency (band) in the time axis;

FIG. 31A illustrates another exemplary usage status of the first frequency (band) in the time axis;

FIG. 31B illustrates exemplary usage statuses of frequencies including the first frequency (band);

FIG. 32A illustrates still another exemplary usage status of the first frequency (band) in the time axis;

FIG. 32B illustrates an exemplary usage status, which is different from that in FIG. 32A, of the first frequency (band) in the time axis;

FIG. 32C illustrates another exemplary usage status, which is different from that in FIG. 32A, of the first frequency (band) in the time axis;

FIG. 32D illustrates still another exemplary usage status, which is different from that in FIG. 32A, of the first frequency (band) in the time axis;

FIG. 32E illustrates yet another exemplary usage status, which is different from that in FIG. 32A, of the first frequency (band) in the time axis;

FIG. 33A illustrates yet another exemplary usage status of the first frequency (band) in the time axis;

FIG. 33B illustrates other exemplary usage statuses of frequencies including the first frequency (band);

FIG. 34A illustrates an exemplary radio system in Embodiment 4;

FIG. 34B illustrates exemplary communication statuses of TRP 1, TRP 2, and NR-UE 1 in a frequency axis in FIG. 34A;

FIG. 35A illustrates an exemplary radio system in Embodiment 4;

FIG. 35B illustrates exemplary communication statuses of TRP 1, TRP 2, and NR-UE 1 in a frequency axis in FIG. 35A;

FIG. 36A illustrates exemplary transmission statuses of TRP 1, TRP 2, and NR-UE 1 in a time axis in FIG. 34A and FIG. 35A;

FIG. 36B illustrates an example in which a "first time" and a "second time" are different from those in FIG. 36A;

FIG. 36C illustrates another example in which the "first time" and the "second time" are different from those in FIG. 36A;

FIG. 36D illustrates still another example in which the "first time" and the "second time" are different from those in FIG. 36A;

FIG. 36E illustrates yet another example in which the "first time" and the "second time" are different from those in FIG. 36A;

FIG. 37A illustrates another exemplary radio system in Embodiment 4;

FIG. 37B illustrates exemplary communication statuses of TRP 1, TRP 2, and NR-UE 1 in a frequency axis in FIG. 37A;

FIG. 37C illustrates other exemplary communication statuses of TRP 1, TRP 2, and NR-UE 1 in the frequency axis in FIG. 37A;

FIG. 38A illustrates still another exemplary radio system in Embodiment 4;

FIG. 38B illustrates exemplary communication statuses of TRP 1, TRP 2, and NR-UE 1 in a frequency axis in FIG. 38A;

FIG. 38C illustrates other exemplary transmission statuses of TRP 1, TRP 2, and NR-UE 1 in the frequency axis in FIG. 38A;

FIG. 39A illustrates exemplary transmission statuses of TRP 1, TRP 2, and NR-UE 1 in a case where a state in FIG. 37A and a state in FIG. 38A are switched in time;

FIG. 39B illustrates an example in which a "first time" and a "second time" are different from those in FIG. 39A;

FIG. 39C illustrates another example in which the "first time" and the "second time" are different from those in FIG. 39A;

FIG. 39D illustrates still another example in which the "first time" and the "second time" are different from those in FIG. 39A;

FIG. 39E illustrates yet another example in which the "first time" and the "second time" are different from those in FIG. 39A;

FIG. 40A illustrates still another exemplary radio system in Embodiment 4;

FIG. 40B illustrates exemplary transmission statuses of TRP 1, TRP 2, and NR-UE 1 in a time axis in FIG. 40A;

FIG. 41A illustrates exemplary transmission statuses of TRP 1, TRP 2, and NR-UE 1 in a case where a state in FIG. 34A and a state in FIG. 40A are switched in time;

FIG. 41B illustrates exemplary transmission statuses, which are different from those in FIG. 41A, of TRP 1, TRP 2, and NR-UE 1 in a case where the state in FIG. 34A and the state in FIG. 40A are switched in time;

FIG. 41C illustrates exemplary transmission statuses, which are different from those in FIG. 41A and FIG. 41B, of TRP 1, TRP 2, and NR-UE 1 in a case where the state in FIG. 34A and the state in FIG. 40A are switched in time;

FIG. 42A illustrates exemplary transmission statuses of TRP 1, TRP 2, and NR-UE 1 in a case where the state in FIG. 34A, a state in FIG. 35A, and the state in FIG. 40A are switched in time;

FIG. 42B illustrates exemplary transmission statuses, which are different from those in FIG. 42A, of TRP 1, TRP 2, and NR-UE 1 in a case where the state in FIG. 34A, the state in FIG. 35A, and the state in FIG. 40A are switched in time;

FIG. 42C illustrates exemplary transmission statuses, which are different from those in FIG. 42A and FIG. 42B, of TRP 1, TRP 2, and NR-UE 1 in a case where the state in FIG. 34A, the state in FIG. 35A, and the state in FIG. 40A are switched in time;

FIG. 43A illustrates still another exemplary radio system in Embodiment 4;

FIG. 43B illustrates exemplary communication statuses of TRP 1, TRP 2, TRP 3, and NR-UE 1 in a frequency axis in FIG. 43A;

FIG. 43C illustrates transmission statuses of TRP 1 and NR-UE 1 in a time axis in a case where TRP 1, TRP 2, TRP 3, and NR-UE 1 in FIG. 43A use the frequency as in FIG. 43B;

FIG. 44A illustrates still another exemplary radio system in Embodiment 4;

FIG. 44B illustrates exemplary communication statuses of TRP 1, TRP 2, TRP 3, and NR-UE 1 in a frequency axis in FIG. 44A;

FIG. 44C illustrates transmission statuses of TRP 1 and NR-UE 1 in a time axis in a case where TRP 1, TRP 2, TRP 3, and NR-UE 1 in FIG. 44A use the frequency as in FIG. 44B;

FIG. 45A illustrates still another exemplary radio system in Embodiment 4;

FIG. 45B illustrates exemplary communication statuses of TRP 1, TRP 2, TRP 3, and NR-UE 1 in a frequency axis in FIG. 45A;

FIG. 45C illustrates transmission statuses of TRP 1 and NR-UE 1 in a time axis in a case where TRP 1, TRP 2, TRP 3, and NR-UE 1 in FIG. 45A use the frequency as in FIG. 45B;

FIG. 46A illustrates yet another exemplary radio system in Embodiment 4;

FIG. 46B illustrates exemplary communication statuses of TRP 1, TRP 2, TRP 3, and NR-UE 1 in a frequency axis in FIG. 46A;

FIG. 46C illustrates transmission statuses of TRP 1 and NR-UE 1 in a time axis in a case where TRP 1, TRP 2, TRP 3, and NR-UE 1 in FIG. 46A use the frequency as in FIG. 46B;
FIG. 47 illustrates an exemplary radio system in Embodiment 5;
FIG. 48A illustrates exemplary communication statuses of TRP 1, TRP 2, NR-UE 1, NR-UE 2, and NR-UE 3 in a frequency axis in FIG. 47;
FIG. 48B illustrates exemplary transmission statuses of TRP 1, TRP 2, NR-UE 1, NR-UE 2, and NR-UE 3 in FIG. 47;
FIG. 48C illustrates an exemplary configuration of each of downlink modulation signal transmission sections and uplink modulation signal transmission sections in FIG. 48B;
FIG. 48D illustrates an exemplary configuration, which is different from that in FIG. 48C, of each of the downlink modulation signal transmission sections and the uplink modulation signal transmission sections in FIG. 48B;
FIG. 48E illustrates an exemplary configuration, which is different from those in FIG. 48C and FIG. 48D, of each of the downlink modulation signal transmission sections and the uplink modulation signal transmission sections in FIG. 48B;
FIG. 49 illustrates another exemplary radio system in Embodiment 5;
FIG. 50A illustrates exemplary communication statuses of TRP 1, NR-UE 1, NR-UE 2, and NR-UE 3 in a frequency axis in FIG. 49;
FIG. 50B illustrates exemplary transmission statuses of TRP 1, NR-UE 1, NR-UE 2, and NR-UE 3 in FIG. 49;
FIG. 50C illustrates an exemplary configuration of each of downlink modulation signal transmission sections and uplink modulation signal transmission sections in FIG. 50B;
FIG. 50D illustrates an exemplary configuration, which is different from that in FIG. 50C, of each of the downlink modulation signal transmission sections and the uplink modulation signal transmission sections in FIG. 50B;
FIG. 50E illustrates an exemplary configuration, which is different from those in FIG. 50C and FIG. 50D, of each of the downlink modulation signal transmission sections and the uplink modulation signal transmission sections in FIG. 50B;
FIG. 51A illustrates an exemplary radio system in Embodiment 6;
FIG. 51B illustrates exemplary communication statuses of TRP 1 and NR-UE 1 in a frequency axis in FIG. 51A;
FIG. 51C illustrates exemplary communication statuses of NR-UE 1 and TRP 1 in time in FIG. 51A;
FIG. 52A illustrates another exemplary radio system in Embodiment 6;
FIG. 52B illustrates exemplary communication statuses of TRP 1 and NR-UE 1 in a frequency axis in FIG. 52A;
FIG. 52C illustrates exemplary communication statuses of NR-UE 1 and TRP 1 in time in FIG. 52A;
FIG. 52D illustrates other exemplary communication statuses of TRP 1 and NR-UE 1 in a frequency axis in FIG. 52A;
FIG. 53 illustrates an exemplary configuration of a transmission power controller included in TRP 1 of FIG. 13A, TRP 2 of FIG. 13B, or NR-UE 1 FIG. 14;
FIG. 54A illustrates still another exemplary radio system in Embodiment 6;
FIG. 54B illustrates exemplary communication statuses of TRP 1, TRP 2, and NR-UE 1 in a frequency axis in FIG. 54A;
FIG. 54C illustrates exemplary communication statuses of NR-UE 1 and TRP 1 in time in FIG. 54A;
FIG. 55A illustrates still another exemplary radio system in Embodiment 6;
FIG. 55B illustrates exemplary communication statuses of TRP 1 and NR-UE 1 in a frequency axis in FIG. 55A;
FIG. 55C illustrates exemplary communication statuses of NR-UE 1 and TRP 1 in time in FIG. 55A;
FIG. 55D illustrates other exemplary communication statuses of NR-UE 1 and TRP 1 in time in FIG. 55A;
FIG. 55E illustrates still another exemplary radio system in Embodiment 6;
FIG. 55F illustrates exemplary communication statuses of TRP 2 and NR-UE 1 in a frequency axis in FIG. 55E;
FIG. 55G illustrates exemplary communication statuses of NR-UE 1 and TRP 2 in time in FIG. 55E;
FIG. 55H illustrates other exemplary communication statuses of NR-UE 1 and TRP 2 in time in FIG. 55E;
FIG. 55I illustrates yet another exemplary radio system in Embodiment 6;
FIG. 55J illustrates exemplary communication statuses of TRP 2 and NR-UE 1 in a frequency axis in FIG. 55I;
FIG. 55K illustrates exemplary communication statuses of NR-UE 1, TRP 1, and TRP 2 in time in FIG. 55I;
FIG. 55L illustrates exemplary communication statuses of NR-UE 1, TRP 1, and TRP 2 in time in FIG. 55I;
FIG. 56A illustrates an example of signal exchange between NR-UE 1 and TRP 1 for open loop transmission power control in NR-UE 1 of a case where NR-UE 1 and TRP 1 perform TDD communication or FDD communication;
FIG. 56B illustrates an example of signal exchange between NR-UE 1 and TRP 1 for closed loop transmission power control in NR-UE 1 of a case where NR-UE 1 and TRP 1 perform the TDD communication or FDD communication;
FIG. 57 illustrates an example of signal exchange between NR-UE 1 and TRP 1 for the open loop transmission power control in TRP 1 of a case where NR-UE 1 and TRP 1 perform the TDD communication or FDD communication;

FIG. 58A illustrates an example of signal exchange between NR-UE 1 and TRP 1 for the open loop transmission power control in NR-UE 1 of a case where NR-UE 1 and TRP 1 perform communication based on FIG. 51A and the like;

FIG. 58B illustrates an example of signal exchange between NR-UE 1 and TRP 1 for the closed loop transmission power control in NR-UE 1, for the open loop transmission power control and the closed loop transmission power control in TRP 1, of a case where NR-UE 1 and TRP 1 perform communication based on FIG. 51A and the like;

FIG. 58C illustrates another example of signal exchange between NR-UE 1 and TRP 1 for the closed loop transmission power control in NR-UE 1, for the open loop transmission power control and the closed loop transmission power control in TRP 1, of a case where NR-UE 1 and TRP 1 perform communication based on FIG. 51A and the like;

FIG. 58D illustrates still another example of signal exchange between NR-UE 1 and TRP 1 for the closed loop transmission power control in NR-UE 1, for the open loop transmission power control and the closed loop transmission power control in TRP 1, of a case where NR-UE 1 and TRP 1 perform communication based on FIG. 51A and the like;

FIG. 58E illustrates yet another example of signal exchange between NR-UE 1 and TRP 1 for the closed loop transmission power control in NR-UE 1, for the open loop transmission power control and the closed loop transmission power control in TRP 1, of a case where NR-UE 1 and TRP 1 perform communication based on FIG. 51A and the like;

FIG. 59A illustrates an example of signal exchange between NR-UE 1 and TRP 1 for the open loop transmission power control in NR-UE 1 of a case where NR-UE 1 and TRP 1 perform communication based on FIG. 54A and the like;

FIG. 59B illustrates an example of signal exchange between NR-UE 1 and TRP 1 for the closed loop transmission power control in NR-UE 1, for the open loop transmission power control and the closed loop transmission power control in TRP 1, of a case where NR-UE 1 and TRP 1 perform communication based on FIG. 54A and the like;

FIG. 59C illustrates another example of signal exchange between NR-UE 1 and TRP 1 for the closed loop transmission power control in NR-UE 1, for the open loop transmission power control and the closed loop transmission power control in TRP 1, of a case where NR-UE 1 and TRP 1 perform communication based on FIG. 54A and the like;

FIG. 59D illustrates still another example of signal exchange between NR-UE 1 and TRP 1 for the closed loop transmission power control in NR-UE 1, for the open loop transmission power control and the closed loop transmission power control in TRP 1, of a case where NR-UE 1 and TRP 1 perform communication based on FIG. 54A and the like; and

FIG. 59E illustrates yet another example of signal exchange between NR-UE 1 and TRP 1 for the closed loop transmission power control in NR-UE 1, for the open loop transmission power control and the closed loop transmission power control in TRP 1, of a case where NR-UE 1 and TRP 1 perform communication based on FIG. 54A and the like.

Description of Embodiments

Hereinafter, embodiments of the present disclosure will be described in detail with reference to the accompanying drawings.

(Embodiment 1)

In Embodiment 1, a description will be given of a communication system, a communication apparatus, and a communication method.

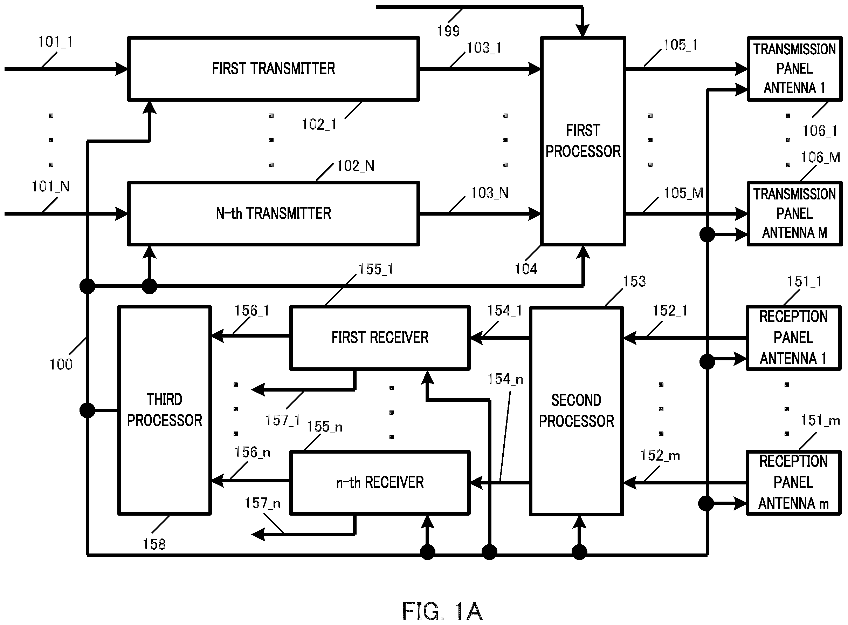

FIG. 1A illustrates an exemplary configuration of a communication apparatus, such as a base station, an access point, a terminal, a repeater, gNodeB (gNB), and user equipment (UE), TRP (transmission (Tx) / reception (RX) point) in Embodiment 1.

Note that a radio system of new radio (NR) will be exemplified in the following description. The NR radio system includes a base station and a terminal, for example. The base station of NR may be referred to as gNB. The terminal of NR may be referred to as UE. Note that the names are not limited to these. The terminal of NR may also be referred to as "NR-UE " below.

The communication apparatus in FIG. 1A includes N transmitters, which are "first transmitter 102_1 to N-th transmitter 102_N." Note that N is an integer equal to or greater than 1 or an integer equal to or greater than 2.

The communication apparatus in FIG. 1A also includes M transmission panel antennas, which are "transmission panel antenna 1 labeled 106_1 to transmission panel antenna M labeled 106_M," for transmission. Note that M is an integer equal to or greater than 1 or an integer equal to or greater than 2.

The communication apparatus in FIG. 1A includes n receivers, which are "first receiver 155_1 to n-th receiver 155_n." Note that n is an integer equal to or greater than 1 or an integer equal to or greater than 2.

The communication apparatus in FIG. 1A includes m reception panel antennas, which are "reception panel antenna 1 labeled 151_1 to reception panel antenna m labeled 151_m," for reception. Note that m is an integer equal to or greater than 1 or an integer equal to or greater than 2.

The i-th transmitter 102_i takes control signal 100 and i-th data 101_i as input, performs processing such as error correction coding and mapping based on a modulation scheme, and outputs i-th modulation signal 103_i. Note that i is an integer from 1 to N (both inclusive).

Note that i-th data 101_i may be configured to include data of one or more users. In this case, an error correction code, a modulation scheme, and a transmission method may be configured for each user.

First processor 104 takes i-th modulation signal 103_i (i is an integer from 1 to N (both inclusive)), control signal 100, and reference signal 199 as input, controls a transmission timing and a channel, and outputs j-th transmission signal 105_j (j is an integer from 1 to M (both inclusive)) based on frame configuration information included in control signal 100. Note that some of i-th modulation signals 103_i may include no signal, and some of j-th transmission signals 105_j may include no signal.

Then, j-th transmission signal 105_j is outputted as a radio wave from transmission panel antenna j labeled 106_j. Note that transmission panel antenna j labeled 106_j may perform beamforming and change the transmission directivity taking control signal 100 as input. In addition, transmission panel antenna j labeled 106_j may be switched by control signal 100 in transmitting a modulation signal to a communication counterpart. This will be described later.

Reception panel antenna i labeled 151_i receives i-th received signal 152_i. Note that reception panel antenna i labeled 151_i may perform beamforming and change the reception directivity taking control signal 100 as input. This will be described later.

Second processor 153 performs processing such as frequency conversion taking i-th received signal 152_i and control signal 100 as input, and outputs j-th signal-processing-subjected signal (i.e., j-th signal that has been subjected to signal processing) 154_j. Note that some of i-th received signals 152_i may include no signal, and some of j-th signal-processing-subjected signals 154_j may include no signal.

Then, j-th receiver 155_j takes j-th signal-processing-subjected signal 154_j and control signal 100 as input, performs processing such as demodulation and error correction decoding on j-th signal-processing-subjected signal 154_j based on control signal 100, and outputs j-th control data 156_j and j-th data 157_j.

Note that j-th control data 156_j may be configured to include control data of one or more users. In addition, j-th data 157_j may be configured to include data of one or more users.

Third processor 158 takes j-th control data 156_j as input, generates control signal 100 based on information obtained from the communication counterpart, and outputs generated control signal 100.

Incidentally, first processor 104 of the communication apparatus in FIG. 1A may perform processing for transmit beamforming (transmission directivity control), for example, precoding processing. Meanwhile, second processor 153 may perform processing for reception directivity control. As another example, first processor 104 may perform processing of outputting first modulation signal 103_1 as first transmission signal 105_1, second modulation signal 103_2 as second transmission signal 105_2, and third modulation signal 103_3 as third transmission signal 105_3, for example. Alternatively, first processor 104 may perform processing of outputting second modulation signal 103_2 as first transmission signal 105_1. In addition, second processor 153 may perform processing of outputting first received signal 152_1 as first signal-processing-subjected signal 154_1, second received signal 152_2 as second signal-processing-subjected signal 154_2, and third received signal 152_3 as third signal-processing-subjected signal 154_3. Alternatively, the second processor 153 may perform processing of outputting first received signal 152_1 as second signal-processing-subjected signal 154_2.

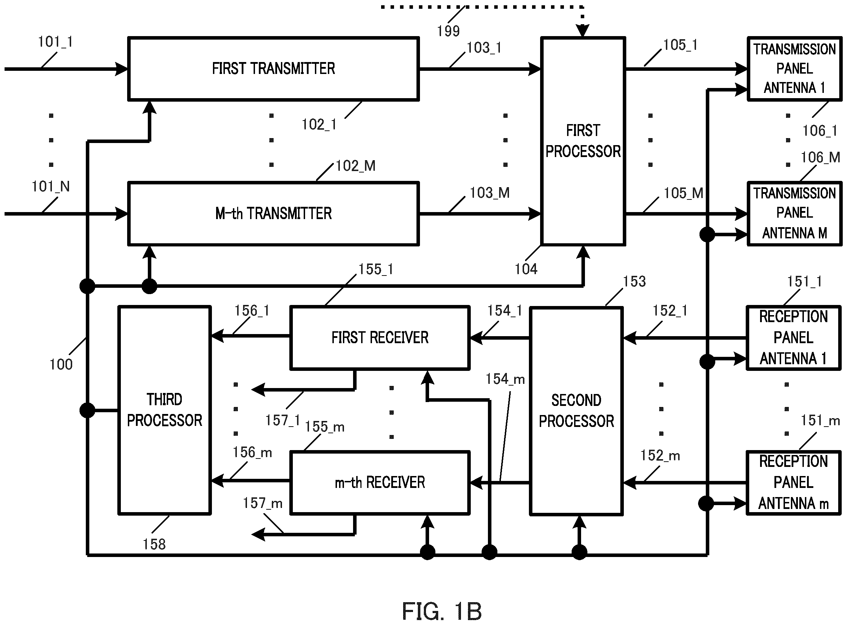

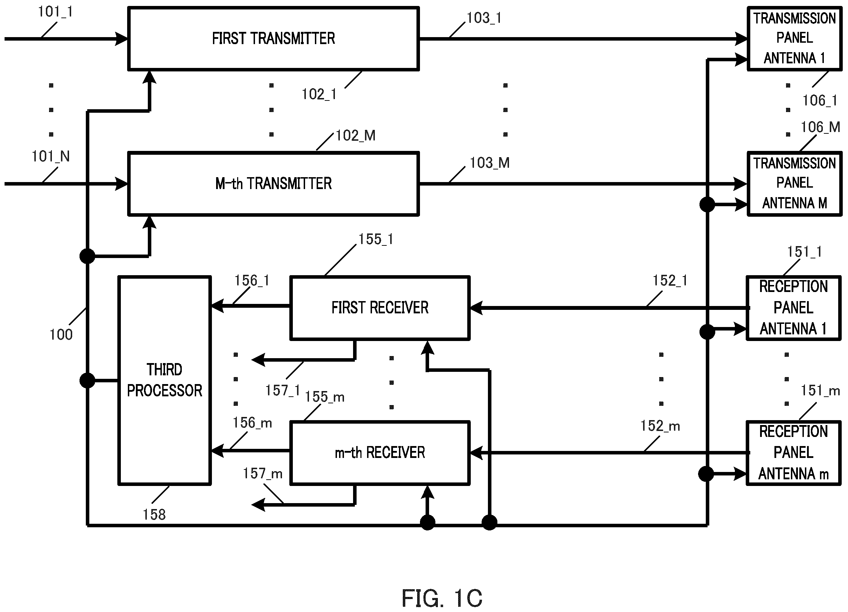

The configuration in FIG. 1A may include a processor not illustrated in FIG. 1A. For example, an interleaver for sorting symbols and/or data, a padder for padding, and the like may be included in the communication apparatus. Moreover, the communication apparatus in FIG. 1A (also in FIG. 1B and FIG. 1C) may perform transmission and/or reception corresponding to multiple input multiple output (MIMO) transmission for transmitting a plurality of modulation signals (a plurality of streams), using a plurality of antennas. Further, the communication apparatus in FIG. 1A (also in FIG. 1B and FIG. 1C) may perform transmission corresponding to multi-user MIMO transmission for transmitting, using a first frequency (band), modulation signals to a plurality of terminals in a first time section at least.

FIG. 1B illustrates an exemplary configuration of the communication apparatus in Embodiment 1, such as a base station, an access point, a terminal, a repeater, a TRP, and the like, different from the configuration in FIG. 1A. In FIG. 1B, the components that operate in the same manner as in FIG. 1A are denoted by the same reference numerals, and descriptions thereof will be omitted.

The configuration in FIG. 1B is characterized in that the number of transmitters and the number of transmission panel antennas are the same. In this case, first processor 104 may perform processing for transmit beamforming (transmission directivity control), for example, precoding processing. First processor 104 may output y-th modulation signal 103_y as x-th transmission signal 105_x. Note that x is an integer from 1 to M (both inclusive), and y is an integer from 1 to M (both inclusive).

In addition, the number of receivers and the number of reception panel antennas are the same. In this case, second processor 153 may perform processing for the reception directivity control. Second processor 153 may output y-th received signal 152_y as x-th signal-processing-subjected signal 154_x. Note that x is an integer from 1 to m (both inclusive), and y is an integer from 1 to m (both inclusive).

FIG. 1C illustrates an exemplary configuration of the communication apparatus in Embodiment 1, such as a base station, an access point, a terminal, a repeater, a TRP, and the like, different from the configurations in FIGS. 1A and 1B. In FIG. 1C, the components that operate in the same manner as in FIG. 1A are denoted by the same reference numerals, and descriptions thereof will be omitted.

The configuration in FIG. 1C is characterized in that the number of transmitters and the number of transmission panel antennas are the same and the first processor is not present. In addition, the number of receivers and the number of reception panel antennas are the same and the second processor is not present.

Note that FIGS. 1A, 1B, and 1C illustrate exemplary configurations of the communication apparatus, such as a base station, an access point, a terminal, a repeater, a TRP, and the like, and the configuration of the communication apparatus is not limited to these examples.

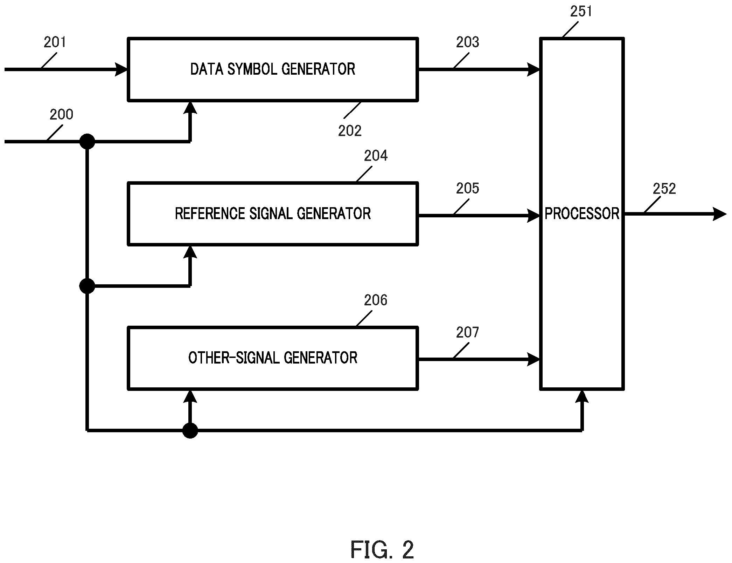

FIG. 2 illustrates an exemplary configuration of i-th transmitter 102_i. Note that i is "an integer from 1 to N (both inclusive) " or "an integer from 1 to M (both inclusive)."

Data symbol generator 202 takes data 201 and control signal 200 as input, performs error correction coding, mapping, signal processing for transmission, etc. on the basis of information on an error correction coding method, information on a modulation scheme, information on a transmission method, information on a frame configuration method, etc. included in control signal 200, and outputs data symbol modulation signal 203. Note that data 201 corresponds to i-th data 101_i, and control signal 200 corresponds to control signal 100. Thus, data 201 may include data of one or more users.

Reference signal generator 204 receives control signal 200, generates reference signal 205 based on information on the frame configuration included in control signal 200, and outputs the generated reference signal. Note that reference signal 205 is a signal to be transmitted in order to acheve various-noise estimation and channel estimation for determination of a transmission beam used for communication with a communication counterpart and/or a reception beam, a transmission metod, a reception method, and the like.

Other-signal generator 206 takes control signal 200 as input, generates other signals 207 based on the control signal, and outputs the generated signals.

Processor 251 takes data symbol modulation signal 203, reference signal 205, other signals 207, and control signal 200 as input, generates frame configuration-based modulation signal (i.e., modulation signal in accordance with frame configuration) 252 based on the frame configuration information included in control signal 200, and outputs the generated signal. Note that frame configuration-based modulation signal 252 corresponds to i-th modulation signal 103_i. Specific examples of the frame configuration will be described later in detail.

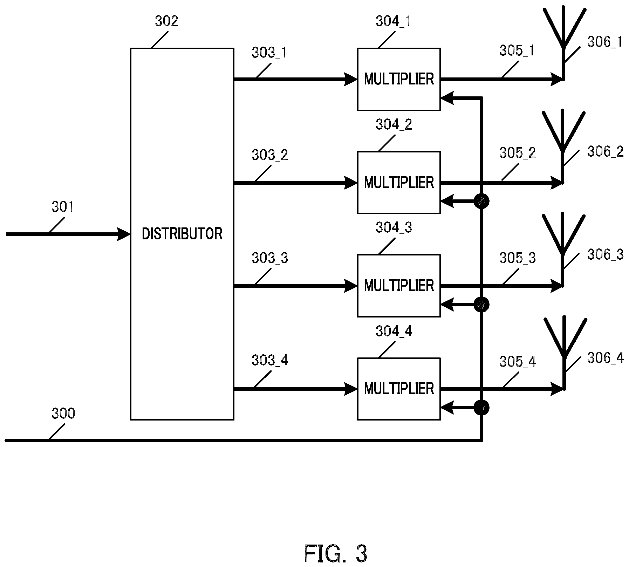

FIG. 3 illustrates an exemplary configuration of transmission panel antenna i labeled 106_i in FIGS. 1A, 1B, and 1C. Note that i is "an integer from 1 to M (both inclusive)." Distributor 302 takes transmission signal 301 as input, performs distribution, and outputs first transmission signal 303_1, second transmission signal 303_2, third transmission signal 303_3, and fourth transmission signal 303_4. Note that transmission signal 301 corresponds to "i-th transmission signal 105_i in FIGS. 1A and 1B"or "i-th modulation signal 103_i in FIG. 1C."

Multiplier 304_1 takes first transmission signal 303_1 and control signal 300 as input, multiplies first transmission signal 303_1 by a multiplication coefficient based on control signal 300, generates and outputs coefficient-multiplication-subjected first transmission signal (i.e., first transmission signal that has been subjected to the coefficient multiplication) 305_1. Then, coefficient-multiplication-subjected first transmission signal 305_1 is outputted from antenna 306_1 as a radio wave. Note that control signal 300 corresponds to control signal 100.

A specific description follows. First transmission signal 303_1 is represented by tx1(t). Note that t represents time. When the multiplication coefficient is w1, coefficient-multiplication-subjected first transmission signal 305_1 can be expressed as tx1(t) $\times$ w1. Note that tx1(t) can be represented by a complex number, and thus, it may be a real number. Likewise, w1 can be represented by a complex number, and thus, it may be a real number.

Multiplier 304_2 takes second transmission signal 303_2 and control signal 300 as input, multiplies second transmission signal 303_2 by a multiplication coefficient based on control signal 300, generates and outputs coefficient-multiplication-subjected second transmission signal 305_2. Then, coefficient-multiplication-subjected second transmission signal 305_2 is outputted from antenna 306_2 as a radio wave.

A specific description follows. Second transmission signal 303_2 is represented by tx2(t). Note that t represents time. When the multiplication coefficient is w2, coefficient-multiplication-subjected second transmission signal 305_2 can be expressed as tx2(t) $\times$ w2. Note that tx2(t) can be represented by a complex number, and thus, it may be a real number. Likewise, w2 can be represented by a complex number, and thus, it may be a real number.

Multiplier 304_3 takes third transmission signal 303_3 and control signal 300 as input, multiplies third transmission signal 303_3 by a multiplication coefficient based on control signal 300, generates and outputs coefficient-multiplication-subjected third transmission signal 305_3. Then, coefficient-multiplication-subjected third transmission signal 305_3 is outputted from antenna 306_3 as a radio wave.

A specific description follows. Third transmission signal 303_3 is represented by tx3(t). Note that t represents time. When the multiplication coefficient is w3, coefficient-multiplication-subjected third transmission signal 305_3 can be expressed as tx3(t) $\times$ w3. Note that tx3(t) can be represented by a complex number, and thus, it may be a real number. Likewise, w3 can be represented by a complex number, and thus, it may be a real number.

Multiplier 304_4 takes fourth transmission signal 303_4 and control signal 300 as input, multiplies fourth transmission signal 303_4 by a multiplication coefficient based on control signal 300, generates and outputs coefficient-multiplication-subjected fourth transmission signal 305_4. Then, coefficient-multiplication-subjected fourth transmission signal 305_4 is outputted from antenna 306_4 as a radio wave.

A specific description follows. Fourth transmission signal 303_4 is represented by tx4(t). Note that t represents time. When the multiplication coefficient is w4, coefficient-multiplication-subjected fourth transmission signal 305_4 can be expressed as tx4(t) × w4. Note that tx4(t) can be represented by a complex number, and thus, it may be a real number. Likewise, w4 can be represented by a complex number, and thus, it may be a real number.

Note that "an absolute value of w1, an absolute value of w2, an absolute value of w3, and an absolute value of w4 may be equal to each other." This corresponds to a case where a phase change has been performed. It is needless to say that the absolute value of w1, the absolute value of w2, the absolute value of w3, and the absolute value of w4 need not be equal to each other.

The respective values of w1, w2, w3, and w4 may be switched for each frame, each slot, each minislot, each multiple-symbols, or each symbol. The switch timings of the respective values of w1, w2, w3, and w4 are not limited to the above examples.

Further, FIG. 3 illustrates an example of the transmission panel antenna composed of four antennas (and four multipliers), but the number of antennas is not limited to four and the transmission panel antenna only needs to be composed of two or more antennas. Incidentally, when the beamforming is performed as in FIG. 3, the beamforming is sometimes referred to as "analog beamforming."

Note that transmission panel antenna i labeled 106_i in FIGS. 1A, 1B, and 1C may perform directivity control by changing the characteristics of the antenna itself, and in this case, transmission panel antenna i labeled 106_i may be composed of one or more antennas.

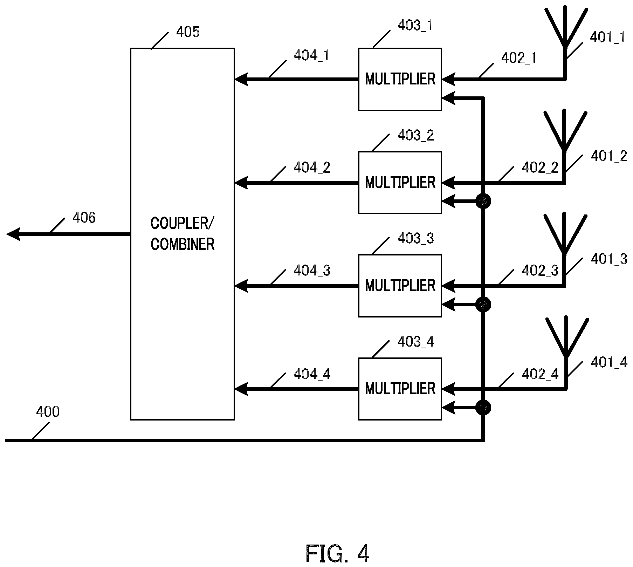

FIG. 4 illustrates an exemplary configuration of reception panel antenna i labeled 151_i in FIGS. 1A, 1B, and 1C. Note that i is "an integer from 1 to m (both inclusive)."

Multiplier 403_1 takes first received signal 402_1 received at antenna 401_1 and control signal 400 as input, multiplies first received signal 402_1 by a multiplication coefficient based on control signal 400, and outputs coefficient-multiplication-subjected first received signal 404_1.

A specific description follows. First received signal 402_1 is represented by rx1(t). Note that t represents time. When the multiplication coefficient is d1, coefficient-multiplication-subjected first received signal 404_1 can be expressed as rx1(t) × d1. Note that rx1(t) can be represented by a complex number, and thus, it may be a real number. Likewise, d1 can be represented by a complex number, and thus, it may be a real number.

Multiplier 403_2 takes second received signal 402_2 received at antenna 401_2 and control signal 400 as input, multiplies second received signal 402_2 by a multiplication coefficient based on control signal 400, and outputs coefficient-multiplication-subjected second received signal 404_2.

A specific description follows. Second received signal 402_2 is represented by rx2(t). Note that t represents time. When the multiplication coefficient is d2, coefficient-multiplication-subjected second received signal 404_2 can be expressed as rx2(t) × d2. Note that rx2(t) can be represented by a complex number, and thus, it may be a real number. Likewise, d2 can be represented by a complex number, and thus, it may be a real number.

Multiplier 403_3 takes third received signal 402_3 received at antenna 401_3 and control signal 400 as input, multiplies third received signal 402_3 by a multiplication coefficient based on control signal 400, and outputs coefficient-multiplication-subjected third received signal 404_3.

A specific description follows. Third received signal 402_3 is represented by rx3(t). Note that t represents time. When the multiplication coefficient is d3, coefficient-multiplication-subjected third received signal 404_3 can be expressed as rx3(t) × d3. Note that rx3(t) can be represented by a complex number, and thus, it may be a real number. Likewise, d3 can be represented by a complex number, and thus, it may be a real number.

Multiplier 403_4 takes fourth received signal 402_4 received at antenna 401_4 and control signal 400 as input, multiplies fourth received signal 402_4 by a multiplication coefficient based on control signal 400, and outputs coefficient-multiplication-subjected fourth received signal 404_4.

A specific description follows. Fourth received signal 402_4 is represented by rx4(t). Note that t represents time. When the multiplication coefficient is d4, coefficient-multiplication-subjected fourth received signal 404_4 can be expressed as rx4(t) × d4. Note that rx4(t) can be represented by a complex number, and thus, it may be a real number. Likewise, d4 can be represented by a complex number, and thus, it may be a real number.

Coupler/combiner 405 takes coefficient-multiplication-subjected first received signal 404_1, coefficient-multiplication-subjected second received signal 404_2, coefficient-multiplication-subjected third received signal 404_3, and coefficient-multiplication-subjected fourth received signal 404_4 as input, combines coefficient-multiplication-subjected first received signal 404_1, coefficient-multiplication-subjected second received signal 404_2, coefficient-multiplication-subjected third received signal 404_3, and coefficient-multiplication-subjected fourth received signal 404_4, and outputs modulation signal 406. Note that modulation signal 406 is expressed as rx1(t) × d1 + rx2(t) × d2 + rx3(t) × d3 + rx4(t) × d4.

Note that control signal 400 corresponds to control signal 100, and modulation signal 406 corresponds to i-th received signal 152_i.

In addition, "an absolute value of d1, an absolute value of d2, an absolute value of d3, and an absolute value of d4 may be equal to each other." This corresponds to a case where a phase change has been performed. It is needless to say that the absolute value of d1, the absolute value of d2, the absolute value of d3, and the absolute value of d4 need not be equal to each other.

The respective values of d1, d2, d3, and d4 may be switched for each frame, each slot, each mini-slot, each multiple-symbols, or each symbol. The switch timings of the respective values of d1, d2, d3, and d4 are not limited to the above examples.

Further, FIG. 4 illustrates an example of the reception panel antenna composed of four antennas (and four multipliers), but the number of antennas is not limited to four and the reception panel antenna only needs to be composed of two or more antennas. Incidentally, when the beamforming is performed as in FIG. 4, the beamforming is sometimes referred to as "analog beamforming."

Note that reception panel antenna i labeled 151_i in FIGS. 1A, 1B, and 1C may perform directivity control by changing the characteristics of the antenna itself, and in this case, reception panel antenna i labeled 15 1_i may be composed of one or more antennas.

In the present embodiment, in a case where the communication apparatus in FIGS. 1A, 1B, and 1C is a base station, gNodeB (gNB), a TRP, or a terminal, for example, it supports multi-carrier transmission such as orthogonal frequency division multiplexing (OFDM). The base station, gNB, TRP, or terminal in FIGS. 1A, 1B, and 1C may also support orthogonal frequency division multiple access (OFDMA).

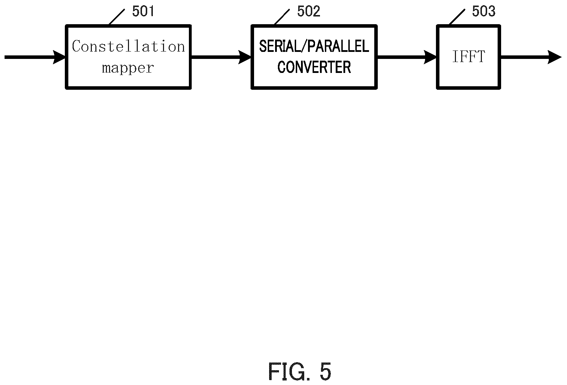

FIG. 5 illustrates an exemplary configuration of a transmission apparatus in a case of using an OFDM scheme. As illustrated in FIG. 5, the transmission apparatus is composed of, for example, constellation mapper 501, serial/parallel converter 502, and inverse fast Fourier transform (IFFT) 503.

Constellation mapper 501, for example, takes data as input, performs mapping based on the configured modulation scheme, and outputs the modulation signal.

Serial/parallel converter 502 converts serial signals into parallel signals. Note that serial/parallel converter 502 need not be present when parallel signals are already obtained.

IFFT 503 performs IFFT processing on an input signal, and outputs the modulation signal based on the OFDM scheme. Note that IFFT 503 may be an inverse Fourier transformer performing inverse Fourier transform.

The transmission apparatus in a case of using the OFDM scheme may include another processor (e.g., error correction encoder, interleaver, etc.), and the configuration is not limited to that in FIG. 5.

In the present embodiment, in a case where the communication apparatus in FIGS. 1A, 1B, and 1C is a base station, gNodeB (gNB), a TRP, or a terminal, for example, it may support multi-carrier reception such as in the OFDM scheme or may support single-carrier reception such as in a single-carrier scheme based on discrete Fourier transform (DFT), for example. The following description is about an exemplary configuration of a reception part in a single-carrier scheme.

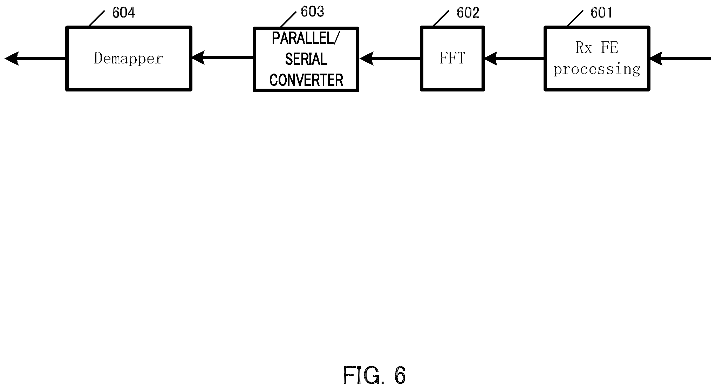

FIG. 6 illustrates an exemplary configuration of a reception apparatus in a case of using the OFDM scheme. As illustrated in FIG. 6, the reception apparatus in a case of using the OFDM scheme is composed of Rx FE processor (Rx (Receiver) FE (Front End) processing) 601, fast Fourier transform (FFT) 602, parallel/serial converter 603, and demapper 604.

Rx FE processing 601 performs processing of a reception front end.

FFT 602 performs FFT processing on the input signal.

Parallel/serial converter 603 converts parallel signals into serial signals. Note that parallel/serial converter 603 need not be present when serial signals are already obtained.

Demapper 604 performs demodulation processing based on the transmission method and modulation scheme.

Note that the reception apparatus may include another processor (e.g., deinterleaver, decoder for error correction coding, etc.), and the configuration is not limited to that in FIG. 6.

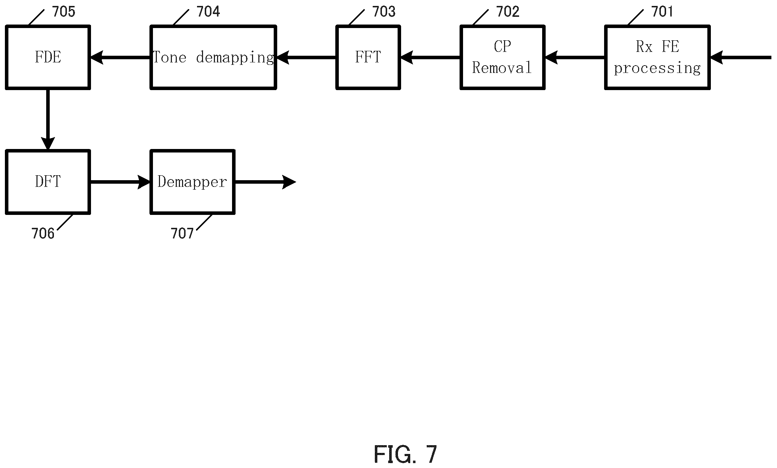

FIG. 7 illustrates an exemplary configuration of the reception apparatus in a case of using a single-carrier scheme based on DFT. As illustrated in FIG. 7, the reception apparatus is composed of receiver (Rx) FE processing 701, CP removal 702, fast Fourier transform (FFT) 703, tone demapping 704, frequency domain equalization (FDE) 705, DFT 706, and demapper 707. Note that the reception apparatus may include a processor other than the above.

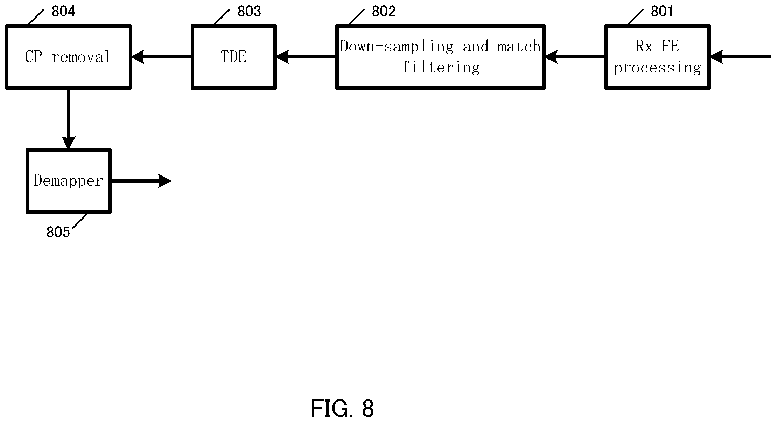

FIG. 8 illustrates an exemplary configuration of the reception apparatus in a case of using a single-carrier scheme based on time domain. As illustrated in FIG. 8, the reception apparatus is composed of receiver (Rx) FE processing 801, down-sampling and match filtering 802, time domain equalization (TDE) 803, CP removal 804, and demapper 805. Note that the reception apparatus may include a processor other than the above.

Although exemplary reception methods in single-carrier schemes and exemplary configurations of the reception apparatus have been described above, the reception method in a single-carrier scheme and the reception apparatus are not limited to these. For example, examples of the single-carrier scheme include "discrete Fourier transform (DFT)-spread orthogonal frequency division multiplexing (OFDM)" (DFT-S OFDM), "trajectory constrained DFT-spread OFDM," "constrained DFT-spread OFDM" (constrained DFT-S OFDM), "OFDM based single carrier (SC)," "single carrier (SC)-frequency division multiple access (FDMA)," "guard interval DFT-spread OFDM," a time-domain implementation single carrier scheme (e.g., single carrier (SC)-QAM), and the like.

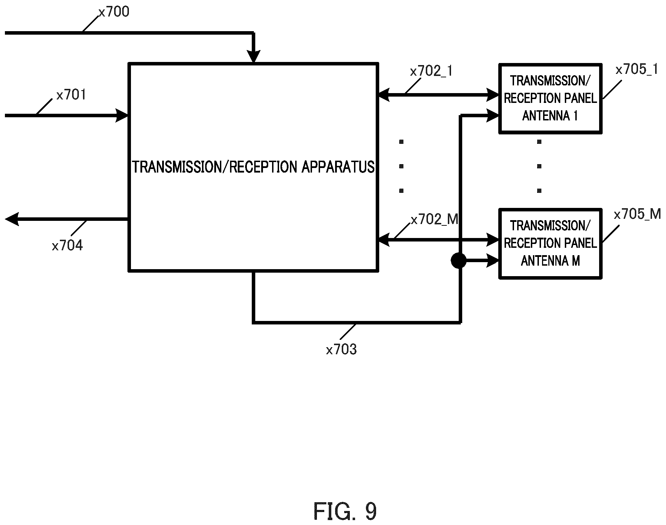

FIG. 9 illustrates an exemplary configuration of an NR apparatus (communication apparatus) such as a gNB and an NR-UE other than those in FIGS. 1A, 1B, and 1C, for example. A transmission/reception apparatus inputs transmission data x701 and control signal x700, performs signal processing for transmission, based on control signal x700, and outputs transmission signals (x802_1 to x802_m). Additionally, the transmission/reception apparatus inputs reception signals (x802_1~x802_m) and control signal x700, performs signal processing for reception, based on control signal x700, and outputs reception data x704. Transmission/reception panel antenna i labeled x705_i in FIG. 9 is an antenna including components in FIGS. 3 and 4, for example. Here, i is an integer from 1 to M (both inclusive), and M is an integer equal to or greater than 1 or an integer equal to or greater than 2. Thus, transmission/reception panel antenna i labeled x705_i can perform transmit beamforming (transmission directivity control) and receive beamforming (reception directivity control).

Note that specific operations of transmit beamforming (transmission directivity control) and receive beamforming (reception directivity control) have already been described, and the apparatus performs transmit beamforming (transmission directivity control) to transmit a reference signal, feedback signal, frame, slot, modulation signal, data symbol, and the like.

Incidentally, FIG. 9 illustrates a configuration in which the transmission panel antenna and the reception panel antenna are shared, but the transmission panel antenna and the reception panel antenna may be units separate from each other. Further, it is possible to set the number of transmission panel antennas and the number of reception panel antennas, respectively.

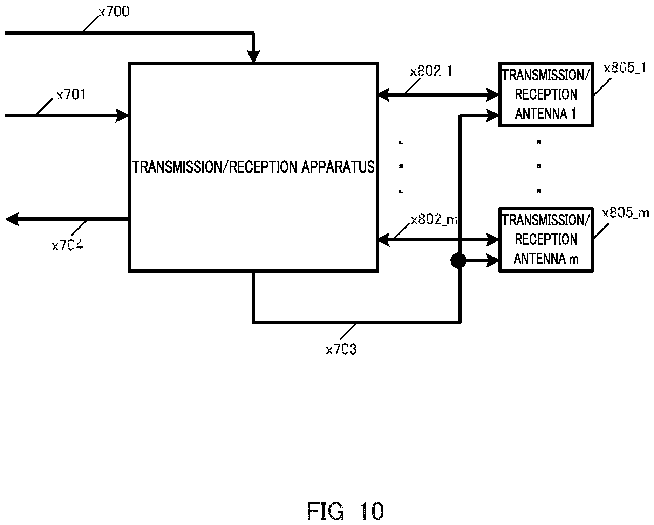

FIG. 10 illustrates another exemplary configuration of the NR apparatus (communication apparatus) such as a gNB, an NR-UE, a TRP, and a terminal. In FIG. 10, the components that operate in the same manner as the components in FIG. 9 are denoted by the same reference numerals, and descriptions thereof will be omitted.

In a case where the gNB has the configuration in FIG. 10, transmit beamforming (transmission directivity control) and receive beamforming (reception directivity control) are performed using one or more of "transmission/reception antenna 1 labeled x805_1 to transmission/reception antenna m labeled x805_m."

The gNB with the configuration in FIG. 10 performs the transmit beamforming (transmission directivity control) and transmits a reference signal, for example.

For example, the gNB with the configuration in FIG. 10 uses a first transmit beam to transmit a first reference signal, use a second transmit beam to transmit a second reference signal, and so forth.

The gNB then determines "transmit beamforming and receive beamforming" to be used for communication with each terminal, and transmits and receives a feedback signal, frame, slot, modulation signal, data symbol, and the like.

In a case where the NR-UE has the configuration in FIG. 10, transmit beamforming (transmission directivity control) and receive beamforming (reception directivity control) are performed using one or more of "transmission/reception antenna 1 labeled x805_1 to transmission/reception antenna m labeled x805_m."

Then, the NR-UE with the configuration in FIG. 10 performs transmit beamforming (transmission directivity control) and transmits sector sweep reference signals.

For example, the NR-UE with the configuration in FIG. 10 uses a first transmit beam to transmit a first reference signal, uses a second transmit beam to transmit a second reference signal, and so forth.

The NR-UE then determines "transmit beamforming and receive beamforming" to be used for communication with the gNB, and transmits and receives a feedback signal, frame, slot, modulation signal, data symbol, and the like.

Incidentally, FIG. 10 illustrates a configuration in which the transmission panel antenna and the reception panel antenna are shared, but the transmission panel antenna and the reception panel antenna may be units separate from each other. Further, it is possible to set the number of transmission panel antennas and the number of reception panel antennas, respectively.

Note that a configuration of "the communication apparatus such as gNB and NR-UE" is not limited to those in FIGS. 1A, 1B, 1C, 9 and 10, and they are merely examples.

The transmission/reception panel antenna (x705_1 to x705_M) in FIG. 9 may be composed of a single antenna or a plurality of antennas. In addition, the transmission/reception panel antenna (x705_1 to x705_M) may be composed of a single antenna element or a plurality of antenna elements. A configuration of the transmission/reception panel antenna (x705_1 to x705_M) is not limited to the configuration described in the present embodiment.

The transmission/reception antenna (x805_1 to x805_m) in FIG. 10 may be composed of a single antenna or a plurality of antennas. In addition, the transmission/reception antenna (x805_1 to x805_m) may be composed of a single antenna element or a plurality of antenna elements. A configuration of the transmission/reception antenna (x805_1 to x805_m) is not limited to the configuration described in the present embodiment.

Note that, for example, in a case where transmission/reception panel antenna i labeled x705_i in FIG. 9 uses the transmission panel antenna in the configuration of FIG. 3 and the reception panel antenna in the configuration of FIG. 4 together, transmission antenna 306_1 in FIG. 3 and reception antenna 401_1 in FIG. 4 are used together as a single antenna, and multiplier 304_1 and multiplier 403_1 are connected to this single antenna.

Likewise, transmission antenna 306_2 in FIG. 3 and reception antenna 401_2 in FIG. 4 are used together as a single antenna, and multiplier 304_2 and multiplier 403_2 are connected to this single antenna. In addition, transmission antenna 306_3 in FIG. 3 and reception antenna 401_3 in FIG. 4 are used together as a single antenna, and multiplier 304_3 and multiplier 403_3 are connected to this single antenna. Then, transmission antenna 306_4 in FIG. 3 and reception antenna 401_4 in FIG. 4 are used together as a single antenna, and multiplier 304_4 and multiplier 403_4 are connected to this single antenna.

Note that an NR apparatus such as a gNB, an NR-UE, a TRP having a configuration in FIG. 1A, FIG. 1B, FIG. 1C, FIG. 9, or FIG. 10 may be a radio (communication) apparatus using a low frequency (e.g., 24GHz or less) or may be a radio (communication) apparatus using a high frequency (e.g., 24GHz or more).

For example, the radio communication apparatus using highe frequency is sometimes referred to as a transmission antenna, a reception antenna, and an omni-directional antenna.

Regarding Omni-Directional Antenna:

In a case where the gNB and NR-UE have the configuration in FIG. 9, signal reception is performed by using one or more of "transmission/reception panel antenna 1 labeled x705_1 to transmission/reception panel antenna M labeled x705_M."

In each of "transmission/reception panel antenna 1 labeled x705_1 to transmission/reception panel antenna M labeled x705_M," certain receive beamforming (reception directivity control) is configured for antennas composing the transmission/reception panel antenna.

Note that not all antennas composing the transmission/reception panel antenna need to be used for signal reception, and the configuration of receive beamforming (reception directivity control) may or may not be fixed in time.

The method of using the transmission/reception panel antenna in omni-directional reception is not limited to the above example.

In a case where the gNB and NR-UE have the configuration in FIG. 10, signal reception is performed by using one or more of "transmission/reception antenna 1 labeled x805_1 to transmission/reception antenna m labeled x805_m."

In each of "transmission/reception antenna 1 labeled x805_1 to transmission/reception antenna m labeled x805_m," certain receive beamforming (reception directivity control) is configured for antennas composing the transmission/reception antenna.

Note that not all antennas composing the transmission/reception antenna need to be used for signal reception.

The method of using the transmission/reception antenna in omni-directional reception is not limited to the above example.

Incidentally, for example, the radio communication apparatus using highe frequency is sometimes referred to as a transmission antenna, a reception antenna, and a directional antenna.

Regarding Directional Antenna:

In a case where the gNB and NR-UE have the configuration in FIG. 9, signal reception is performed by using one of "transmission/reception panel antenna 1 labeled x705_1 to transmission/reception panel antenna M labeled x705_M."

In detecting a signal in the directional reception, each transmission panel antenna performs, for example, four types of receive beamforming (reception directivity control).

In detecting a signal in the directional reception, the gNB, NR-UE, and TRP perform, for example, receive beamforming (reception directivity control) according to the first parameter, receive beamforming (reception directivity control) according to the second parameter, receive beamforming (reception directivity control) according to the third parameter, and receive beamforming (reception directivity control) according to the fourth parameter in transmission/reception panel antenna 1 labeled x705_1.

Further, in detecting a signal in the directional reception, the gNB and NR-UE perform receive beamforming (reception directivity control) according to the fifth parameter, receive beamforming (reception directivity control) according to the sixth parameter, receive beamforming (reception directivity control) according to the seventh parameter, and receive beamforming (reception directivity control) according to the eighth parameter in transmission/reception panel antenna 2 labeled x705_2.

Thus, in detecting a signal in the directional reception, receive beamforming (reception directivity control) according to the $(4 \times i - 3)$-th parameter, receive beamforming (reception directivity control) according to the $(4 \times i - 2)$-th parameter, receive beamforming (reception directivity control) according to the $(4 \times i - 1)$-th parameter, and receive beamforming (reception directivity control) according to the $(4 \times i)$-th parameter are performed in transmission/reception panel antenna i labeled x705_i. Note that i is an integer from 1 to M (both inclusive).

Then, the gNB and NR-UE perform receive beamforming (reception directivity control) according to the first parameter, and confirm whether a signal is present. Accordingly, the gNB and NR-UE use transmission/reception panel antenna 1 labeled x705_1.

The gNB and NR-UE perform receive beamforming (reception directivity control) according to the second parameter, and confirm whether a signal is present. Accordingly, the gNB and NR-UE use transmission/reception panel antenna 1 labeled x705_1.

The gNB and NR-UE perform receive beamforming (reception directivity control) according to the third parameter, and confirm whether a signal is present. Accordingly, the gNB and NR-UE use transmission/reception panel antenna 1 labeled x705_1.

The gNB and NR-UE perform receive beamforming (reception directivity control) according to the fourth parameter, and confirm whether a signal is present. Accordingly, the gNB and NR-UE use transmission/reception panel antenna 1 labeled x705_1.

The gNB and NR-UE perform receive beamforming (reception directivity control) according to the fifth parameter, and confirm whether a signal is present. Accordingly, the gNB and NR-UE use transmission/reception panel antenna 2 labeled x705_2.

The gNB and NR-UE perform receive beamforming (reception directivity control) according to the sixth parameter, and confirm whether a signal is present. Accordingly, the gNB and NR-UE use transmission/reception panel antenna 2 labeled x705_2.

The gNB and NR-UE perform receive beamforming (reception directivity control) according to the seventh parameter, and confirm whether a signal is present. Accordingly, the gNB and NR-UE use transmission/reception panel antenna 2 labeled x705_2.

The gNB and NR-UE perform receive beamforming (reception directivity control) according to the eighth parameter, and confirm whether a signal is present. Accordingly, the gNB and NR-UE use transmission/reception panel antenna 2 labeled x705_2.

Thus, the gNB and NR-UE perform receive beamforming (reception directivity control) according to the $(4 \times i - 3)$-th parameter, and confirm whether a signal is present. Accordingly, the gNB and NR-UE use transmission/reception panel antenna i labeled x705_i.

The gNB and NR-UE perform receive beamforming (reception directivity control) according to the $(4 \times i - 2)$-th parameter, and confirm whether a signal is present. Accordingly, the gNB and NR-UE use transmission/reception panel antenna i labeled x705_i.

The gNB and NR-UE perform receive beamforming (reception directivity control) according to the $(4 \times i - 1)$-th parameter, and confirm whether a signal is present. Accordingly, the gNB and NR-UE use transmission/reception panel antenna i labeled x705_i.

The gNB and NR-UE perform receive beamforming (reception directivity control) according to the $(4 \times i)$-th parameter, and confirm whether a signal is present. Accordingly, the gNB and NR-UE use transmission/reception panel antenna i labeled x705_i.

Note that i is an integer from 1 to M (both inclusive).

Another example will be described. In a case where the gNB, NR-UE, and TRP have the configuration in FIG. 10, signal reception is performed by using one or more of "transmission/reception antenna 1 labeled x805_1 to transmission/reception antenna m labeled x805_m" and performing receive beamforming (reception directivity control).

In detecting a signal in the directional reception, g types of receive beamforming (reception directivity control) are performed by using one or more of "transmission/reception antenna 1 labeled x805_1 to transmission/reception antenna m labeled x805_m." Note that g is an integer equal to or greater than 2.

The gNB and NR-UE perform receive beamforming (reception directivity control) according to the first parameter by using one or more of "transmission/reception antenna 1 labeled x805_1 to transmission/reception antenna m labeled x805_m," and confirm whether a signal is present.

The gNB and NR-UE perform receive beamforming (reception directivity control) according to the second parameter by using one or more of "transmission/reception antenna 1 labeled x805_1 to transmission/reception antenna m labeled x805_m," and confirm whether a signal is present.

The gNB and NR-UE perform receive beamforming (reception directivity control) according to the third parameter by using one or more of "transmission/reception antenna 1 labeled x805_1 to transmission/reception antenna m labeled x805_m," and confirm whether a signal is present.

The gNB and NR-UE perform receive beamforming (reception directivity control) according to the fourth parameter by using one or more of "transmission/reception antenna 1 labeled x805_1 to transmission/reception antenna m labeled x805_m," and confirm whether a signal is present.

The gNB and NR-UE perform receive beamforming (reception directivity control) according to the fifth parameter by using one or more of "transmission/reception antenna 1 labeled x805_1 to transmission/reception antenna m labeled x805_m," and confirm whether a signal is present.

The gNB and NR-UE perform receive beamforming (reception directivity control) according to the sixth parameter by using one or more of "transmission/reception antenna 1 labeled x805_1 to transmission/reception antenna m labeled x805_m," and confirm whether a signal is present.

The gNB and NR-UE perform receive beamforming (reception directivity control) according to the seventh parameter by using one or more of "transmission/reception antenna 1 labeled x805_1 to transmission/reception antenna m labeled x805_m," and confirm whether a signal is present.

The gNB and NR-UE perform receive beamforming (reception directivity control) according to the eighth parameter by using one or more of "transmission/reception antenna 1 labeled x805_1 to transmission/reception antenna m labeled x805_m," and confirm whether a signal is present.

Thus, the gNB and NR-UE perform receive beamforming (reception directivity control) according to the i-th parameter by using one or more of "transmission/reception antenna 1 labeled x805_1 to transmission/reception antenna m labeled x805_m," and confirm whether a signal is present. Note that i is an integer from 1 to g (both inclusive).

The methods of transmit/receive beamforming are not limited to the above-mentioned examples. For example, in FIG. 10, transmit beamforming may be performed using one or more transmission/reception antennas of transmission/reception antenna 1 labeled x805_1 to transmission/reception antenna m labeled x805_m. Further, in FIG. 10, receive beamforming may be performed using one or more transmission/reception antennas of transmission/reception antenna 1 labeled x805_1 to transmission/reception antenna m labeled x805_m.

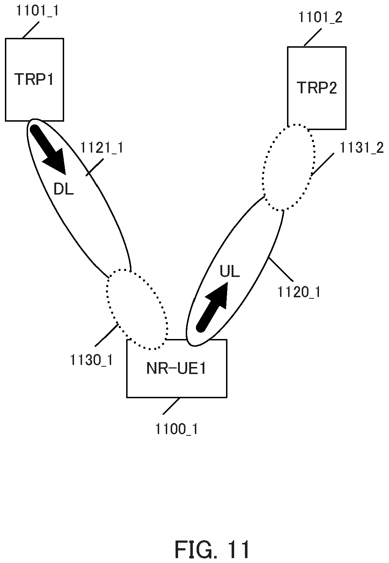

Next, a description will be given of an exemplary radio system related to the present invention with reference to FIG. 11.

As in FIG. 11, for example, there are TRP (TRP: Tx (Transmission)/Rx (Reception) point) 1 labeled 1101_1, TRP 2 labeled 1101_2, and NR-UE 1 labeled 1100_1.

At this time, TRP 1 labeled 1101_1 generates transmission beam 1121_1 and uses transmission beam 1121_1 to transmit a modulation signal addressed to NR-UE 1 labeled 1100_1 (Downlink (DL)).

NR-UE 1 labeled 1100_1 then generates received beam 1130_1 and uses received beam 1130_1 to receive the modulation signal addressed to NR-UE 1 that has been transmitted by TRP 1 labeled 1101_1.

Moreover, NR-UE 1 labeled 1100_1 generates transmission beam 1120_1 and uses transmission beam 1120_1 to transmit a modulation signal addressed to TRP 2 labeled 1101_2 (Uplink (UL)).

TRP 2 labeled 1101_2 then generates received beam 1131_2 and uses received beam 1131_2 to receive the modulation signal addressed to TRP 2 that has been transmitted by NR-UE 1 labeled 1100_1.

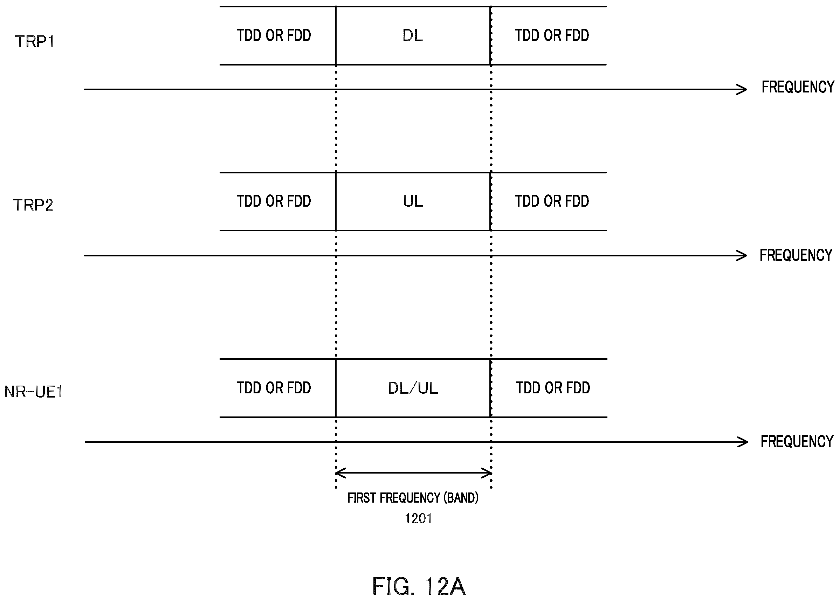

FIG. 12A illustrates exemplary communication statuses of "TRP 1 labeled 1101_1, TRP 2 labeled 1101_2, and NR-UE 1 labeled 1100_1" in a frequency axis in FIG. 11. Note that, in FIG. 12A, a horizontal axis represents the frequency.

TRP 1 labeled 1101_1 uses first frequency (band) 1201 to transmit a modulation signal for downlink. At this time, for example, NR-UE 1 labeled 1100_1 receives the modulation signal transmitted by TRP 1 labeled 1101_1. Note that, as in FIG. 12A, TRP 1 labeled 1101_1 may perform communication by Time Division Duplex (TDD) (also referred to as "TDD communication") and communication by Frequency Division Duplex (FDD) (also referred to as "FDD communication") at a frequency (band) other than first frequency (band) 1201. Unlike FIG. 12A, TRP 1 labeled 1101_1 need not perform communication at a frequency (band) other than first frequency (band) 1201.

TRP 2 labeled 1101_2 uses first frequency (band) 1201 to receive a modulation signal for uplink. At this time, TRP 2 labeled 1101_2 receives the modulation signal at first frequency (band) 1201 transmitted by NR-UE 1 labeled 1100_1. Note that, as in FIG. 12A, TRP 2 labeled 1101_2 may perform TDD communication or FDD communication at a frequency (band) other than first frequency (band) 1201. Unlike FIG. 12A, TRP 2 labeled 1101_2 need not perform communication at a frequency (band) other than first frequency (band) 1201.

NR-UE 1 labeled 1100_1 uses first frequency (band) 1201 to receive a modulation signal for downlink and to transmit a modulation signal for uplink. At this time, for example, TRP 2 labeled 1101_2 receives the modulation signal transmitted by NR-UE 1 labeled 1100_1. NR-UE 1 labeled 1100_1 then receives the modulation signal at first frequency (band) 1201 transmitted by TRP 1 labeled 1101_1. Note that, as in FIG. 12A, NR-UE 1 labeled 1100_1 may perform TDD communication or FDD communication at a frequency (band) other than first frequency (band) 1201. Unlike FIG. 12A, NR-UE 1 labeled 1100_1 need not perform communication at a frequency (band) other than first frequency (band) 1201.

In FIG. 12A, a case has been described where the frequency for "downlink" and the frequency for "uplink" are the same frequency (band), but the present embodiment is not limited to this case, and the frequency for "downlink" and the frequency for "uplink" may be the same frequency (band) partly. TDD and FDD will be described later.

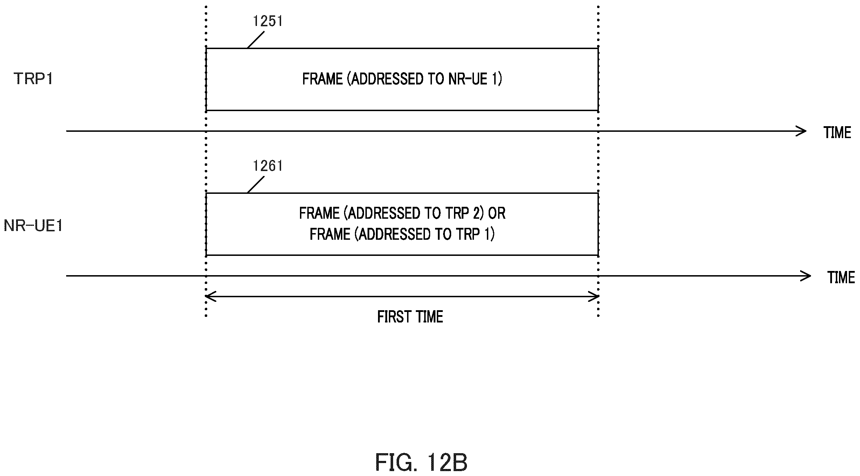

FIG. 12B illustrates transmission statuses of TRP 1 labeled 1101_1 and NR-UE 1 labeled 1100_1 in a time axis in situations of FIG. 11 and FIG. 12A. Note that, in FIG. 12B, a horizontal axis represents time.

As illustrated in FIG. 12B, TRP 1 labeled 1101_1 transmits frame 1251 addressed to NR-UE 1 labeled 1100_1 in the first time. Moreover, NR-UE 1 labeled 1100_1 transmits frame 1261 addressed to TRP 2 labeled 1101_2 in the first time.

Therefore, NR-UE 1 labeled 1100_1 performs transmission and reception at the same frequency (or partly same frequency) and in the same time. At this time, as described with reference to FIG. 11, NR-UE 1 labeled 1100_1 is likely to have different directions of transmission (direction from NR-UE 1 to TRP 2) and reception (direction from TRP 1 to NR-UE 1), because of which the following effects can be brought about: the possibility of separating a transmission beam and a received beam is increased, self-interference is reduced, and the quality of data in a received signal is improved.

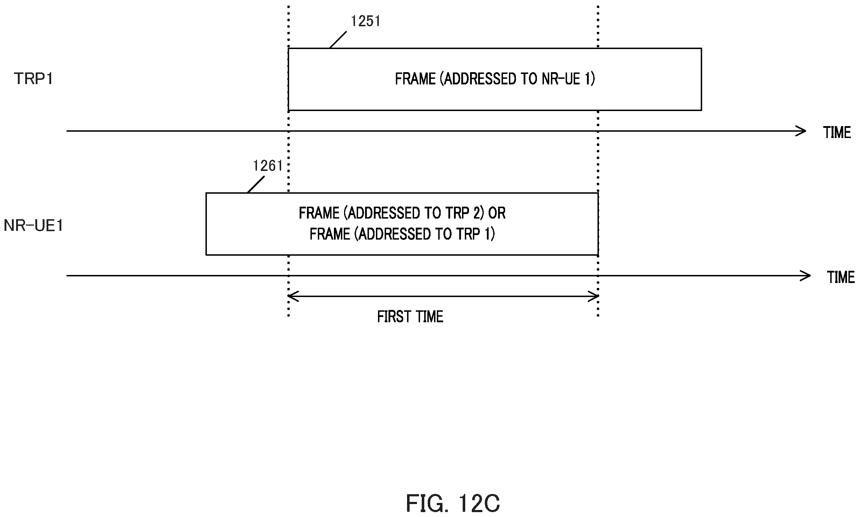

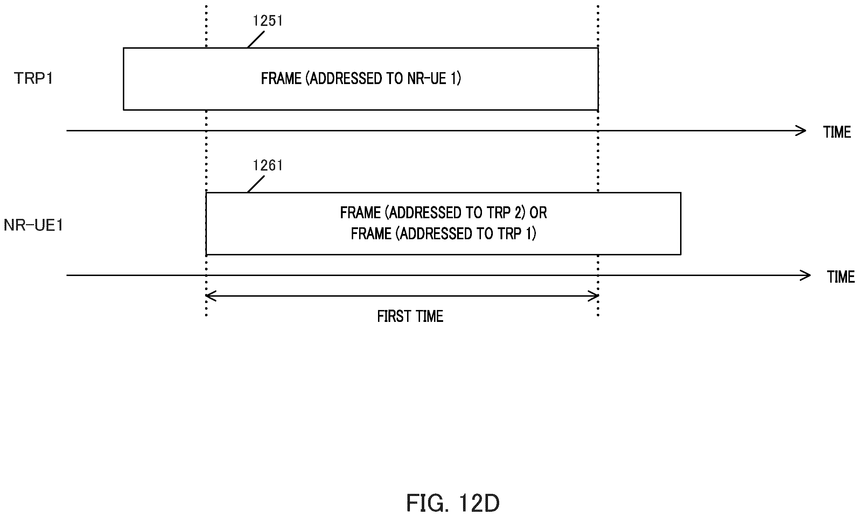

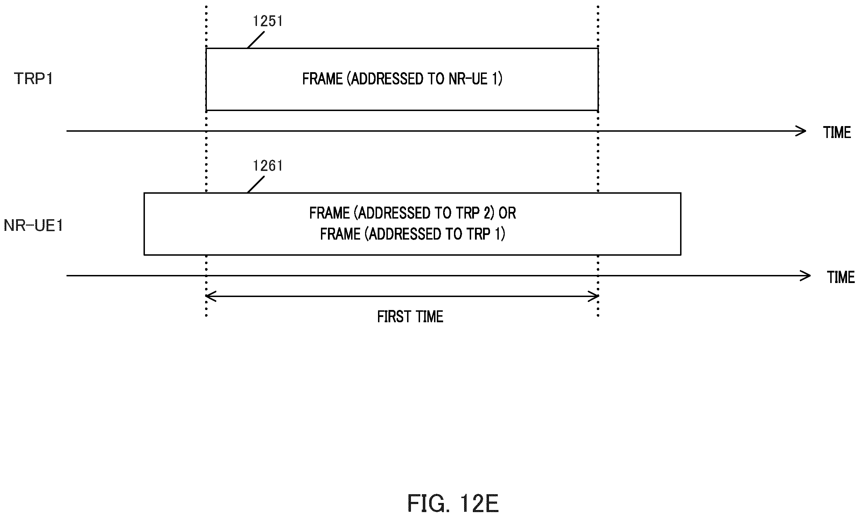

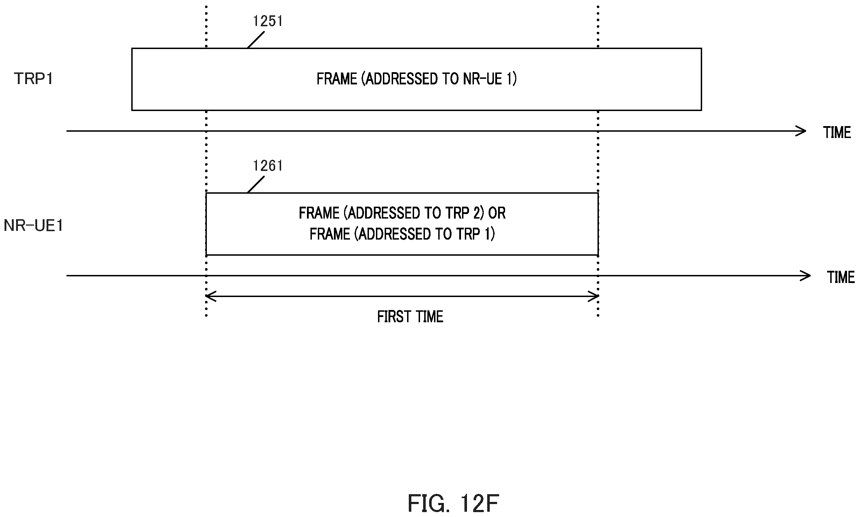

FIG. 12C, FIG. 12D, FIG. 12E, and FIG. 12F each illustrate transmission statuses of TRP 1 labeled 1101_1 and NR-UE 1 labeled 1100_1 in a time axis in situations of FIG. 11 and FIG. 12A, which are different from those in FIG. 12B. Note that, in FIG. 12C, FIG. 12D, FIG. 12E, and FIG. 12F, a horizontal axis represents time.

As illustrated in FIG. 12C, FIG. 12D, FIG. 12E, and FIG. 12F, TRP 1 labeled 1101_1 transmits frame 1251 addressed to NR-UE 1 labeled 1100_1 in any time section of the first time. Meanwhile, NR-UE 1 labeled 1100_1 transmits frame 1261 addressed to TRP 2 labeled 1101_2 in any time section of the first time.

Therefore, NR-UE 1 labeled 1100_1 performs transmission and reception at the same frequency (or partly same frequency) and in the same time. At this time, as described with reference to FIG. 11, NR-UE 1 labeled 1100_1 is likely to have different directions of transmission (direction from NR-UE 1 to TRP 2) and reception (direction from TRP 1 to NR-UE 1), because of which the following effects can be brought about: the possibility of separating a transmission beam and a received beam is increased, self-interference is reduced, and the quality of data in a received signal is improved.

Note that examples of temporal arrangement of the frame transmitted by TRP 1 labeled 1101_1 and the frame transmitted by NR-UE 1 labeled 1100_1 are not limited to those in FIG. 12B, FIG. 12C, FIG. 12D, FIG. 12E, and FIG. 12F, and any temporal arrangement is possible as long as both the frame transmitted by TRP 1 labeled 1101_1 and the frame transmitted by NR-UE 1 labeled 1100_1 are present at the same time.

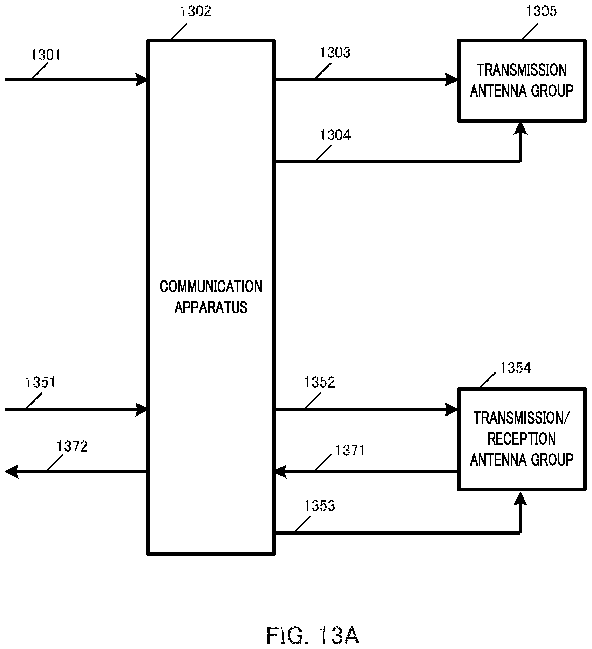

FIG. 13A illustrates an exemplary configuration an apparatus of TRP 1 labeled 1101_1. Communication apparatus 1302 inputs data 1301 and outputs modulation signal (group) 1303 including a signal addressed to NR-UE 1 labeled 1100_1, and control signal 1304. Transmission antenna (group) 1305 inputs modulation signal (group) 1303 and control signal 1304, generates a transmission signal based on control signal 1304, and outputs the transmission signal as a radio wave. At this time, the transmission signal is transmitted using transmission beam 1121_1 as illustrated in FIG. 11, for example.

Moreover, communication apparatus 1302 inputs data 1351 and outputs modulation signal (group) 1352 and control signal 1353 that are for communication by "TDD or FDD" in FIG. 12A. Transmission/reception antenna (group) 1354 inputs modulation signal (group) 1352 and control signal 1353 that are for the communication by "TDD or FDD," generates a transmission signal for the communication by "TDD or FDD" based on control signal 1353, and outputs the transmission signal as a radio wave.

Transmission/reception antenna (group) 1354 receives received signal 1371 associated with the communication by "TDD or FDD" in FIG. 12A. Communication apparatus 1302 then inputs received signal 1371, performs processing such as demodulation and decoding an error correction code, and outputs received data 1372.

Thus, for example, TRP 1 labeled 1101_1 may have a configuration to transmit a modulation signal to NR-UE 1 labeled 1100_1 and performing the communication by "TDD or FDD," as illustrated in FIG. 11 and FIG. 12A. Note that TRP 1 labeled 1101_1 may be configured to include no parts related to the communication by "TDD or FDD" in FIG. 13A. At this time, TRP 1 labeled 1101_1 is composed of communication apparatus 1302 and transmission antenna (group) 1305, for example.

Incidentally, when TRP 1 labeled 1101_1 performs the communication by "TDD or FDD," a counterpart in the communication by "TDD or FDD" may be NR-UE 1 labeled 1100_1 or another NR-UE. Thus, it is possible to bring about an effect of improving the data transmission efficiency in TRP 1 labeled 1101_1. Further, when the counterpart in the communication by "TDD or FDD" is NR-UE 1 labeled 1100_1, an effect of improving the data transmission efficiency in NR-UE 1 labeled 1100_1 can be brought about.

In FIG. 13A, the terms of "transmission antenna (group)" and "transmission/reception antenna (group)" are used, but each of them may be referred to as an antenna port or called something else. When they are referred to as antenna ports, the configuration is characterized in that TRP 1 labeled 1101_1 separately includes an "antenna port for transmitting modulation signal (group) 1303 including a signal addressed to NR-UE 1 labeled 1100_1" and an "antenna port for performing the communication by "TDD or FDD"" in FIG. 13A.

The antenna port may be a logical antenna (antenna group) composed of one or more physical antennas. That is, the antenna port does not necessarily refer to one physical antenna, but may refer to an array antenna or the like composed of a plurality of antennas. For example, the number of physical antennas composing the antenna port is not specified, but the number of physical antennas may be specified as the minimum unit in which a terminal station is capable of transmitting a reference signal. Further, the antenna port may also be specified as a unit or a minimum unit for multiplication by a precoding vector or a weight of a precoding matrix.

Further, the "transmission antenna (group)" and the "transmission/recption antenna (group)" are illustrated one each in the drawings, there may be a plurality of antennas (antenna groups). The "transmission antenna (group)" and the "transmission/recption antenna (group)" may be each composed of one antenna or a plurality of antennas.

Note that, in FIG. 13A, a "transmission antenna group," a "reception antenna group," and a "transmission/recption antenna group" other than those illustrated in FIG. 13A may be included. A specific operation in this case will be described later.

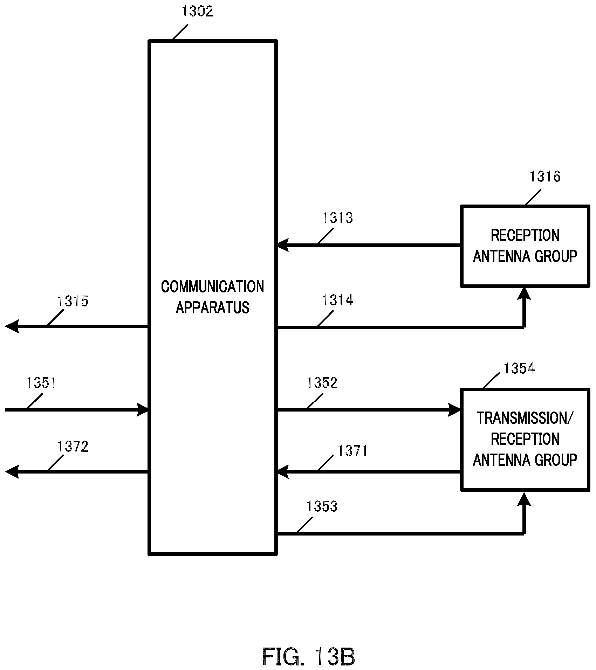

FIG. 13B illustrates an exemplary configuration an apparatus of TRP 2 labeled 1101_2. Note that the components that operate in the same manner as the components in FIG. 13A are denoted by the same reference numerals, and some descriptions thereof will be omitted. Reception antenna (group) 1316 receives a modulation signal (received signal 1313) transmitted by NR-UE 1 1100_1 illustrated in FIG. 11. Moreover, recption antenna (group) 1316 inputs control signal 1314 and operates as a reception antenna based on control signal 1314. Communication apparatus 1302 then inputs received signal 1313, performs processing such as demodulation and decoding an error correction code, and outputs received data 1315.

Moreover, communication apparatus 1302 inputs data 1351 and outputs modulation signal (group) 1352 and control signal 1353 that are for communication by "TDD or FDD" in FIG. 12A. Transmission/reception antenna (group) 1354 inputs modulation signal (group) 1352 and control signal 1353 that are for the communication by "TDD or FDD," generates a transmission signal for the communication by "TDD or FDD" based on control signal 1353, and outputs the transmission signal as a radio wave.

Transmission/reception antenna (group) 1354 receives received signal 1371 associated with the communication by "TDD or FDD" in FIG. 12A. Communication apparatus 1302 then inputs received signal 1371, performs processing such as demodulation and decoding an error correction code, and outputs received data 1372.

Thus, for example, TRP 2 labeled 1101_2 may have a configuration to receive a modulation signal tramnmitted by NR-UE 1 labeled 1100_1 and performing the communication by "TDD or FDD," as illustrated in FIG. 11 and FIG. 12A. Note that TRP 2 labeled 1101_2 may be configured to include no parts related to the communication by "TDD or FDD" in FIG. 13B. At this time, TRP 2 labeled 1101_2 is composed of communication apparatus 1302 and reception antenna (group) 1316, for example.

Incidentally, when TRP 2 labeled 1101_2 performs the communication by "TDD or FDD," a counterpart in the communication by "TDD or FDD" may be NR-UE 1 labeled 1100_1 or another NR-UE. Thus, it is possible to bring about an effect of improving the data transmission efficiency in TRP 2 labeled 1101_2. Further, when the counterpart in the communication by "TDD or FDD" is NR-UE 1 labeled 1100_1, an effect of improving the data transmission efficiency in NR-UE 1 labeled 1100_1 can be brought about.

In FIG. 13B, the terms of "reception antenna (group)" and "transmission/reception antenna (group)" are used, but each of them may be referred to as an antenna port or called something else. When they are referred to as antenna ports, the configuration is characterized in that TRP 2 labeled 1101_2 separately includes an "antenna port for receiving a modulation signal transmitted by NR-UE 1 labeled 1100_1" and an "antenna port for performing the communication by "TDD or FDD"" in FIG. 13B.

Further, the "recption antenna (group)" and the "transmission/recption antenna (group)" are illustrated one each in the drawings, there may be a plurality of antennas (antenna groups). The "recption antenna (group)" and the "transmission/recption antenna (group)" may be each composed of one antenna or a plurality of antennas.

Note that, in FIG. 13B, a "transmission antenna group," a "reception antenna group," and a "transmission/recption antenna group" other than those illustrated in FIG. 13B may be included. A specific operation in this case will be described later.

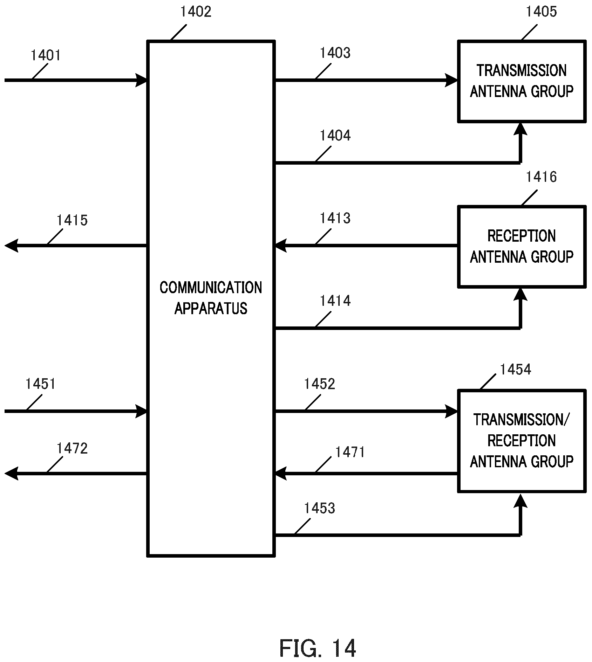

FIG. 14 illustrates an exemplary configuration an apparatus of NR-UE 1 labeled 1100_1. Communication apparatus 1402 inputs data 1401 and outputs modulation signal (group) 1403 including a signal addressed to TRP 2 labeled 1101_2, and control signal 1404. Transmission antenna (group) 1405 inputs modulation signal (group) 1403 and control signal 1404, generates a transmission signal based on control signal 1404, and outputs the transmission signal as a radio wave. At this time, the transmission signal is transmitted using transmission beam 1120_1 as illustrated in FIG. 11, for example.

Reception antenna (group) 1416 receives the modulation signal (received signal 1413) transmitted by TRP 1 labeled 1101_1 illustrated in FIG. 11. Further, reception antenna (group) 1416 inpputs control signal 1414 and operates as a reception antenna based on control signal 1414. Communication apparatus 1302 then inputs received signal 1413, performs processing such as demodulation and decoding an error correction code, and outputs received data 1415.

Moreover, communication apparatus 1402 inputs data 1451 and outputs modulation signal (group) 1452 and control signal 1453 that are for communication by "TDD or FDD" in FIG. 12A. Transmission/reception antenna (group) 1454 inputs modulation signal (group) 1452 and control signal 1453 that are for the communication by "TDD or FDD," generates a transmission signal for the communication by "TDD or FDD" based on control signal 1453, and outputs the transmission signal as a radio wave.

Transmission/reception antenna (group) 1454 receives received signal 1471 associated with the communication by "TDD or FDD" in FIG. 12A. Communication apparatus 1402 then inputs received signal 1471, performs processing such as demodulation and decoding an error correction code, and outputs received data 1472.

Thus, for example, NR-UE 1 labeled 1100_1 may have a configuration to transmit a modulation signal transmitted by TRP 1 labeled 1101_1 and performing the communication by "TDD or FDD," as illustrated in FIG. 11 and FIG. 12A. Note that NR-UE 1 labeled 1100_1 may be configured to include no parts related to the communication by "TDD or FDD" in FIG. 14. At this time, NR-UE 1 labeled 1100_1 is composed of communication apparatus 1402 and transmission antenna (group) 1405, and reception antenna (group) 1416, for example.

Note that, in the example of FIG. 11, TRP 1 labeled 1101_1 transmits a modulation signal for downlink, but TRP 2 labeled 1101_2 may transmit a modulation signal for downlink and NR-UE 1 labeled 1100_1 may have the function of receiving the "modulation signal for downlink transmitted by TRP 2 labeled 1101_2" and transmitting a modulation signal for uplink addressed to TRP 2 labeled 1101_2. At this time, a frequency (band) in which NR-UE 1 labeled 1100_1 transmits a signal and a frequency (band) in which NR-UE 1 abeled 1100_1 receives a signal are the same or partly the same. Further, the signal transmitted by NR-UE 1 labeled 1100_1 and the signal received by NR-UE 1 labeled 1100_1 are present in the same time or partly the same time.

In FIG. 14, transmission antenna group 1405, reception antenna group 1416, transmission/recption antenna group 1454 are units separate from each other, but the present disclosure is not limited to this case. For example, in FIG. 14, "transmission antenna group 1405" and "transmission antenna function of transmission/-recption antenna group 1454" may be shared (e.g., realized by one transmission antenna group). Alternatively, "recption antenna group 1416" and "recption antenna function of transmission/recption antenna group 1454" may be shared ((e.g., realized by one recption antenna group).

Note that, when NR-UE 1 labeled 1100_1 performs the communication by "TDD or FDD," a counterpart in the communication by "TDD or FDD" may be TRP 1 labeled 1101_1 and/or a TRP 2 labeled 1101_2, or another TRP. Thus, it is possible to bring about an effect of improving the data transmission efficiency in NR-UE 1 labeled 1100_1.

In FIG. 14, the terms of "transmission antenna (group)," "reception antenna (group)," and "transmission/reception antenna (group)" are used, but each of them may be referred to as an antenna port or called something else. When they are referred to as antenna ports, the configuration is characterized in that NR-UE 1 labeled 1100_1 separately includes an "antenna port for transmitting modulation signal (group) 1403 including a signal addressed to TRP 2 labeled 1101_2" and an "antenna port for performing the communication by "TDD or FDD"" in FIG. 14. Alternatively, the configuration is characterized in that NR-UE 1 labeled 1100_1 separately includes the "antenna port for transmitting modulation signal (group) 1403 including a signal addressed to TRP 2 labeled 1101_2," an "antenna port for receiving the modulation signal (group) transmitted by TRP 1 labeled 1101_1," and the "antenna port for performing the communication by "TDD or FDD"" in FIG. 14.

Further, the "transmission antenna (group)," "recption antenna (group)," and the "transmission/recption antenna (group)" are illustrated one each in the drawings, there may be a plurality of antennas (antenna groups). The "transmission antenna (group)," "recption antenna (group)," and the "transmission/recption antenna (group)" may be each composed of one antenna or a plurality of antennas.

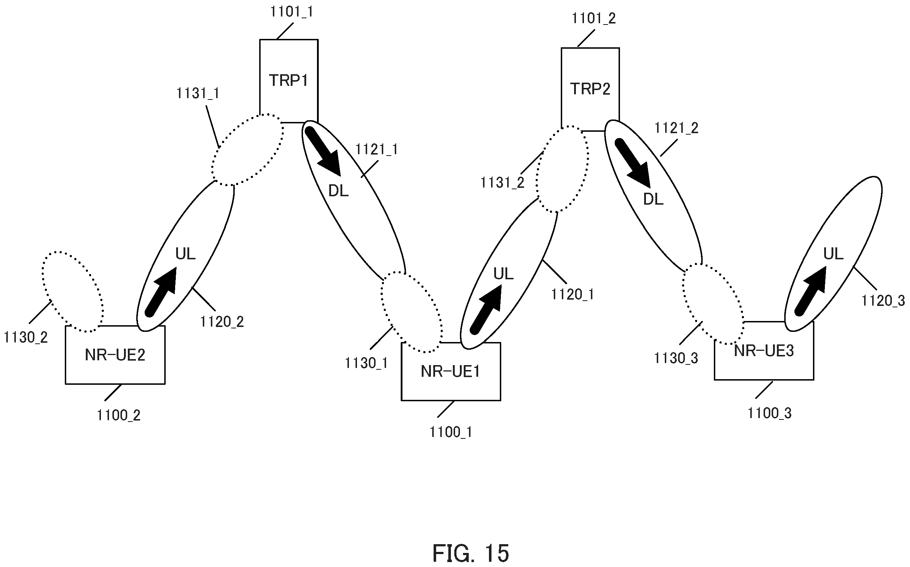

Next, an exemplary radio system different from that in FIG. 11 will be described with reference to FIG. 15.

As illustrated in FIG. 15, there are TRP 1 labeled 1101_1, TRP 2 labeled 1101_2, NR-UE 1 labeled 1100_1, NR-UE 2 labeled 1100_2, and NR-UE 3 labeled 1100_3, for example. Note that, in FIG. 15, the components that operate in the same manner as the components in FIG. 11 are denoted by the same reference numerals, and some descriptions thereof will be omitted.

In FIG. 15, TRP 1 labeled 1101_1 generates transmission beam 1121_1 and uses transmission beam 1121_1 to transmit a modulation signal addressed to NR-UE 1 labeled 1100_1 (Downlink (DL)).

NR-UE 1 labeled 1100_1 then generates received beam 1130_1 and uses received beam 1130_1 to receive the modulation signal addressed to NR-UE 1 that has been transmitted by TRP 1 labeled 1101_1.

Moreover, NR-UE 1 labeled 1100_1 generates transmission beam 1120_1 and uses transmission beam 1120_1 to transmit a modulation signal addressed to TRP 2 labeled 1101_2 (Uplink (UL)).

TRP 2 labeled 1101_2 then generates received beam 1131_2 and uses received beam 1131_2 to receive the modulation signal addressed to TRP 2 that has been transmitted by NR-UE 1 labeled 1100_1.

NR-UE 2 labeled 1100_2 generates transmission beam 1120_2 and uses transmission beam 1120_2 to transmit a modulation signal addressed to TRP 1 labeled 1101_1 (Uplink (UL)).

TRP 1 labeled 1101_1 then generates received beam 1131_1 and uses received beam 1131_1 to receive the modulation signal addressed to TRP 1 that has been transmitted by NR-UE 2 labeled 1100_2.

TRP 2 labeled 1101_2 generates transmission beam 1121_2 and uses transmission beam 1121_2 to transmit a modulation signal addressed to NR-UE 3 labeled 1100_3 (Downlink (DL)).

NR-UE 3 labeled 1100_3 then generates received beam 1130_3 and uses received beam 1130_3 to receive the modulation signal addressed to NR-UE 3 that has been transmitted by TRP 2 labeled 1101_2.

Moreover, NR-UE 2 labeled 1100_2 then generates received beam 1130_2 and uses received beam 1130_2 to receive the modulation signal addressed to NR-UE 3 that has been transmitted by the TRP.

NR-UE 3 labeled 1100_3 generates transmission beam 1120_3 and uses transmission beam 1120_3 to transmit a modulation signal addressed to the TRP.

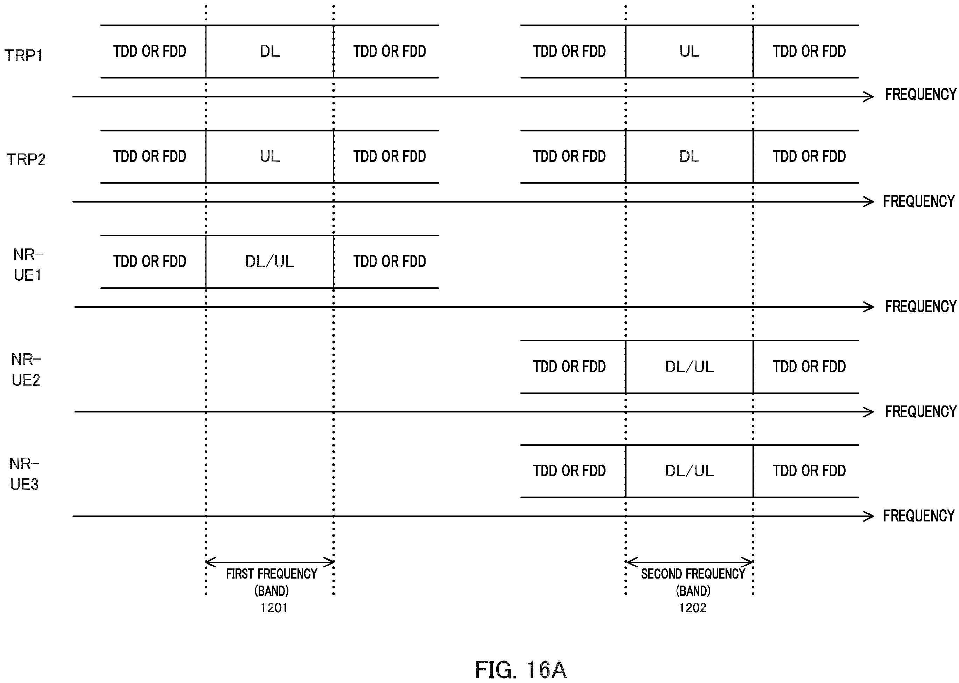

FIG. 16A illustrates exemplary communication statuses of "TRP 1 labeled 1101_1, TRP 2 labeled 1101_2, NR-UE 1 labeled 1100_1, NR-UE 2 labeled 1100_2, and NR-UE 3 labeled 1100_3" in the frequency axis in FIG. 15. Note that, in FIG. 16A, a horizontal axis represents the frequency, and the components that operate in the same manner as the components in FIG. 12 are denoted by the same reference numerals.

TRP 1 labeled 1101_1 uses first frequency (band) 1201 to transmit a modulation signal for downlink. At this time, for example, NR-UE 1 labeled 1100_1 receives the modulation signal at first frequency (band) 1201 transmitted by TRP 1 labeled 1101_1. Note that, as in FIG. 16A, TRP 1 labeled 1101_1 may perform TDD communication or FDD communication at a frequency (band) other than first frequency (band) 1201.

TRP 1 labeled 1101_1 then uses second frequency (band) 1202 to receive a modulation signal for uplink. At this time, TRP 1 labeled 1101_1 receives the modulation signal in the second frequency (band) transmitted by NR-UE 2 labeled 1100_2.

Unlike FIG. 16A, TRP 1 labeled 1101_1 need not perform communication at a frequency (band) other than "first frequency (band) 1201 and second frequency (band) 1202."

TRP 2 labeled 1101_2 uses first frequency (band) 1201 to receive a modulation signal for uplink. At this time, TRP 2 labeled 1101_2 receives the modulation signal at first frequency (band) 1201 transmitted by NR-UE 1 labeled 1100_1. Note that, as in FIG. 16A, TRP 2 labeled 1101_2 may perform TDD communication or FDD communication at a frequency (band) other than first frequency (band) 1201.

TRP 2 labeled 1101_2 then uses second frequency (band) 1202 to transmit a modulation signal for downlink. At this time, for example, NR-UE 3 labeled 1100_3 receives the modulation signal at second frequency (band) 1202 transmitted by TRP 2 labeled 1101_2.

Unlike FIG. 16A, TRP 2 labeled 1101_2 need not perform communication at a frequency (band) other than "first frequency (band) 1201 and second frequency (band) 1202."

NR-UE 1 labeled 1100_1 uses first frequency (band) 1201 to receive a modulation signal for downlink and to transmit a modulation signal for uplink. At this time, for example, TRP 2 labeled 1101_2 receives the modulation signal at first frequency (band) 1201 transmitted by NR-UE 1 labeled 1100_1. NR-UE 1 labeled 1100_1 then receives the modulation signal at first frequency (band) 1201 transmitted by TRP 1 labeled 1101_1. Note that, as in FIG. 16A, NR-UE 1 labeled 1100_1 may perform TDD communication or FDD communication at a frequency (band) other than first frequency (band) 1201. Unlike FIG. 16A, NR-UE 1 labeled 1100_1 need not perform communication at a frequency (band) other than first frequency (band) 1201.

NR-UE 2 labeled 1100_2 uses second frequency (band) 1202 to receive a modulation signal for downlink and to transmit a modulation signal for uplink. At this time, for example, TRP 1 labeled 1101_1 receives the modulation signal at second frequency (band) 1202 transmitted by NR-UE 2 labeled 1100_2. NR-UE 2 labeled 1100_2 then receives the modulation signal at second frequency (band) 1202 transmitted by a TRP (in FIG. 16A, this TRP is not illustrated). Note that, as in FIG. 16A, NR-UE 2 labeled 1100_2 may perform TDD communication or FDD communication at a frequency (band) other than second frequency (band) 1202. Unlike FIG. 16A, NR-UE 2 labeled 1100_2 need not perform communication at a frequency (band) other than second frequency (band) 1202.

NR-UE 3 labeled 1100_3 uses second frequency (band) 1202 to receive a modulation signal for downlink and to transmit a modulation signal for uplink. At this time, for example, a TRP receives the modulation signal at second frequency (band) 1202 transmitted by NR-UE 3 labeled 1100_3 (in FIG. 16A, this TRP is not illustrated). NR-UE 3 labeled 1100_3 then receives the modulation signal at second frequency (band) 1202 transmitted by TRP 2 labeled 1101_2. Note that, as in FIG. 16A, NR-UE 3 labeled 1100_3 may perform TDD communication or FDD communication at a frequency (band) other than second frequency (band) 1202. Unlike FIG. 16A, NR-UE 3 labeled 1100_3 need not perform communication at a frequency (band) other than second frequency (band) 1202.

In FIG. 16A, a case has been described where the frequency for "downlink" and the frequency for "uplink" are the same frequency (band), but the present embodiment is not limited to this case, and the frequency for "downlink" and the frequency for "uplink" may be the same frequency (band) partly. TDD and FDD will be described later.

FIG. 12B illustrates transmission statuses of TRP 1 labeled 1101_1 and NR-UE 1 labeled 1100_1 in a time axis in situations of FIG. 15 and FIG. 16A. Note that, in FIG. 12B, a horizontal axis represents time.

As illustrated in FIG. 12B, TRP 1 labeled 1101_1 transmits frame 1251 addressed to NR-UE 1 labeled 1100_1 in the first time. Moreover, NR-UE 1 labeled 1100_1 transmits frame 1261 addressed to TRP 2 labeled 1101_2 in the first time.

Therefore, NR-UE 1 labeled 1100_1 performs transmission and reception at the same frequency (or partly same frequency) and in the same time. At this time, as described with reference to FIG. 15, NR-UE 1 labeled 1100_1 is likely to have different directions of transmission (direction from NR-UE 1 to TRP 2) and reception (direction from TRP 1 to NR-UE 1), because of which the following effects can be brought about: the possibility of separating a transmission beam and a received beam is increased, self-interference is reduced, and the quality of data in a received signal is improved.

FIG. 12C, FIG. 12D, FIG. 12E, and FIG. 12F each illustrate transmission statuses of TRP 1 labeled 1101_1 and NR-UE 1 labeled 1100_1 in a time axis in situations of FIG. 15 and FIG. 16A, which are different from those in FIG. 12B. Note that, in FIG. 12C, FIG. 12D, FIG. 12E, and FIG. 12F, a horizontal axis represents time.

As illustrated in FIG. 12C, FIG. 12D, FIG. 12E, and FIG. 12F, TRP 1 labeled 1101_1 transmits frame 1251 addressed to NR-UE 1 labeled 1100_1 in any time section of the first time. Meanwhile, NR-UE 1 labeled 1100_1 transmits frame 1261 addressed to TRP 2 labeled 1101_2 in any time section of the first time.

Therefore, NR-UE 1 labeled 1100_1 performs transmission and reception at the same frequency (or partly same frequency) and in the same time. At this time, as described with reference to FIG. 15, NR-UE 1 labeled 1100_1 is likely to have different directions of transmission (direction from NR-UE 1 to TRP 2) and reception (direction from TRP 1 to NR-UE 1), because of which the following effects can be brought about: the possibility of separating a transmission beam and a received beam is increased, self-interference is reduced, and the quality of data in a received signal is improved.

Note that examples of temporal arrangement of the frame transmitted by TRP 1 labeled 1101_1 and the frame transmitted by NR-UE 1 labeled 1100_1 are not limited to those in FIG. 12B, FIG. 12C, FIG. 12D, FIG. 12E, and FIG. 12F, and any temporal arrangement is possible as long as both the frame transmitted by TRP 1 labeled 1101_1 and the frame transmitted by NR-UE 1 labeled 1100_1 are present at the same time.

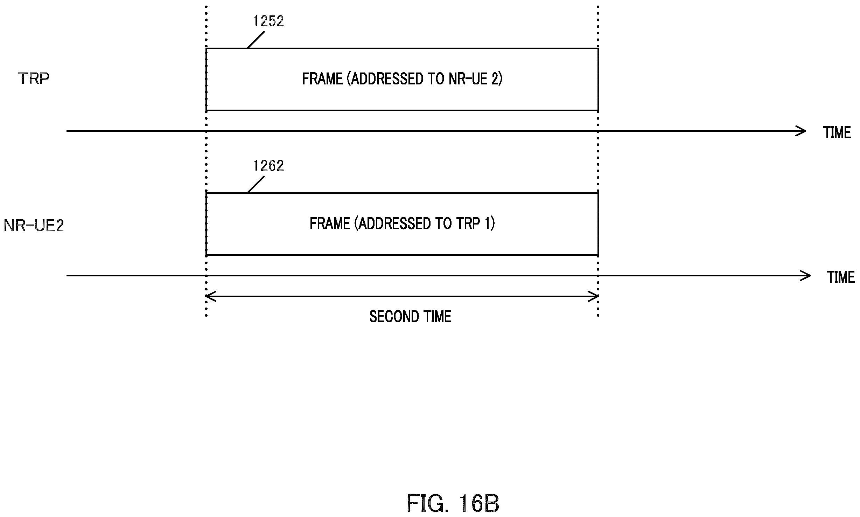

FIG. 16B illustrates transmission statuses of a TRP (not illustrated in FIG. 15) and NR-UE 2 labeled 1100_2 in a time axis in situations of FIG. 15 and FIG. 16A. Note that, in FIG. 16B, a horizontal axis represents time.

As illustrated in FIG. 16B, the TRP transmits frame 1252 addressed to NR-UE 2 labeled 1100_2 in the second time. Moreover, NR-UE 2 labeled 1100_2 transmits frame 1262 addressed to TRP 1 labeled 1101_1 in the second time.

Therefore, NR-UE 2 labeled 1100_2 performs transmission and reception at the same frequency (or partly same frequency) and in the same time. At this time, as described with reference to FIG. 15, NR-UE 2 labeled 1100_2 is likely to have different directions of transmission (direction from NR-UE 2 to TRP 1) and reception (direction from TRP to NR-UE 2), because of which the following effects can be brought about: the possibility of separating a transmission beam and a received beam is increased, self-interference is reduced, and the quality of data in a received signal is improved.

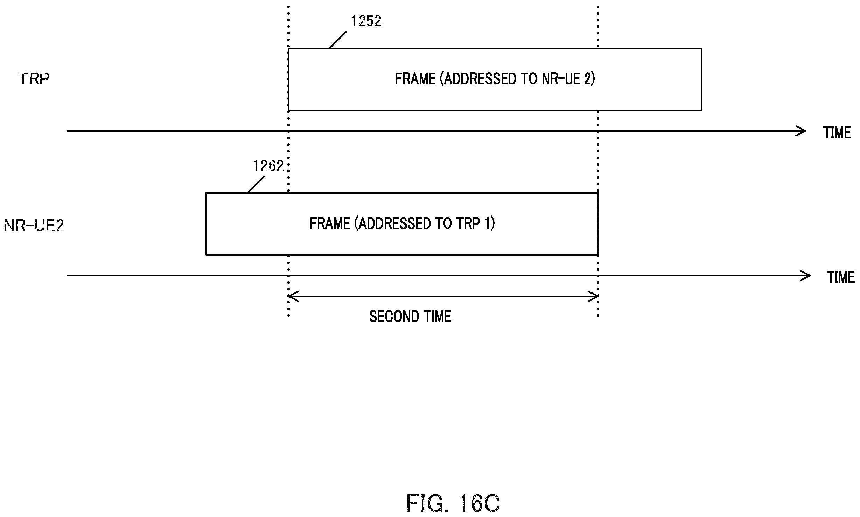

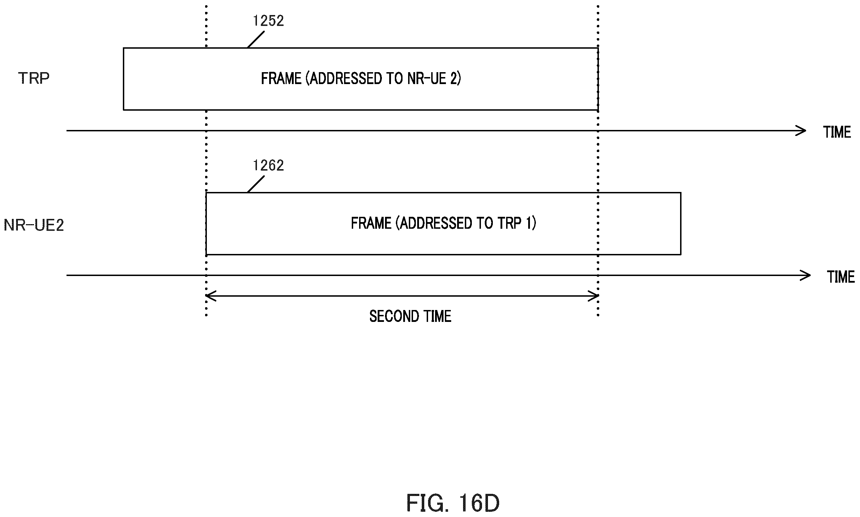

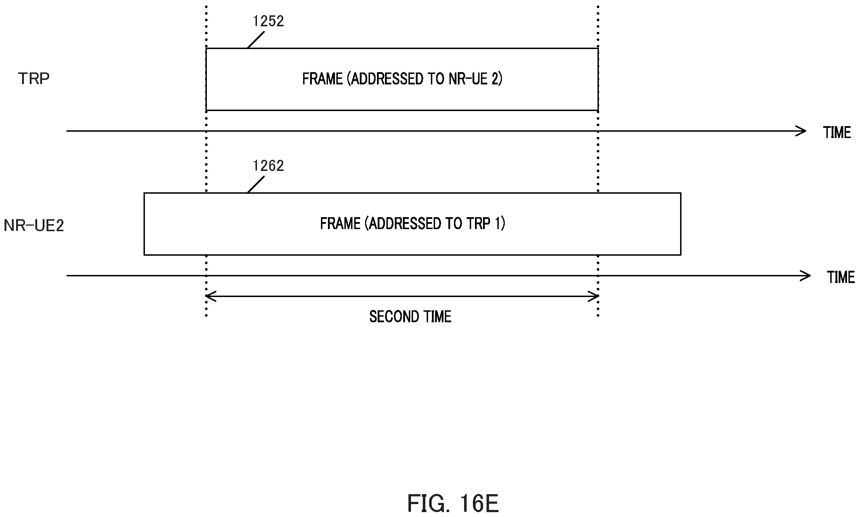

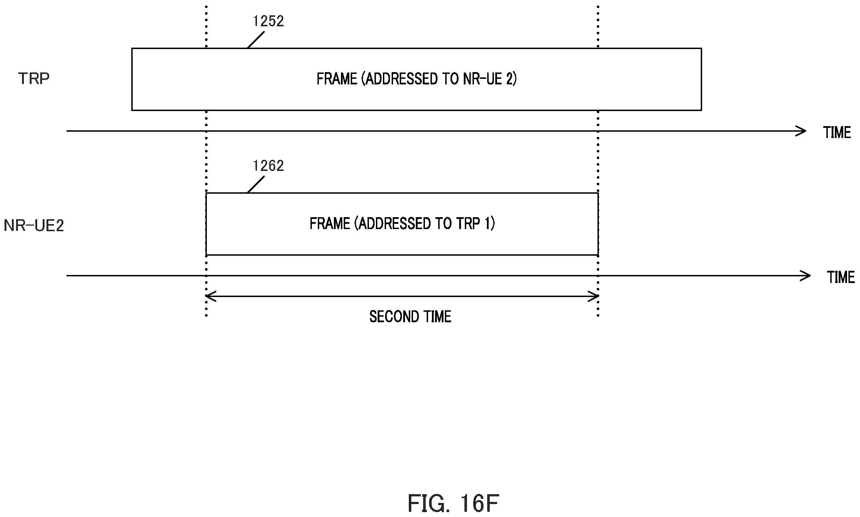

FIG. 16C, FIG. 16D, FIG. 16E, and FIG. 16F each illustrate transmission statuses of the TRP and NR-UE 2 labeled 1100_2 in a time axis in situations of FIG. 15 and FIG. 16A, which are different from those in FIG. 16B. Note that, in FIG. 16C, FIG. 16D, FIG. 16E, and FIG. 16F, a horizontal axis represents time.

As illustrated in FIG. 16C, FIG. 16D, FIG. 16E, and FIG. 16F, the TRP transmits frame 1252 addressed to NR-UE 2 labeled 1100_2 in any time section of the second time. Meanwhile, NR-UE 2 labeled 1100_2 transmits frame 1262 addressed to TRP 1 labeled 1101_1 in any time section of the second time.

Therefore, NR-UE 2 labeled 1100_2 performs transmission and reception at the same frequency (or partly same frequency) and in the same time. At this time, as described with reference to FIG. 15, NR-UE 2 labeled 1100_2 is likely to have different directions of transmission (direction from NR-UE 2 to TRP 1) and reception (direction from TRP to NR-UE 2), because of which the following effects can be brought about: the possibility of separating a transmission beam and a received beam is increased, self-interference is reduced, and the quality of data in a received signal is improved.

Note that examples of temporal arrangement of the frame transmitted by the TRP and the frame transmitted by NR-UE 2 labeled 1100_2 are not limited to those in FIG. 16B, FIG. 16C, FIG. 16D, FIG. 16E, and FIG. 16F, and any temporal arrangement is possible as long as both the frame transmitted by the TRP and the frame transmitted by NR-UE 2 labeled 1100_2 are present at the same time.

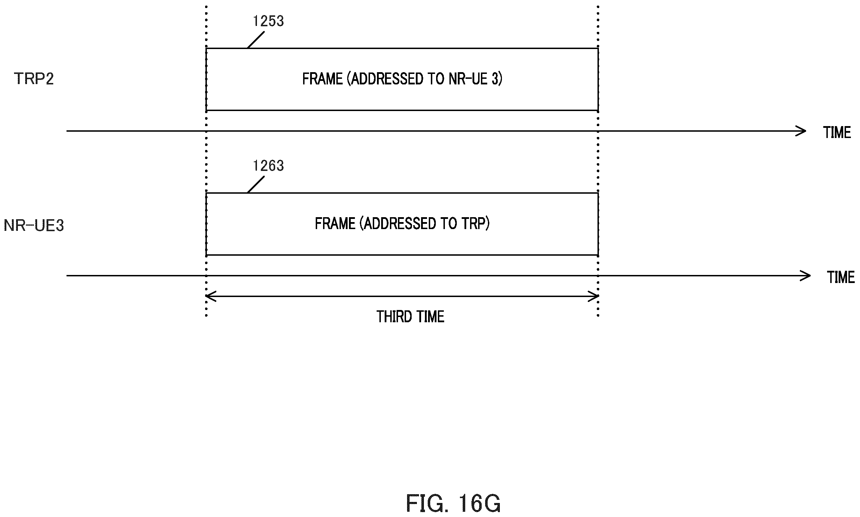

FIG. 16G illustrates transmission statuses of TRP 2 labeled 1101_2 and NR-UE 3 labeled 1100_3 in a time axis in situations of FIG. 15 and FIG. 16A. Note that, in FIG. 16G, a horizontal axis represents time.

As illustrated in FIG. 16G, TRP 2 labeled 1101_2 transmits frame 1253 addressed to NR-UE 3 labeled 1100_3 in the third time. Moreover, NR-UE 3 labeled 1100_3 transmits frame 1263 addressed to a TRP (not illustrated in FIG. 15) in the third time.

Therefore, NR-UE 3 labeled 1100_3 performs transmission and reception at the same frequency (or partly same frequency) and in the same time. At this time, as described with reference to FIG. 15, NR-UE 3 labeled 1100_3 is likely to have different directions of transmission (direction from NR-UE 3 to TRP) and reception (direction from TRP 2 labeled 1101_2 to NR-UE 3), because of which the following effects can be brought about: the possibility of separating a transmission beam and a received beam is increased, self-interference is reduced, and the quality of data in a received signal is improved.

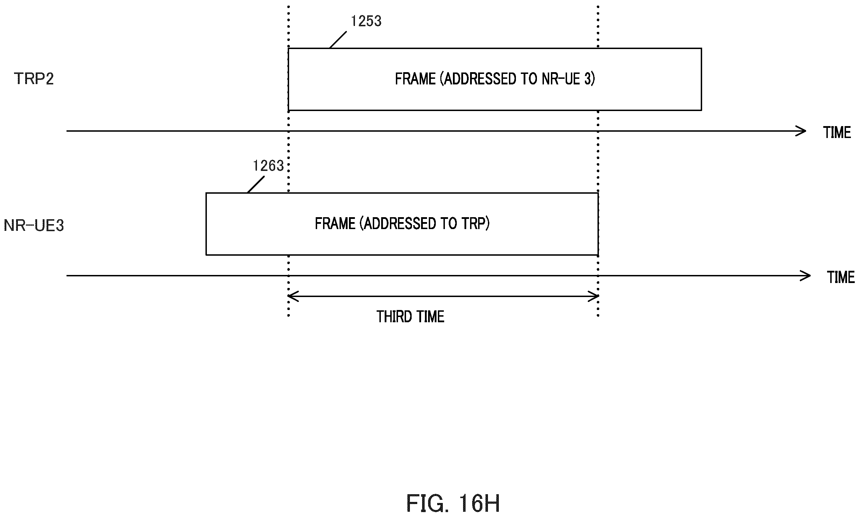

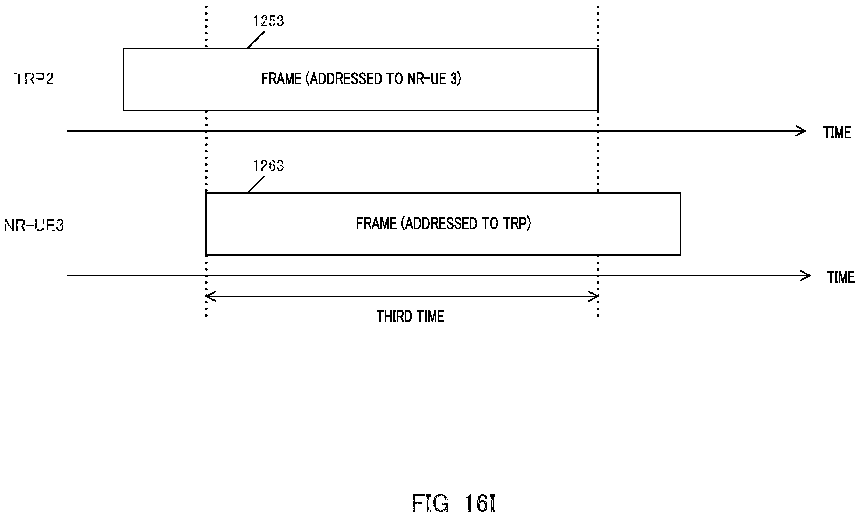

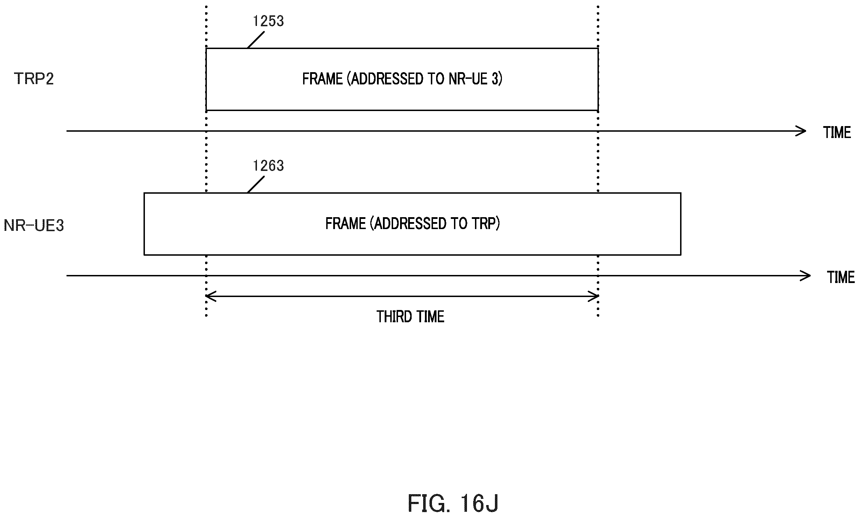

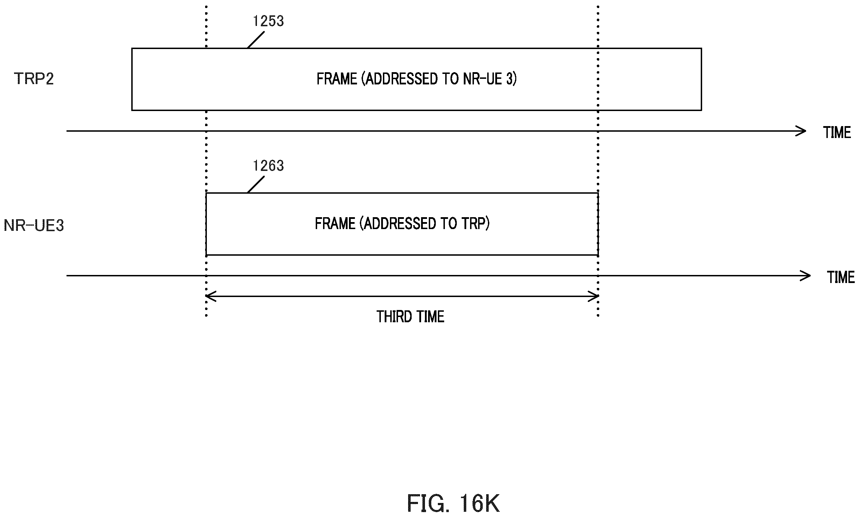

FIG. 16H, FIG. 16I, FIG. 16J, and FIG. 16K each illustrate transmission statuses of TRP 2 labeled 1101_2 and NR-UE 3 labeled 1100_3 in a time axis in situations of FIG. 15 and FIG. 16A, which are different from those in FIG. 16G. Note that, in FIG. 16H, FIG. 16I, FIG. 16J, and FIG. 16K, a horizontal axis represents time.

As illustrated in 16H, FIG. 16I, FIG. 16J, and FIG. 16K, TRP 2 labeled 1101_2 transmits frame 1253 addressed to NR-UE 3 labeled 1100_3 in any time section of the third time. Meanwhile, NR-UE 3 labeled 1100_3 transmits frame 1263 addressed to the TRP in any time section of the third time.

Therefore, NR-UE 3 labeled 1100_3 performs transmission and reception at the same frequency (or partly same frequency) and in the same time. At this time, as described with reference to FIG. 15, NR-UE 3 labeled 1100_3 is likely to have different directions of transmission (direction from NR-UE 3 to TRP) and reception (direction from TRP 2 labeled 1101_2 to NR-UE 3), because of which the following effects can be brought about: the possibility of separating a transmission beam and a received beam is increased, self-interference is reduced, and the quality of data in a received signal is improved.

Note that examples of temporal arrangement of the frame transmitted by TRP 2 labeled 1101_2 and the frame transmitted by NR-UE 3 labeled 1100_3 are not limited to those in FIG. 16G, FIG. 16H, FIG. 16I, FIG. 16J, and FIG. 16K, and any temporal arrangement is possible as long as both the frame transmitted by TRP 2 labeled 1101_2 and the frame transmitted by NR-UE 3 labeled 1100_3 are present at the same time.

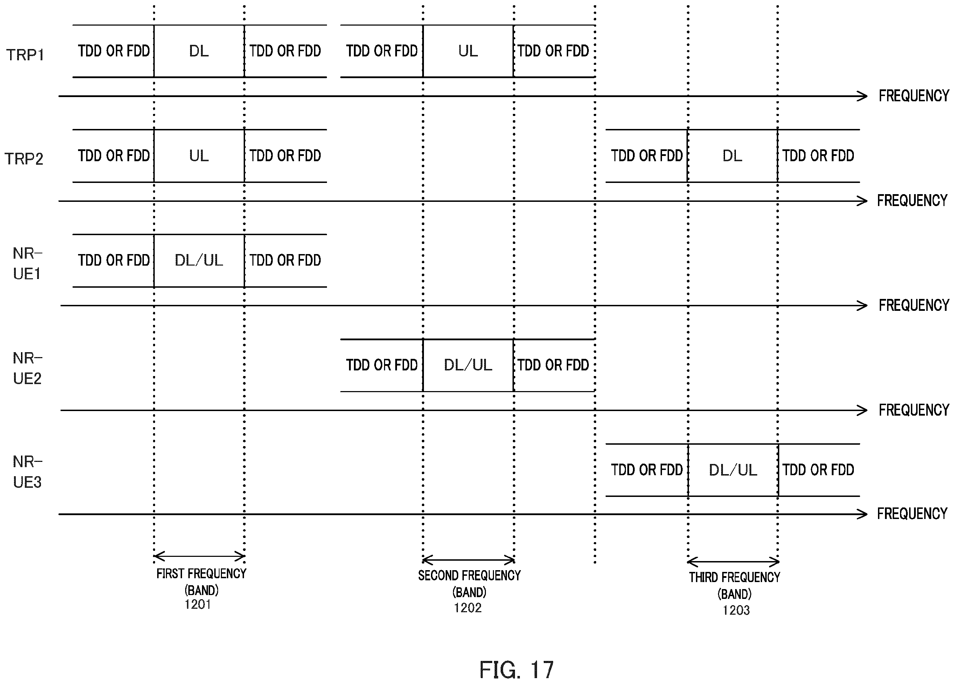

FIG. 17 illustrates exemplary communication statuses of "TRP 1 labeled 1101_1, TRP 2 labeled 1101_2, NR-UE 1 labeled 1100_1, NR-UE 2 labeled 1100_2, and NR-UE 3 labeled 1100_3" in the frequency axis in FIG. 15, which are different from those in FIG. 16A. Note that, in FIG. 17, a horizontal axis represents the frequency, and the components that operate in the same manner as the components in FIG. 12 and FIG. 16A are denoted by the same reference numerals.

TRP 1 labeled 1101_1 uses first frequency (band) 1201 to transmit a modulation signal for downlink. At this time, for example, NR-UE 1 labeled 1100_1 receives the modulation signal at first frequency (band) 1201 transmitted by TRP 1 labeled 1101_1. Note that, as in FIG. 17, TRP 1 labeled 1101_1 may perform TDD communication or FDD communication at a frequency (band) other than first frequency (band) 1201.

TRP 1 labeled 1101_1 then uses second frequency (band) 1202 to receive a modulation signal for uplink. At this time, TRP 1 labeled 1101_1 receives the modulation signal in the second frequency (band) transmitted by NR-UE 2 labeled 1100_2.

Unlike FIG. 17, TRP 1 labeled 1101_1 need not perform communication at a frequency (band) other than "first frequency (band) 1201 and second frequency (band) 1202."

TRP 2 labeled 1101_2 uses first frequency (band) 1201 to receive a modulation signal for uplink. At this time, TRP 2 labeled 1101_2 receives the modulation signal at first frequency (band) 1201 transmitted by NR-UE 1 labeled 1100_1. Note that, as in FIG. 17, TRP 2 labeled 1101_2 may perform TDD communication or FDD communication at a frequency (band) other than first frequency (band) 1201.

TRP 2 labeled 1101_2 then uses third frequency (band) 1203 to transmit a modulation signal for downlink. At this time, for example, NR-UE 3 labeled 1100_3 receives the modulation signal at second frequency (band) 1202 transmitted by TRP 2 labeled 1101_2.

Unlike FIG. 17, TRP 2 labeled 1101_2 need not perform communication at a frequency (band) other than "first frequency (band) 1201 and third frequency (band) 1203."

NR-UE 1 labeled 1100_1 uses first frequency (band) 1201 to receive a modulation signal for downlink and to transmit a modulation signal for uplink. At this time, for example, TRP 2 labeled 1101_2 receives the modulation signal at first frequency (band) 1201 transmitted by NR-UE 1 labeled 1100_1. NR-UE 1 labeled 1100_1 then receives the modulation signal at first frequency (band) 1201 transmitted by TRP 1 labeled 1101_1. Note that, as in FIG. 17, NR-UE 1 labeled 1100_1 may perform TDD communication or FDD communication at a frequency (band) other than first frequency (band) 1201. Unlike FIG. 17, NR-UE 1 labeled 1100_1 need not perform communication at a frequency (band) other than first frequency (band) 1201.

NR-UE 2 labeled 1100_2 uses second frequency (band) 1202 to receive a modulation signal for downlink and to transmit a modulation signal for uplink. At this time, for example, TRP 1 labeled 1101_1 receives the modulation signal at second frequency (band) 1202 transmitted by NR-UE 2 labeled 1100_2. NR-UE 2 labeled 1100_2 then receives the modulation signal at second frequency (band) 1202 transmitted by a TRP (in FIG. 17, this TRP is not illustrated). Note that, as in FIG. 17, NR-UE 2 labeled 1100_2 may perform TDD communication or FDD communication at a frequency (band) other than second frequency (band) 1202. Unlike FIG. 17, NR-UE 2 labeled 1100_2 need not perform communication at a frequency (band) other than second frequency (band) 1202.

NR-UE 3 labeled 1100_3 uses third frequency (band) 1203 to receive a modulation signal for downlink and to transmit a modulation signal for uplink. At this time, for example, a TRP receives the modulation signal at third frequency (band) 1203 transmitted by NR-UE 3 labeled 1100_3 (in FIG. 16A, this TRP is not illustrated). NR-UE 3 labeled 1100_3 then receives the modulation signal at third frequency (band) 1203 transmitted by TRP 2 labeled 1101_2. Note that, as in FIG. 17, NR-UE 3 labeled 1100_3 may perform TDD communication or FDD communication at a frequency (band) other than third frequency (band) 1203. Unlike FIG. 17, NR-UE 3 labeled 1100_3 need not perform communication at a frequency (band) other than third frequency (band) 1203.

In FIG. 17, a case has been described where the frequency for "downlink" and the frequency for "uplink" are the same frequency (band), but the present embodiment is not limited to this case, and the frequency for "downlink" and the frequency for "uplink" may be the same frequency (band) partly. TDD and FDD will be described later.

FIG. 12B illustrates transmission statuses of TRP 1 labeled 1101_1 and NR-UE 1 labeled 1100_1 in a time axis in situations of FIG. 15 and FIG. 17. Note that, in FIG. 12B, a horizontal axis represents time.

As illustrated in FIG. 12B, TRP 1 labeled 1101_1 transmits frame 1251 addressed to NR-UE 1 labeled 1100_1 in the first time. Moreover, NR-UE 1 labeled 1100_1 transmits frame 1261 addressed to TRP 2 labeled 1101_2 in the first time.

Therefore, NR-UE 1 labeled 1100_1 performs transmission and reception at the same frequency (or partly same frequency) and in the same time. At this time, as described with reference to FIG. 15, NR-UE 1 labeled 1100_1 is likely to have different directions of transmission (direction from NR-UE 1 to TRP 2) and reception (direction from TRP 1 to NR-UE 1), because of which the following effects can be brought about: the possibility of separating a transmission beam and a received beam is increased, self-interference is reduced, and the quality of data in a received signal is improved.

FIG. 12C, FIG. 12D, FIG. 12E, and FIG. 12F each illustrate transmission statuses of TRP 1 labeled 1101_1 and NR-UE 1 labeled 1100_1 in a time axis in situations of FIG. 15 and FIG. 17, which are different from those in FIG. 12B. Note that, in FIG. 12C, FIG. 12D, FIG. 12E, and FIG. 12F, a horizontal axis represents time.

As illustrated in FIG. 12C, FIG. 12D, FIG. 12E, and FIG. 12F, TRP 1 labeled 1101_1 transmits frame 1251 addressed to NR-UE 1 labeled 1100_1 in any time section of the first time. Meanwhile, NR-UE 1 labeled 1100_1 transmits frame 1261 addressed to TRP 2 labeled 1101_2 in any time section of the first time.

Therefore, NR-UE 1 labeled 1100_1 performs transmission and reception at the same frequency (or partly same frequency) and in the same time. At this time, as described with reference to FIG. 15, NR-UE 1 labeled 1100_1 is likely to have different directions of transmission (direction from NR-UE 1 to TRP 2) and reception (direction from TRP 1 to NR-UE 1), because of which the following effects can be brought about: the possibility of separating a transmission beam and a received beam is increased, self-interference is reduced, and the quality of data in a received signal is improved.

Note that examples of temporal arrangement of the frame transmitted by TRP 1 labeled 1101_1 and the frame transmitted by NR-UE 1 labeled 1100_1 are not limited to those in FIG. 12B, FIG. 12C, FIG. 12D, FIG. 12E, and FIG. 12F, and any temporal arrangement is possible as long as both the frame transmitted by TRP 1 labeled 1101_1 and the frame transmitted by NR-UE 1 labeled 1100_1 are present at the same time.

FIG. 16B illustrates transmission statuses of a TRP (not illustrated in FIG. 15) and NR-UE 2 labeled 1100_2 in a time axis in situations of FIG. 15 and FIG. 17. Note that, in FIG. 16B, a horizontal axis represents time.

As illustrated in FIG. 16B, the TRP transmits frame 1252 addressed to NR-UE 2 labeled 1100_2 in the second time. Moreover, NR-UE 2 labeled 1100_2 transmits frame 1262 addressed to TRP 1 labeled 1101_1 in the second time.

Therefore, NR-UE 2 labeled 1100_2 performs transmission and reception at the same frequency (or partly same frequency) and in the same time. At this time, as described with reference to FIG. 15, NR-UE 2 labeled 1100_2 is likely to have different directions of transmission (direction from NR-UE 2 to TRP 1) and reception (direction from TRP to NR-UE 2), because of which the following effects can be brought about: the possibility of separating a transmission beam and a received beam is increased, self-interference is reduced, and the quality of data in a received signal is improved.

FIG. 16C, FIG. 16D, FIG. 16E, and FIG. 16F each illustrate transmission statuses of the TRP and NR-UE 2 labeled 1100_2 in a time axis in situations of FIG. 15 and FIG. 17, which are different from those in FIG. 16B. Note that, in FIG. 16C, FIG. 16D, FIG. 16E, and FIG. 16F, a horizontal axis represents time.

As illustrated in FIG. 16C, FIG. 16D, FIG. 16E, and FIG. 16F, the TRP transmits frame 1252 addressed to NR-UE 2 labeled 1100_2 in any time section of the second time. Meanwhile, NR-UE 2 labeled 1100_2 transmits frame 1262 addressed to TRP 1 labeled 1101_1 in any time section of the second time.

Therefore, NR-UE 2 labeled 1100_2 performs transmission and reception at the same frequency (or partly same frequency) and in the same time. At this time, as described with reference to FIG. 15, NR-UE 1 labeled 1100_1 is likely to have different directions of transmission (direction from NR-UE 2 to TRP 1) and reception (direction from TRP to NR-UE 2), because of which the following effects can be brought about: the possibility of separating a transmission beam and a received beam is increased, self-interference is reduced, and the quality of data in a received signal is improved.

Note that examples of temporal arrangement of the frame transmitted by the TRP and the frame transmitted by NR-UE 2 labeled 1100_2 are not limited to those in FIG. 16B, FIG. 16C, FIG. 16D, FIG. 16E, and FIG. 16F, and any temporal arrangement is possible as long as both the frame transmitted by the TRP and the frame transmitted by NR-UE 2 labeled 1100_2 are present at the same time.

FIG. 16G illustrates transmission statuses of TRP 2 labeled 1101_2 and NR-UE 3 labeled 1100_3 in a time axis in situations of FIG. 15 and FIG. 17. Note that, in FIG. 16G, a horizontal axis represents time.

As illustrated in FIG. 16G, TRP 2 labeled 1101_2 transmits frame 1253 addressed to NR-UE 3 labeled 1100_3 in the third time. Moreover, NR-UE 3 labeled 1100_3 transmits frame 1263 addressed to a TRP (not illustrated in FIG. 15) in the third time.

Therefore, NR-UE 3 labeled 1100_3 performs transmission and reception at the same frequency (or partly same frequency) and in the same time. At this time, as described with reference to FIG. 15, NR-UE 3 labeled 1100_3 is likely to have different directions of transmission (direction from NR-UE 3 to TRP) and reception (direction from TRP 2 labeled 1101_2 to NR-UE 3), because of which the following effects can be brought about: the possibility of separating a transmission beam and a received beam is increased, self-interference is reduced, and the quality of data in a received signal is improved.

FIG. 16H, FIG. 16I, FIG. 16J, and FIG. 16K each illustrate transmission statuses of TRP 2 labeled 1101_2 and NR-UE 3 labeled 1100_3 in a time axis in situations of FIG. 15 and FIG. 17, which are different from those in FIG. 16G. Note that, in FIG. 16H, FIG. 16I, FIG. 16J, and FIG. 16K, a horizontal axis represents time.

As illustrated in 16H, FIG. 16I, FIG. 16J, and FIG. 16K, TRP 2 labeled 1101_2 transmits frame 1253 addressed to NR-UE 3 labeled 1100_3 in any time section of the third time. Meanwhile, NR-UE 3 labeled 1100_3 transmits frame 1263 addressed to the TRP in any time section of the third time.

Therefore, NR-UE 3 labeled 1100_3 performs transmission and reception at the same frequency (or partly same frequency) and in the same time. At this time, as described with reference to FIG. 15, NR-UE 3 labeled 1100_3 is likely to have different directions of transmission (direction from NR-UE 3 to TRP) and reception (direction from TRP 2 labeled 1101_2 to NR-UE 3), because of which the following effects can be brought about: the possibility of separating a transmission beam and a received beam is increased, self-interference is reduced, and the quality of data in a received signal is improved.

Note that examples of temporal arrangement of the frame transmitted by TRP 2 labeled 1101_2 and the frame transmitted by NR-UE 3 labeled 1100_3 are not limited to those in FIG. 16G, FIG. 16H, FIG. 16I, FIG. 16J, and FIG. 16K, and any temporal arrangement is possible as long as both the frame transmitted by TRP 2 labeled 1101_2 and the frame transmitted by NR-UE 3 labeled 1100_3 are present at the same time.

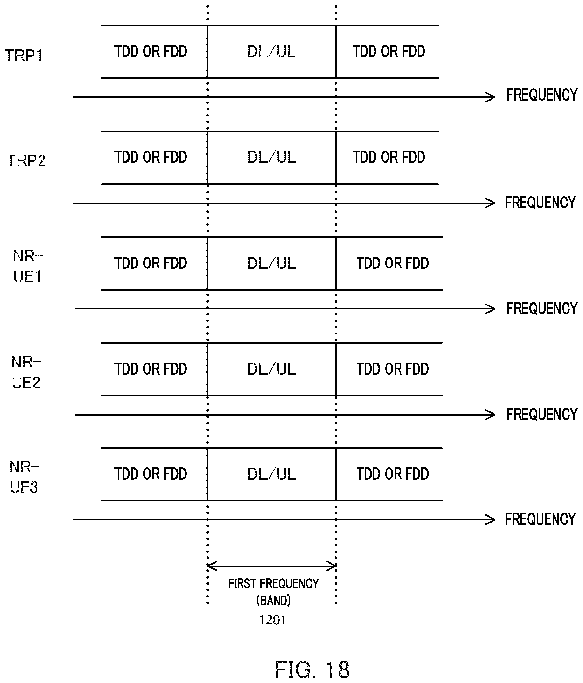

FIG. 18 illustrates exemplary communication statuses of "TRP 1 labeled 1101_1, TRP 2 labeled 1101_2, NR-UE 1 labeled 1100_1, NR-UE 2 labeled 1100_2, and NR-UE 3 labeled 1100_3" in the frequency axis in FIG. 15, which are different from those in FIG. 16A and FIG. 17. Note that, in FIG. 18, a horizontal axis represents the frequency, and the components that operate in the same manner as the components in FIG. 12, FIG. 16A, and FIG. 17 are denoted by the same reference numerals.

TRP 1 labeled 1101_1 uses first frequency (band) 1201 to transmit a modulation signal for downlink. At this time, for example, NR-UE 1 labeled 1100_1 receives the modulation signal at first frequency (band) 1201 transmitted by TRP 1 labeled 1101_1. Note that, as in FIG. 18, TRP 1 labeled 1101_1 may perform TDD communication or FDD communication at a frequency (band) other than first frequency (band) 1201.

TRP 1 labeled 1101_1 then uses first frequency (band) 1201 to receive a modulation signal for uplink. At this time, TRP 1 labeled 1101_1 receives the modulation signal at first frequency (band) 1201 transmitted by NR-UE 2 labeled 1100_2.

Unlike FIG. 18, TRP 1 labeled 1101_1 need not perform communication at a frequency (band) other than "first frequency (band) 1201."

TRP 2 labeled 1101_2 uses first frequency (band) 1201 to receive a modulation signal for uplink.

At this time, TRP 2 labeled 1101_2 receives the modulation signal at first frequency (band) 1201 transmitted by NR-UE 1 labeled 1100_1. Note that, as in FIG. 18, TRP 2 labeled 1101_2 may perform TDD communication or FDD communication at a frequency (band) other than first frequency (band) 1201.

TRP 2 labeled 1101_2 then uses first frequency (band) 1201 to transmit a modulation signal for downlink. At this time, for example, NR-UE 3 labeled 1100_3 receives the modulation signal at second frequency (band) 1202 transmitted by TRP 2 labeled 1101_2.

Unlike FIG. 18, TRP 2 labeled 1101_2 need not perform communication at a frequency (band) other than "first frequency (band) 1201."

NR-UE 1 labeled 1100_1 uses first frequency (band) 1201 to receive a modulation signal for downlink and to transmit a modulation signal for uplink. At this time, for example, TRP 2 labeled 1101_2 receives the modulation signal at first frequency (band) 1201 transmitted by NR-UE 1 labeled 1100_1. NR-UE 1 labeled 1100_1 then receives the modulation signal at first frequency (band) 1201 transmitted by TRP 1 labeled 1101_1. Note that, as in FIG. 18, NR-UE 1 labeled 1100_1 may perform TDD communication or FDD communication at a frequency (band) other than first frequency (band) 1201. Unlike FIG. 18, NR-UE 1 labeled 1100_1 need not perform communication at a frequency (band) other than first frequency (band) 1201.

NR-UE 2 labeled 1100_2 uses first frequency (band) 1201 to receive a modulation signal for downlink and to transmit a modulation signal for uplink. At this time, for example, TRP 1 labeled 1101_1 receives the modulation signal at first frequency (band) 1201 transmitted by NR-UE 2 labeled 1100_2. NR-UE 2 labeled 1100_2 then receives the modulation signal at first frequency (band) 1201 transmitted by a TRP (in FIG. 18, this TRP is not illustrated). Note that, as in FIG. 18, NR-UE 2 labeled 1100_2 may perform TDD communication or FDD communication at a frequency (band) other than first frequency (band) 1201. Unlike FIG. 18, NR-UE 2 labeled 1100_2 need not perform communication at a frequency (band) other than first frequency (band) 1201.

NR-UE 3 labeled 1100_3 uses first frequency (band) 1201 to receive a modulation signal for downlink and to transmit a modulation signal for uplink. At this time, for example, a TRP receives the modulation signal at first frequency (band) 1201 transmitted by NR-UE 3 labeled 1100_3 (in FIG. 18, this TRP is not illustrated). NR-UE 3 labeled 1100_3 then receives the modulation signal at first frequency (band) 1201 transmitted by TRP 2 labeled 1101_2. Note that, as in FIG. 18, NR-UE 3 labeled 1100_3 may perform TDD communication or FDD communication at a frequency (band) other than first frequency (band) 1201. Unlike FIG. 18, NR-UE 3 labeled 1100_3 need not perform communication at a frequency (band) other than first frequency (band) 1201.

In FIG. 18, a case has been described where the frequency for "downlink" and the frequency for "uplink" are the same frequency (band), but the present embodiment is not limited to this case, and the frequency for "downlink" and the frequency for "uplink" may be the same frequency (band) partly. TDD and FDD will be described later.

FIG. 12B illustrates transmission statuses of TRP 1 labeled 1101_1 and NR-UE 1 labeled 1100_1 in a time axis in situations of FIG. 15 and FIG. 18. Note that, in FIG. 12B, a horizontal axis represents time.

As illustrated in FIG. 12B, TRP 1 labeled 1101_1 transmits frame 1251 addressed to NR-UE 1 labeled 1100_1 in the first time. Moreover, NR-UE 1 labeled 1100_1 transmits frame 1261 addressed to TRP 2 labeled 1101_2 in the first time.

Therefore, NR-UE 1 labeled 1100_1 performs transmission and reception at the same frequency (or partly same frequency) and in the same time. At this time, as described with reference to FIG. 15, NR-UE 1 labeled 1100_1 is likely to have different directions of transmission (direction from NR-UE 1 to TRP 2) and reception (direction from TRP 1 to NR-UE 1), because of which the following effects can be brought about: the possibility of separating a transmission beam and a received beam is increased, self-interference is reduced, and the quality of data in a received signal is improved.

FIG. 12C, FIG. 12D, FIG. 12E, and FIG. 12F each illustrate transmission statuses of TRP 1 labeled 1101_1 and NR-UE 1 labeled 1100_1 in a time axis in situations of FIG. 15 and FIG. 18, which are different from those in FIG. 12B. Note that, in FIG. 12C, FIG. 12D, FIG. 12E, and FIG. 12F, a horizontal axis represents time.

As illustrated in FIG. 12C, FIG. 12D, FIG. 12E, and FIG. 12F, TRP 1 labeled 1101_1 transmits frame 1251 addressed to NR-UE 1 labeled 1100_1 in any time section of the first time. Meanwhile, NR-UE 1 labeled 1100_1 transmits frame 1261 addressed to TRP 2 labeled 1101_2 in any time section of the first time.

Therefore, NR-UE 1 labeled 1100_1 performs transmission and reception at the same frequency (or partly same frequency) and in the same time. At this time, as described with reference to FIG. 15, NR-UE 1 labeled 1100_1 is likely to have different directions of transmission (direction from NR-UE 1 to TRP 2) and reception (direction from TRP 1 to NR-UE 1), because of which the following effects can be brought about: the possibility of separating a transmission beam and a received beam is increased, self-interference is reduced, and the quality of data in a received signal is improved.

Note that examples of temporal arrangement of the frame transmitted by TRP 1 labeled 1101_1 and the frame transmitted by NR-UE 1 labeled 1100_1 are not limited to those in FIG. 12B, FIG. 12C, FIG. 12D, FIG. 12E, and FIG. 12F, and any temporal arrangement is possible as long as both the frame transmitted by TRP 1 labeled 1101_1 and the frame transmitted by NR-UE 1 labeled 1100_1 are present at the same time.

FIG. 16B illustrates transmission statuses of a TRP (not illustrated in FIG. 15) and NR-UE 2 labeled 1100_2 in a time axis in situations of FIG. 15 and FIG. 18. Note that, in FIG. 16B, a horizontal axis represents time.

As illustrated in FIG. 16B, the TRP transmits frame 1252 addressed to NR-UE 2 labeled 1100_2 in the second time. Moreover, NR-UE 2 labeled 1100_2 transmits frame 1262 addressed to TRP 1 labeled 1101_1 in the second time.

Therefore, NR-UE 2 labeled 1100_2 performs transmission and reception at the same frequency (or partly same frequency) and in the same time. At this time, as described with reference to FIG. 15, NR-UE 2 labeled 1100_2 is likely to have different directions of transmission (direction from NR-UE 2 to TRP 1) and reception (direction from TRP to NR-UE 2), because of which the following effects can be brought about: the possibility of separating a transmission beam and a received beam is increased, self-interference is reduced, and the quality of data in a received signal is improved.

FIG. 16C, FIG. 16D, FIG. 16E, and FIG. 16F each illustrate transmission statuses of the TRP and NR-UE 2 labeled 1100_2 in a time axis in situations of FIG. 15 and FIG. 18, which are different from those in FIG. 16B. Note that, in FIG. 16C, FIG. 16D, FIG. 16E, and FIG. 16F, a horizontal axis represents time.

As illustrated in FIG. 16C, FIG. 16D, FIG. 16E, and FIG. 16F, the TRP transmits frame 1252 addressed to NR-UE 2 labeled 1100_2 in any time section of the second time. Meanwhile, NR-UE 2 labeled 1100_2 transmits frame 1262 addressed to TRP 1 labeled 1101_1 in any time section of the second time.

Therefore, NR-UE 2 labeled 1100_2 performs transmission and reception at the same frequency (or partly same frequency) and in the same time. At this time, as described with reference to FIG. 15, NR-UE 1 labeled 1100_1 is likely to have different directions of transmission (direction from NR-UE 2 to TRP 1) and reception (direction from TRP to NR-UE 2), because of which the following effects can be brought about: the possibility of separating a transmission beam and a received beam is increased, self-interference is reduced, and the quality of data in a received signal is improved.

Note that examples of temporal arrangement of the frame transmitted by the TRP and the frame transmitted by NR-UE 2 labeled 1100_2 are not limited to those in FIG. 16B, FIG. 16C, FIG. 16D, FIG. 16E, and FIG. 16F, and any temporal arrangement is possible as long as both the frame transmitted by the TRP and the frame transmitted by NR-UE 2 labeled 1100_2 are present at the same time.

FIG. 16G illustrates transmission statuses of TRP 2 labeled 1101_2 and NR-UE 3 labeled 1100_3 in a time axis in situations of FIG. 15 and FIG. 18. Note that, in FIG. 16G, a horizontal axis represents time.

As illustrated in FIG. 16G, TRP 2 labeled 1101_2 transmits frame 1253 addressed to NR-UE 3 labeled 1100_3 in the third time. Moreover, NR-UE 3 labeled 1100_3 transmits frame 1263 addressed to a TRP (not illustrated in FIG. 15) in the third time.

Therefore, NR-UE 3 labeled 1100_3 performs transmission and reception at the same frequency (or partly same frequency) and in the same time. At this time, as described with reference to FIG. 15, NR-UE 3 labeled 1100_3 is likely to have different directions of transmission (direction from NR-UE 3 to TRP) and reception (direction from TRP 2 labeled 1101_2 to NR-UE 3), because of which the following effects can be brought about: the possibility of separating a transmission beam and a received beam is increased, self-interference is reduced, and the quality of data in a received signal is improved.

FIG. 16H, FIG. 16I, FIG. 16J, and FIG. 16K each illustrate transmission statuses of TRP 2 labeled 1101_2 and NR-UE 3 labeled 1100_3 in a time axis in situations of FIG. 15 and FIG. 18, which are different from those in FIG. 16G. Note that, in FIG. 16H, FIG. 16I, FIG. 16J, and FIG. 16K, a horizontal axis represents time.

As illustrated in 16H, FIG. 16I, FIG. 16J, and FIG. 16K, TRP 2 labeled 1101_2 transmits frame 1253 addressed to NR-UE 3 labeled 1100_3 in any time section of the third time. Meanwhile, NR-UE 3 labeled 1100_3 transmits frame 1263 addressed to the TRP in any time section of the third time.

Therefore, NR-UE 3 labeled 1100_3 performs transmission and reception at the same frequency (or partly same frequency) and in the same time. At this time, as described with reference to FIG. 15, NR-UE 3 labeled 1100_3 is likely to have different directions of transmission (direction from NR-UE 3 to TRP) and reception (direction from TRP 2 labeled 1101_2 to NR-UE 3), because of which the following effects can be brought about: the possibility of separating a transmission beam and a received beam is increased, self-interference is reduced, and the quality of data in a received signal is improved.

Note that examples of temporal arrangement of the frame transmitted by TRP 2 labeled 1101_2 and the frame transmitted by NR-UE 3 labeled 1100_3 are not limited to those in FIG. 16G, FIG. 16H, FIG. 16I, FIG. 16J, and FIG. 16K, and any temporal arrangement is possible as long as both the frame transmitted by TRP 2 labeled 1101_2 and the frame transmitted by NR-UE 3 labeled 1100_3 are present at the same time.

In the case of FIG. 18, TRP 1 labeled 1101_1 in FIG. 15 may perform the "reception of the modulation signal transmitted by NR-UE 2 labeled 1100_2" and the "transmission of the modulation signal addressed to NR-UE 1 labeled 1100_1" at the same time or partly the same time.

Further, TRP 2 labeled 1101_2 in FIG. 15 may perform the "reception of the modulation signal transmitted by NR-UE 3 labeled 1100_3" and the "transmission of the modulation signal addressed to NR-UE 1 labeled 1100_1" at the same time or partly the same time.

Exemplary configurations of "NR-UE 1 labeled 1100_1, NR-UE 2 labeled 1100_2, and NR-UE 3 labeled 1100_3" for "realization of FIG. 16A in FIG. 15," "realization of FIG. 17 in FIG. 15," and "realization of FIG. 18 in FIG. 15" are illustrated in FIG. 14. Note that FIG. 14 will not be described here because the description thereof has already been given.

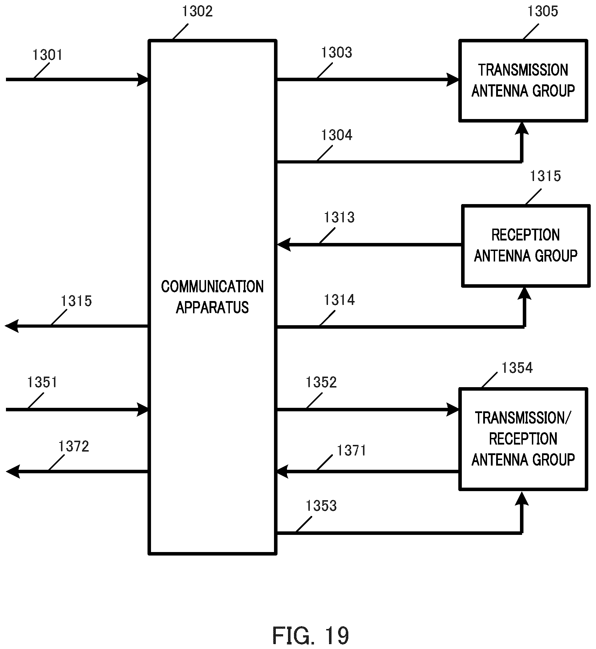

FIG. 19 illustrates exemplary configurations of "TRP 1 labeled 1101_1 and TRP 2 labeled 1101_2" for the "realization of FIG. 16A in FIG. 15," the "realization of FIG. 17 in FIG. 15," and the "realization of FIG. 18 in FIG. 15." In FIG. 19, the components that operate in the same manner as the components in FIG. 13A and FIG. 13B are denoted by the same reference numerals, and descriptions thereof will be omitted because these components have already been described.

For example, when TRP 1 labeled 1101_1 in FIG. 15 has the configuration of FIG. 19, TRP 1 labeled 1101_1 transmits a modulation signal addressed to NR-UE 1 labeled 1100_1 from transmission antenna group 1305. TRP 1 labeled 1101_1 then receives a modulation signal transmitted by NR-UE 2 labeled 1100_2, using recption antenna group 1316.

Further, when TRP 2 labeled 1101_2 in FIG. 15 has the configuration of FIG. 19, TRP 2 labeled 1101_2 transmits a modulation signal addressed to NR-UE 3 labeled 1100_3 from transmission antenna group 1305. TRP 2 labeled 1101_2 then receives a modulation signal transmitted by NR-UE 1 labeled 1100_1, using recption antenna group 1316.

In FIG. 19, transmission antenna group 1305, reception antenna group 1316, transmission/recption antenna group 1354 are units separate from each other, but the present disclosure is not limited to this case. For example, in FIG. 19, "transmission antenna group 1305" and "transmission antenna function of transmission/-recption antenna group 1354" may be shared (e.g., realized by one transmission antenna group). Alternatively, "recption antenna group 1316" and "recption antenna function of transmission/recption antenna group 1354" may be shared ((e.g., realized by one recption antenna group).

In FIG. 15, TRP 1 labeled 1101_1 transmits a modulation signal to the first NR-UE and receives a modulation signal transmitted by the first NR-UE. At this time, a "frequency (band) in which TRP 1 labeled 1101_1 transmits the modulation signal addressed to the first NR-UE" and a "frequency (band) in which the first NR-UE transmits the modulation signal addressed to TRP 1 labeled 1101_1" are the same or partly the same. Further, the modulation signal transmitted by TRP 1 labeled 1101_1 addressed to the first NR-UE and the modulation signal transmitted by the first NR-UE addressed to TRP 1 labeled 1101_1 are present in the same time or partly the same time. TRP 1 labeled 1101_1 may support such a communication method.

Similarly, in FIG. 15, TRP 2 labeled 1101_2 transmits a modulation signal to the second NR-UE and receives a modulation signal transmitted by the second NR-UE. At this time, a "frequency (band) in which TRP 2 labeled 1101_2 transmits the modulation signal addressed to the second NR-UE" and a "frequency (band) in which the second NR-UE transmits the modulation signal addressed to TRP 2 labeled 1101_2" are the same or partly the same. Further, the modulation signal transmitted by TRP 2 labeled 1101_2 addressed to the second NR-UE and the modulation signal transmitted by the second NR-UE addressed to TRP 2 labeled 1101_2 are present in the same time or partly the same time. TRP 2 labeled 1101_2 may support such a communication method.

Descriptions will be given of modulation signals to be transmitted by the above-mentioned TRP and NR-UE.

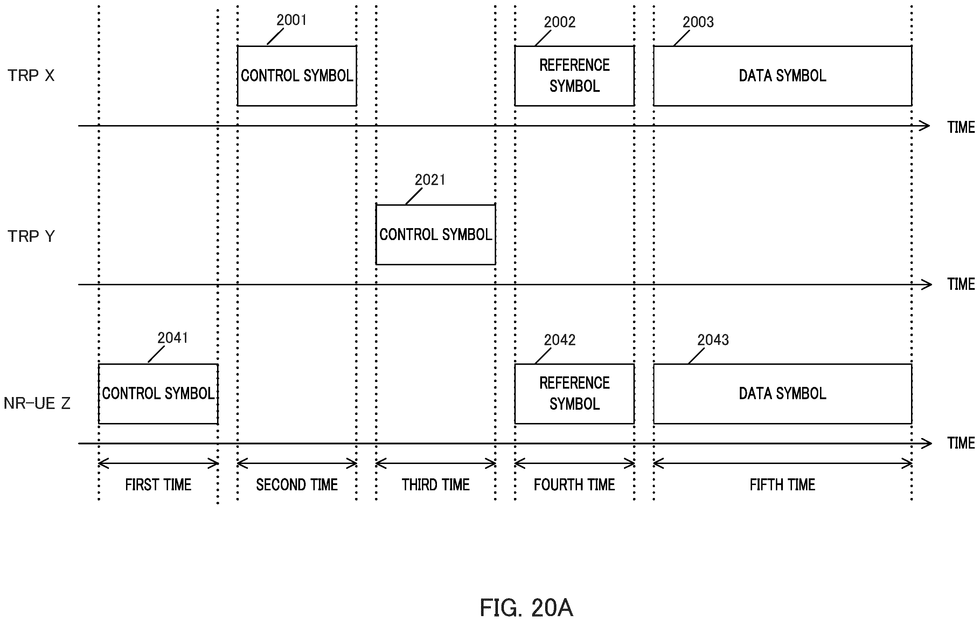

FIG. 20A illustrates an example of signal transmission performed by each of apparatuses of "TRP X," "TRP Y," and "NR-UE Z" in a time axis. In FIG. 20A, a horizontal axis represents time.

Note that the following examples are included in combinations of "TRP X," "TRP Y," and "NR-UE Z."

First Example:
"TRP 1 labeled 1101_1 in FIG. 11" is used as "TRP X," "TRP 2 labeled 1101_2 in FIG. 11" is used as "TRP Y," and "NR-UE 1 labeled 1100_1 in FIG. 11" is used as "NR-UE Z."
Second Example:
"TRP 1 labeled 1101_1 in FIG. 15" is used as "TRP X," "TRP 2 labeled 1101_2 in FIG. 15" is used as "TRP Y," and "NR-UE 1 labeled 1100_1 in FIG. 15" is used as "NR-UE Z."
Third Example:
"TRP not illustrated in FIG. 15 (which has already been described)" is used as "TRP X," "TRP 1 labeled 1101_1 in FIG. 15" is used as "TRP Y," and "NR-UE 2 labeled 1100_2 in FIG. 15" is used as "NR-UE Z."
Fourth Example:
"TRP 2 labeled 1101_2 in FIG. 15" is used as "TRP X," "TRP not illustrated in FIG. 15 (which has already been described)" is used as "TRP Y," and "NR-UE 3 labeled 1100_3 in FIG. 15" is used as "NR-UE Z."

As illustrated in FIG. 20A, "NR-UE Z" transmits control symbol 2041 in the first time. Control symbol 2041 includes, for example, control information for establishing communication with a TRP.

Here, by way of example, control symbol 2041 may include information on a capability (capabilities) of a terminal indicating "whether "NR-UE Z" is a terminal capable of performing communication such as in FIG. 11 and/or FIG. 15." At this time, obtaining control symbol 2041 allows "TRP X" and "TRP Y" to know whether "NR-UE Z" can perform the communication such as in FIG.11 and/or FIG. 15.

Control symbol 2041 may further include "information on a request of "NR-UE Z" to perform the communication such as in FIG. 11 and/or FIG. 15." At this time, obtaining control symbol 2041 allows "TRP X" and "TRP Y" to know "NR-UE Z" requests the communication such as in FIG. 11 and/or FIG. 15.

"TRP X" then transmits control symbol 2001 in the second time. Control symbol 2001 may include, for example, "information on a TRP that performs the communication such as in FIG. 11 and/or FIG. 15 with "NR-UE Z" (e.g., gNB information and cell information)" and "information on a communication method of a modulation signal addressed to "NR-UE Z" transmitted by the TRP (e.g., number of modulation signals (number of ranks), information on modulation scheme, and information on error correction code (information on coding rate and code length))." Accordingly, obtaining control symbol 2001 allows "NR-UE Z" to obtain the "information on a TRP (or gNB) for obtaining the modulation signal addressed to "NR-UE Z"" and the "information on the communication method of the modulation signal addressed to "NR-UE Z.""

Note that control symbol 2001 may include information on a capability (capabilities) of "TRP X" indicating "whether the communication such as in FIG. 11 and/or FIG. 15 can be performed."

"TRP Y" transmits control symbol 2021 in the third time. Control symbol 2021 may include, for example, "information on a TRP that performs the communication such as in FIG. 11 and/or FIG. 15 with "NR-UE Z" (e.g., gNB information and cell information)" and "request information (or designation information) on a communication method of a modulation signal addressed to "TRP Y" transmitted by "NR-UE Z" (e.g., number of modulation signals (number of ranks), information on modulation scheme, and information on error correction code (information on coding rate and code length))." Accordingly, obtaining control symbol 2021 allows "NR-UE Z" to obtain the "information on the TRP (or gNB) to which the modulation signal is transmitted," and the "information on the communication method of the modulation signal to be transmitted."

Note that control symbol 2021 may include information on a capability (capabilities) of "TRP Y" indicating "whether the communication such as in FIG. 11 and/or FIG. 15 can be performed."

"TRP X" tranmits reference symbol 2002 in the fourth time, and "NR-UE Z" tranmits reference symbol 2042 in the fourth time. Then, in the fourth time, "NR-UE Z" receives reference symbol 2002 and reference symbol 2042. Thus "NR-UE Z" estimates a state of the modulation signal transmitted by "TRP X" and a state of the modulation signal transmitted by "NR-UE Z", thereby obtaining state information on the modulation signal transmitted by "TRP X" and state information on the modulation signal transmitted by "NR-UE Z."

Note that the method of making reference symbol 2002 transmitted by "NR-UE Z" and reference symbol 2042 transmitted by "NR-UE Z" be present is not limited to the mtehod in FIG. 20A. For example, reference symbol 2002 and reference symbol 2042 may be present on a time axis such that they do not overlap in time, that is, reference symbol 2042 is absent in the time when reference symbol 2002 is present, and reference symbol 2002 is absent in the time when reference symbol 2042 is present (TDM: Time Division Multiplexing).

"TRP X" then transmits data symbol 2003 in the fifth time, and "NR-UE Z" transmits data symbol 2043 in the fifth time. At this time, "NR-UE Z" possibly receives a modulation signal including data symbol 2003 and data symbol 2043, but it is possible to demodulate data symbol 2003 because the state of each modulation signal can be estimated by reference symbol 2002 and reference symbol 2042. Meanwhile, "TRP Y" receives and demodulates a modulation signal for data symbol 2043.

As described above, it is possible to bring about an effect of performing the communication such as in FIG. 11 and/or FIG. 15 more accurately.

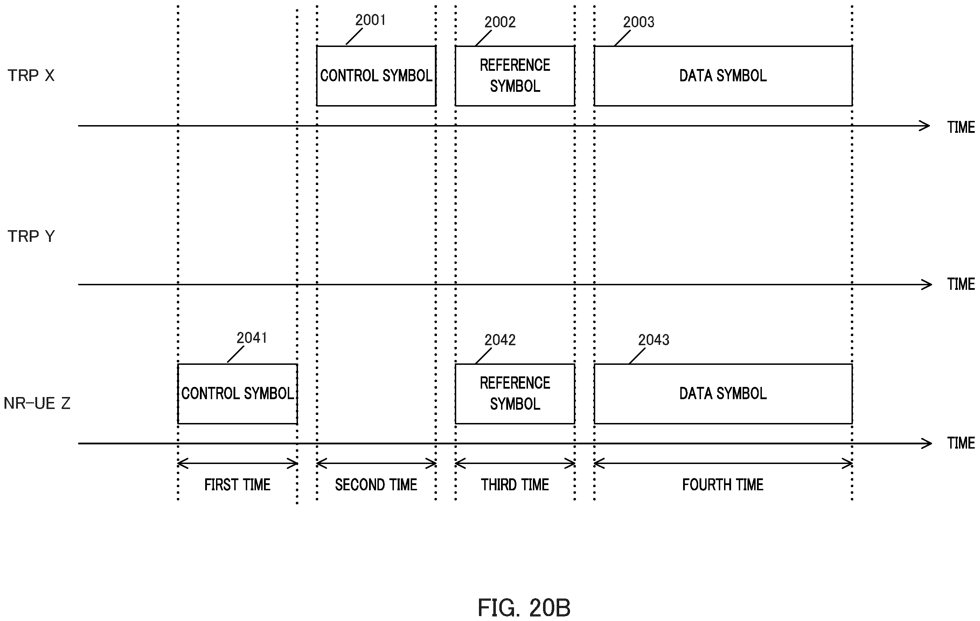

FIG. 20B illustrates an example of signal transmission performed by each of apparatuses of "TRP X," "TRP Y," and "NR-UE Z" in a time axis, which is different from that in FIG. 20A. In FIG. 20B, a horizontal axis represents time. Note that, in FIG. 20B, the components that operate in the same manner as the components in FIG. 20A are denoted by the same reference numerals, and descriptions thereof will be omitted.

FIG. 20B is different from FIG. 20A in that "TRP Y" transmits no control symbol 2021. In FIG. 20B, "TRP X" transmits with control symbol 2001 the following, for example: "information on a TRP that performs the communication such as in FIG. 11 and/or FIG. 15 with "NR-UE Z" (e.g., gNB information and cell information)" and "request information (or designation information) on a communication method of a modulation signal addressed to "TRP Y" transmitted by "NR-UE Z" (e.g., number of modulation signals (number of ranks), information on modulation scheme, and information on error correction code (information on coding rate and code length))" that are included in control symbol 2021.

Accordingly, obtaining control symbol 2001 allows "NR-UE Z" to obtain the "information on the TRP (or gNB) to which the modulation signal is transmitted," and the "information on the communication method of the modulation signal to be transmitted."

Note that control symbol 2001 may include information on a capability (capabilities) of "TRP Y" indicating "whether the communication such as in FIG. 11 and/or FIG. 15 can be performed."

As described above, it is possible to bring about an effect of performing the communication such as in FIG. 11 and/or FIG. 15 more accurately.

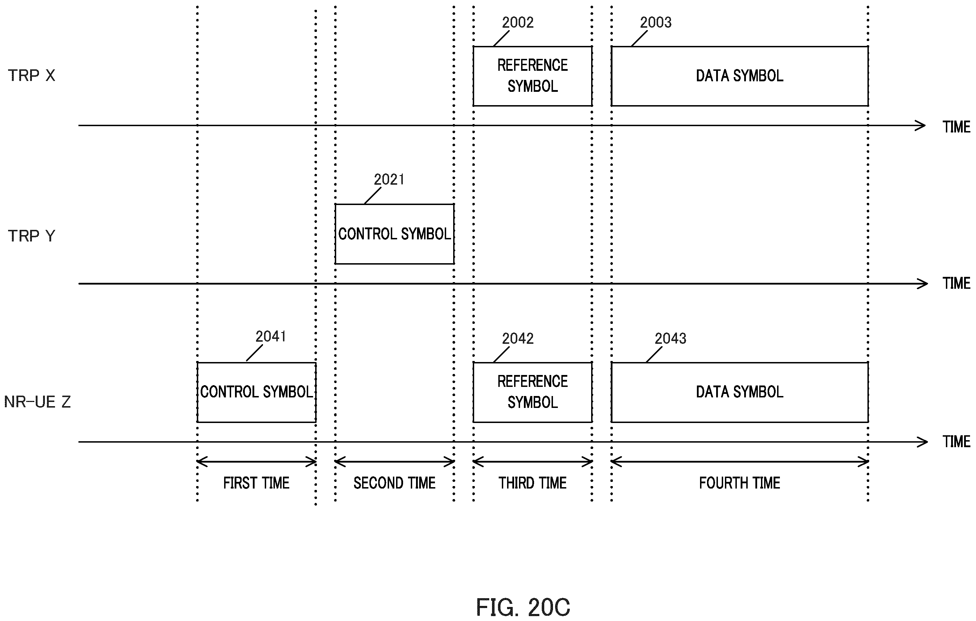

FIG. 20C illustrates an example of signal transmission performed by each of apparatuses of "TRP X," "TRP Y," and "NR-UE Z" in a time axis, which is different from those in FIG. 20A and FIG. 20B. In FIG. 20C, a horizontal axis represents time. Note that, in FIG. 20C, the components that operate in the same manner as the components in FIG. 20A are denoted by the same reference numerals, and descriptions thereof will be omitted.

FIG. 20C is different from FIG. 20A in that "TRP X" transmits no control symbol 2001. In FIG. 20C, "TRP Y" transmits with control symbol 2021 the following, for example: "information on a TRP that performs the communication such as in FIG. 11 and/or FIG. 15 with "NR-UE Z" (e.g., gNB information and cell information)" and "request information (or designation information) on a communication method of a modulation signal addressed to "NR-UE Z" transmitted by the TRP (e.g., number of modulation signals (number of ranks), information on modulation scheme, and information on error correction code (information on coding rate and code length))" that are included in control symbol 2001.

Accordingly, obtaining control symbol 2021 allows "NR-UE Z" to obtain the "information on a TRP (or gNB) for obtaining the modulation signal addressed to "NR-UE Z"" and the "information on the communication method of the modulation signal addressed to "NR-UE Z.""

Note that control symbol 2021 may include information on a capability (capabilities) of "TRP X" indicating "whether the communication such as in FIG. 11 and/or FIG. 15 can be performed."

As described above, it is possible to bring about an effect of performing the communication such as in FIG. 11 and/or FIG. 15 more accurately.

Control symbol 2001, reference symbol 2002, data symbol 2003, and control symbol 2021 may be included any of a paging channel (PCH), a broadcast channel (BCH), a downlink shared channel (DL-SCH), a broadcast control channel (BCCH), a Paging control channel (PCCH), a common control channel (CCCH), a common search space, a physical broadcast channel (PBCH), Synchronization Signals (SS), a physical downlink control channel (PDCCH), a physical downlink shared channel (PDSCH), and the like, without limitation to this.

Control symbol 2041, the reference symbol, and data symbol 2043 may be included any of an uplink shared channel (UL-SCH), a physical uplink control channel (PUCCH), a physical uplink shared channel (PUSCH), a physical random access channel (PRACH), and the like, without limitation to this.

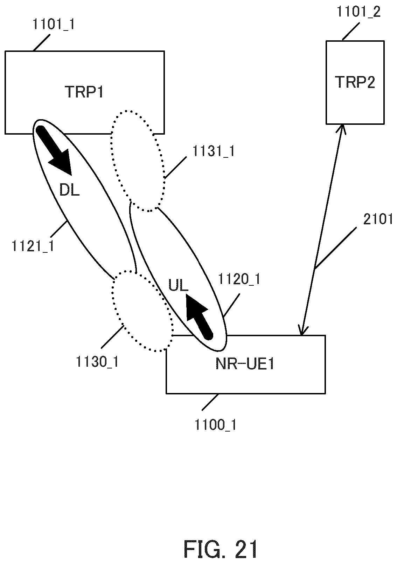

Next, an exemplary radio system different from those in FIG. 11 and FIG. 15 will be described with reference to FIG. 21. As illustrated in FIG. 21, there are TRP 1 labeled 1101_1, TRP 2 labeled 1101_2, and NR-UE 1 labeled 1100_1, for example. Note that, in FIG. 21, the components that operate in the same manner as the components in FIG. 11 are denoted by the same reference numerals, and some descriptions thereof will be omitted.

In FIG. 21, TRP 1 labeled 1101_1 generates transmission beam 1121_1 and uses transmission beam 1121_1 to transmit a modulation signal addressed to NR-UE 1 labeled 1100_1 (Downlink (DL)).

NR-UE 1 labeled 1100_1 then generates received beam 1130_1 and uses received beam 1130_1 to receive the modulation signal addressed to NR-UE 1 that has been transmitted by TRP 1 labeled 1101_1.

Moreover, NR-UE 1 labeled 1100_1 generates transmission beam 1120_1 and uses transmission beam 1120_1 to transmit a modulation signal addressed to TRP 1 labeled 1101_1 (Uplink (UL)).

TRP 1 labeled 1101_1 then generates received beam 1131_1 and uses received beam 1131_1 to receive the modulation signal addressed to TRP 1 that has been transmitted by NR-UE 1 labeled 1100_1.

NR-UE 1 labeled 1100_1 and TRP 2 labeled 1101_2 perform communication by "TDD or FDD" (2101).

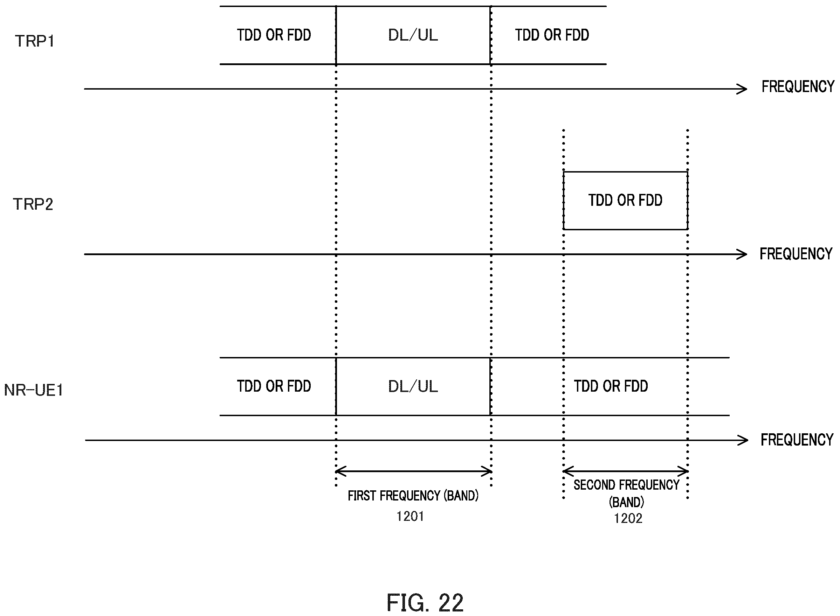

FIG. 22 illustrates exemplary communication statuses of "TRP 1 labeled 1101_1, TRP 2 labeled 1101_2, and NR-UE 1 labeled 1100_1" in a frequency axis in FIG. 21. Note that, in FIG. 22, a horizontal axis represents the frequency, and the components that operate in the same manner as the components in FIG. 12 are denoted by the same reference numerals.

TRP 1 labeled 1101_1 uses first frequency (band) 1201 to transmit a modulation signal for downlink. At this time, for example, NR-UE 1 labeled 1100_1 receives the modulation signal at first frequency (band) 1201 transmitted by TRP 1 labeled 1101_1. Note that, as in FIG. 22, TRP 1 labeled 1101_1 may perform TDD communication or FDD communication at a frequency (band) other than first frequency (band) 1201.

NR-UE 1 labeled 1100_1 uses first frequency (band) 1201 to receive a modulation signal for downlink and to transmit a modulation signal for uplink. At this time, for example, TRP 1 labeled 1101_1 receives the modulation signal at first frequency (band) 1201 transmitted by NR-UE 1 labeled 1100_1. NR-UE 1 labeled 1100_1 then receives the modulation signal at first frequency (band) 1201 transmitted by TRP 1 labeled 1101_1. Note that, as in FIG. 22, NR-UE 1 labeled 1100_1 may perform TDD communication or FDD communication at a frequency (band) other than first frequency (band) 1201. Unlike FIG. 22, NR-UE 1 labeled 1100_1 need not perform communication at a frequency (band) other than first frequency (band) 1201.

TRP 2 labeled 1101_2 and NR-UE 1 labeled 1100_1 perform, for example, communication by TDD or communication by FDD at second frequency (band) 1202. Note that, as in FIG. 22, TRP 2 labeled 1101_2 need not perform communication at a frequency (band) other than second frequency (band) 1202, or TRP 2 labeled 1101_2 may perform the communication by TDD or the communication by FDD at a frequency (band) other than second frequency (band) 1202.

In FIG. 22, a case has been described where the frequency for "downlink" and the frequency for "uplink" are the same frequency (band), but the present embodiment is not limited to this case, and the frequency for "downlink" and the frequency for "uplink" may be the same frequency (band) partly. TDD and FDD will be described later.

FIG. 12B illustrates transmission statuses of TRP 1 labeled 1101_1 and NR-UE 1 labeled 1100_1 in a time axis in situations of FIG. 21 and FIG. 22. Note that, in FIG. 12B, a horizontal axis represents time.

As illustrated in FIG. 12B, TRP 1 labeled 1101_1 transmits frame 1251 addressed to NR-UE 1 labeled 1100_1 in the first time. Moreover, NR-UE 1 labeled 1100_1 transmits frame 1261 addressed to TRP 1 labeled 1101_1 in the first time.

Therefore, NR-UE 1 labeled 1100_1 performs transmission and reception at the same frequency (or partly same frequency) and in the same time. At this time, taking into account a direction of transmission (direction from NR-UE 1 to TRP 1) and a direction of reception (direction from TRP 1 to NR-UE 1) that are performed by NR-UE 1 labeled 1100_1, it can be said that NR-UE 1 labeled 1100_1 has a function of eliminating self-interference. The same applies to TRP 1 labeled 1101_1.

FIG. 12C, FIG. 12D, FIG. 12E, and FIG. 12F each illustrate transmission statuses of TRP 1 labeled 1101_1 and NR-UE 1 labeled 1100_1 in a time axis in situations of FIG. 21 and FIG. 22, which are different from those in FIG. 12B. Note that, in FIG. 12C, FIG. 12D, FIG. 12E, and FIG. 12F, a horizontal axis represents time.

As illustrated in FIG. 12C, FIG. 12D, FIG. 12E, and FIG. 12F, TRP 1 labeled 1101_1 transmits frame 1251 addressed to NR-UE 1 labeled 1100_1 in any time section of the first time. Meanwhile, NR-UE 1 labeled 1100_1 transmits frame 1261 addressed to TRP 1 labeled 1101_1 in any time section of the first time.

Therefore, NR-UE 1 labeled 1100_1 performs transmission and reception at the same frequency (or partly same frequency) and in the same time. At this time, taking into account a direction of transmission (direction from NR-UE 1 to TRP 1) and a direction of reception (direction from TRP 1 to NR-UE 1) that are performed by NR-UE 1 labeled 1100_1, it can be said that NR-UE 1 labeled 1100_1 has a function of eliminating self-interference. The same applies to TRP 1 labeled 1101_1.

Note that examples of temporal arrangement of the frame transmitted by TRP 1 labeled 1101_1 and the frame transmitted by NR-UE 1 labeled 1100_1 are not limited to those in FIG. 12B, FIG. 12C, FIG. 12D, FIG. 12E, and FIG. 12F, and any temporal arrangement is possible as long as both the frame transmitted by TRP 1 labeled 1101_1 and the frame transmitted by NR-UE 1 labeled 1100_1 are present at the same time.

Further, as illustrated in FIG. 22, TRP 2 labeled 1101_2 and NR-UE 1 labeled 1100_1 perform, for example, communication by TDD or communication by FDD at second frequency (band) 1202. This brings about an effect of improving the data transmission efficiency in NR-UE 1 labeled 1100_1.

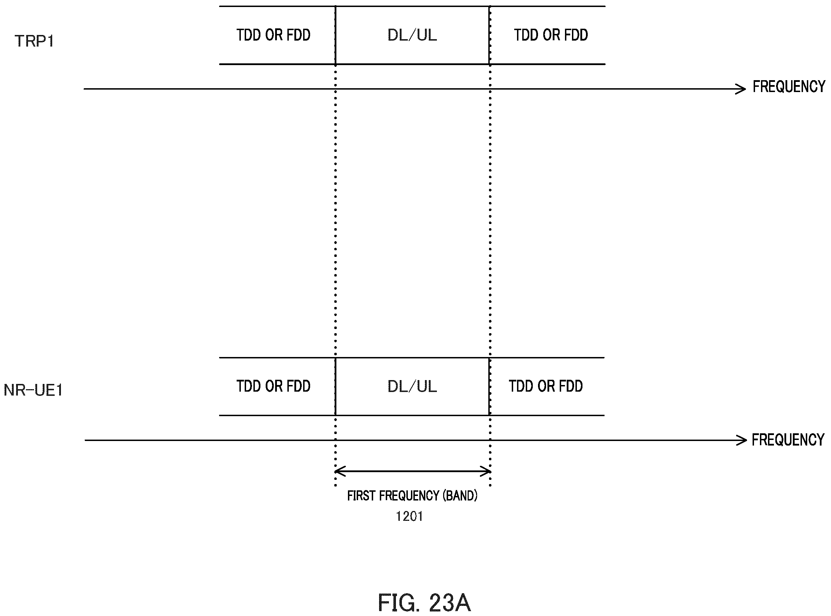

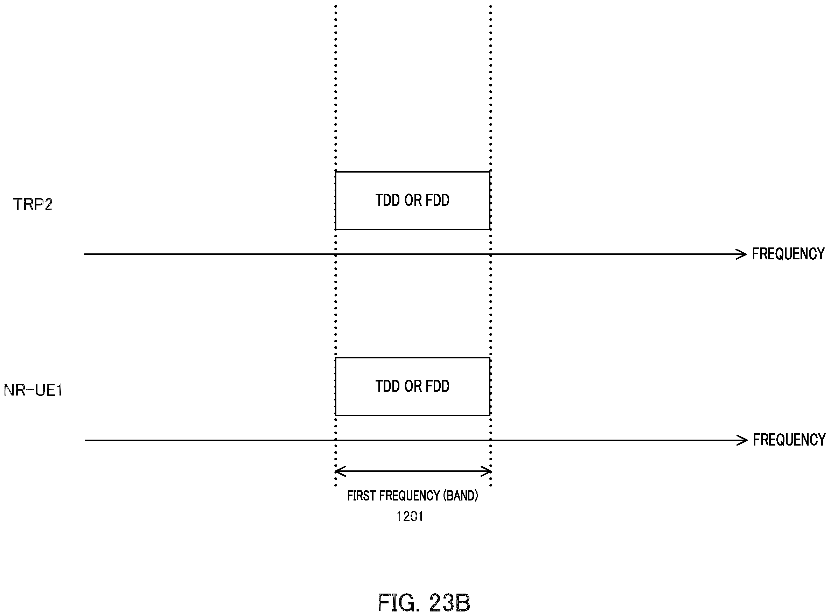

FIG. 23A illustrates exemplary communication statuses of "TRP 1 labeled 1101_1 and NR-UE 1 labeled 1100_1" in a frequency axis in FIG. 21. FIG. 23B illustrates exemplary communication statuses of "TRP 2 labeled 1101_2 and NR-UE 1 labeled 1100_1" in a frequency axis in FIG. 21. Note that, in FIG. 23A and FIG. 23B, horizontal axes indicate the frequency, and the components that operate in the same manner as the components in FIG. 12 are denoted by the same reference numerals.

FIG. 23A will be described first. As in FIG. 23A, TRP 1 labeled 1101_1 uses first frequency (band) 1201 to transmit a modulation signal for downlink. At this time, for example, NR-UE 1 labeled 1100_1 receives the modulation signal at first frequency (band) 1201 transmitted by TRP 1 labeled 1101_1. Note that, as in FIG. 23A, TRP 1 labeled 1101_1 may perform TDD communication or FDD communication at a frequency (band) other than first frequency (band) 1201.

NR-UE 1 labeled 1100_1 uses first frequency (band) 1201 to receive a modulation signal for downlink and to transmit a modulation signal for uplink. At this time, for example, TRP 1 labeled 1101_1 receives the modulation signal at first frequency (band) 1201 transmitted by NR-UE 1 labeled 1100_1. NR-UE 1 labeled 1100_1 then receives the modulation signal at first frequency (band) 1201 transmitted by TRP 1 labeled 1101_1. Note that, as in FIG. 23A, NR-UE 1 labeled 1100_1 may perform TDD communication or FDD communication at a frequency (band) other than first frequency (band) 1201. Unlike FIG. 23A, NR-UE 1 labeled 1100_1 need not perform communication at a frequency (band) other than first frequency (band) 1201.

In FIG. 23A, a case has been described where the frequency for "downlink" and the frequency for "uplink" are the same frequency (band), but the present embodiment is not limited to this case, and the frequency for "downlink" and the frequency for "uplink" may be the same frequency (band) partly. TDD and FDD will be described later.

FIG. 12B illustrates transmission statuses of TRP 1 labeled 1101_1 and NR-UE 1 labeled 1100_1 in a time axis in situations of FIG. 21 and FIG. 13A. Note that, in FIG. 12B, a horizontal axis represents time.

As illustrated in FIG. 12B, TRP 1 labeled 1101_1 transmits frame 1251 addressed to NR-UE 1 labeled 1100_1 in the first time. Moreover, NR-UE 1 labeled 1100_1 transmits frame 1261 addressed to TRP 1 labeled 1101_1 in the first time.

Therefore, NR-UE 1 labeled 1100_1 performs transmission and reception at the same frequency (or partly same frequency) and in the same time. At this time, taking into account a direction of transmission (direction from NR-UE 1 to TRP 1) and a direction of reception (direction from TRP 1 to NR-UE 1) that are performed by NR-UE 1 labeled 1100_1, it can be said that NR-UE 1 labeled 1100_1 has a function of eliminating self-interference. The same applies to TRP 1 labeled 1101_1.

FIG. 12C, FIG. 12D, FIG. 12E, and FIG. 12F each illustrate transmission statuses of TRP 1 labeled 1101_1 and NR-UE 1 labeled 1100_1 in a time axis in situations of FIG. 21 and FIG. 23A, which are different from those in FIG. 12B. Note that, in FIG. 12C, FIG. 12D, FIG. 12E, and FIG. 12F, a horizontal axis represents time.

As illustrated in FIG. 12C, FIG. 12D, FIG. 12E, and FIG. 12F, TRP 1 labeled 1101_1 transmits frame 1251 addressed to NR-UE 1 labeled 1100_1 in any time section of the first time. Meanwhile, NR-UE 1 labeled 1100_1 transmits frame 1261 addressed to TRP 1 labeled 1101_1 in any time section of the first time.

Therefore, NR-UE 1 labeled 1100_1 performs transmission and reception at the same frequency (or partly same frequency) and in the same time. At this time, taking into account a direction of transmission (direction from NR-UE 1 to TRP 1) and a direction of reception (direction from TRP 1 to NR-UE 1) that are performed by NR-UE 1 labeled 1100_1, it can be said that NR-UE 1 labeled 1100_1 has a function of eliminating self-interference. The same applies to TRP 1 labeled 1101_1.

Note that examples of temporal arrangement of the frame transmitted by TRP 1 labeled 1101_1 and the frame transmitted by NR-UE 1 labeled 1100_1 are not limited to those in FIG. 12B, FIG. 12C, FIG. 12D, FIG. 12E, and FIG. 12F, and any temporal arrangement is possible as long as both the frame transmitted by TRP 1 labeled 1101_1 and the frame transmitted by NR-UE 1 labeled 1100_1 are present at the same time.

Next, FIG. 23B will be described. As in FIG. 23B, TRP 2 labeled 1101_2 uses first frequency (band) 1201 to transmit a modulation signal for downlink. At this time, for example, NR-UE 1 labeled 1100_1 receives the modulation signal at first frequency (band) 1201 transmitted by TRP 2 labeled 1101_2.

NR-UE 1 labeled 1100_1 uses first frequency (band) 1201 to receive a modulation signal for downlink and to transmit a modulation signal for uplink. At this time, for example, TRP 2 labeled 1101_2 receives the modulation signal at first frequency (band) 1201 transmitted by NR-UE 1 labeled 1100_1. NR-UE 1 labeled 1100_1 then receives the modulation signal at first frequency (band) 1201 transmitted by TRP 2 labeled 1101_2. Note that communication between TRP 2 labeled 1101_2 and NR-UE 1 labeled 1100_1 using first frequency (band) 1201 is "TDD communication or FDD communication."

TRP 2 labeled 1101_2 may perform TDD communication or FDD communication at a frequency (band) other than first frequency (band) 1201. Note that TDD and FDD in FIG. 23B will be described later.

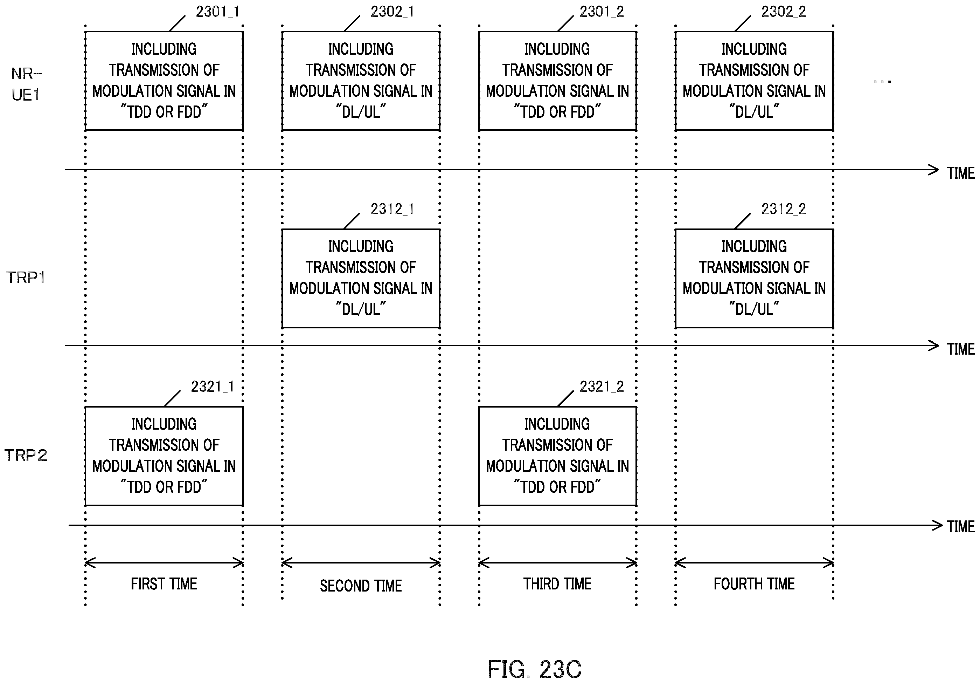

FIG. 23C illustrates exemplary communication statuses of NR-UE 1 labeled 1100_1, TRP 1 labeled 1101_1, and TRP 2 labeled 1101_2 in time in FIG. 21. In FIG. 23C, a horizontal axis represents time. Note that, FIG. 23C indicates communication statuses at first frequency (band) 1201 in FIG. 23A and 23B.

As illustrated in FIG. 23C, NR-UE 1 labeled 1100_1 transmits a modulation signal in "TDD, or FDD" in any time of the first time (2301_1). Note that, the destination of this modulation signal is TRP 2 labeled 1101_2.

Meanwhile, as illustrated in FIG. 23C, TRP 2 labeled 1101_2 transmits a modulation signal in "TDD, or FDD" in any time of the first time (2321_1). Note that, the destination of this modulation signal includes NR-UE 1 labeled 1100_1.

Similarly, NR-UE 1 labeled 1100_1 transmits a modulation signal in "TDD, or FDD" in any time of the third time (2301_2). Note that, the destination of this modulation signal is TRP 2 labeled 1101_2.

Meanwhile, as illustrated in FIG. 23C, TRP 2 labeled 1101_2 transmits a modulation signal in "TDD, or FDD" in any time of the third time (2321_1). Note that, the destination of this modulation signal includes NR-UE 1 labeled 1100_1.

Note that communication in the first time and the third time in FIG. 23C has already been described with reference to FIG. 23B.

As illustrated in FIG. 23C, NR-UE 1 labeled 1100_1 transmits a modulation signal for "communication at first frequency (band) 1201 of FIG. 23A" in any time of the second time (2302_1). Note that, the destination of this modulation signal is TRP 1 labeled 1101_1.

Meanwhile, as illustrated in FIG. 23C, TRP 1 labeled 1101_1 transmits a modulation signal for "communication at first frequency (band) 1201 of FIG. 23A" in any time of the second time (2312_1). Note that, the destination of this modulation signal includes NR-UE 1 labeled 1100_1.

Similarly, as illustrated in FIG. 23C, NR-UE 1 labeled 1100_1 transmits a modulation signal for "communication at first frequency (band) 1201 of FIG. 23A" in any time of the fourth time (2302_2). Note that, the destination of this modulation signal is TRP 1 labeled 1101_1.

Meanwhile, as illustrated in FIG. 23C, TRP 1 labeled 1101_1 transmits a modulation signal for "communication at first frequency (band) 1201 of FIG. 23A" in any time of the fourth time (2312_2). Note that, the destination of this modulation signal includes NR-UE 1 labeled 1100_1.

Note that communication in the second time and the fourth time in FIG. 23C has already been described with reference to FIG. 23A.

As above, when "NR-UE 1 labeled 1100_1, TRP 1 labeled 1101_1, and TRP 2 labeled 1101_2 in FIG. 21" perform communication at first frequency (band) 1201, as described with reference to FIG. 23A and FIG. 23B, NR-UE 1 labeled 1100_1 performs, at first frequency (band) 1201, communication by switching between the "communication by TDD," the "communication by FDD," and the "communication at first frequency (band) 1201 of FIG. 23A" in time, as described with reference to FIG. 23C. Thus, the following effect can be brout about: the frequency-utilization efficiency can be improved in the communication system; and NR-UE can achieve both improvement of the communication speed and improvement of the reception quality by selecting a suitable communication method depending on a situation.

Note that, the method in which"NR-UE 1 labeled 1100_1, TRP 1 labeled 1101_1, and TRP 2 labeled 1101_2 in FIG. 21" perform the "communication by TDD," the "communication by FDD," and the "communication at first frequency (band) 1201 of FIG. 23A" in time at first frequency (band) 1201 is not limited to the example of FIG. 23C, and the same effect can be brought about regardless of how the "communication by TDD," the "communication by FDD," and the "communication at first frequency (band) 1201 of FIG. 23A" are arranged in time and then performed.

The "communication by TDD (TDD communication)" and the "communication by FDD (FDD communication)" will be described.

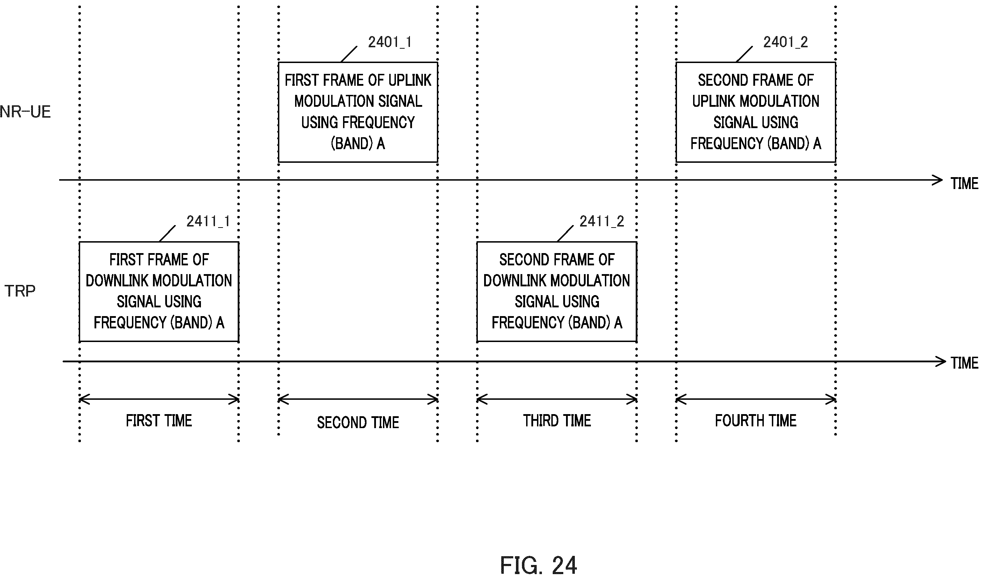

FIG. 24 illustrates an example when an NR-UE and a TRP perform TDD communication, and a horizontal axis represents time.

As illustrated in FIG. 24, the TRP transmits "first frame 2411_1 of downlink modulation signal using frequency (band) A" in the first time. At this time, the NR-UE transmits no modulation signal in the first time.

The NR-UE transmits "first frame 2401_1 of uplink modulation signal using frequency (band) A" in the second time. At this time, the TRP transmits no modulation signal in the second time.

The TRP transmits "second frame 2411_2 of downlink modulation signal using frequency (band) A" in the third time. At this time, the NR-UE transmits no modulation signal in the third time.

The NR-UE transmits "second frame 2401_2 of uplink modulation signal using frequency (band) A" in the fourth time. At this time, the TRP transmits no modulation signal in the fourth time.

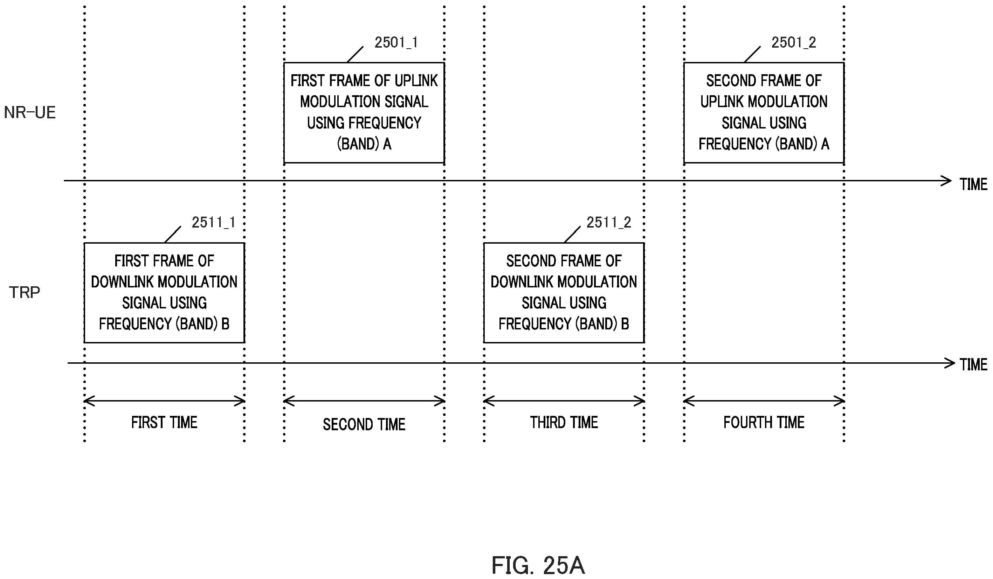

FIG. 25A illustrates a first example when an NR-UE and a TRP perform FDD communication, and a horizontal axis represents time.

As illustrated in FIG. 25A, the TRP transmits "first frame 2511_1 of downlink modulation signal using frequency (band) B" in the first time. At this time, the NR-UE transmits no modulation signal in the first time.

The NR-UE transmits "first frame 2501_1 of uplink modulation signal using frequency (band) A" in the second time. At this time, the TRP transmits no modulation signal in the second time. Note that frequency (band) A and frequency (band) B are different from each other.

The TRP transmits "second frame 2511_2 of downlink modulation signal using frequency (band) B" in the third time. At this time, the NR-UE transmits no modulation signal in the third time.

The NR-UE transmits "second frame 2501_2 of uplink modulation signal using frequency (band) A" in the fourth time. At this time, the TRP transmits no modulation signal in the fourth time.

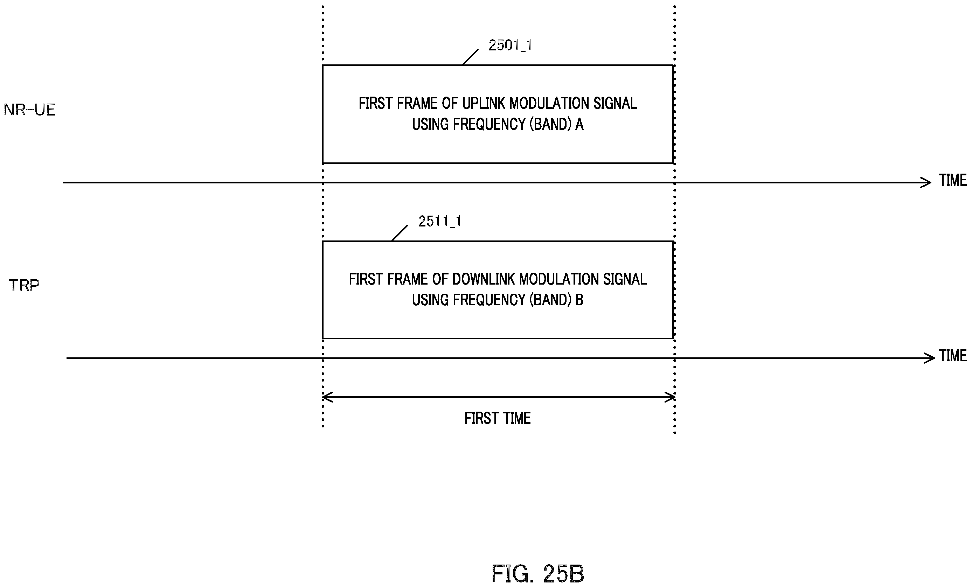

FIG. 25B illustrates a second example when an NR-UE and a TRP perform the FDD communication, and a horizontal axis represents time.

As illustrated in FIG. 25B, the TRP transmits "first frame 2511_1 of downlink modulation signal using frequency (band) B" in the first time. Meanwhile, the NR-UE transmits "first frame 2501_1 of uplink modulation signal using frequency (band) A" in the first time. Note that frequency (band) A and frequency (band) B are different from each other.

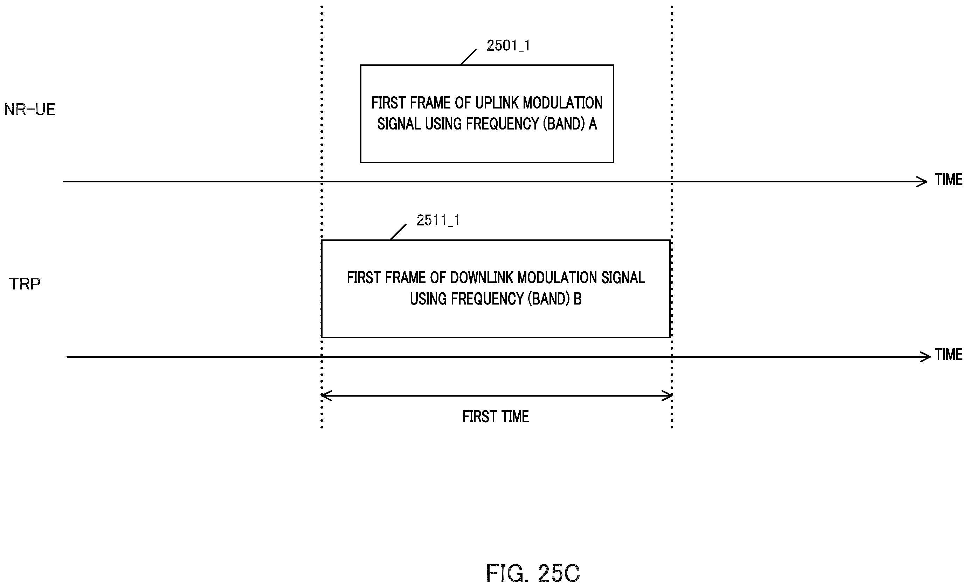

FIG. 25C illustrates a third example when an NR-UE and a TRP perform the FDD communication, and a horizontal axis represents time.

As illustrated in FIG. 25C, the TRP transmits "first frame 2511_1 of downlink modulation signal using frequency (band) B" in the first time. Meanwhile, the NR-UE transmits "first frame 2501_1 of uplink modulation signal using frequency (band) A" in part of the first time. Note that frequency (band) A and frequency (band) B are different from each other.

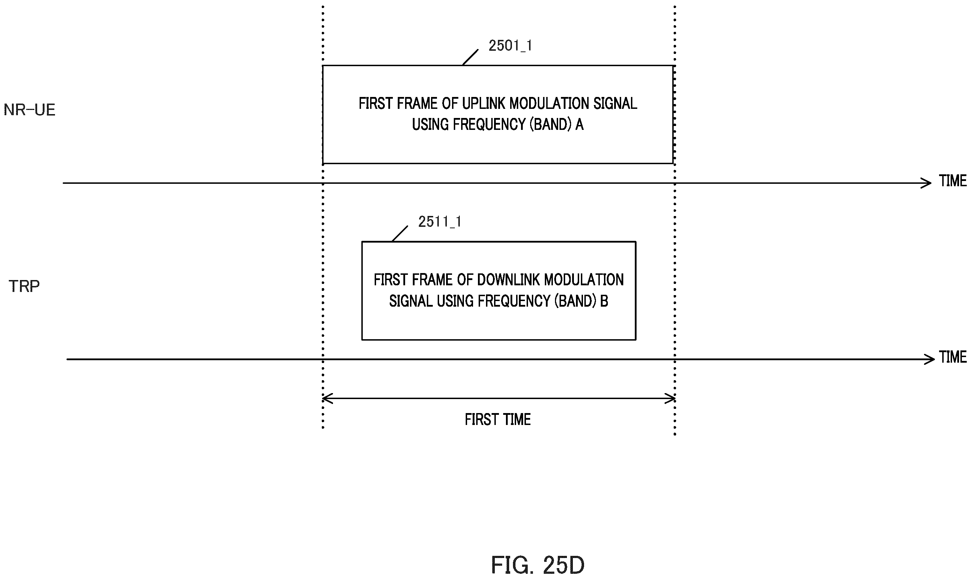

FIG. 25D illustrates a fourth example when an NR-UE and a TRP perform the FDD communication, and a horizontal axis represents time.

As illustrated in FIG. 25D, the TRP transmits "first frame 2511_1 of downlink modulation signal using frequency (band) B" in part of the first time. Meanwhile, the NR-UE transmits "first frame 2501_1 of uplink modulation signal using frequency (band) A" in the first time. Note that frequency (band) A and frequency (band) B are different from each other.

In the present embodiment, a description has been given with reference to a TRP, but the same implementation is possible even when the TRP is replaced with any of "a base station, a repeater, an access point, a broadcast station, a gNodeB (gNB), an eNodeB (eNB), a node, a server, a satellite, a movable apparatus (e.g., electricity-based movable apparatus such as "electric vehicle, motor bike (e-bike), electric-powered vehicle, movable robot, electric-powered scooter, electric-assisted bicycle, and electric-assisted scooter," automobile, motorcycle, bicycle, vessel, aircraft, airplane), a terminal, a mobile phone, a smart phone, a tablet, a laptop, a personal computer, a home appliance (household electric appliance), an apparatus in a factory, communication equipment or broadcast equipment such as "Internet of Things (IoT) equipment, and the like." Accordingly, the TRP in the present embodiment may be referred to as "a base station, a repeater, an access point, a broadcast station, a gNB, an eNB, a node, a server, a satellite, a movable apparatus described above, a terminal, a mobile phone, a smart phone, a tablet, a laptop, a personal computer, a home appliance, an apparatus in a factory, communication equipment or broadcast equipment such as IoT equipment, and the like." The aforementioned points are the same in the present specification.

Further, in the present embodiment, a description has been given with reference to an NR-UE, but the same implementation is possible even when the NR-UE is replaced with any of "a TRP, a base station, a repeater, an access point, a broadcast station, a gNB, an eNB, a node, a server, a satellite, a movable apparatus described above, a terminal, a mobile phone, a smart phone, a tablet, a laptop, a personal computer, a home appliance, an apparatus in a factory, communication equipment or broadcast equipment such as IoT equipment, and the like." Accordingly, the NR-UE in the present embodiment may be referred to as "a TRP, a base station, a repeater, an access point, a broadcast station, a gNB, an eNB, a node, a server, a satellite, a movable apparatus described above, a terminal, a mobile phone, a smart phone, a tablet, a laptop, a personal computer, a home appliance, an apparatus in a factory, communication equipment or broadcast equipment such as IoT equipment, and the like." The aforementioned points are the same in the present specification.

FIG. 1A, FIG. 1B, FIG. 1C, FIG. 9, and FIG. 10 have been each described as, for example, an exemplary configuration of an apparatus such as a TRP or an NR-UE in the present embodiment, but configuration of the apparatus is not limited to these examples. An apparatus having a configuration to perform transmit beamforming and receive beamforming has been described, but the present embodiment can be impelemented even by an apparatus configured not to have the configuration to perform the transmit beamforming and the receive beamforming. The aforementioned points are the same in the present specification.

In some cases, it is possible for an apparatus to obtain an effect of self-interference cancellation by performing the transmit beamforming and the receive beamforming. Additionally, without performing the beamforming, the self-interference cancellation may be achieved using a method of being provided with a function of performing the self-interference cancellation.

Further, for example, when an apparatus such as a TRP or an NR-UE transmits a modulation signal, one or more, or two or more modulation signals may be transmitted using one or more, or two or more transmission antennas. The aforementioned points are the same in the present specification.

In FIG. 11, FIG. 15, and FIG. 21, the number of TRPs present in a radio system is two, but the implementation is possible with at least one TRP, or two or more TRPs.

Further, in FIG. 15, the number of NR-UEs present in a radio system is three, but the implementation is possible with at least one NR-UE, or two or more NR-UEs.

In the present embodiment, a case has been described where a plurality of TRPs is present in a radio system. At this time, the plurality of TRPs may communicate with each other to share information or to control each other. Further, an apparatus that controls the plurality of TRPs may be present in the system. The aforementioned points are the same in the present specification.

(Embodiment 2)

In Embodiment 2, a variation of Embodiment 1 will be described. Note that, since configurations, basic operations, and the like of a gNB and an NR-UE have been described in Embodiment 1, description thereof will be omitted here.

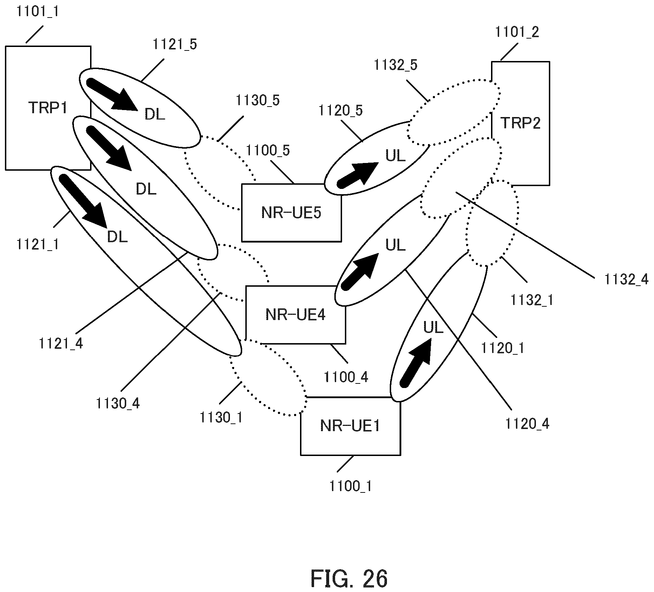

FIG. 26 illustrates an exemplary radio system in the present embodiment.

As illustrated in FIG. 26, there are TRP 1 labeled 1101_1, TRP 2 labeled 1101_2, NR-UE 1 labeled 1100_1, NR-UE 4 labeled 1100_4, and NR-UE 5 labeled 1100_5, for example. Note that, in FIG. 26, the components that operate in the same manner as the components in FIG. 11 are denoted by the same reference numerals, and some descriptions thereof will be omitted.

In FIG. 26, TRP 1 labeled 1101_1 generates transmission beam 1121_1 and uses transmission beam 1121_1 to transmit a modulation signal addressed to NR-UE 1 labeled 1100_1 (Downlink (DL)).

NR-UE 1 labeled 1100_1 then generates received beam 1130_1 and uses received beam 1130_1 to receive the modulation signal addressed to NR-UE 1 that has been transmitted by TRP 1 labeled 1101_1.

Further, in FIG. 26, TRP 1 labeled 1101_1 generates transmission beam 1121_4 and uses transmission beam 1121_4 to transmit a modulation signal addressed to NR-UE 4 labeled 1100_4 (Downlink (DL)).

NR-UE 4 labeled 1100_4 then generates received beam 1130_4 and uses received beam 1130_4 to receive the modulation signal addressed to NR-UE 4 that has been transmitted by TRP 1 labeled 1101_1.

In FIG. 26, TRP 1 labeled 1101_1 generates transmission beam 1121_5 and uses transmission beam 1121_5 to transmit a modulation signal addressed to NR-UE 5 labeled 1100_5 (Downlink (DL)).

NR-UE 5 labeled 1100_5 then generates received beam 1130_5 and uses received beam 1130_5 to receive the modulation signal addressed to NR-UE 5 that has been transmitted by TRP 1 labeled 1101_1.

NR-UE 1 labeled 1100_1 generates transmission beam 1120_1 and uses transmission beam 1120_1 to transmit a modulation signal addressed to TRP 2 labeled 1101_2 (Uplink (UL)).

TRP 2 labeled 1101_2 then generates received beam 1132_1 and uses received beam 1132_1 to receive the modulation signal addressed to TRP 2 that has been transmitted by NR-UE 1 labeled 1100_1.

NR-UE 4 labeled 1100_4 generates transmission beam 1120_4 and uses transmission beam 1120_4 to transmit a modulation signal addressed to TRP 2 labeled 1101_2 (Uplink (UL)).

TRP 2 labeled 1101_2 then generates received beam 1132_4 and uses received beam 1132_4 to receive the modulation signal addressed to TRP 2 that has been transmitted by NR-UE 4 labeled 1100_4.

NR-UE 5 labeled 1100_5 generates transmission beam 1120_5 and uses transmission beam 1120_5 to transmit a modulation signal addressed to TRP 2 labeled 1101_2 (Uplink (UL)).

TRP 2 labeled 1101_2 then generates received beam 1132_5 and uses received beam 1132_5 to receive the modulation signal addressed to TRP 2 that has been transmitted by NR-UE 5 labeled 1100_5.

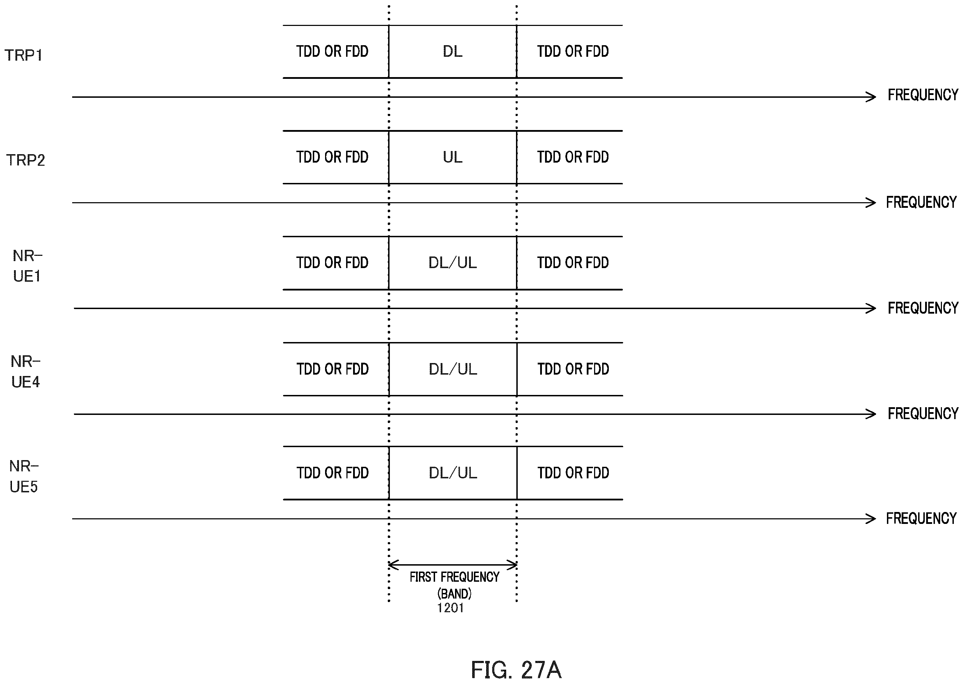

FIG. 27A illustrates exemplary communication statuses of "TRP 1 labeled 1101_1, TRP 2 labeled 1101_2, NR-UE 1 labeled 1100_1, NR-UE 4 labeled 1100_4, and NR-UE 5 labeled 1100_5" in a frequency axis in FIG. 26. Note that, in FIG. 27A, a horizontal axis represents the frequency, and the components that operate in the same manner as the components in FIG. 12 are denoted by the same reference numerals.

TRP 1 labeled 1101_1 uses first frequency (band) 1201 to transmit a modulation signal for downlink. At this time, for example, NR-UE 1 labeled 1100_1, NR-UE 4 labeled 1100_4, and NR-UE 5 labeled 1100_5 receive the modulation signal at frequency (band) 1201 transmitted by TRP 1 labeled 1101_1. Note that, as in FIG. 27A, TRP 1 labeled 1101_1 may perform TDD communication or FDD communication at a frequency (band) other than first frequency (band) 1201. Unlike FIG. 27A, TRP 1 labeled 1101_1 need not perform communication at a frequency (band) other than "first frequency (band) 1201."

TRP 2 labeled 1101_2 uses first frequency (band) 1201 to receive a modulation signal for uplink. At this time, TRP 2 labeled 1101_2 receives the "modulation signal transmitted by NR-UE 1 labeled 1100_1," the "modulation signal transmitted by NR-UE 4 labeled 1100_4," and the "modulation signal transmitted by NR-UE 5 labeled 1100_5" at first frequency (band) 1201. Note that, as in FIG. 27A, TRP 2 labeled 1101_2 may perform TDD communication or FDD communication at a frequency (band) other than first frequency (band) 1201. Unlike FIG. 27A, TRP 2 labeled 1101_2 need not perform communication at a frequency (band) other than "first frequency (band) 1201."

NR-UE 1 labeled 1100_1 uses first frequency (band) 1201 to receive a modulation signal for downlink and to transmit a modulation signal for uplink. At this time, for example, TRP 2 labeled 1101_2 receives the modulation signal at first frequency (band) 1201 transmitted by NR-UE 1 labeled 1100_1. NR-UE 1 labeled 1100_1 then receives the modulation signal at first frequency (band) 1201 transmitted by TRP 1 labeled 1101_1. Note that, as in FIG. 27A, NR-UE 1 labeled 1100_1 may perform TDD communication or FDD communication at a frequency (band) other than first frequency (band) 1201. Unlike FIG. 27A, NR-UE 1 labeled 1100_1 need not perform communication at a frequency (band) other than first frequency (band) 1201.

NR-UE 4 labeled 1100_4 uses first frequency (band) 1201 to receive a modulation signal for downlink and to transmit a modulation signal for uplink. At this time, for example, TRP 2 labeled 1101_2 receives the modulation signal at first frequency (band) 1201 transmitted by NR-UE 4 labeled 1100_4. NR-UE 4 labeled 1100_4 then receives the modulation signal at first frequency (band) 1201 transmitted by TRP 1 labeled 1101_1. Note that, as in FIG. 27A, NR-UE 4 labeled 1100_4 may perform TDD communication or FDD communication at a frequency (band) other than first frequency (band) 1201. Unlike FIG. 27A, NR-UE 4 labeled 1100_4 need not perform communication at a frequency (band) other than first frequency (band) 1201.

NR-UE 5 labeled 1100_5 uses first frequency (band) 1201 to receive a modulation signal for downlink and to transmit a modulation signal for uplink. At this time, for example, TRP 2 labeled 1101_2 receives the modulation signal at first frequency (band) 1201 transmitted by NR-UE 5 labeled 1100_5. NR-UE 5 labeled 1100_5 then receives the modulation signal at first frequency (band) 1201 transmitted by TRP 1 labeled 1101_1. Note that, as in FIG. 27A, NR-UE 5 labeled 1100_5 may perform TDD communication or FDD communication at a frequency (band) other than first frequency (band) 1201. Unlike FIG. 27A, NR-UE 5 labeled 1100_5 need not perform communication at a frequency (band) other than first frequency (band) 1201.

In FIG. 27A, a case has been described where the frequency for "downlink" and the frequency for "uplink" are the same frequency (band), but the present embodiment is not limited to this case, and the frequency for "downlink" and the frequency for "uplink" may be the same frequency (band) partly.

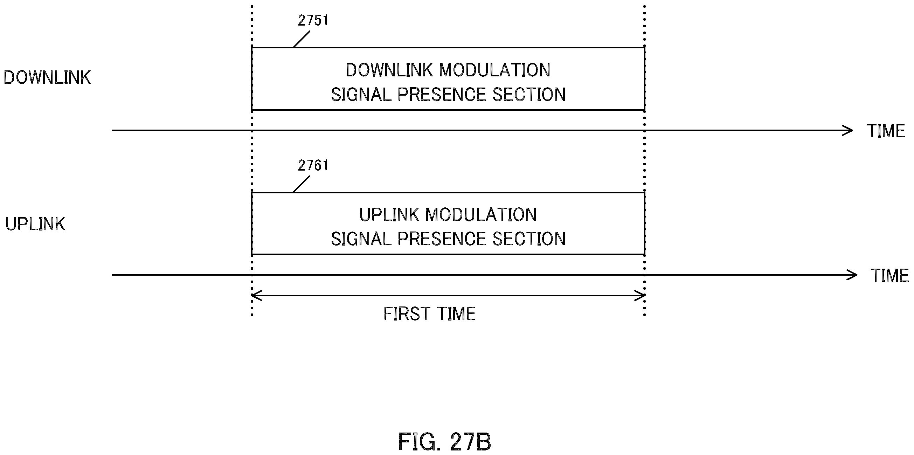

FIG. 27B illustrates exemplary presence sections of a downlink modulation signal transmitted by a TRP such as "TRP 1 labeled 1101_1" and an uplink modulation signal transmitted by an NR-UE such as "NR-UE 1 labeled 1100_1, NR-UE 4 labeled 1100_4, and NR-UE 5 labeled 1100_5" in a time axis in situations of FIG. 26 and FIG. 27A. Note that, in FIG. 27B, a horizontal axis represents time.

As illustrated in FIG. 27B, in the first time, a downlink modulation signal is present, that is, downlink modulation signal presence section 2751 is present. In addition, an uplink modulation signal is present in the first time, that is, uplink modulation signal presence section 2761 is present.

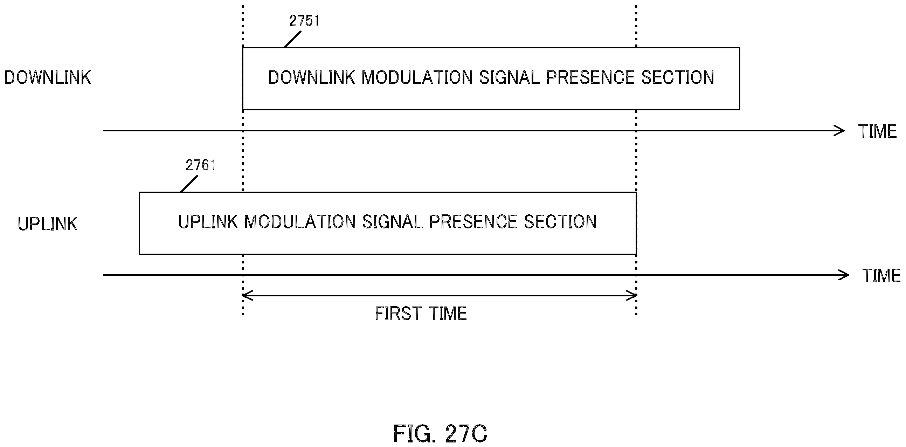

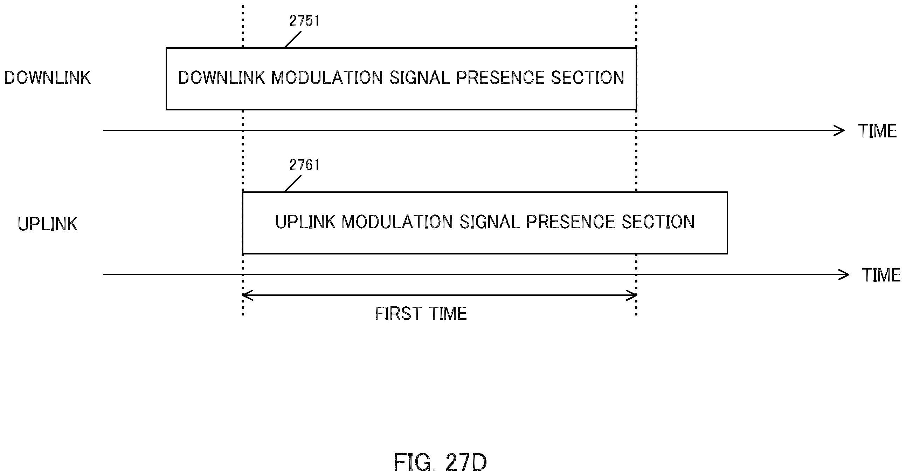

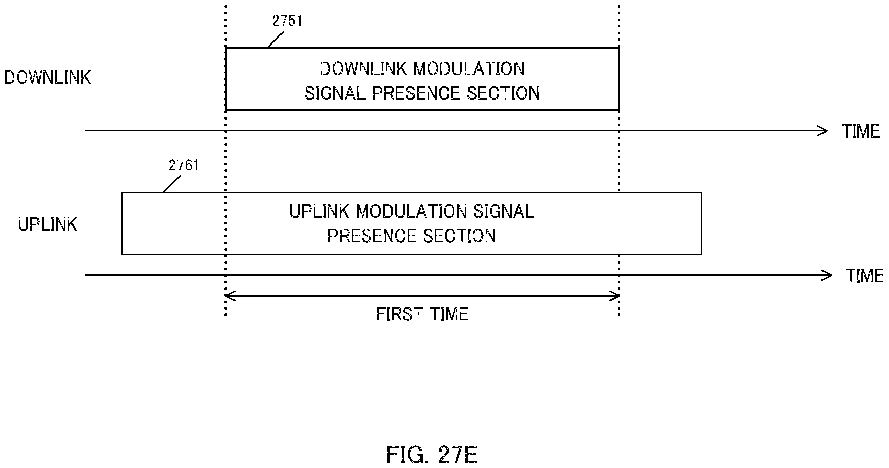

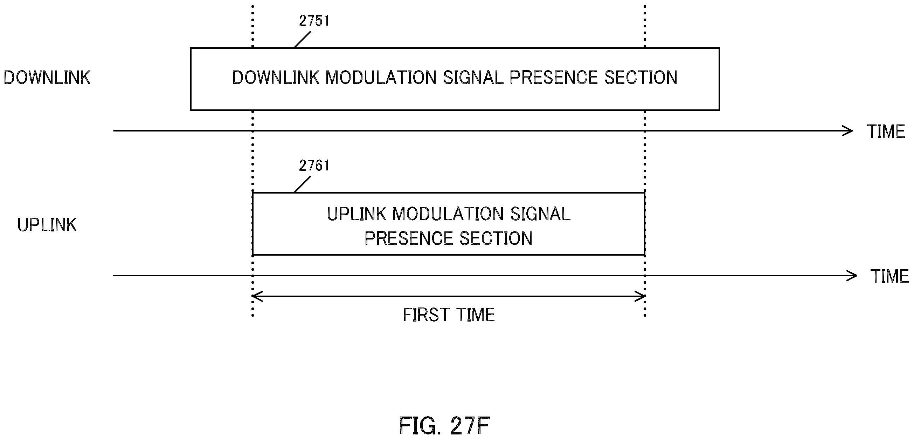

FIG. 27C, FIG. 27D, FIG. 27E, and FIG. 27F each illustrate exemplary presence sections, which are different from those in FIG. 27B, of a downlink modulation signal transmitted by a TRP such as "TRP 1 labeled 1101_1" and an uplink modulation signal transmitted by an NR-UE such as "NR-UE 1 labeled 1100_1, NR-UE 4 labeled 1100_4, and NR-UE 5 labeled 1100_5" in a time axis in situations of FIG. 26 and FIG. 27A. Note that, in FIG. 27C, FIG. 27D, FIG. 27E, and FIG. 27F, a horizontal axis represents time.

As illustrated in FIG. 27C, FIG. 27D, FIG. 27E, and FIG. 27F, in any time section of the first time, a downlink modulation signal is present, that is, downlink modulation signal presence section 2751 is present. In addition, an uplink modulation signal is present in any time section of the first time, that is, uplink modulation signal presence section 2761 is present.

Therefore, the "downlink modulation signal" and the "uplink modulation signal" are present at the same frequency (or partly same frequency) and in the same time.

Note that examples of temporal arrangement in which the "downlink modulation signal" and the "uplink modulation signal" are present are not limited to those in FIG. 27C, FIG. 27D, FIG. 27E, and FIG. 27F, and any temporal arrangement is possible as long as both the "downlink modulation signal" and the "uplink modulation signal" are present at the same time.

In Embodiment 1, a case has been described where a "modulation signal transmitted by NR-UE 1 labeled 1100_1" and a "modulation signal addressed to NR-UE 1 labeled 1100_1 transmitted by a TRP" are present are present at the same frequency (or partly same frequency) at the same time. In the present embodiment, an example will be described in which a "modulation signal transmitted by NR-UE 1 labeled 1100_1" and a "modulation signal addressed to NR-UE 1 labeled 1100_1 transmitted by a TRP" are present at the same frequency (or partly same frequency) at the same time, which is different from that in Embodiment 1.

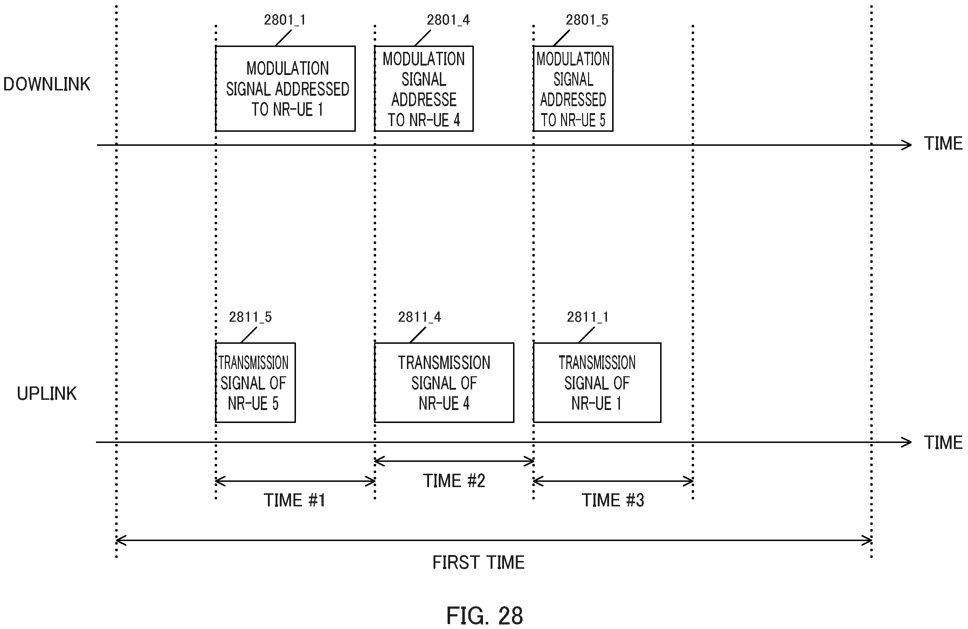

FIG. 28 illustrates exemplary configurations in a time axis of "downlink modulation signal presence section 2751" and "uplink modulation signal presence section 2761" in FIG. 27B, FIG. 27C, FIG. 27D, FIG. 27E, or FIG. 27F. Note that, in FIG. 28, a horizontal axis represents time. Further, "downlink modulation signal presence section 2751" includes the first time or part of the first time, as illustrated in FIG. 27B, FIG. 27C, FIG. 27D, FIG. 27E, and FIG. 27F, and "uplink modulation signal presence section 2761" also includes the first time or part of the first time (see FIG. 28). As illustrated in FIG. 28, the first time includes at least "time #1," "time #2," and time #3."

As illustrated in FIG. 28, "modulation signal 2801_1 addressed to NR-UE 1 labeled 1100_1" is present in "time #1" or part of "time #1" in "downlink modulation signal presence section 2751." Note that "modulation signal 2801_1 addressed to NR-UE 1 labeled 1100_1" is transmitted by TRP 1 labeled 1101_1 in FIG. 26.

"Modulation signal 2801_4 addressed to NR-UE 4 labeled 1100_4" is present in "time #2" or part of "time #2" in "downlink modulation signal presence section 2751." Note that "modulation signal 2801_4 addressed to NR-UE 4 labeled 1100_4" is transmitted by TRP 1 labeled 1101_1 in FIG. 26.

"Modulation signal 2801_5 addressed to NR-UE 5 labeled 1100_5" is present in "time #3" or part of "time #3" in "downlink modulation signal presence section 2751." Note that "modulation signal 2801_5 addressed to NR-UE 5 labeled 1100_5" is transmitted by TRP 1 labeled 1101_1 in FIG. 26.

As illustrated in FIG. 28, "transmission signal 2811_5 of NR-UE 5 labeled 1100_5" is present in "time #1" or part of "time #1" in "uplink modulation signal presence section 2761." Note that "transmission signal 2811_5 of NR-UE 5 labeled 1100_5" is transmitted by NR-UE 5 labeled 1100_5 in FIG. 26.

"Transmission signal 2811_4 of NR-UE 4 labeled 1100_4" is present in "time #2" or part of "time #2" in "uplink modulation signal presence section 2761." Note that "transmission signal 2811_4 of NR-UE 4 l abeled 1100_4" is transmitted by NR-UE 4 labeled 1100_4 in FIG. 26.

"Transmission signal 2811_1 of NR-UE 1 labeled 1100_1" is present in "time #3" or part of "time #3" in "uplink modulation signal presence section 2761." Note that "transmission signal 2811_1 of NR-UE 1 l abeled 1100_1" is transmitted by NR-UE 1 labeled 1100_1 in FIG. 26.

As described above, the "downlink modulation signal transmitted by TRP 1 labeled 1101_1" and the "uplink modulation signal transmitted by an NR-UE to TRP 2 labeled 1101_2" use "the same frequency or partly same frequency" and may present in the same time.

However, a first NR-UE may be present which satisfies that "a "downlink modulation signal transmitted by TRP 1 to the first NR-UE" and an "uplink modulation signal transmitted by the first NR-UE to TRP 2" are present in diferent times." Note that, this is a different communication method from that in Embodiment 1.

In this manner described above, self-interference may be reduced, which brings about an effect of improving the frequency utilization efficiency in the system.

Incidentally, the "case where TRP 1, TRP 2, and NR-UE perform communication as in Embodiment 1" and the "case where TRP 1, TRP 2, and NR-UE perform communication as in the present embodiment" may be switched in time.

Additionally, an "NR-UE that communicates with TRP 1 and TRP 2 as in Embodiment 1" and an "NR-UE that communicates with TRP 1 and TRP 2 as in the present embodiment" may be present.

In FIG. 26, the number of TRPs present in a radio system is two, but the implementation is possible with at least one TRP, or two or more TRPs Moreover, the implementation is possible with at least one NR-UE, or two or more NR-UEs.

(Embodiment 3)

In Embodiment 3, a variation of Embodiment 1 and Embodiment 2 will be described. Note that, since configurations, basic operations, and the like of a gNB and an NR-UE have been described in Embodiment 1, description thereof will be omitted here.

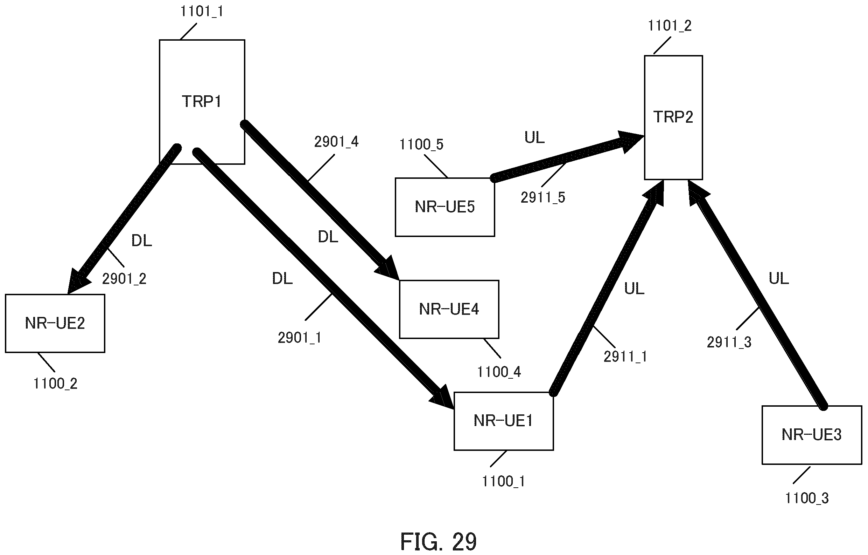

FIG. 29 illustrates exemplary radio system in the present embodiment. As illustrated in FIG. 29, there are TRP 1 labeled 1101_1, TRP 2 labeled 1101_2, NR-UE 1 labeled 1100_1, NR-UE 2 labeled 1100_2, NR-UE 3 labeled 1100_3, NR-UE 4 labeled 1100_4, and NR-UE 5 labeled 1100_5, for example. Note that, in FIG. 29, the components that operate in the same manner as the components in FIG. 11 are denoted by the same reference numerals, and some descriptions thereof will be omitted. Further, in the description of FIG. 29, for simplicity of description, a transmission beam generated by performing transmit beamforming and a received beam generated by performing receive beamforming will not be described. The present embodiment can be imprelemented, however, even when the transmit beamforming and the receive beamforming are not performed.

In FIG. 29, TRP 1 labeled 1101_1 transmits a modulation signal addressed to NR-UE 1 labeled 1100_1 (Downlink (DL) 2901_1).

NR-UE 1 labeled 1100_1 receives the modulation signal addressed to NR-UE 1 that has been transmitted by TRP 1 labeled 1101_1, accordingly.

Moreover, TRP 1 labeled 1101_1 transmits a modulation signal addressed to NR-UE 2 labeled 1100_2 (Downlink (DL) 2901_2).

NR-UE 2 labeled 1100_2 receives the modulation signal addressed to NR-UE 2 that has been transmitted by TRP 1 labeled 1101_1, accordingly.

TRP 1 labeled 1101_1 transmits a modulation signal addressed to NR-UE 4 labeled 1100_4 (Downlink (DL) 2901_4).

NR-UE 4 labeled 1100_4 receives the modulation signal addressed to NR-UE 4 that has been transmitted by TRP 1 labeled 1101_1, accordingly.

NR-UE 1 labeled 1100_1 transmits a modulation signal addressed to TRP 2 labeled 1101_2 (Uplink (UL) 2911_1).

TRP 2 labeled 1101_2 receives the modulation signal addressed to TRP 2 that has been transmitted by NR-UE 1 labeled 1100_1, accordingly.

NR-UE 3 labeled 1100_3 transmits a modulation signal addressed to TRP 2 labeled 1101_2 (Uplink (UL) 2911_3).

TRP 2 labeled 1101_2 receives the modulation signal addressed to TRP 2 that has been transmitted by NR-UE 3 labeled 1100_3, accordingly.

NR-UE 5 labeled 1100_5 transmits a modulation signal addressed to TRP 2 labeled 1101_2 (Uplink (UL) 2911_5).

TRP 2 labeled 1101_2 receives the modulation signal addressed to TRP 2 that has been transmitted by NR-UE 5 labeled 1100_5, accordingly.

In FIG. 29, although NR-UE 2 labeled 1100_2 transmits an uplink modulation signal to a TRP, it is not illustrated in FIG. 29.

Moreover, although NR-UE 4 labeled 1100_4 transmits an uplink modulation signal to a TRP, it is not illustrated in FIG. 29.

In FIG. 29, although NR-UE 3 labeled 1100_3 receives the downlink modulation signal transmitted by a TRP, it is not illustrated in FIG. 29.

Moreover, although NR-UE 5 labeled 1100_5 receives the downlink modulation signal transmitted by a TRP, it is not illustrated in FIG. 29.

The radio system in FIG. 29, which is cosrtucted by at least "TRP 1 labeled 1101_1, TRP 2 labeled 1101_2, NR-UE 1 labeled 1100_1, NR-UE 2 labeled 1100_2, NR-UE 3 labeled 1100_3, NR-UE 4 labeled 1100_4, and NR-UE 5 labeled 1100_5," uses the first frequency (band) for communication.

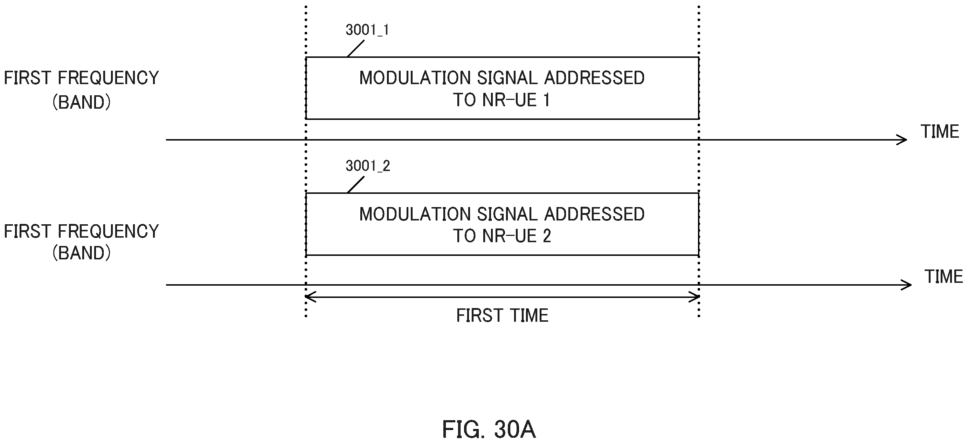

FIG. 30A illustrates an exemplary usage status of a first frequency (band) in a time axis. FIG. 30A illustrates exemplary statuses of a "modulation signal addressed to NR-UE 1 labeled 1100_1 trasnmitted by TRP 1 labeled 1101_1" and a "modulation signal addressed to NR-UE 2 labeled 1100_2 trasnmitted by TRP 1 labeled 1101_1" in a time axis in FIG. 29. Note that, in FIG. 30A, a horizontal axis represents time.

"Modulation signal 3001_1 addressed to NR-UE 1 labeled 1100_1 trasnmitted by TRP 1 labeled 1101_1" and "modulation signal 3001_2 addressed to NR-UE 2 labeled 1100_2 trasnmitted by TRP 1 labeled 1101_1" are present in the first time as in FIG. 30A.

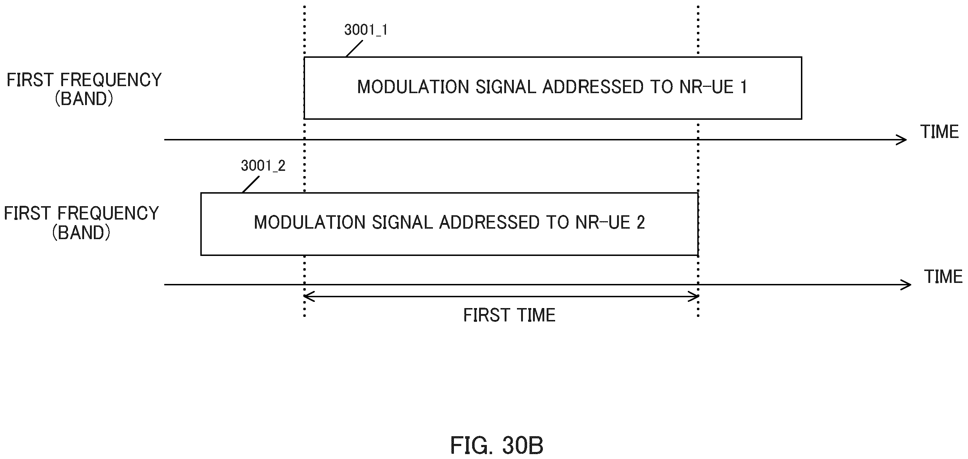

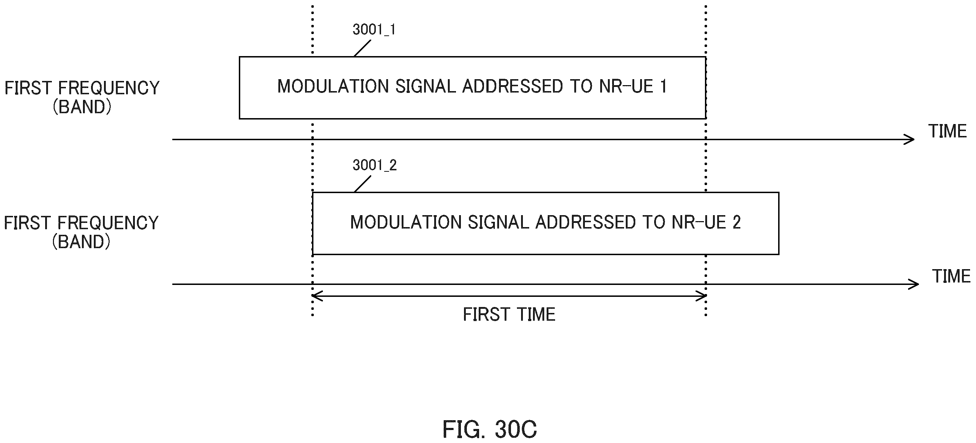

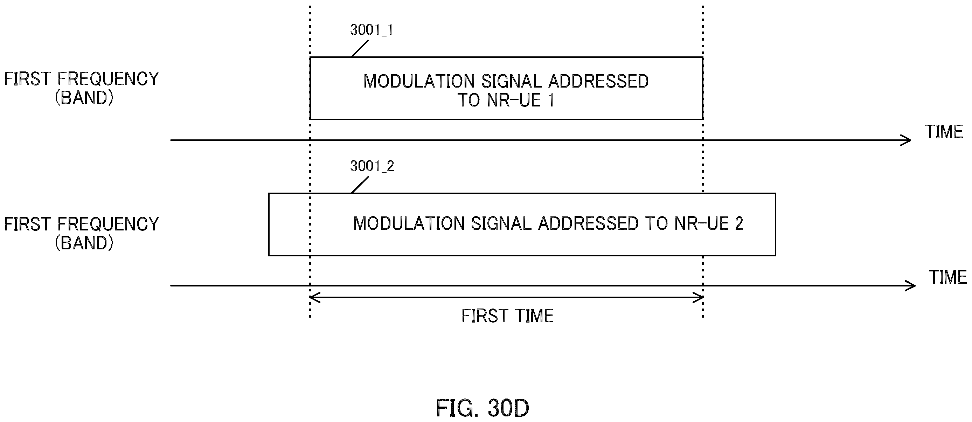

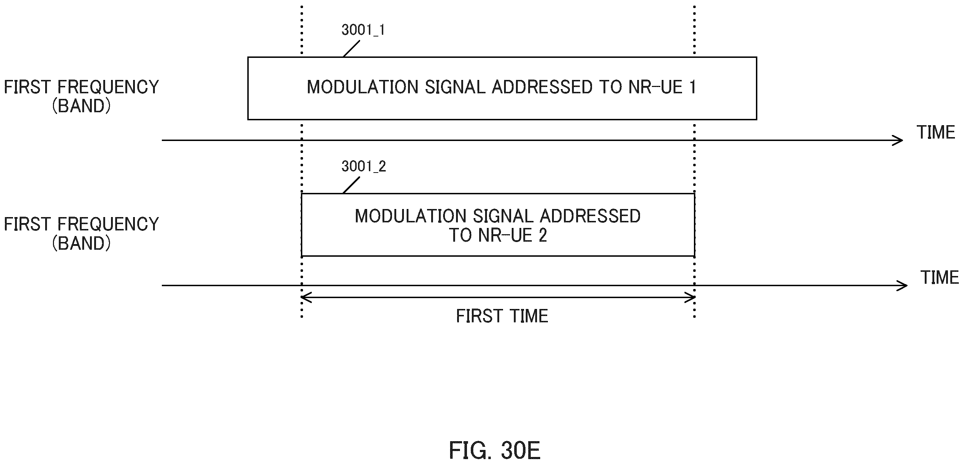

FIG. 30B, FIG. 30C, FIG. 30D, and FIG. 30E each illustrate an exemplary usage status of a first frequency (band) in a time axis and illustrate exemplary statuses of "modulation signal 3001_1 addressed to NR-UE 1 labeled 1100_1 trasnmitted by TRP 1 labeled 1101_1" and "modulation signal 3001_2 addressed to NR-UE 2 labeled 1100_2 trasnmitted by TRP 1 labeled 1101_1" in a time axis in FIG. 29, which are different from those in FIG. 30A. Note that, in FIG. 30B, FIG. 30C, FIG. 30D, and FIG. 30E, a horizontal axis represents time.

As illustrated in FIG. 30B, FIG. 30C, FIG. 30D, and FIG. 30E, "modulation signal 3001_1 addressed to NR-UE 1 labeled 1100_1 trasnmitted by TRP 1 labeled 1101_1" is present in any time section of the first time. In addition, "modulation signal 3001_2 addressed to NR-UE 2 labeled 1100_2 trasnmitted by TRP 1 labeled 1101_1" is present in any time section of the first time.

Note that examples of temporal arrangement in which "modulation signal 3001_1 addressed to NR-UE 1 labeled 1100_1 trasnmitted by TRP 1 labeled 1101_1" and "modulation signal 3001_2 addressed to NR-UE 2 labeled 1100_2 trasnmitted by TRP 1 labeled 1101_1" are present are not limited to those in FIG. 30A, FIG. 30B, FIG. 30C, FIG. 30D, and FIG. 30E, and any temporal arrangement is possible as long as both "modulation signal 3001_1 addressed to NR-UE 1 labeled 1100_1 trasnmitted by TRP 1 labeled 1101_1" and "modulation signal 3001_2 addressed to NR-UE 2 labeled 1100_2 trasnmitted by TRP 1 labeled 1101_1" are present at the same time.

Hence, as in the examples of FIG. 30A, FIG. 30B, FIG. 30C, FIG. 30D, and FIG. 30E, a "modulation signal addressed to NR-UE 1 labeled 1100_1 trasnmitted by TRP 1 labeled 1101_1" and a "modulation signal addressed to NR-UE 2 labeled 1100_2 trasnmitted by TRP 1 labeled 1101_1" are subjected to Spatial Division Multiplexing (SDM).

A description will be given of a method of multiplexing the "modulation signal addressed to NR-UE 1 labeled 1100_1 trasnmitted by TRP 1 labeled 1101_1" and a "modulation signal addressed to NR-UE 4 labeled 1100_4 trasnmitted by TRP 1 labeled 1101_1."

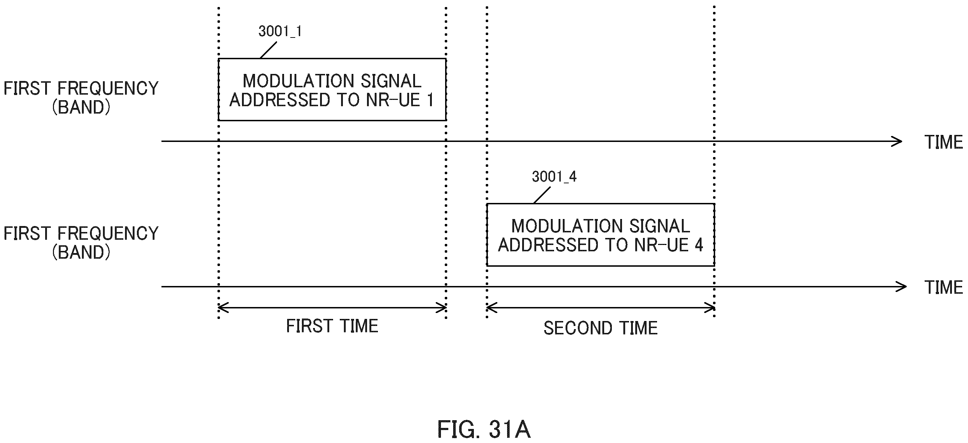

FIG. 31A illustrates an exemplary usage status of the first frequency (band) in the time axis. FIG. 31A illustrates exemplary statuses of the "modulation signal addressed to NR-UE 1 labeled 1100_1 trasnmitted by TRP 1 labeled 1101_1" and the "modulation signal addressed to NR-UE 4 labeled 1100_4 trasnmitted by TRP 1 labeled 1101_1" in a time axis in FIG. 29. Note that, in FIG. 31A, a horizontal axis represents time.

As in FIG. 31A, "modulation signal 3001_1 addressed to NR-UE 1 labeled 1100_1 trasnmitted by TRP 1 labeled 1101_1" is present in the first time (or any time section of first time), whereas, "modulation signal 3001_4 addressed to NR-UE 4 labeled 1100_4 trasnmitted by TRP 1 labeled 1101_1" is present in the second time.

Hence, as in the example of FIG. 31A, the "modulation signal addressed to NR-UE 1 labeled 1100_1 trasnmitted by TRP 1 labeled 1101_1" and the "modulation signal addressed to NR-UE 4 labeled 1100_4 trasnmitted by TRP 1 labeled 1101_1" are subjected to Time Division Multiplexing (TDM).

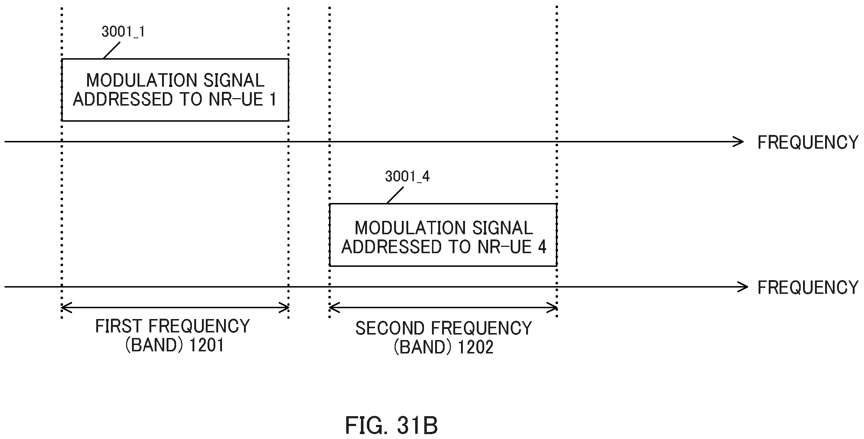

FIG. 31B illustrates exemplary usage statuses of frequencies including first frequency (band) 1201. FIG. 31B illustrates exemplary statuses of the "modulation signal addressed to NR-UE 1 labeled 1100_1 trasnmitted by TRP 1 labeled 1101_1" and the "modulation signal addressed to NR-UE 4 labeled 1100_4 trasnmitted by TRP 1 labeled 1101_1" in a frequency axis in FIG. 29. Note that, in FIG. 31B, a horizontal axis represents the frequency.

As in FIG. 31B, "modulation signal 3001_1 addressed to NR-UE 1 labeled 1100_1 trasnmitted by TRP 1 labeled 1101_1" is present at first frequency (band) 1201, whereas, "modulation signal 3001_4 addressed to NR-UE 4 labeled 1100_4 trasnmitted by TRP 1 labeled 1101_1" is present at second frequency (band) 1202. Hence, as in the example of FIG. 31B, the "modulation signal addressed to NR-UE 1 labeled 1100_1 trasnmitted by TRP 1 labeled 1101_1" and the "modulation signal addressed to NR-UE 4 labeled 1100_4 trasnmitted by TRP 1 labeled 1101_1" are subjected to Frequency Division Multiplexing (FDM).

Thus, the "modulation signal addressed to NR-UE 1 labeled 1100_1 trasnmitted by TRP 1 labeled 1101_1" and the "modulation signal addressed to NR-UE 4 labeled 1100_4 trasnmitted by TRP 1 labeled 1101_1" may be subjected to TDM or FDM.

A description will be given of a relation between a "modulation signal trasnmitted by NR-UE 1 labeled 1100_1" and a "modulation signal trasnmitted by NR-UE 3 labeled 1100_3" in tha radio system in FIG. 29.

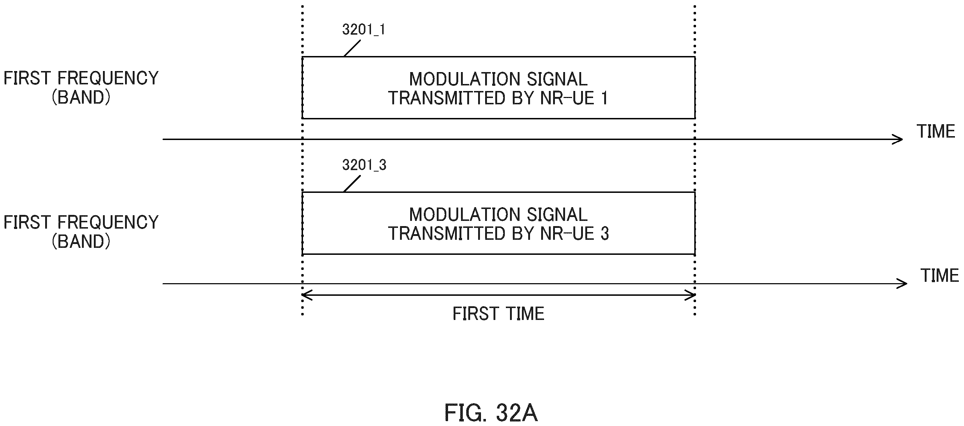

FIG. 32A illustrates an exemplary usage status of the first frequency (band) in a time axis. FIG. 32A illustrates exemplary statuses of the "modulation signal trasnmitted by NR-UE 1 labeled 1100_1" and the "modulation signal trasnmitted by NR-UE 3 labeled 1100_3" in a time axis in FIG. 29. Note that, in FIG. 32A, a horizontal axis represents time. "Modulation signal 3201_1 trasnmitted by NR-UE 1 labeled 1100_1" and "modulation signal 3201_3 trasnmitted by NR-UE 3 labeled 1100_3" are resent in the first time as in FIG. 32A.

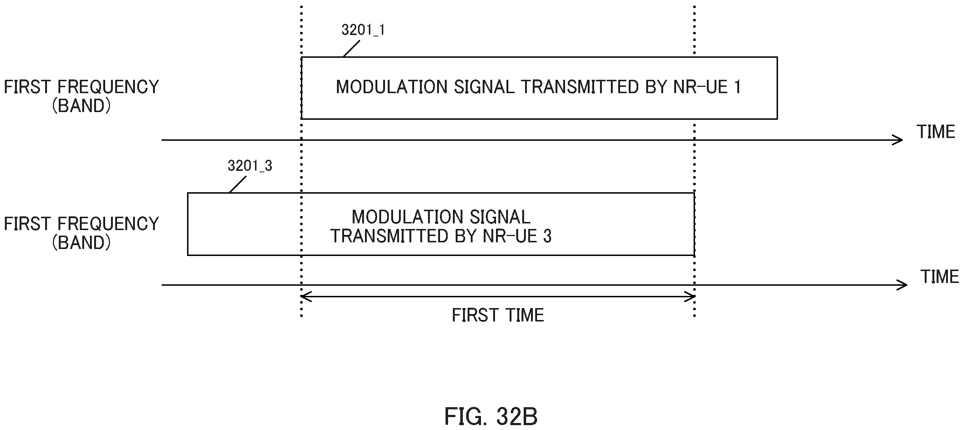

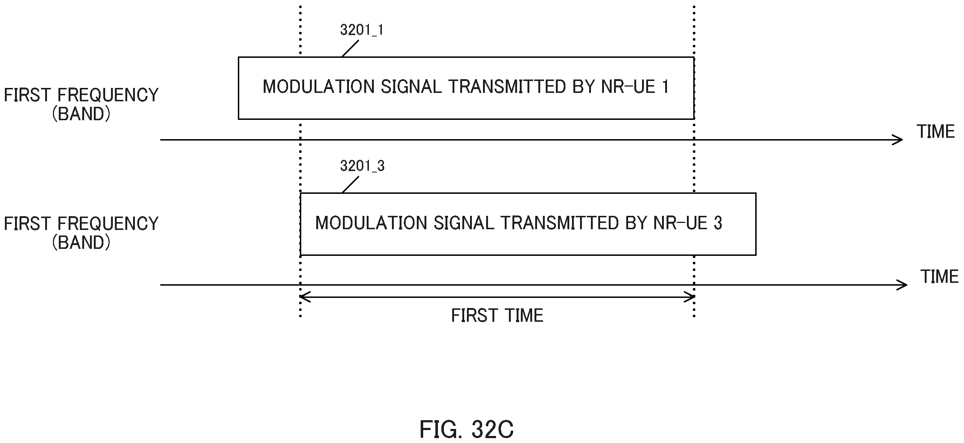

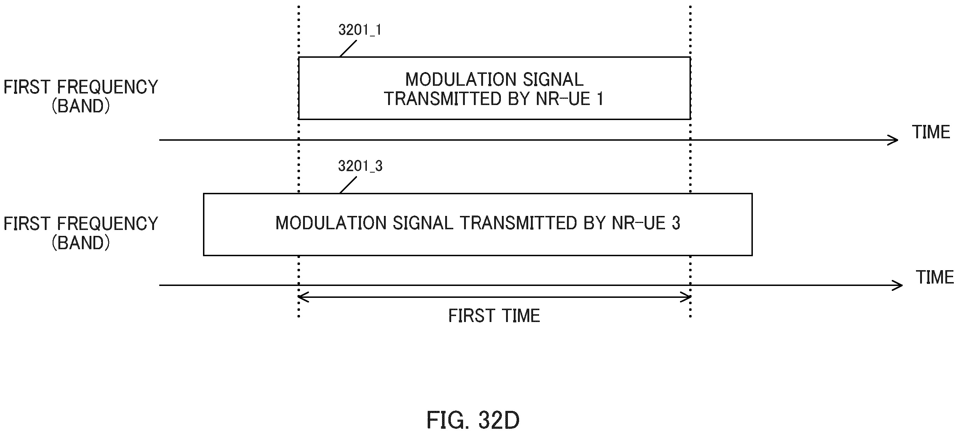

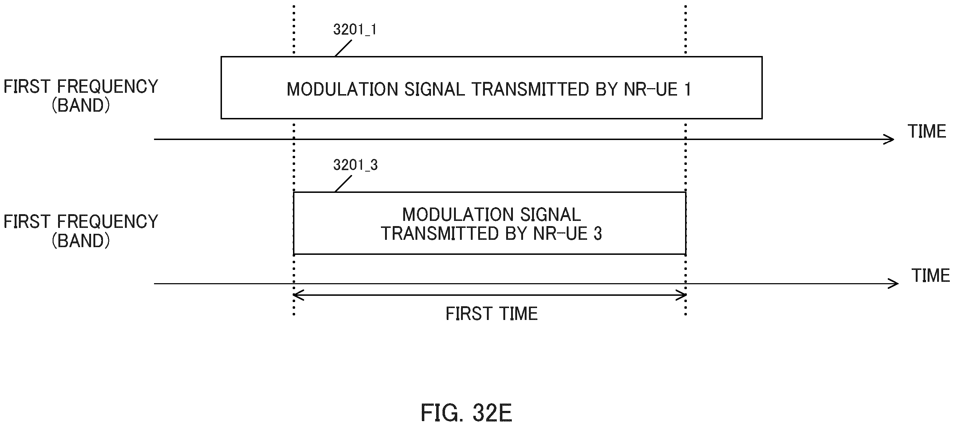

FIG. 32B, FIG. 32C, FIG. 32D, and FIG. 32E each illustrate an exemplary usage status of the first frequency (band) in a time axis and illustrate exemplary statuses of "modulation signal 3201_1 trasnmitted by NR-UE 1 labeled 1100_1" and "modulation signal 3201_3 trasnmitted by NR-UE 3 labeled 1100_3" in a time axis in FIG. 29, which are different from those in FIG. 32A. Note that, in FIG. 32B, FIG. 32C, FIG. 32D, and FIG. 32E, a horizontal axis represents time.

As illustrated in FIG. 32B, FIG. 32C, FIG. 32D, and FIG. 32E, "modulation signal 3201_1 trasnmitted by NR-UE 1 labeled 1100_1" is present in any time section of the first time, whereas, "modulation signal 3201_3 trasnmitted by NR-UE 3 labeled 1100_3" is present in any time section of the first time.

Note that examples of temporal arrangement in which "modulation signal 3201_1 trasnmitted by NR-UE 1 labeled 1100_1" and "modulation signal 3201_3 trasnmitted by NR-UE 3 labeled 1100_3" are present are not limited to those in FIG. 32A, FIG. 32B, FIG. 32C,

FIG. 32D, and FIG. 32E, and any temporal arrangement is possible as long as both "modulation signal 3201_1 trasnmitted by NR-UE 1 labeled 1100_1" and "modulation signal 3201_3 trasnmitted by NR-UE 3 labeled 1100_3" are present at the same time.

Hence, as in the examples of FIG. 32A, FIG. 32B, FIG. 32C, FIG. 32D, and FIG. 32E, "modulation signal 3201_1 trasnmitted by NR-UE 1 labeled 1100_1" and "modulation signal 3201_3 trasnmitted by NR-UE 3 labeled 1100_3" are subjected to Spatial Division Multiplexing (SDM).

A description will be given of a method of multiplexing "modulation signal 3201_1 trasnmitted by NR-UE 1 labeled 1100_1" and "modulation signal 3201_5 trasnmitted by NR-UE 5 labeled 1100_5."

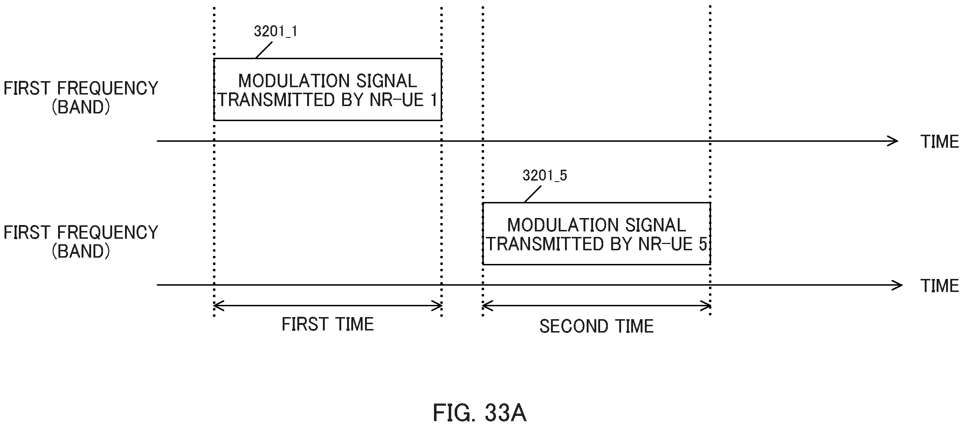

FIG. 33A illustrates an exemplary usage status of the first frequency (band) in a time axis. FIG. 33A illustrates exemplary statuses of "modulation signal 3201_1 trasnmitted by NR-UE 1 labeled 1100_1" and "modulation signal 3201_5 trasnmitted by NR-UE 5 labeled 1100_5" in a time axis in FIG. 29. Note that, in FIG. 33A, a horizontal axis represents time.

As in FIG. 33A, "modulation signal 3201_1 trasnmitted by NR-UE 1 labeled 1100_1" is present in the first time (or any time section of first time), whereas, "modulation signal 3201_5 trasnmitted by NR-UE 5 labeled 1100_5" is present in the second time.

Hence, as in the example of FIG. 33A, "modulation signal 3201_1 trasnmitted by NR-UE 1 labeled 1100_1" and "modulation signal 3201_5 trasnmitted by NR-UE 5 labeled 1100_5" are subjected to TDM.

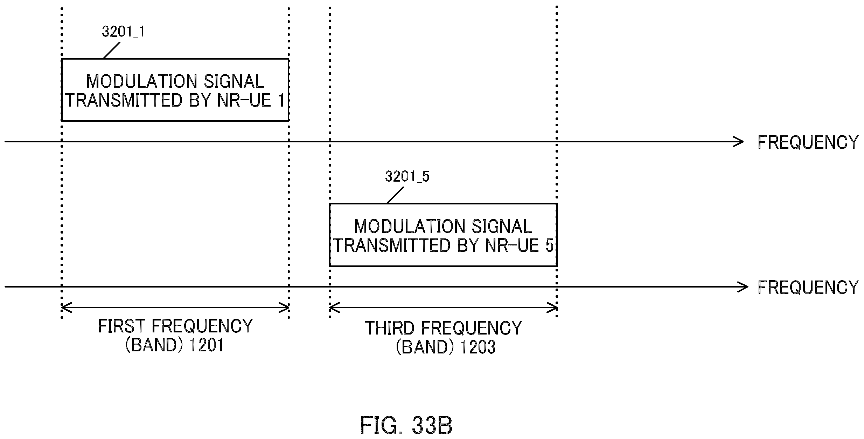

FIG. 33B illustrates exemplary usage statuses of frequencies including first frequency (band) 1201. FIG. 33B illustrates exemplary statuses of the "modulation signal trasnmitted by NR-UE 1 labeled 1100_1" and the "modulation signal trasnmitted by NR-UE 5 labeled 1100_5" in a frequency axis in FIG. 29. Note that, in FIG.

33B, a horizontal axis represents the frequency.

As in FIG. 33B, "modulation signal 3201_1 trasnmitted by NR-UE 1 labeled 1100_1" is present at first frequency (band) 1201, whereas, "modulation signal 3201_5 trasnmitted by NR-UE 5 labeled 1100_5" is present at third frequency (band) 1203.

Hence, as in the example of FIG. 33B, "modulation signal 3201_1 trasnmitted by NR-UE 1 labeled 1100_1" and "modulation signal 3201_5 trasnmitted by NR-UE 5 labeled 1100_5" are subjected to FDM.

Thus, the "modulation signal trasnmitted by NR-UE 1 labeled 1100_1" and the "modulation signal trasnmitted by NR-UE 5 labeled 1100_5" may be subjected to TDM or FDM.

As described above, NR-UE 1 labeled 1100_1 uses "the same frequency or partly same frequency" for reception of a downlink signal and transmission of an uplink signal, which may be performed in the same time. Further, "TRP 1 performs one or more of SDM, TDM, and FDM for a signal addressed to a plurality of terminals," and "the plurality of terminals performs one or more of SDM, TDM, and FDM for an uplink signal."

In this manner described above, self-interference may be reduced, which brings about an effect of improving the frequency utilization efficiency in the system; in addition, it is made possible for an NR-UE to have a flexible access, which brings about an effect of improving the transmission speed and/or improving the reception quality.

In FIG. 29, the number of TRPs present in a radio system is two, but the implementation is possible with at least one TRP, or two or more TRPs.

Further, in FIG. 29, the number of NR-UEs present in a radio system is five, but the implementation is possible with at least one NR-UE, or two or more NR-UEs.

(Embodiment 4)

In Embodiment 4, a variation of Embodiment 1 will be described. Note that, since configurations, basic operations, and the like of a gNB and an NR-UE have been described in Embodiment 1, description thereof will be omitted here.

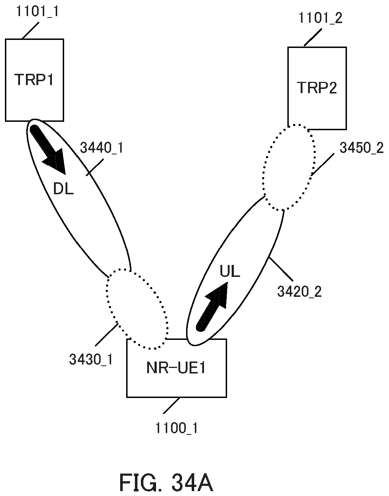

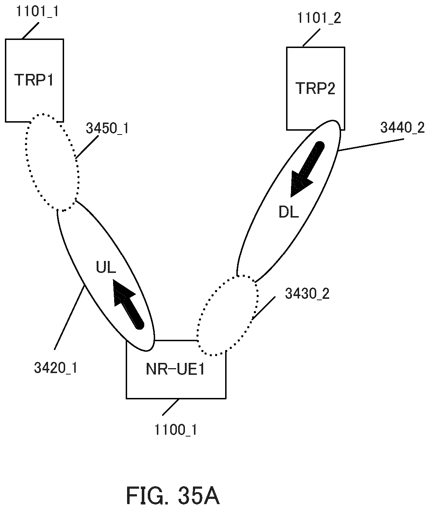

FIG. 34A and FIG. 35A each illustrate an exemplary radio system in the present embodiment. As illustrated in FIG. 34A and FIG. 35A, there are TRP 1 labeled 1101_1, TRP 2 labeled 1101_2, and NR-UE 1 labeled 1100_1, for example. Note that, in FIG. 34A and FIG. 35A, the components that operate in the same manner as the components in FIG. 11 are denoted by the same reference numerals, and some descriptions thereof will be omitted.

In FIG. 34A, TRP 1 labeled 1101_1 generates transmission beam 3440_1 and uses transmission beam 3440_1 to transmit a modulation signal addressed to NR-UE 1 labeled 1100_1 (Downlink (DL)).

NR-UE 1 labeled 1100_1 then generates received beam 3430_1 and uses received beam 3430_1 to receive the modulation signal addressed to NR-UE 1 that has been transmitted by TRP 1 labeled 1101_1.

Moreover, NR-UE 1 labeled 1100_1 generates transmission beam 3420_2 and uses transmission beam 3420_2 to transmit a modulation signal addressed to TRP 2 labeled 1101_2 (Uplink (UL)).

TRP 2 labeled 1101_2 then generates received beam 3450_2 and uses received beam 3450_2 to receive the modulation signal addressed to TRP 2 labeled 1101_2 that has been transmitted by NR-UE 1 labeled 1100_1.

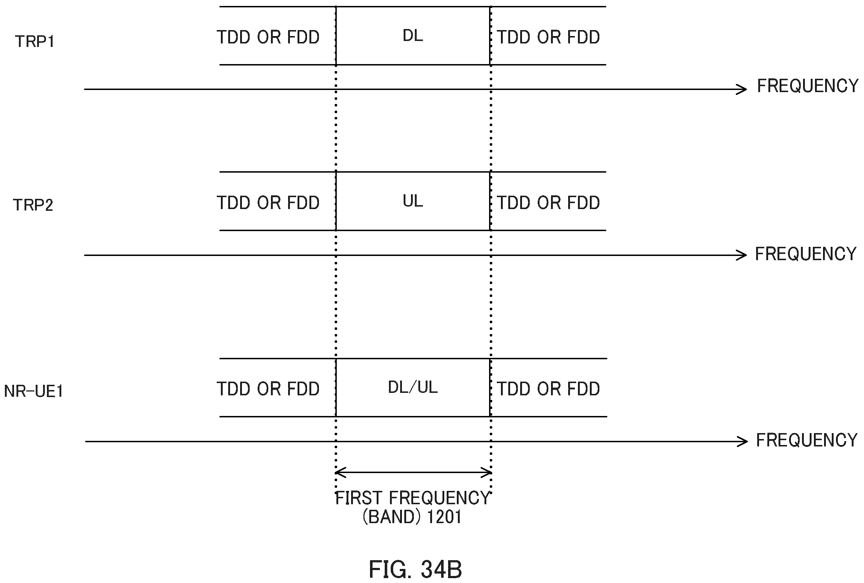

FIG. 34B illustrates exemplary communication statuses of "TRP 1 labeled 1101_1, TRP 2 labeled 1101_2, and NR-UE 1 labeled 1100_1" in a frequency axis in FIG. 34A. Note that, in FIG. 34B, a horizontal axis represents the frequency, and the components that operate in the same manner as the components in FIG. 12 are denoted by the same reference numerals.

TRP 1 labeled 1101_1 uses first frequency (band) 1201 to transmit a modulation signal for downlink. At this time, for example, NR-UE 1 labeled 1100_1 receives the modulation signal at first frequency (band) 1201 transmitted by TRP 1 labeled 1101_1. Note that, as in FIG. 34B, TRP 1 labeled 1101_1 may perform TDD communication or FDD communication at a frequency (band) other than first frequency (band) 1201, or unlike FIG. 34B, need not perform communication at a frequency (band) other than first frequency (band) 1201.

TRP 2 labeled 1101_2 uses first frequency (band) 1201 to receive a modulation signal for uplink. At this time, TRP 2 labeled 1101_2 receives the modulation signal at first frequency (band) 1201 transmitted by NR-UE 1 labeled 1100_1. Note that, as in FIG. 34B, TRP 2 labeled 1101_2 may perform TDD communication or FDD communication at a frequency (band) other than first frequency (band) 1201. Unlike FIG. 34B, TRP 2 labeled 1101_2 need not perform communication at a frequency (band) other than first frequency (band) 1201.

NR-UE 1 labeled 1100_1 uses first frequency (band) 1201 to receive a modulation signal for downlink and to transmit a modulation signal for uplink. At this time, for example, TRP 2 labeled 1101_2 receives the modulation signal at first frequency (band) 1201 transmitted by NR-UE 1 labeled 1100_1. NR-UE 1 labeled 1100_1 then receives the modulation signal at first frequency (band) 1201 transmitted by TRP 1 labeled 1101_1. Note that, as in FIG. 34B, NR-UE 1 labeled 1100_1 may perform TDD communication or FDD communication at a frequency (band) other than first frequency (band) 1201. Unlike FIG. 34B, NR-UE 1 labeled 1100_1 need not perform communication at a frequency (band) other than first frequency (band) 1201.

In FIG. 34B, a case has been described where the frequency for "downlink" and the frequency for "uplink" are the same frequency (band), but the present embodiment is not limited to this case, and the frequency for "downlink" and the frequency for "uplink" may be the same frequency (band) partly. Descriptions of TDD and FDD will be omitted because they have already been each described.

In FIG. 35A, TRP 2 labeled 1101_2 generates transmission beam 3440_2 and uses transmission beam 3440_2 to transmit a modulation signal addressed to NR-UE 1 labeled 1100_1 (Downlink (DL)).

NR-UE 1 labeled 1100_1 then generates received beam 3430_2 and uses received beam 3430_2 to receive the modulation signal addressed to NR-UE 1 that has been transmitted by TRP 2 labeled 1101_2.

Moreover, NR-UE 1 labeled 1100_1 generates transmission beam 3420_1 and uses transmission beam 3420_1 to transmit a modulation signal addressed to TRP 1 labeled 1101_1 (Uplink (UL)).

TRP 1 labeled 1101_1 then generates received beam 3450_1 and uses received beam 3450_1 to receive the modulation signal addressed to TRP 1 labeled 1101_1 that has been transmitted by NR-UE 1 labeled 1100_1.

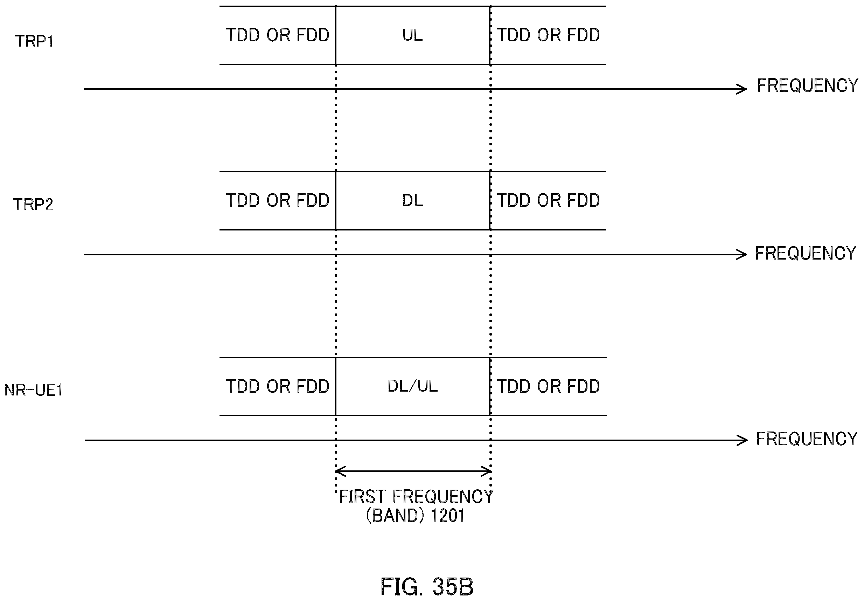

FIG. 35B illustrates exemplary communication statuses of "TRP 1 labeled 1101_1, TRP 2 labeled 1101_2, and NR-UE 1 labeled 1100_1" in a frequency axis in FIG. 35A. Note that, in FIG. 35B, a horizontal axis represents the frequency, and the components that operate in the same manner as the components in FIG. 12 are denoted by the same reference numerals.

TRP 2 labeled 1101_2 uses first frequency (band) 1201 to transmit a modulation signal for downlink. At this time, for example, NR-UE 1 labeled 1100_1 receives the modulation signal at first frequency (band) 1201 transmitted by TRP 2 labeled 1101_2. Note that, as in FIG. 35B, TRP 2 labeled 1101_2 may perform TDD communication or FDD communication at a frequency (band) other than first frequency (band) 1201, or unlike FIG. 35B, need not perform communication at a frequency (band) other than first frequency (band) 1201.

TRP 1 labeled 1101_1 uses first frequency (band) 1201 to receive a modulation signal for uplink. At this time, for example, TRP 1 labeled 1101_1 receives the modulation signal at first frequency (band) 1201 transmitted by NR-UE 1 labeled 1100_1. Note that, as in FIG. 35B, TRP 1 labeled 1101_1 may perform TDD communication or FDD communication at a frequency (band) other than first frequency (band) 1201, or unlike FIG. 35B, TRP 1 labeled 1101_1 need not perform communication at a frequency (band) other than first frequency (band) 1201.

NR-UE 1 labeled 1100_1 uses first frequency (band) 1201 to receive a modulation signal for downlink and to transmit a modulation signal for uplink. At this time, for example, TRP 1 labeled 1101_1 receives the modulation signal at first frequency (band) 1201 transmitted by NR-UE 1 labeled 1100_1. NR-UE 1 labeled 1100_1 then receives the modulation signal at first frequency (band) 1201 transmitted by TRP 2 labeled 1101_2. Note that, as in FIG. 35B, NR-UE 1 labeled 1100_1 may perform TDD communication or FDD communication at a frequency (band) other than first frequency (band) 1201. Unlike FIG. 35B, NR-UE 1 labeled 1100_1 need not perform communication at a frequency (band) other than first frequency (band) 1201.

In FIG. 35B, a case has been described where the frequency for "downlink" and the frequency for "uplink" are the same frequency (band), but the present embodiment is not limited to this case, and the frequency for "downlink" and the frequency for "uplink" may be the same frequency (band) partly. Descriptions of TDD and FDD will be omitted because they have already been each described.

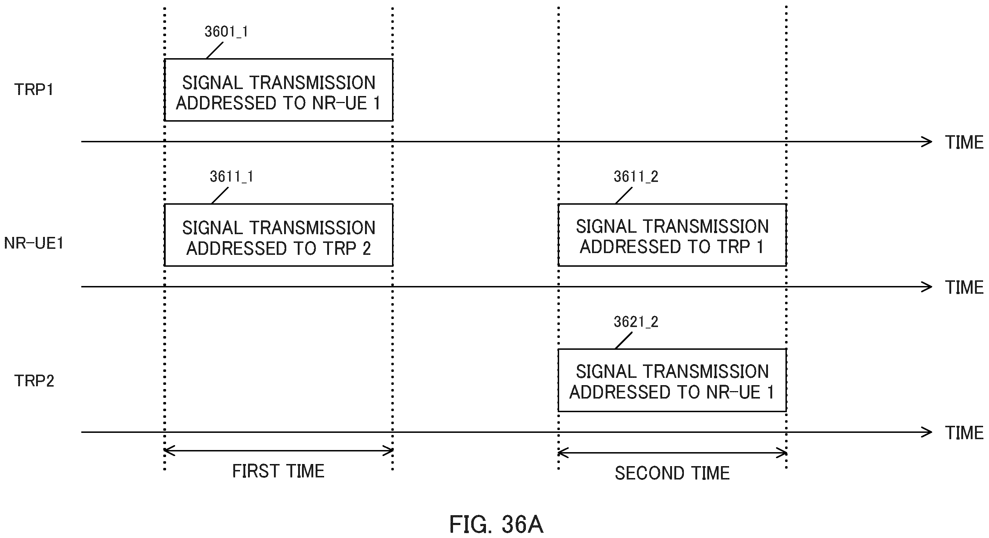

In the present embodiment, NR-UE 1 labeled 1100_1 switches between the situation of FIG. 34A and the situation of FIG. 35A in time. A temporal aspect at that time is illustrated in FIG. 36A.

FIG. 36A illustrates exemplary transmission statuses of "TRP 1 labeled 1101_1, TRP 2 labeled 1101_2, and NR-UE 1 labeled 1100_1" in a time axis in FIG. 34A and FIG. 35A. Note that, in FIG. 36A, a horizontal axis represents time.

As in FIG. 36A, TRP 1 labeled 1101_1 transmits signal 3601_1 addressed to NR-UE 1 labeled 1100_1 in the first time. Meanwhile, NR-UE 1 labeled 1100_1 transmits signal 3611_1 for TRP 2 labeled 1101_2 in the first time. That is, the first time results in the communication status illustrated in FIG. 34A.

TRP 2 labeled 1101_2 transmits signal 3621_2 addressed to NR-UE 1 labeled 1100_1 in the second time. Meanwhile, NR-UE 1 labeled 1100_1 transmits signal 3611_2 for TRP 1 labeled 1101_1 in the second time. That is, the second time results in the communication status illustrated in FIG. 35A.

In the manner described above, the NR-UE transmits modulation signals to a plurality of TRPs and receives modulation signals transmitted by the plurality of TRPs, thereby obtaining a spatial diversity effect in both uplink and downlink. This brings about an effect of improving the transmission quality.

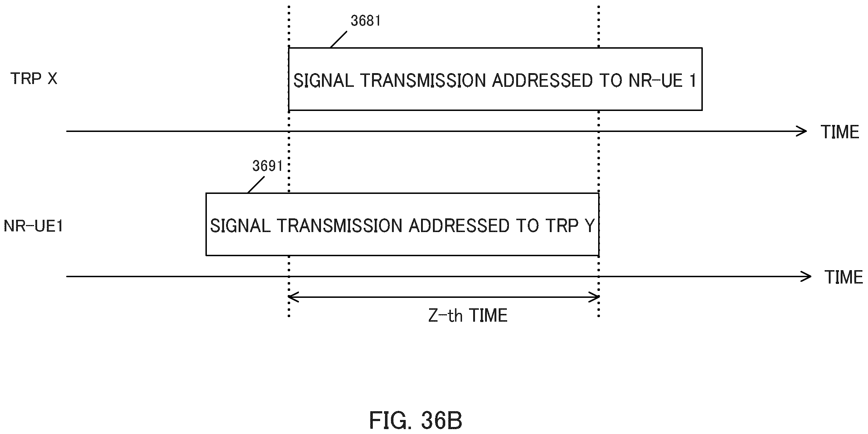

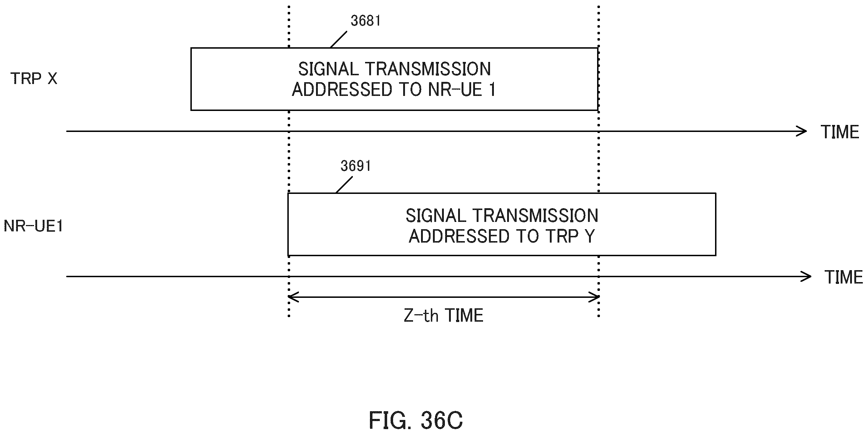

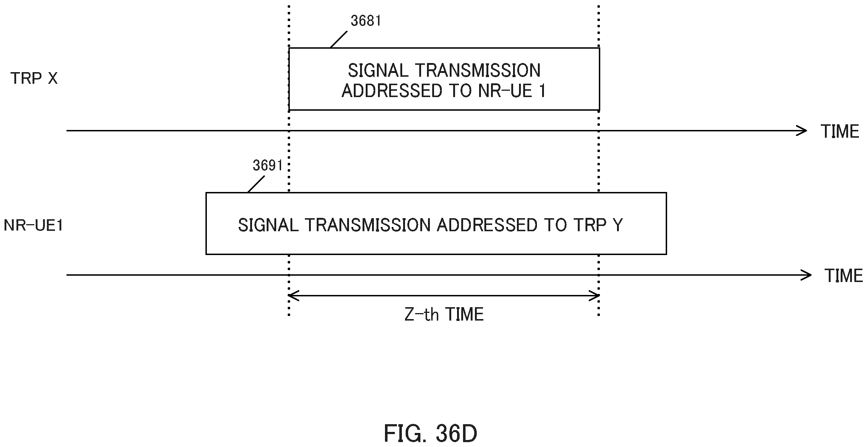

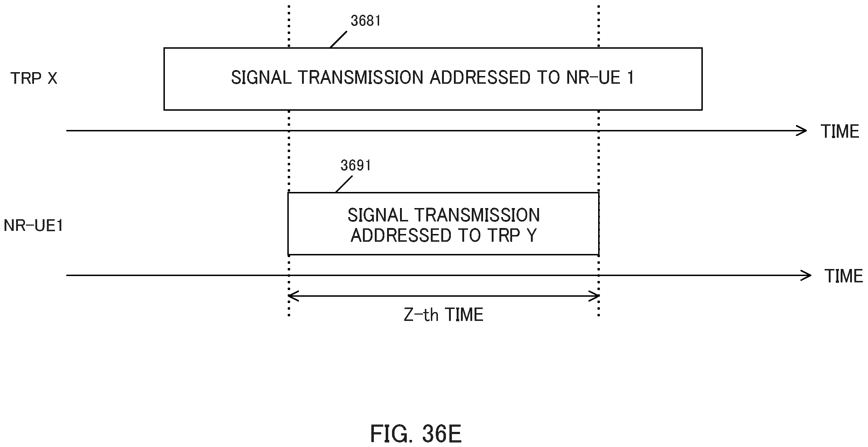

With respect to FIG. 36A, an example in which the "first time" and the "second time" are different from those in FIG. 36A will be described with reference to FIG. 36B, FIG. 36C, FIG. 36D, and FIG. 36E.

FIG. 36B, FIG. 36C, FIG. 36D, and FIG. 36E each illustrate an example in which the "first time" and the "second time" are different from those in FIG. 36A. Note that, in FIG. 36B, a horizontal axis represents time.

In FIG. 36B, FIG. 36C, FIG. 36D, and FIG. 36E, it is assumed that "TRP X" is "TRP 1," "TRP Y" is "TRP 2," and "the z-th time" is the "first time." Further, as the first time in FIG. 36A, the communication in "FIG. 36B, FIG. 36C, FIG. 36D, or FIG. 36E" is performed.

Therefore, in the first time, TRP 1 labeled 1101_1 transmits signal 3681 addressed to NR-UE 1 labeled 1100_1, and NR-UE 1 labeled 1100_1 transmits signal 3691 for TRP Y, i.e., transmits the sigtnal to TRP 2 labeled 1101_2.

In FIG. 36B, FIG. 36C, FIG. 36D, and FIG. 36E, it is assumed that "TRP X" is "TRP 2," "TRP Y" is "TRP 1," and "the z-th time" is the "second time." Further, as the second time in FIG. 36A, the communication in "FIG. 36B, FIG. 36C, FIG. 36D, or FIG. 36E" is performed.

Therefore, in the second time, TRP 2 labeled 1101_2 transmits signal 3681 addressed to NR-UE 1 labeled 1100_1, and NR-UE 1 labeled 1100_1 transmits signal 3691 for TRP Y, i.e., transmits the sigtnal to TRP 1 labeled 1101_1.

Note that temporal arrangement of signal 3681 addressed to the NR-UE and signal 3691 for TRP Y is not limited to the examples in FIG. 36A, FIG. 36B, FIG. 36C, FIG. 36D, and FIG. 36E, as long as signal 3681 addressed to the NR-UE and signal 3691 for TRP Y patly overlap in time.

Additionally, temporal arrangement of the time when "TRP 1 labeled 1101_1 transmits a downlink signal and NR-UE 1 labeled 1100_1 transmits an uplink signal to TRP 2 labeled 1101_2" and the time when "TRP 2 labeled 1101_2 transmits a downlink signal and NR-UE 1 labeled 1100_1 transmits an uplink signal to TRP 1 labeled 1101_1" in FIG. 36A is not limited to the example in FIG. 36A, and any arrangement is possible.

In FIG. 36A, "signal 3611_1 for TRP 2 labeled 1101_2 and signal 3611_2 for TRP 1 labeled 1101_1" transmitted by NR-UE 1 labeled 1100_1 may include, for example, the same data. Further, "signal 3611_1 for TRP 2 labeled 1101_2 and signal 3611_2 for TRP 1 labeled 1101_1" may be configured such that the content is the same although "the conditions are different such as in compressibility or in configuration." Additionally, "signal 3611_1 for TRP 2 labeled 1101_2 and signal 3611_2 for TRP 1 labeled 1101_1" may include partly same data. In this manner, Ultra-reliable and low-latency communication (URLLC) may be achieved. Note that the configurations of "signal 3611_1 for TRP 2 labeled 1101_2 and signal 3611_2 for TRP 1 labeled 1101_1" are not limited to the configuration in FIG. 36A and may be the configurations described with reference to FIG. 36B, FIG. 36C, FIG. 36D, and FIG. 36E.

Further, in FIG. 36A, "signal 3601_1 for NR-UE 1 labeled 1100_1 and signal 3621_2 for NR-UE 1 labeled 1100_1" transmitted by TRP 1 labeled 1101_1 or TRP 2 labeled 1101_2 may include, for example, the same data. Further, "signal 3601_1 for NR-UE 1 labeled 1100_1 and signal 3621_2 for NR-UE 1 labeled 1100_1" may be configured such that the content is the same although "the conditions are different such as in compressibility or in configuration." Additionally, "signal 3601_1 for NR-UE 1 labeled 1100_1 and signal 3621_2 for NR-UE 1 labeled 1100_1" may include partly same data. In this manner, URLLC may be achieved. Note that the configurations of "signal 3601_1 for NR-UE 1 labeled 1100_1 and signal 3621_2 for NR-UE 1 labeled 1100_1" are not limited to the configuration in FIG. 36A and may be the configurations described with reference to FIG. 36B, FIG. 36C, FIG. 36D, and FIG. 36E.

Note that, in FIG. 34A and FIG. 35A, NR-UE 1 labeled 1100_1 communicates with TRP 1 labeled 1101_1 and TRP 2 labeled 1101_2, but NR-UE 1 labeled 1100_1 may communicate with two or more TRPs. For example, when TRP 3 is present, there may be the time when "TRP 3 transmits a signal addressed to NR-UE 1 labeled 1100_1 and NR-UE 1 labeled 1100_1 transmits a signal to the TRP." The same applies to a case where another TRP is present.

Another example will be then described.

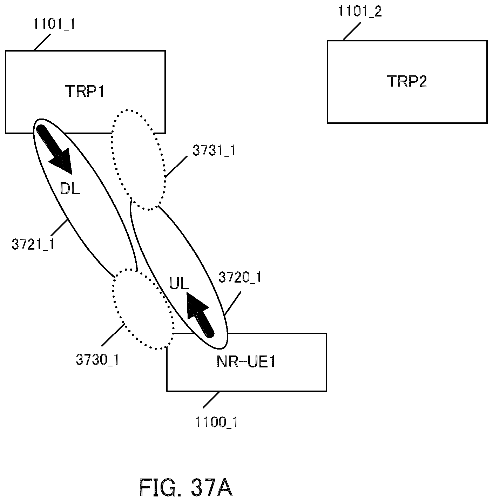

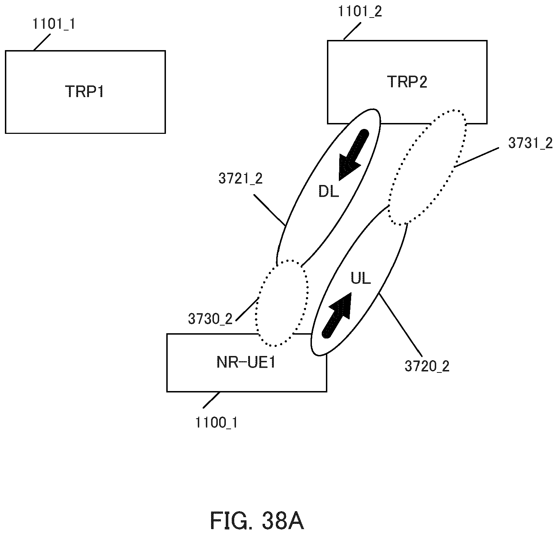

FIG. 37A and FIG. 38A each illustrate an exemplary radio system in the present embodiment. As illustrated in FIG. 37A and FIG. 38A, there are TRP 1 labeled 1101_1, TRP 2 labeled 1101_2, and NR-UE 1 labeled 1100_1, for example. Note that, in FIG. 37A and FIG. 38A, the components that operate in the same manner as the components in FIG. 11 are denoted by the same reference numerals, and some descriptions thereof will be omitted.

In FIG. 37A, TRP 1 labeled 1101_1 generates transmission beam 3721_1 and uses transmission beam 3721_1 to transmit a modulation signal addressed to NR-UE 1 labeled 1100_1 (Downlink (DL)).

NR-UE 1 labeled 1100_1 then generates received beam 3730_1 and uses received beam 3730_1 to receive the modulation signal addressed to NR-UE 1 that has been transmitted by TRP 1 labeled 1101_1.

Moreover, NR-UE 1 labeled 1100_1 generates transmission beam 3720_1 and uses transmission beam 3720_1 to transmit a modulation signal addressed to TRP 1 labeled 1101_1 (Uplink (UL)).

TRP 1 labeled 1101_1 then generates received beam 3731_1 and uses received beam 3731_1 to receive the modulation signal addressed to TRP 1 labeled 1101_1 that has been transmitted by NR-UE 1 labeled 1100_1.

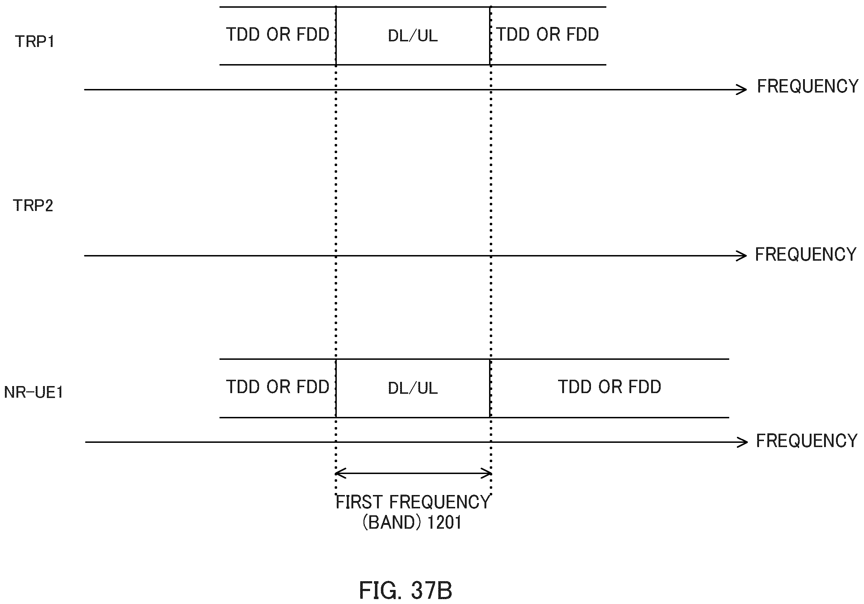

FIG. 37B illustrates exemplary communication statuses of "TRP 1 labeled 1101_1, TRP 2 labeled 1101_2, and NR-UE 1 labeled 1100_1" in a frequency axis in FIG. 37A. Note that, in FIG. 37B, a horizontal axis represents the frequency, and the components that operate in the same manner as the components in FIG. 12 are denoted by the same reference numerals.

TRP 1 labeled 1101_1 uses first frequency (band) 1201 to receive a modulation signal for uplink and to transmit a modulation signal for downlink. At this time, for example, NR-UE 1 labeled 1100_1 receives the modulation signal at first frequency (band) 1201 transmitted by TRP 1 labeled 1101_1. NR-UE 1 labeled 1100_1 then receives the modulation signal at first frequency (band) 1201 transmitted by TRP 1 labeled 1101_1. Note that, as in FIG. 37B, TRP 1 labeled 1101_1 may perform TDD communication or FDD communication at a frequency (band) other than first frequency (band) 1201, or unlike FIG. 37B, need not perform communication at a frequency (band) other than first frequency (band) 1201.

TRP 2 labeled 1101_2 does not use first frequency (band) 1201. Further, as in FIG. 37B, TRP 2 labeled 1101_2 need not perform communication at a frequency (band) other than first frequency (band) 1201, or unlike FIG. 37B, TRP 2 labeled 1101_2 may perform TDD communication or FDD communication at a frequency (band) other than first frequency (band) 1201.

NR-UE 1 labeled 1100_1 uses first frequency (band) 1201 to receive a modulation signal for downlink and to transmit a modulation signal for uplink. At this time, for example, TRP 1 labeled 1101_1 receives the modulation signal at first frequency (band) 1201 transmitted by NR-UE 1 labeled 1100_1. NR-UE 1 labeled 1100_1 then receives the modulation signal at first frequency (band) 1201 transmitted by TRP 1 labeled 1101_1. Note that, as in FIG. 37B, NR-UE 1 labeled 1100_1 may perform TDD communication or FDD communication at a frequency (band) other than first frequency (band) 1201. Unlike FIG. 37B, NR-UE 1 labeled 1100_1 need not perform communication at a frequency (band) other than first frequency (band) 1201.

In FIG. 37B, a case has been described where the frequency for "downlink" and the frequency for "uplink" are the same frequency (band), but the present embodiment is not limited to this case, and the frequency for "downlink" and the frequency for "uplink" may be the same frequency (band) partly. Descriptions of TDD and FDD will be omitted because they have already been each described.

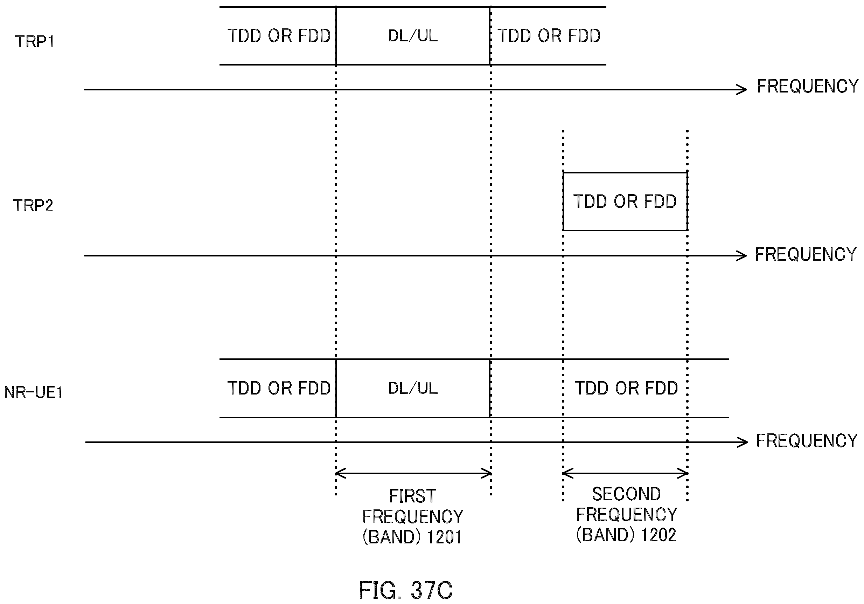

FIG. 37C illustrates exemplary states of "TRP 1 labeled 1101_1, TRP 2 labeled 1101_2, and NR-UE 1 labeled 1100_1" in the frequency axis in FIG. 37A, which are different from those in FIG. 37B. Note that, in FIG. 37C, a horizontal axis represents the frequency, and the components that operate in the same manner as the components in FIG. 12 are denoted by the same reference numerals.

TRP 1 labeled 1101_1 uses first frequency (band) 1201 to receive a modulation signal for uplink and to transmit a modulation signal for downlink. At this time, for example, NR-UE 1 labeled 1100_1 receives the modulation signal at first frequency (band) 1201 transmitted by TRP 1 labeled 1101_1. NR-UE 1 labeled 1100_1 then receives the modulation signal at first frequency (band) 1201 transmitted by TRP 1 labeled 1101_1. Note that, as in FIG. 37C, TRP 1 labeled 1101_1 may perform TDD communication or FDD communication at a frequency (band) other than first frequency (band) 1201, or unlike FIG. 37C, need not perform communication at a frequency (band) other than first frequency (band) 1201.

TRP 2 labeled 1101_2 uses second frequency (band) 1202 to receive a modulation signal for uplink and to transmit a modulation signal for downlink. At this time, for example, NR-UE 1 labeled 1100_1 receives the modulation signal at second frequency (band) 1202 transmitted by TRP 2 labeled 1101_2. NR-UE 1 labeled 1100_1 then receives the modulation signal at second frequency (band) 1202 transmitted by TRP 2 labeled 1101_2. Note that, TDD communication or FDD communication is performed at second frequency (band) 1202. Further, as in FIG. 37C, TRP 2 labeled 1101_2 need not perform communication at a frequency (band) other than second frequency (band) 1202, or unlike FIG. 37C, TRP 2 labeled 1101_2 may perform TDD communication or FDD communication at a frequency (band) other than second frequency (band) 1202.

NR-UE 1 labeled 1100_1 uses first frequency (band) 1201 to receive a modulation signal for downlink and to transmit a modulation signal for uplink. At this time, for example, TRP 1 labeled 1101_1 receives the modulation signal at first frequency (band) 1201 transmitted by NR-UE 1 labeled 1100_1. NR-UE 1 labeled 1100_1 then receives the modulation signal at first frequency (band) 1201 transmitted by TRP 1 labeled 1101_1. In addition, NR-UE 1 labeled 1100_1 uses second frequency (band) 1202 to receive a modulation signal for downlink and to transmit a modulation signal for uplink. At this time, for example, TRP 2 labeled 1101_2 receives the modulation signal at second frequency (band) 1202 transmitted by NR-UE 1 labeled 1100_1. NR-UE 1 labeled 1100_1 then receives the modulation signal at second frequency (band) 1202 transmitted by TRP 2 labeled 1101_2. Note that, TDD communication or FDD communication is performed at second frequency (band) 1202. Incidentally, as in FIG. 37C, NR-UE 1 labeled 1100_1 may perform TDD communication or FDD communication at a frequency (band) other than "first frequency (band) 1201 and second frequency (band) 1202." Unlike FIG. 37C, NR-UE 1 labeled 1100_1 need not perform communication at a frequency (band) other than "first frequency (band) 1201 and second frequency (band) 1202."

In FIG. 37C, a case has been described where the frequency for "downlink" and the frequency for "uplink" are the same frequency (band), but the present embodiment is not limited to this case, and the frequency for "downlink" and the frequency for "uplink" may be the same frequency (band) partly. Descriptions of TDD and FDD will be omitted because they have already been each described.

In FIG. 38A, TRP 2 labeled 1101_2 generates transmission beam 3721_2 and uses transmission beam 3721_2 to transmit a modulation signal addressed to NR-UE 1 labeled 1100_1 (Downlink (DL)).

NR-UE 1 labeled 1100_1 then generates received beam 3730_2 and uses received beam 3730_2 to receive the modulation signal addressed to NR-UE 1 that has been transmitted by TRP 2 labeled 1101_2.

Moreover, NR-UE 1 labeled 1100_1 generates transmission beam 3720_2 and uses transmission beam 3720_2 to transmit a modulation signal addressed to TRP 2 labeled 1101_2 (Uplink (UL)).

TRP 2 labeled 1101_2 then generates received beam 3731_2 and uses received beam 3731_2 to receive the modulation signal addressed to TRP 2 labeled 1101_2 that has been transmitted by NR-UE 1 labeled 1100_1.

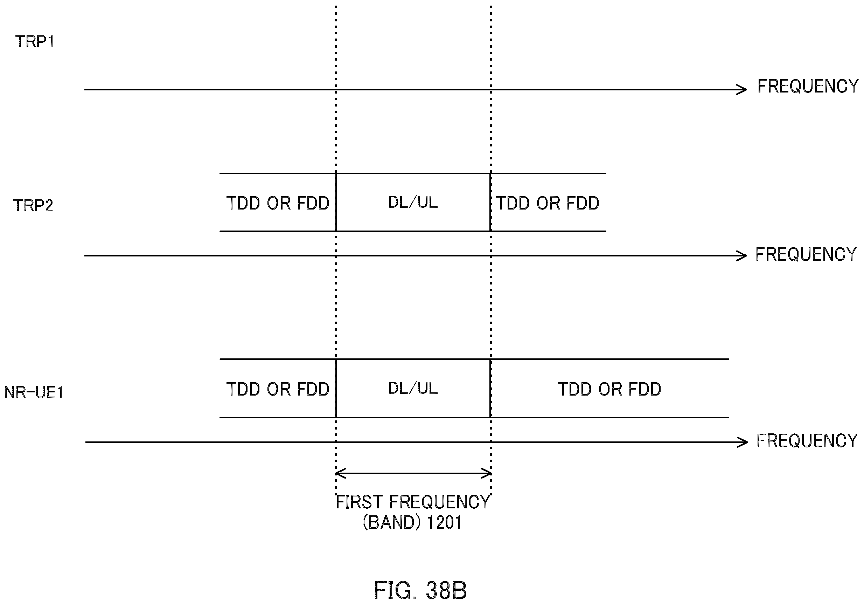

FIG. 38B illustrates exemplary communication statuses of "TRP 1 labeled 1101_1, TRP 2 labeled 1101_2, and NR-UE 1 labeled 1100_1" in a frequency axis in FIG. 38A. Note that, in FIG. 38B, a horizontal axis represents the frequency, and the components that operate in the same manner as the components in FIG. 12 are denoted by the same reference numerals.

TRP 1 labeled 1101_1 does not use first frequency (band) 1201. Further, as in FIG. 38B, TRP 1 labeled 1101_1 need not perform communication at a frequency (band) other than first frequency (band) 1201, or unlike FIG. 38B, TRP 1 labeled 1101_1 may perform TDD communication or FDD communication at a frequency (band) other than first frequency (band) 1201.

TRP 2 labeled 1101_2 uses first frequency (band) 1201 to receive a modulation signal for uplink and to transmit a modulation signal for downlink. At this time, for example, NR-UE 1 labeled 1100_1 receives the modulation signal at first frequency (band) 1201 transmitted by TRP 2 labeled 1101_2. NR-UE 1 labeled 1100_1 then receives the modulation signal at first frequency (band) 1201 transmitted by TRP 2 labeled 1101_2. Note that, as in FIG. 38B, TRP 2 labeled 1101_2 may perform TDD communication or FDD communication at a frequency (band) other than first frequency (band) 1201, or unlike FIG. 38B, need not perform communication at a frequency (band) other than first frequency (band) 1201.

NR-UE 1 labeled 1100_1 uses first frequency (band) 1201 to receive a modulation signal for downlink and to transmit a modulation signal for uplink. At this time, for example, TRP 2 labeled 1101_2 receives the modulation signal at first frequency (band) 1201 transmitted by NR-UE 1 labeled 1100_1. NR-UE 1 labeled 1100_1 then receives the modulation signal at first frequency (band) 1201 transmitted by TRP 2 labeled 1101_2. Note that, as in FIG. 38B, NR-UE 1 labeled 1100_1 may perform TDD communication or FDD communication at a frequency (band) other than first frequency (band) 1201. Unlike FIG. 38B, NR-UE 1 labeled 1100_1 need not perform communication at a frequency (band) other than first frequency (band) 1201.

In FIG. 38B, a case has been described where the frequency for "downlink" and the frequency for "uplink" are the same frequency (band), but the present embodiment is not limited to this case, and the frequency for "downlink" and the frequency for "uplink" may be the same frequency (band) partly. Descriptions of TDD and FDD will be omitted because they have already been each described.

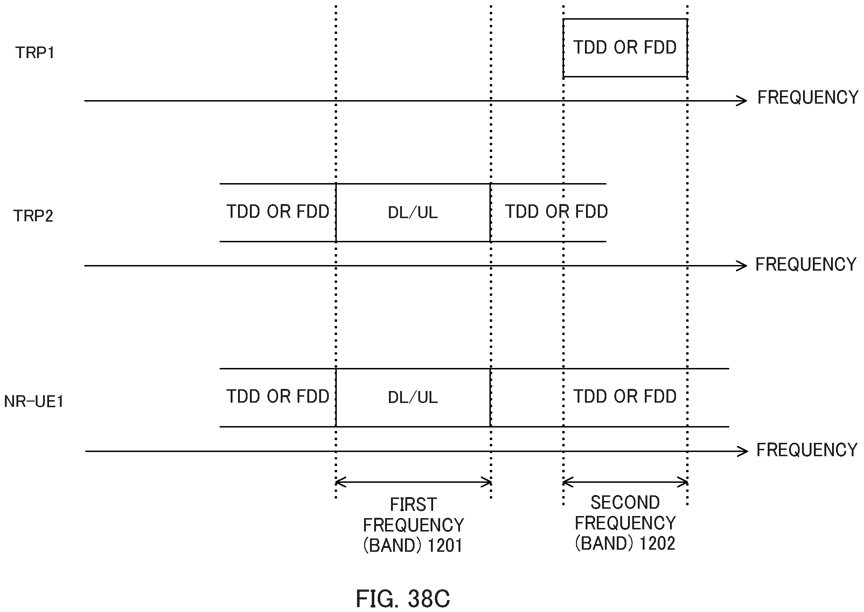

FIG. 38C illustrates exemplary states of "TRP 1 labeled 1101_1, TRP 2 labeled 1101_2, and NR-UE 1 labeled 1100_1" in the frequency axis in FIG. 38A, which are different from those in FIG. 38B. Note that, in FIG. 38C, a horizontal axis represents the frequency, and the components that operate in the same manner as the components in FIG. 12 are denoted by the same reference numerals.

TRP 1 labeled 1101_1 uses second frequency (band) 1202 to receive a modulation signal for uplink and to transmit a modulation signal for downlink. At this time, for example, NR-UE 1 labeled 1100_1 receives the modulation signal at second frequency (band) 1202 transmitted by TRP 1 labeled 1101_1. NR-UE 1 labeled 1100_1 then receives the modulation signal at second frequency (band) 1202 transmitted by TRP 1 labeled 1101_1. Note that, TDD communication or FDD communication is performed at second frequency (band) 1202. Further, as in FIG. 38C, TRP 1 labeled 1101_1 need not perform communication at a frequency (band) other than second frequency (band) 1202, or unlike FIG. 38C, TRP 1 labeled 1101_1 may perform TDD communication or FDD communication at a frequency (band) other than second frequency (band) 1202.

TRP 2 labeled 1101_2 uses first frequency (band) 1201 to receive a modulation signal for uplink and to transmit a modulation signal for downlink. At this time, for example, NR-UE 1 labeled 1100_1 receives the modulation signal at first frequency (band) 1201 transmitted by TRP 2 labeled 1101_2. NR-UE 1 labeled 1100_1 then receives the modulation signal at first frequency (band) 1201 transmitted by TRP 2 labeled 1101_2. Note that, as in FIG. 38C, TRP 2 labeled 1101_2 may perform TDD communication or FDD communication at a frequency (band) other than first frequency (band) 1201, or unlike FIG. 38C, need not perform communication at a frequency (band) other than first frequency (band) 1201.

NR-UE 1 labeled 1100_1 uses first frequency (band) 1201 to receive a modulation signal for downlink and to transmit a modulation signal for uplink. At this time, for example, TRP 2 labeled 1101_2 receives the modulation signal at first frequency (band) 1201 transmitted by NR-UE 1 labeled 1100_1. NR-UE 1 labeled 1100_1 then receives the modulation signal at first frequency (band) 1201 transmitted by TRP 2 labeled 1101_2. In addition, NR-UE 1 labeled 1100_1 uses second frequency (band) 1202 to receive a modulation signal for downlink and to transmit a modulation signal for uplink. At this time, for example, TRP 1 labeled 1101_1 receives the modulation signal at second frequency (band) 1202 transmitted by NR-UE 1 labeled 1100_1. NR-UE 1 labeled 1100_1 then receives the modulation signal at second frequency (band) 1202 transmitted by TRP 1 labeled 1101_1. Note that, TDD communication or FDD communication is performed at second frequency (band) 1202. Incidentally, as in FIG. 38C, NR-UE 1 labeled 1100_1 may perform TDD communication or FDD communication at a frequency (band) other than "first frequency (band) 1201 and second frequency (band) 1202." Unlike FIG. 38C, NR-UE 1 labeled 1100_1 need not perform communication at a frequency (band) other than "first frequency (band) 1201 and second frequency (band) 1202."

In FIG. 38C, a case has been described where the frequency for "downlink" and the frequency for "uplink" are the same frequency (band), but the present embodiment is not limited to this case, and the frequency for "downlink" and the frequency for "uplink" may be the same frequency (band) partly. Descriptions of TDD and FDD will be omitted because they have already been each described.

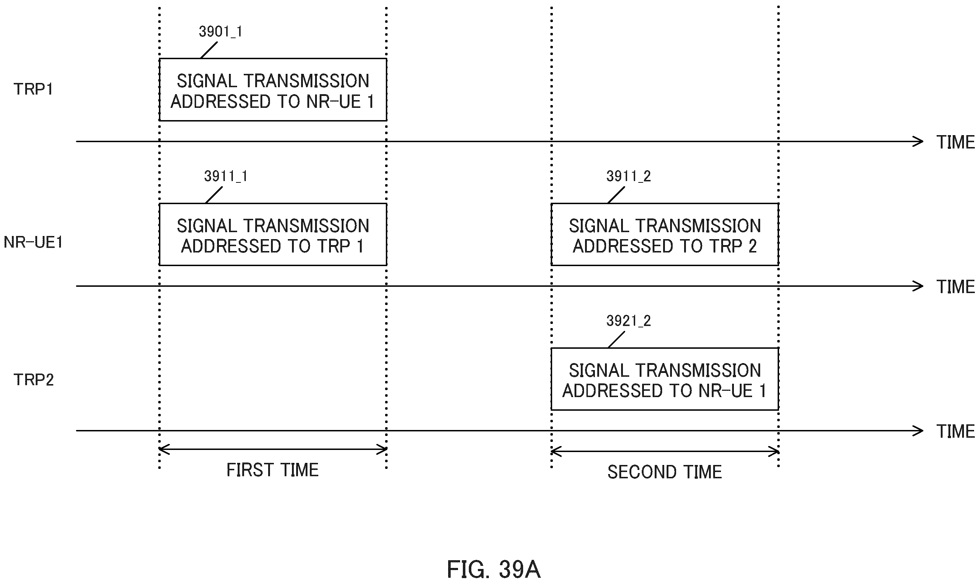

In the present embodiment, NR-UE 1 labeled 1100_1 switches between the situation of FIG. 37A and the situation of FIG. 38A in time. A temporal aspect at that time is illustrated in FIG. 39A.

FIG. 39A illustrates exemplary transmission statuses of "TRP 1 labeled 1101_1, TRP 2 labeled 1101_2, and NR-UE 1 labeled 1100_1." Note that, in FIG. 39A, a horizontal axis represents time.

As in FIG. 39A, TRP 1 labeled 1101_1 transmits signal 3901_1 addressed to NR-UE 1 labeled 1100_1 in the first time. Meanwhile, NR-UE 1 labeled 1100_1 transmits signal 3911_1 for TRP 1 labeled 1101_1. That is, the first time results in the communication status illustrated in FIG. 37A.

TRP 2 labeled 1101_2 transmits signal 3921_2 addressed to NR-UE 1 labeled 1100_1 in the second time. Meanwhile, NR-UE 1 labeled 1100_1 transmits signal 3911_2 for TRP 2 labeled 1101_2 in the second time. That is, the second time results in the communication status illustrated in FIG. 38A.

In the manner described above, the NR-UE transmits modulation signals to a plurality of TRPs and receives modulation signals transmitted by the plurality of TRPs, thereby obtaining a spatial diversity effect in both uplink and downlink. This brings about an effect of improving the transmission quality.

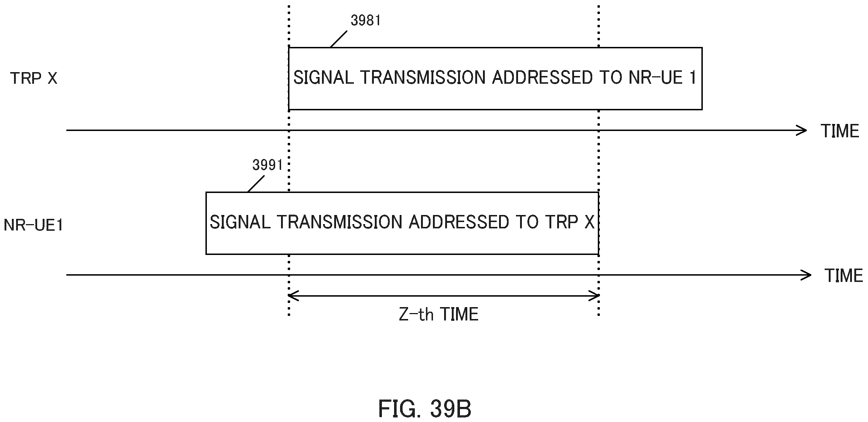

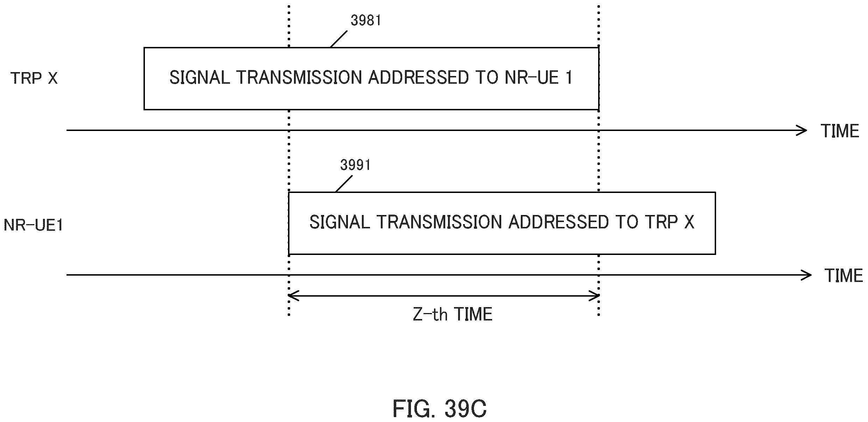

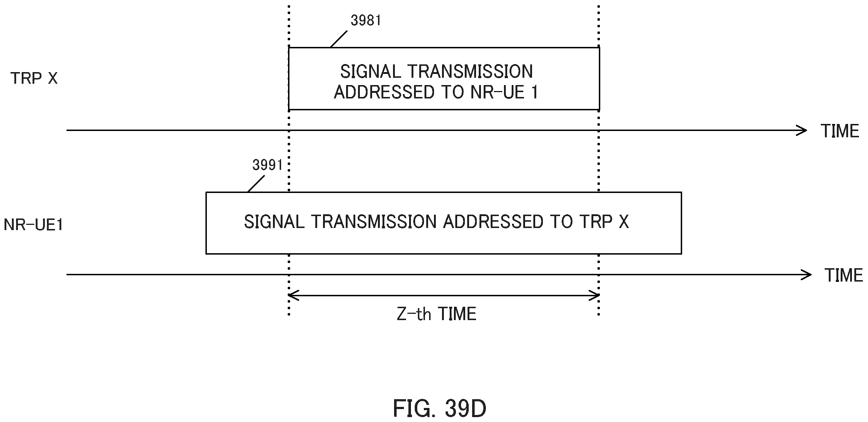

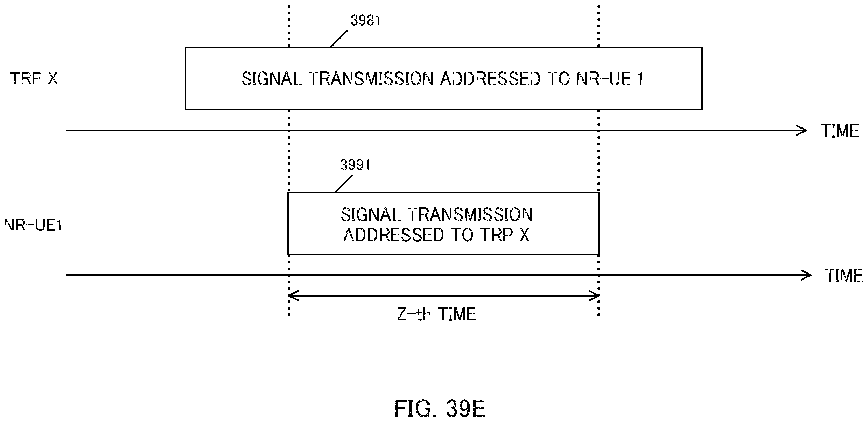

An example in which the "first time" and the "second time" in FIG. 39A are different from those in FIG. 39A will be described with reference to FIG. 39B, FIG. 39C, FIG. 39D, and FIG. 39E.

FIG. 39B, FIG. 39C, FIG. 39D, and FIG. 39E each illustrate an example in which the "first time" and the "second time" in FIG. 39A are different from those in FIG. 39A. Note that, in FIG. 39B, a horizontal axis represents time.

In FIG. 39B, FIG. 39C, FIG. 39D, and FIG. 39E, it is assumed that "TRP X" is "TRP 1" and "the z-th time" is the "first time." Further, as the first time in FIG. 39A, the communication in "FIG. 39B, FIG. 39C, FIG. 39D, or FIG. 39E" is performed.

Therefore, in the first time, TRP 1 labeled 1101_1 transmits signal 3981 addressed to NR-UE 1 labeled 1100_1, and NR-UE 1 labeled 1100_1 transmits signal 3991 for TRP X, i.e., transmits the sigtnal to TRP 1 labeled 1101_1.

In FIG. 39B, FIG. 39C, FIG. 39D, and FIG. 39E, it is assumed that "TRP X" is "TRP 2" and "the z-th time" is the "second time." Further, as the second time in FIG. 39A, the communication in "FIG. 39B, FIG. 39C, FIG. 39D, or FIG. 39E" is performed.

Therefore, in the second time, TRP 2 labeled 1101_2 transmits signal 3981 addressed to NR-UE 1 labeled 1100_1, and NR-UE 1 labeled 1100_1 transmits signal 3991 for TRP X, i.e., transmits the sigtnal to TRP 2 labeled 1101_2.

Note that temporal arrangement of signal 3981 addressed to the NR-UE and signal 3991 for TRP X is not limited to the examples in FIG. 39A, FIG. 39B, FIG. 39C, FIG. 39D, and FIG. 39E, as long as signal 3981 addressed to the NR-UE and signal 3991 for TRP X patly overlap in time.

Additionally, temporal arrangement of the time when "TRP 1 labeled 1101_1 transmits a downlink signal and NR-UE 1 labeled 1100_1 transmits an uplink signal to TRP 1 labeled 1101_1" and the time when "TRP 2 labeled 1101_2 transmits a downlink signal and NR-UE 1 labeled 1100_1 transmits an uplink signal to TRP 2 labeled 1101_2" in FIG. 39A is not limited to the example in FIG. 39A, and any arrangement is possible.

In FIG. 39A, "signal 3911_1 for TRP 1 labeled 1101_1 and signal 3911_2 for TRP 2 labeled 1101_2" transmitted by NR-UE 1 labeled 1100_1 may include, for example, the same data. Further, "signal 3911_1 for TRP 1 labeled 1101_1 and signal 3911_2 for TRP 2 labeled 1101_2" may be configured such that the content is the same although "the conditions are different such as in compressibility or in configuration." Additionally, "signal 3911_1 for TRP 1 labeled 1101_1 and signal 3911_2 for TRP 2 labeled 1101_2" may include partly same data. In this manner, Ultra-reliableandlow-latencycommunication (URLLC) may be achieved. Note that the configurations of "signal 3911_1 for TRP 1 labeled 1101_1 and signal 3911_2 for TRP 2 labeled 1101_2" are not limited to the configuration in FIG. 39A and may be the configurations described with reference to FIG. 39B, FIG. 39C, FIG. 39D, FIG. 39E.

Further, in FIG. 39A, "signal 3901_1 for NR-UE 1 labeled 1100_1 and signal 3921_2 for NR-UE 1 labeled 1100_1" transmitted by TRP 1 labeled 1101_1 or TRP 2 labeled 1101_2 may include, for example, the same data. Further, "signal 3901_1 for NR-UE 1 labeled 1100_1 and signal 3921_2 for NR-UE 1 labeled 1100_1" may be configured such that the content is the same although "the conditions are different such as in compressibility or in configuration." Additionally, "signal 3901_1 for NR-UE 1 labeled 1100_1 and signal 3921_2 for NR-UE 1 labeled 1100_1" may include partly same data. In this manner, URLLC may be achieved. Note that the configurations of "signal 3901_1 for NR-UE 1 labeled 1100_1 and signal 3921_2 for NR-UE 1 labeled 1100_1" are not limited to the configuration in FIG. 39A and may be the configurations described with reference to FIG. 39B, FIG. 39C, FIG. 39D, FIG. 39E.

Note that, in FIG. 37A and FIG. 38A, NR-UE 1 labeled 1100_1 communicates with TRP 1 labeled 1101_1 and TRP 2 labeled 1101_2, but NR-UE 1 labeled 1100_1 may communicate with two or more TRPs. For example, when TRP 3 is present, there may be the time when "TRP 3 transmits a signal addressed to NR-UE 1 labeled 1100_1 and NR-UE 1 labeled 1100_1 transmits a signal to TRP 3." The same applies to a case where another TRP is present.

Another example will be further described.

FIG. 34A and FIG. 35A, and FIG. 40A each illustrate an exemplary radio system in the present embodiment. As illustrated in FIG. 34A and FIG. 35A, and FIG. 40A, there are TRP 1 labeled 1101_1, TRP 2 labeled 1101_2, and NR-UE 1 labeled 1100_1, for example. Note that, in FIG. 34A and FIG. 35A, and FIG. 40A, the components that operate in the same manner as the components in FIG. 11 are denoted by the same reference numerals, and some descriptions thereof will be omitted.

Since FIG. 34A and FIG. 34B have already been described, descriptions thereof will be omitted. Moreover, since FIG. 35A and FIG. 35B have already been described as well, descriptions thereof will be omitted.

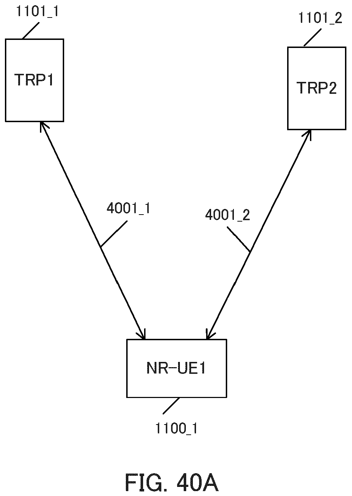

In FIG. 40A, NR-UE 1 labeled 1100_1 communicates with TRP 1 labeled 1101_1 and/or TRP 2 labeled 1101_2.

When NR-UE 1 labeled 1100_1 and TRP 1 labeled 1101_1 communicate with each other, NR-UE 1 labeled 1100_1 transmits a modulation signal addressed to TRP 1 labeled 1101_1, whereas TRP 1 labeled 1101_1 transmits a modulation signal addressed to NR-UE 1 labeled 1100_1 (4001_1).

When NR-UE 1 labeled 1100_1 and TRP 2 labeled 1101_2 communicate with each other, NR-UE 1 labeled 1100_1 transmits a modulation signal addressed to TRP 2 labeled 1101_2, whereas TRP 2 labeled 1101_2 transmits a modulation signal addressed to NR-UE 1 labeled 1100_1 (4001_2).

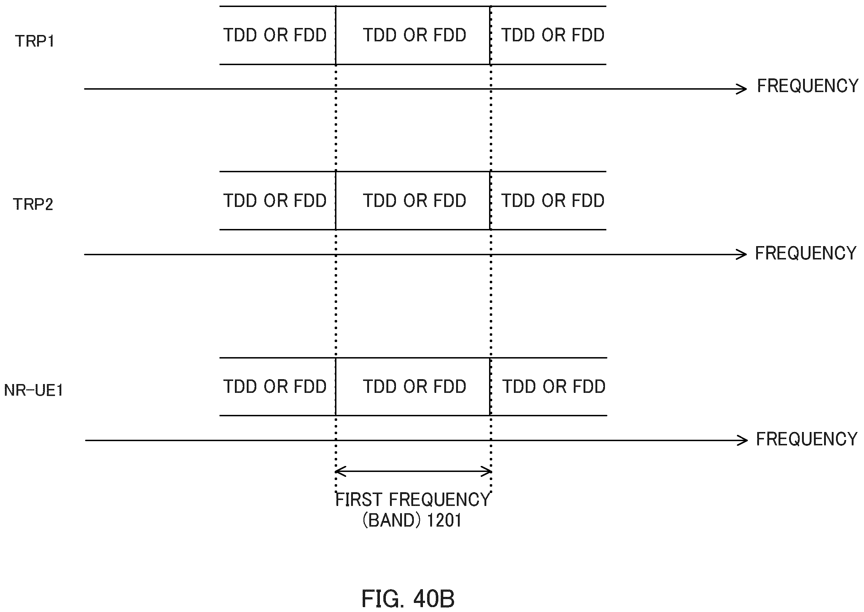

FIG. 40B illustrates exemplary communication statuses of "TRP 1 labeled 1101_1, TRP 2 labeled 1101_2, and NR-UE 1 labeled 1100_1" in a frequency axis in FIG. 40A. Note that, in FIG. 40B, a horizontal axis represents the frequency, and the components that operate in the same manner as the components in FIG. 12 are denoted by the same reference numerals.

When NR-UE 1 labeled 1100_1 and TRP 1 labeled 1101_1 communicate with each other, since communication by "TDD or FDD" is performed, the modulation signal addressed to TRP 1 labeled 1101_1 trasnsmitted by NR-UE 1 labeled 1100_1 and/or the modulation signal addressed to NR-UE 1 labeled 1100_1 trasnsmitted by TRP 1 labeled 1101_1 are present at first frequency (band) 1201.

Thus, TRP 1 labeled 1101_1 receives the modulation signal addressed to TRP 1 labeled 1101_1 trasnsmitted by NR-UE 1 labeled 1100_1, and NR-UE 1 labeled 1100_1 receives the modulation signal addressed to NR-UE 1 labeled 1100_1 trasnsmitted by TRP 1 labeled 1101_1.

When NR-UE 1 labeled 1100_1 and TRP 2 labeled 1101_2 communicate with each other, since communication by "TDD or FDD" is performed, the modulation signal addressed to TRP 2 labeled 1101_2 trasnsmitted by NR-UE 1 labeled 1100_1 and/or the modulation signal addressed to NR-UE 1 labeled 1100_1 trasnsmitted by TRP 2 labeled 1101_2 are present at first frequency (band) 1201.

Thus, TRP 2 labeled 1101_2 receives the modulation signal addressed to TRP 2 labeled 1101_2 trasnsmitted by NR-UE 1 labeled 1100_1, and NR-UE 1 labeled 1100_1 receives the modulation signal addressed to NR-UE 1 labeled 1100_1 trasnsmitted by TRP 2 labeled 1101_2

Note that, as in FIG. 40B, NR-UE 1 labeled 1100_1 may perform TDD communication or FDD communication at a frequency (band) other than first frequency (band) 1201. Unlike FIG. 40B, NR-UE 1 labeled 1100_1 need not perform communication at a frequency (band) other than first frequency (band) 1201.

As in FIG. 40B, TRP 1 labeled 1101_1 may perform TDD communication or FDD communication at a frequency (band) other than first frequency (band) 1201. Unlike FIG. 40B, TRP 1 labeled 1101_1 need not perform communication at a frequency (band) other than first frequency (band) 1201.

As in FIG. 40B, TRP 2 labeled 1101_2 may perform TDD communication or FDD communication at a frequency (band) other than first frequency (band) 1201. Unlike FIG. 40B, TRP 2 labeled 1101_2 need not perform communication at a frequency (band) other than first frequency (band) 1201.

When "NR-UE 1 labeled 1100_1 and TRP 1 labeled 1101_1 communicate with each other" and "1100_1 NR-UE 1 and 1101_2 TRP 2 communicate with each other," multiple-TRP (multi-TRP) is implemented.

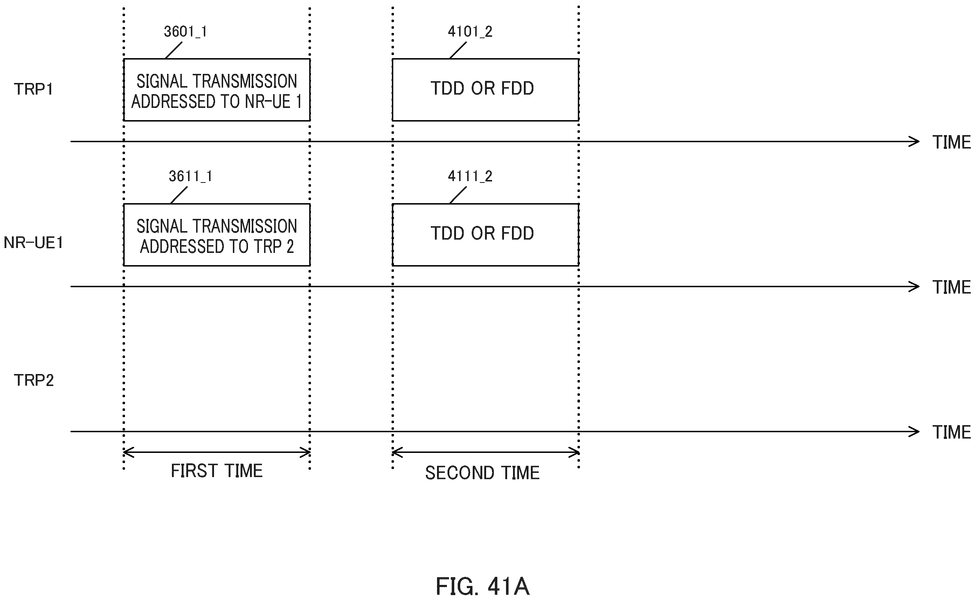

As an example of the present embodiment, the situation of FIG. 34A and the situation of FIG. 40A are switched in time. A temporal aspect at that time is illustrated in FIG. 41A.

FIG. 41A illustrates exemplary transmission statuses of "TRP 1 labeled 1101_1, TRP 2 labeled 1101_2, and NR-UE 1 labeled 1100_1." Note that, in FIG. 41A, a horizontal axis represents time. Note that, in FIG. 41A, the components that operate in the same manner as the components in FIG. 36A are denoted by the same reference numerals, and descriptions of the parts that have already been described will be omitted.

As in FIG. 41A, TRP 1 labeled 1101_1 transmits signal 3601_1 addressed to NR-UE 1 labeled 1100_1 in the first time. Meanwhile, NR-UE 1 labeled 1100_1 transmits signal 3611_1 for TRP 2 labeled 1101_2 in the first time. That is, the first time results in the communication status illustrated in FIG. 34A.

TRP 1 labeled 1101_1 and NR-UE 1 labeled 1100_1 perform TDD communication or FDD communication in the second time. That is, the second time results in the communication status illustrated in FIG. 40A.

In the manner described above, the NR-UE communicates with a TRP using a plurality of communication methods, which brings about an effect of improving the transmission quality.

FIG. 36B, FIG. 36C, FIG. 36D, and FIG. 36E each illustrate an example, which is different from that in FIG. 41A, of the first time in FIG. 41A, but descriptions of these drawings will be omitted because they have been already described.

Additionally, temporal arrangement of the time when "TRP 1 labeled 1101_1 transmits a downlink signal and NR-UE 1 labeled 1100_1 transmits an uplink signal to TRP 2 labeled 1101_2 and the time when "TRP 1 labeled 1101_1 and NR-UE 1 labeled 1100_1 perform communication by TDD or FDD" in FIG. 41A is not limited to the example in FIG. 41A, and any arrangement is possible.

Incidentally, a case where TRP 1 labeled 1101_1 and NR-UE 1 labeled 1100_1 perform communication by TDD or FDD in the second time in FIG. 41A has been described with reference to FIG. 40A and FIG. 40B.

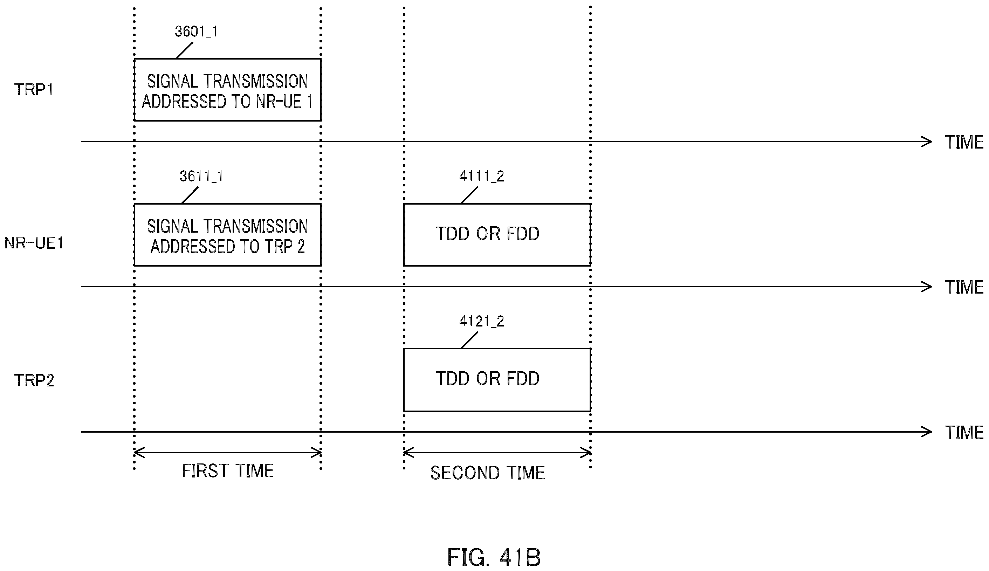

FIG. 41B illustrates an example, which is different from that in FIG. 41A, of a case where the state in FIG. 34A and the state in FIG. 40A are switched in time.

FIG. 41B illustrates exemplary transmission statuses of "TRP 1 labeled 1101_1, TRP 2 labeled 1101_2, and NR-UE 1 labeled 1100_1." Note that, in FIG. 41B, a horizontal axis represents time. Note that, in FIG. 41B, the components that operate in the same manner as the components in FIG. 36A and FIG. 41A are denoted by the same reference numerals, and descriptions of the parts that have already been described will be omitted.

As in FIG. 41B, TRP 1 labeled 1101_1 transmits signal 3601_1 addressed to NR-UE 1 labeled 1100_1 in the first time. Meanwhile, NR-UE 1 labeled 1100_1 transmits signal 3611_1 for TRP 2 labeled 1101_2 in the first time. That is, the first time results in the communication status illustrated in FIG. 34A.

TRP 2 labeled 1101_2 and NR-UE 1 labeled 1100_1 perform TDD communication or FDD communication in the second time. That is, the second time results in the communication status illustrated in FIG. 40A.

In the manner described above, the NR-UE communicates with a TRP using a plurality of communication methods, which brings about an effect of improving the transmission quality.

FIG. 36B, FIG. 36C, FIG. 36D, and FIG. 36E each illustrate an example, which is different from that in FIG. 41B, of the first time in FIG. 41B, but descriptions of these drawings will be omitted because they have been already described.

Additionally, temporal arrangement of the time when "TRP 1 labeled 1101_1 transmits a downlink signal and NR-UE 1 labeled 1100_1 transmits an uplink signal to TRP 2 labeled 1101_2 and the time when "TRP 2 labeled 1101_2 and NR-UE 1 labeled 1100_1 perform communication by TDD or FDD" in FIG. 41B is not limited to the example in FIG. 41B, and any arrangement is possible.

Incidentally, a case where TRP 2 labeled 1101_2 and NR-UE 1 labeled 1100_1 perform communication by TDD or FDD in the second time in FIG. 41B has been described with reference to FIG. 40A and FIG. 40B.

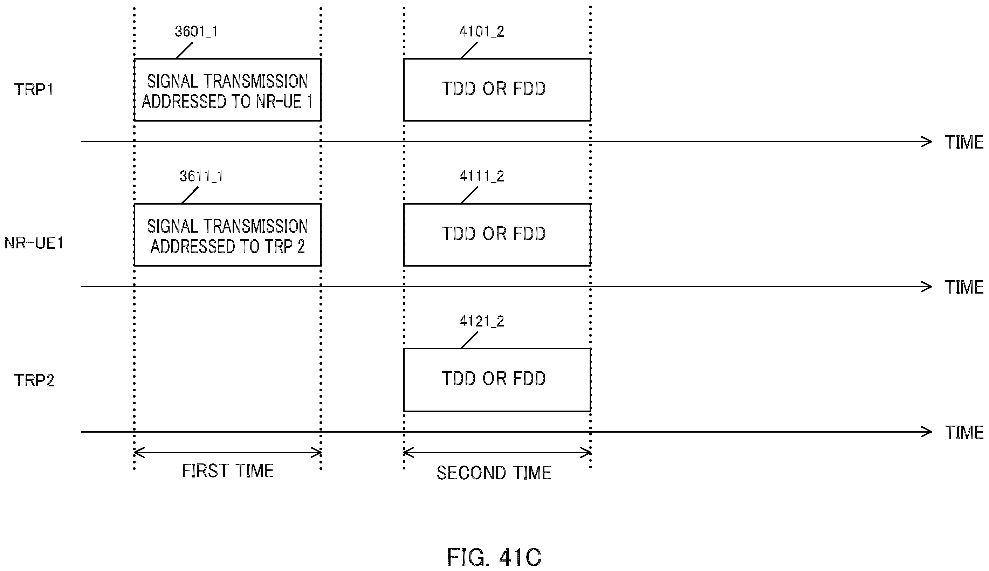

FIG. 41C illustrates an example, which is different from those in FIG. 41A and FIG. 41B, of a case where the state in FIG. 34A and the state in FIG. 40A are switched in time.

FIG. 41C illustrates exemplary transmission statuses of "TRP 1 labeled 1101_1, TRP 2 labeled 1101_2, and NR-UE 1 labeled 1100_1." Note that, in FIG. 41C, a horizontal axis represents time. Note that, in FIG. 41C, the components that operate in the same manner as the components in FIG. 36A, FIG. 41A, and FIG. 41B are denoted by the same reference numerals, and descriptions of the parts that have already been described will be omitted.

As in FIG. 41C, TRP 1 labeled 1101_1 transmits signal 3601_1 addressed to NR-UE 1 labeled 1100_1 in the first time. Meanwhile, NR-UE 1 labeled 1100_1 transmits signal 3611_1 for TRP 2 labeled 1101_2 in the first time. That is, the first time results in the communication status illustrated in FIG. 34A.

In the second time, it is assumed that "TRP 1 labeled 1101_1 and NR-UE 1 labeled 1100_1 perform communication by TDD or by FDD," and in addition, "TRP 2 labeled 1101_2 and NR-UE 1 labeled 1100_1 perform communication by TDD or by FDD." That is, the second time results in the communication status illustrated in FIG. 40A.

In the manner described above, the NR-UE communicates with a TRP using a plurality of communication methods, which brings about an effect of improving the transmission quality.

FIG. 36B, FIG. 36C, FIG. 36D, and FIG. 36E each illustrate an example, which is different from that in FIG. 41C, of the first time in FIG. 41C, but descriptions of these drawings will be omitted because they have been already described.

Additionally, temporal arrangement of the time when "TRP 1 labeled 1101_1 transmits a downlink signal and NR-UE 1 labeled 1100_1 transmits an uplink signal to TRP 2 labeled 1101_2 and the time when "TRP 1 labeled 1101_1 and NR-UE 1 labeled 1100_1 perform communication by TDD or FDD, and TRP 2 labeled 1101_2 and NR-UE 1 labeled 1100_1 perform communication by TDD or FDD" in FIG. 41C is not limited to the example in FIG. 41C, and any arrangement is possible.

Incidentally, cases where "TRP 1 labeled 1101_1 and NR-UE 1 labeled 1100_1 perform communication by TDD or FDD" and "TRP 2 labeled 1101_2 and NR-UE 1 labeled 1100_1 perform communication by TDD or FDD" in the second time in FIG. 41C have been described with reference to FIG. 40A and FIG. 40B.

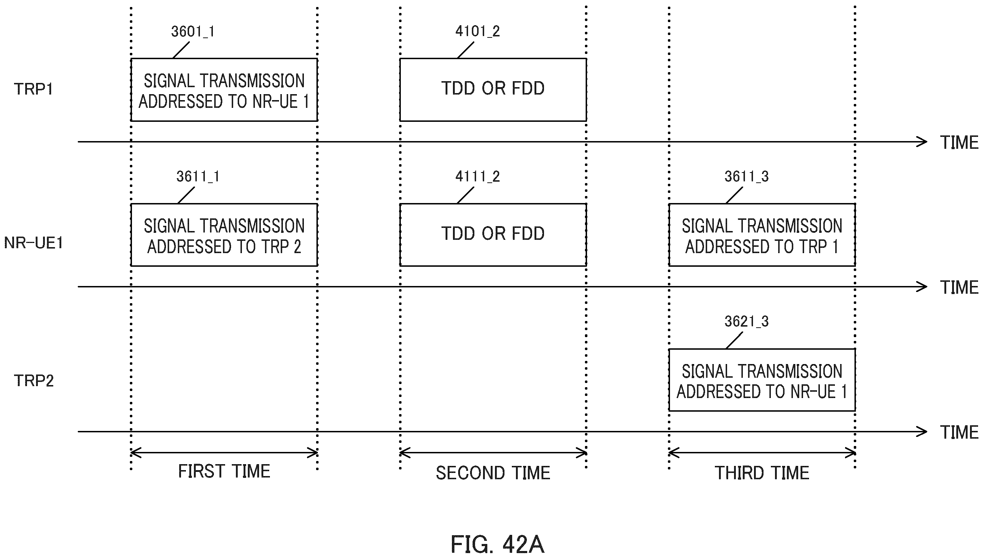

FIG. 42A illustrates another example of a case where the state in FIG. 34A, the state in FIG. 35A, and the state in FIG. 40A are switched in time.

FIG. 42A illustrates exemplary transmission statuses of "TRP 1 labeled 1101_1, TRP 2 labeled 1101_2, and NR-UE 1 labeled 1100_1." Note that, in FIG. 42A, a horizontal axis represents time. Note that, in FIG. 42A, the components that operate in the same manner as the components in FIG. 36A, FIG. 41A, FIG. 41B, and FIG. 41C are denoted by the same reference numerals, and descriptions of the parts that have already been described will be omitted.

As in FIG. 42A, TRP 1 labeled 1101_1 transmits signal 3601_1 addressed to NR-UE 1 labeled 1100_1 in the first time. Meanwhile, NR-UE 1 labeled 1100_1 transmits signal 3611_1 for TRP 2 labeled 1101_2 in the first time. That is, the first time results in the communication status illustrated in FIG. 34A.

In the second time, TRP 1 labeled 1101_1 and NR-UE 1 labeled 1100_1 perform communication by TDD or by FDD. That is, the second time results in the communication status illustrated in FIG. 40A.

In the third time, TRP 2 labeled 1101_2 transmits signal 3621_3 addressed to NR-UE 1 labeled 1100_1. Further, in the third time, NR-UE 1 labeled 1100_1 transmits signal 3611_3 for TRP 1 labeled 1101_1. That is, the third time results in the communication status illustrated in FIG. 35A.

In the manner described above, the NR-UE communicates with a TRP using a plurality of communication methods, which brings about an effect of improving the transmission quality; in addition, the NR-UE transmits a modulation signal to a plurality of TRPs and receives a modulation signal transmitted by the plurality of TRPs, thereby obtaining a spatial diversity effect in both uplink and downlink. This brings about an effect of improving the transmission quality.

FIG. 36B, FIG. 36C, FIG. 36D, and FIG. 36E each illustrate an example, which is different from that in FIG. 42A, of the first time in FIG. 42A and an example, which is different from that in FIG. 42A, of the third time in FIG. 42A, but descriptions of these drawings will be omitted because they have been already described.

Additionally, temporal arrangement of the time when "TRP 1 labeled 1101_1 transmits a downlink signal and NR-UE 1 labeled 1100_1 transmits an uplink signal to TRP 2 labeled 1101_2," the time when "TRP 1 labeled 1101_1 and NR-UE 1 labeled 1100_1 perform communication by TDD or FDD, and the time when "TRP 2 labeled 1101_2 transmits a downlink signal and NR-UE 1 labeled 1100_1 transmits an uplink signal to TRP 1 labeled 1101_1" in FIG. 42A is not limited to the example in FIG. 42A, and any arrangement is possible.

Incidentally, a case where TRP 1 labeled 1101_1 and NR-UE 1 labeled 1100_1 perform communication by TDD or FDD in the second time in FIG. 42A has been described with reference to FIG. 40A and FIG. 40B.

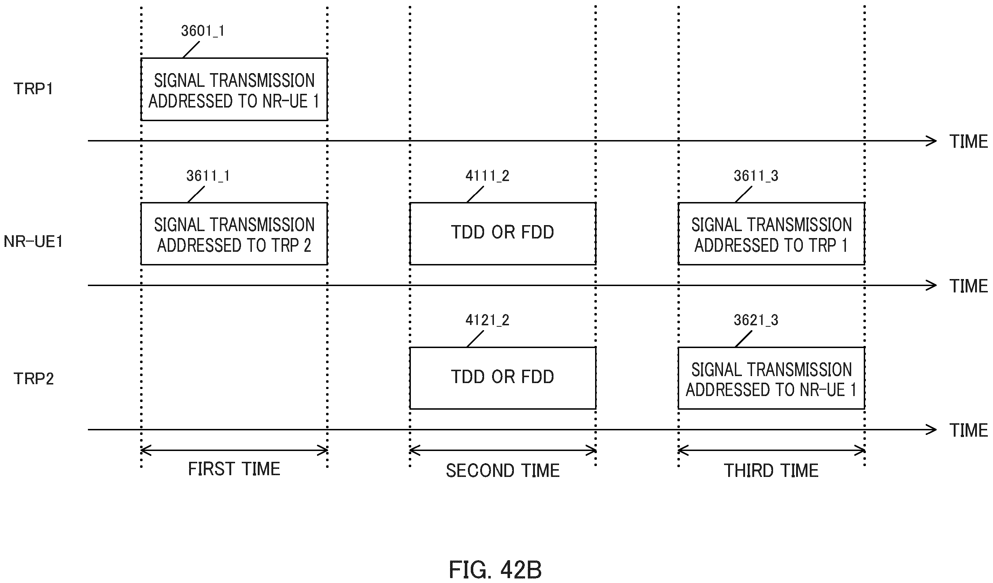

FIG. 42B illustrates an example, which is different from that in FIG. 42A, of a case where the state in FIG. 34A, the state in FIG. 35A, and the state in FIG. 40A are switched in time.

FIG. 42B illustrates exemplary transmission statuses of "TRP 1 labeled 1101_1, TRP 2 labeled 1101_2, and NR-UE 1 labeled 1100_1." Note that, in FIG. 42B, a horizontal axis represents time. Note that, in FIG. 42B, the components that operate in the same manner as the components in FIG. 36A and FIG. 42A are denoted by the same reference numerals, and descriptions of the parts that have already been described will be omitted.

As in FIG. 42B, TRP 1 labeled 1101_1 transmits signal 3601_1 addressed to NR-UE 1 labeled 1100_1 in the first time. Meanwhile, NR-UE 1 labeled 1100_1 transmits signal 3611_1 for TRP 2 labeled 1101_2 in the first time. That is, the first time results in the communication status illustrated in FIG. 34A.

TRP 2 labeled 1101_2 and NR-UE 1 labeled 1100_1 perform TDD communication or FDD communication in the second time. That is, the second time results in the communication status illustrated in FIG. 40A.

In the third time, TRP 2 labeled 1101_2 transmits signal 3621_3 addressed to NR-UE 1 labeled 1100_1. Further, in the third time, NR-UE 1 labeled 1100_1 transmits signal 3611_3 for TRP 1 labeled 1101_1. That is, the third time results in the communication status illustrated in FIG. 35A.

In the manner described above, the NR-UE communicates with a TRP using a plurality of communication methods, which brings about an effect of improving the transmission quality; in addition, the NR-UE transmits a modulation signal to a plurality of TRPs and receives a modulation signal transmitted by the plurality of TRPs, thereby obtaining a spatial diversity effect in both uplink and downlink. This brings about an effect of improving the transmission quality.

FIG. 36B, FIG. 36C, FIG. 36D, and FIG. 36E each illustrate an example, which is different from that in FIG. 42B, of the first time in FIG. 42B and an example, which is different from that in FIG. 42B, of the third time in FIG. 42B, but descriptions of these drawings will be omitted because they have been already described.

Additionally, temporal arrangement of the time when "TRP 1 labeled 1101_1 transmits a downlink signal and NR-UE 1 labeled 1100_1 transmits an uplink signal to TRP 2 labeled 1101_2," the time when "TRP 2 labeled 1101_2 and NR-UE 1 labeled 1100_1 perform communication by TDD or FDD," and the time when "TRP 2 labeled 1101_2 transmits a downlink signal and NR-UE 1 labeled 1100_1 transmits an uplink signal to TRP 1 labeled 1101_1" in FIG. 42B is not limited to the example in FIG. 42B, and any arrangement is possible.

Incidentally, a case where TRP 2 labeled 1101_2 and NR-UE 1 labeled 1100_1 perform communication by TDD or FDD in the second time in FIG. 42B has been described with reference to FIG. 40A and FIG. 40B.

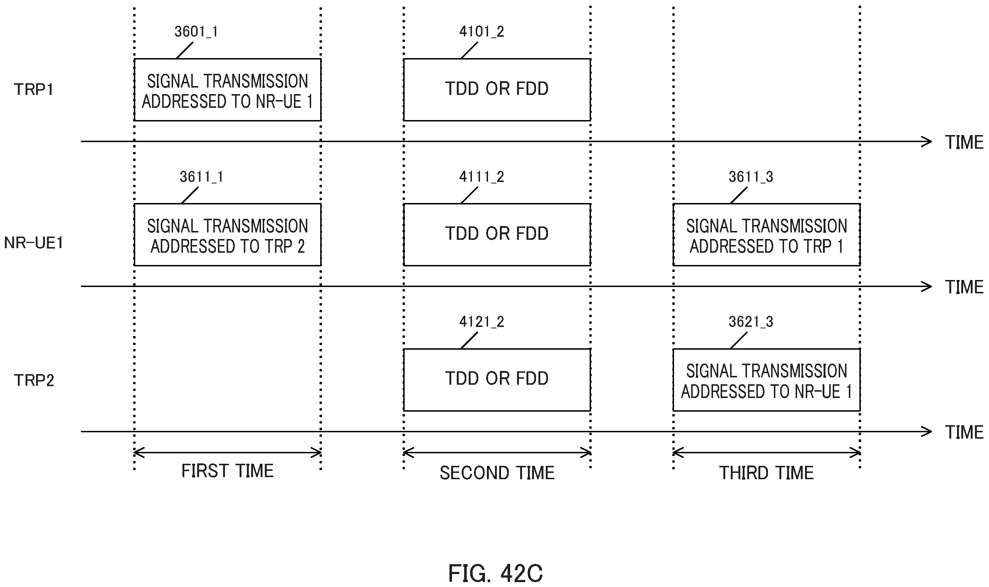

FIG. 42C illustrates an example, which is different from those in FIG. 42A and FIG. 42B, of a case where the state in FIG. 34A, the state in FIG. 35A, and the state in FIG. 40A are switched in time.

FIG. 42C illustrates exemplary transmission statuses of "TRP 1 labeled 1101_1, TRP 2 labeled 1101_2, and NR-UE 1 labeled 1100_1." Note that, in FIG. 42C, a horizontal axis represents time. Note that, in FIG. 42C, the components that operate in the same manner as the components in FIG. 36A, FIG. 42A, and FIG. 42B are denoted by the same reference numerals, and descriptions of the parts that have already been described will be omitted.

As in FIG. 42C, TRP 1 labeled 1101_1 transmits signal 3601_1 addressed to NR-UE 1 labeled 1100_1 in the first time. Meanwhile, NR-UE 1 labeled 1100_1 transmits signal 3611_1 for TRP 2 labeled 1101_2 in the first time. That is, the first time results in the communication status illustrated in FIG. 34A.

In the second time, it is assumed that "TRP 1 labeled 1101_1 and NR-UE 1 labeled 1100_1 perform communication by TDD or by FDD," and in addition, "TRP 2 labeled 1101_2 and NR-UE 1 labeled 1100_1 perform communication by TDD or by FDD." That is, the second time results in the communication status illustrated in FIG. 40A. In the third time, TRP 2 labeled 1101_2 transmits signal 3621_3 addressed to NR-UE 1 labeled 1100_1. Further, in the third time, NR-UE 1 labeled 1100_1 transmits signal 3611_3 for TRP 1 labeled 1101_1. That is, the third time results in the communication status illustrated in FIG. 35A.

In the manner described above, the NR-UE communicates with a TRP using a plurality of communication methods, which brings about an effect of improving the transmission quality; in addition, the NR-UE transmits a modulation signal to a plurality of TRPs and receives a modulation signal transmitted by the plurality of TRPs, thereby obtaining a spatial diversity effect in both uplink and downlink. This brings about an effect of improving the transmission quality.

FIG. 36B, FIG. 36C, FIG. 36D, and FIG. 36E each illustrate an example, which is different from that in FIG. 42C, of the first time in FIG. 42C and an example, which is different from that in FIG. 42C, of the third time in FIG. 42C, but descriptions of these drawings will be omitted because they have been already described.

Additionally, temporal arrangement of the time when "TRP 1 labeled 1101_1 transmits a downlink signal and NR-UE 1 labeled 1100_1 transmits an uplink signal to TRP 2 labeled 1101_2," the time when "TRP 1 labeled 1101_1 and NR-UE 1 labeled 1100_1 perform communication by TDD or FDD, and TRP 2 labeled 1101_2 and NR-UE 1 labeled 1100_1 perform communication by TDD or FDD," and the time when "TRP 2 labeled 1101_2 transmits a downlink signal and NR-UE 1 labeled 1100_1 transmits an uplink signal to TRP 1 labeled 1101_1" in FIG. 42C is not limited to the example in FIG. 42C, and any arrangement is possible.

Incidentally, a case where TRP 2 labeled 1101_2 and NR-UE 1 labeled 1100_1 perform communication by TDD or FDD in the second time in FIG. 42C has been described with reference to FIG. 40A and FIG. 40B.

In FIG. 41A, FIG. 41B, and FIG. 41C, "signal 3611_1 for TRP 2 labeled 1101_2" and "signal 4111_2 with a TDD or FDD communication scheme" transmitted by NR-UE 1 labeled 1100_1 may include, for example, the same data. Further, "signal 3611_1 for TRP 2 labeled 1101_2" and "signal 4111_2 with the TDD or FDD communication scheme" may be configured such that the content is the same although "the conditions are different such as in compressibility or in configuration." Additionally, "signal 3611_1 for TRP 2 labeled 1101_2" and "signal 4111_2 with the TDD or FDD communication scheme" may include partly same data. In this manner, URLLC may be achieved. Note that the configuration of "signal 3611_1 for TRP 2 labeled 1101_2" is not limited to the configurations in FIG. 41A, FIG. 41B, and FIG. 41C and may be the configurations described with reference to FIG. 36B, FIG. 36C, FIG. 36D, and FIG. 36E.

Further, in FIG. 41A, "signal 3601_1 for NR-UE 1 labeled 1100_1" and "signal 4101_2 with a TDD or FDD communication scheme" transmitted by TRP 1 labeled 1101_1 may include, for example, the same data. Further, "signal 3601_1 for NR-UE 1 labeled 1100_1" and "signal 4101_2 with the TDD or FDD communication scheme" may be configured such that the content is the same although "the conditions are different such as in compressibility or in configuration." Additionally, "signal 3601_1 for NR-UE 1 labeled 1100_1" and "signal 4101_2 with the TDD or FDD communication scheme" may include partly same data. In this manner, URLLC may be achieved. Note that the configuration of "signal 3601_1 for NR-UE 1 labeled 1100_1" is not limited to the configuration in FIG. 41A and may be the configurations described with reference to FIG. 36B, FIG. 36C, FIG. 36D, and FIG. 36E.

In FIG. 41B, "signal 3601_1 for NR-UE 1 labeled 1100_1" transmitted by TRP 1 labeled 1101_1 and "signal 4121_2 with a TDD or FDD communication scheme" transmitted by TRP 2 labeled 1101_2 may include, for example, the same data. Further, "signal 3601_1 for NR-UE 1 labeled 1100_1" and "signal 4121_2 with the TDD or FDD communication scheme" may be configured such that the content is the same although "the conditions are different such as in compressibility or in configuration." Additionally, "signal 3601_1 for NR-UE 1 labeled 1100_1" and "signal 4121_2 with the TDD or FDD communication scheme" may include partly same data. In this manner, URLLC may be achieved. Note that the configuration of "signal 3601_1 for NR-UE 1 labeled 1100_1" is not limited to the configuration in FIG. 41B and may be the configurations described with reference to FIG. 36B, FIG. 36C, FIG. 36D, and FIG. 36E.

In FIG. 41C, "signal 3601_1 for NR-UE 1 labeled 1100_1" and "signal 4101_2 with a TDD or FDD communication scheme" transmitted by TRP 1 labeled 1101_1, and "signal 4121_2 with a TDD or FDD communication scheme" transmitted by TRP 2 labeled 1101_2 may include, for example, the same data. Further, "signal 3601_1 for NR-UE 1 labeled 1100_1," "signal 4101_2 with the TDD or FDD communication scheme," and "signal 4121_2 with the TDD or FDD communication scheme" and may be configured such that the content is the same although "the conditions are different such as in compressibility or in configuration." Additionally, "signal 3601_1 for NR-UE 1 labeled 1100_1," "signal 4101_2 with the TDD or FDD communication scheme," and "signal 4121_2 with the TDD or FDD communication scheme" may include partly same data. In this manner, URLLC may be achieved. Note that the configuration of "signal 3601_1 for NR-UE 1 labeled 1100_1" is not limited to the configuration in FIG. 41C and may be the configurations described with reference to FIG. 36B, FIG. 36C, FIG. 36D, and FIG. 36E.

In FIG. 42A, FIG. 42B, and FIG. 42C, "signal 3611_1 for TRP 2 labeled 1101_2," "signal 4111_2 with a TDD or FDD communication scheme," and "signal 3611_3 for TRP 1 labeled 1101_1" transmitted by NR-UE 1 labeled 1100_1 may include, for example, the same data. Further, "signal 3611_1 for TRP 2 labeled 1101_2," "signal 4111_2 with the TDD or FDD communication scheme," and "signal 3611_3 for TRP 1 labeled 1101_1" transmitted by NR-UE 1 labeled 1100_1 may be configured such that the content is the same although "the conditions are different such as in compressibility or in configuration." Additionally, "signal 3611_1 for TRP 2 labeled 1101_2," "signal 4111_2 with the TDD or FDD communication scheme," and "signal 3611_3 for TRP 1 labeled 1101_1" transmitted by NR-UE 1 labeled 1100_1 may include partly same data. In this manner, URLLC may be achieved. Note that the configurations of "signal 3611_1 for TRP 2 labeled 1101_2" and "signal 3611_3 for TRP 1 labeled 1101_1" are not limited to the configurations in FIG. 42A, FIG. 42B, and FIG. 42C and may be the configurations described with reference to FIG. 36B, FIG. 36C, FIG. 36D, and FIG. 36E.

Further, in FIG. 42A, "signal 3601_1 for NR-UE 1 labeled 1100_1" and "signal 4101_2 with a TDD or FDD communication scheme" transmitted by TRP 1 labeled 1101_1, and "signal 3621_3 for NR-UE 1 labeled 1100_1" transmitted by TRP 2 labeled 1101_2 may include, for example, the same data. Further, "signal 3601_1 for NR-UE 1 labeled 1100_1," "signal 4101_2 with the TDD or FDD communication scheme," and "signal 3621_3 for NR-UE 1 labeled 1100_1" may be configured such that the content is the same although "the conditions are different such as in compressibility or in configuration." Additionally, "signal 3601_1 for NR-UE 1 labeled 1100_1," "signal 4101_2 with the TDD or FDD communication scheme," and "signal 3621_3 for NR-UE 1 labeled 1100_1" may include partly same data. In this manner, URLLC may be achieved. Note that the configurations of "signal 3601_1 for NR-UE 1 labeled 1100_1" and "signal 3621_3 for NR-UE 1 labeled 1100_1" are not limited to the configuration in FIG. 42A and may be the configurations described with reference to FIG. 36B, FIG. 36C, FIG. 36D, and FIG. 36E.

Further, in FIG. 42B, "signal 3601_1 for NR-UE 1 labeled 1100_1" transmitted by TRP 1 labeled 1101_1, and "signal 4121_2 with a TDD or FDD communication scheme" and "signal 3621_3 for NR-UE 1 labeled 1100_1" transmitted by TRP 2 labeled 1101_2 may include, for example, the same data. Further, "signal 3601_1 for NR-UE 1 labeled 1100_1," "signal 4121_2 with the TDD or FDD communication scheme," and "signal 3621_3 for NR-UE 1 labeled 1100_1" may be configured such that the content is the same although "the conditions are different such as in compressibility or in configuration." Additionally, "signal 3601_1 for NR-UE 1 labeled 1100_1," "signal 4121_2 with the TDD or FDD communication scheme," and "signal 3621_3 for NR-UE 1 labeled 1100_1" may include partly same data. In this manner, URLLC may be achieved. Note that the configurations of "signal 3601_1 for NR-UE 1 labeled 1100_1" and "signal 3621_3 for NR-UE 1 labeled 1100_1" are not limited to the configuration in FIG. 42B and may be the configurations described with reference to FIG. 36B, FIG. 36C, FIG. 36D, and FIG. 36E.

In FIG. 42C, "signal 3601_1 for NR-UE 1 labeled 1100_1" and "signal 4101_2 with a TDD or FDD communication scheme" transmitted by TRP 1 labeled 1101_1, and "signal 4121_2 with a TDD or FDD communication scheme" and "signal 3621_3 for NR-UE 1 labeled 1100_1" transmitted by TRP 2 labeled 1101_2 may include, for example, the same data. Further, "signal 3601_1 for NR-UE 1 labeled 1100_1," "signal 4101_2 with the TDD or FDD communication scheme," "signal 4121_2 with the TDD or FDD communication scheme," and "signal 3621_3 for NR-UE 1 labeled 1100_1" may be configured such that the content is the same although "the conditions are different such as in compressibility or in configuration." Additionally, "signal 3601_1 for NR-UE 1 labeled 1100_1," "signal 4101_2 with the TDD or FDD communication scheme," "signal 4121_2 with the TDD or FDD communication scheme," and "signal 3621_3 for NR-UE 1 labeled 1100_1" may include partly same data. In this manner, URLLC may be achieved. Note that the configurations of "signal 3601_1 for NR-UE 1 labeled 1100_1" and "signal 3621_3 for NR-UE 1 labeled 1100_1" are not limited to the configuration in FIG. 42C and may be the configurations described with reference to FIG. 36B, FIG. 36C, FIG. 36D, and FIG. 36E.

Note that, in FIG. 34A, FIG. 35A, and FIG. 40A, NR-UE 1 labeled 1100_1 communicates with TRP 1 labeled 1101_1 and TRP 2 labeled 1101_2, but NR-UE 1 labeled 1100_1 may communicate with two or more TRPs. For example, when TRP 3 is present, there may be the time when "TRP 3 transmits a signal addressed to NR-UE 1 labeled 1100_1 and NR-UE 1 labeled 1100_1 transmits a signal to the TRP." The same applies to a case where another TRP is present.

Another example will be further described.

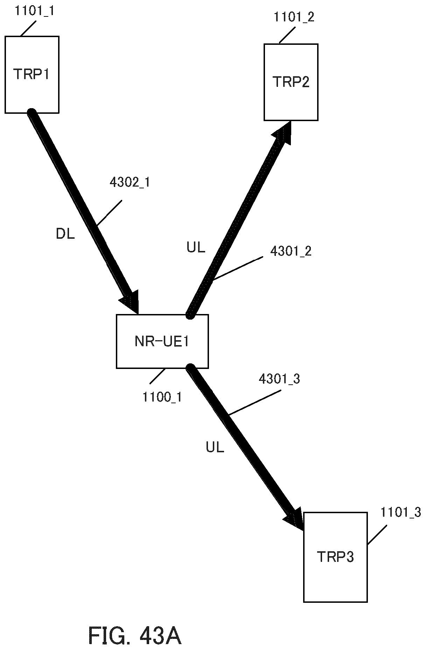

FIG. 43A illustrates an exemplary radio system in the present embodiment. In FIG. 43A, TRP 1 labeled 1101_1 transmits a modulation signal addressed to NR-UE 1 labeled 1100_1 (Downlink (DL)) (4302_1).

NR-UE 1 labeled 1100_1 then receives the modulation signal addressed to NR-UE 1 that has been transmitted by TRP 1 labeled 1101_1.

Moreover, NR-UE 1 labeled 1100_1 transmits a modulation signal addressed to TRP 2 labeled 1101_2 (Uplink (UL)) (4301_2).

TRP 2 labeled 1101_2 then receives the modulation signal addressed to TRP 2 labeled 1101_2 that has been transmitted by NR-UE 1 labeled 1100_1.

NR-UE 1 labeled 1100_1 transmits a modulation signal addressed to TRP 3 labeled 1101_3 (Uplink (UL)) (4301_3).

TRP 3 labeled 1101_3 then receives the modulation signal addressed to TRP 3 labeled 1101_3 that has been transmitted by NR-UE 1 labeled 1100_1.

In addition, there may be other uplink transmission/reception and downlink transmission/reception.

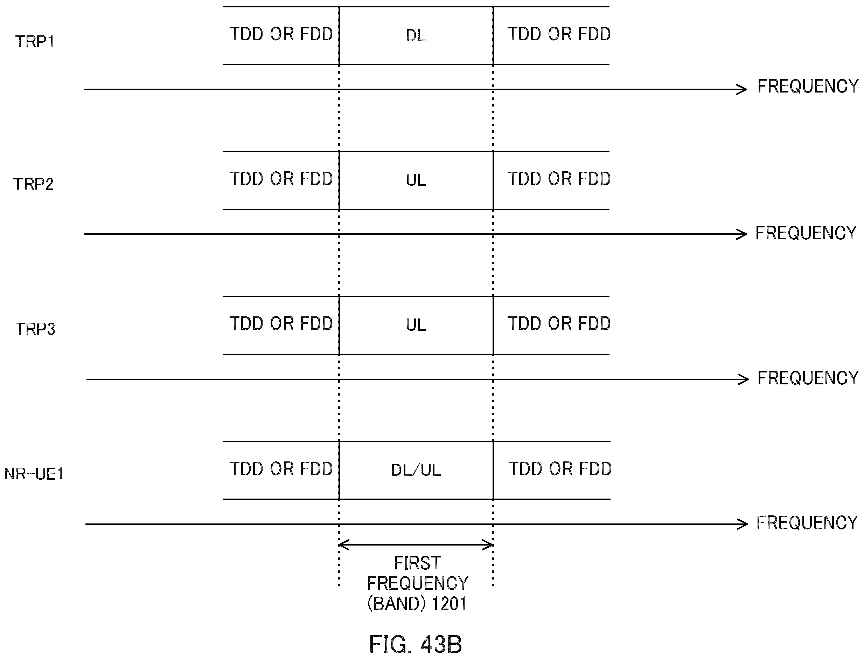

FIG. 43B illustrates exemplary communication statuses of "TRP 1 labeled 1101_1, TRP 2 labeled 1101_2, TRP 3 labeled 1101_3, and NR-UE 1 labeled 1100_1" in a frequency axis in FIG. 43A. Note that, in FIG. 43B, a horizontal axis represents the frequency, and the components that operate in the same manner as the components in FIG. 12 are denoted by the same reference numerals.

TRP 1 labeled 1101_1 uses first frequency (band) 1201 to transmit a modulation signal addressed to NR-UE 1 labeled 1100_1. NR-UE 1 labeled 1100_1 receives this signal, accordingly. Note that, as in FIG. 43B, TRP 1 labeled 1101_1 may perform TDD communication or FDD communication at a frequency (band) other than first frequency (band) 1201, or unlike FIG. 43B, TRP 1 labeled 1101_1 need not perform communication at a frequency (band) other than first frequency (band) 1201.

TRP 2 labeled 1101_2 uses first frequency (band) 1201 to receive a modulation signal for uplink. Accordingly, NR-UE 1 labeled 1100_1 transmits, to TRP 2 labeled 1101_2, the modulation signal for uplink using first frequency (band) 1201. Note that, as in FIG. 43B, TRP 2 labeled 1101_2 may perform TDD communication or FDD communication at a frequency (band) other than first frequency (band) 1201, or unlike FIG. 43B, need not perform communication at a frequency (band) other than first frequency (band) 1201.

TRP 3 labeled 1101_3 uses first frequency (band) 1201 to receive a modulation signal for uplink. Accordingly, NR-UE 1 labeled 1100_1 transmits, to TRP 3 labeled 1101_3, the modulation signal for uplink using first frequency (band) 1201. Note that, as in FIG. 43B, TRP 3 labeled 1101_3 may perform TDD communication or FDD communication at a frequency (band) other than first frequency (band) 1201, or unlike FIG. 43B, need not perform communication at a frequency (band) other than first frequency (band) 1201.

NR-UE 1 labeled 1100_1 uses first frequency (band) 1201 to receive a modulation signal for downlink and to transmit a modulation signal for uplink. At this time, for example, TRP 2 labeled 1101_2 receives the modulation signal at first frequency (band) 1201 transmitted by NR-UE 1 labeled 1100_1. Further, TRP 3 labeled 1101_3 receives the modulation signal at first frequency (band) 1201 transmitted by NR-UE 1 labeled 1100_1. Meanwhile, NR-UE 1 labeled 1100_1 receives the modulation signal at first frequency (band) 1201 transmitted by TRP 1 labeled 1101_1. Note that, as in FIG. 43B, NR-UE 1 labeled 1100_1 may perform TDD communication or FDD communication at a frequency (band) other than first frequency (band) 1201. Unlike FIG. 43B, NR-UE 1 labeled 1100_1 need not perform communication at a frequency (band) other than first frequency (band) 1201.

In FIG. 43B, a case has been described where the frequency for "downlink" and the frequency for "uplink" are the same frequency (band), but the present embodiment is not limited to this case, and the frequency for "downlink" and the frequency for "uplink" may be the same frequency (band) partly. Descriptions of TDD and FDD will be omitted because they have already been each described.

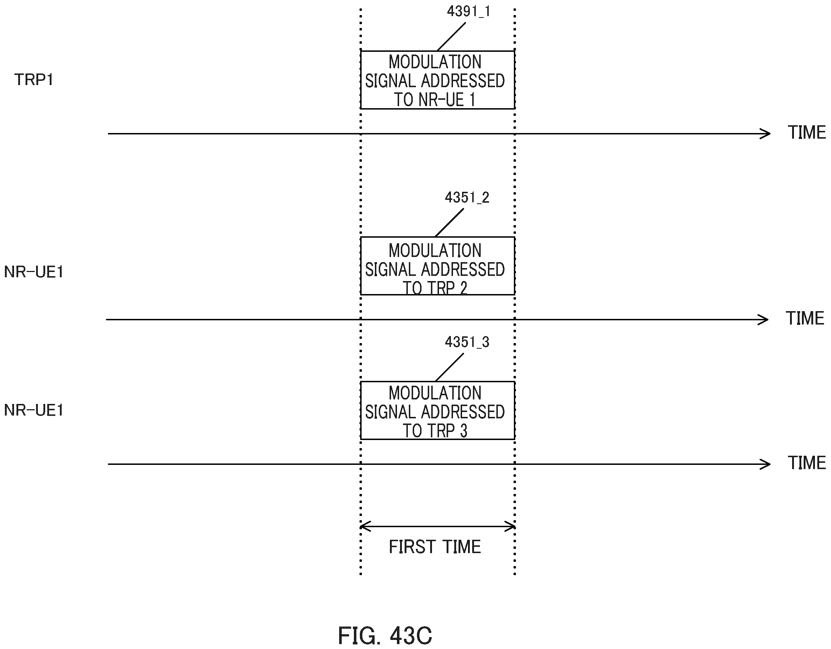

FIG. 43C illustrates transmission statuses of "TRP 1 labeled 1101_1 and NR-UE 1 labeled 1100_1" in a case where "TRP 1 labeled 1101_1, TRP 2 labeled 1101_2, TRP 3 labeled 1101_3, and NR-UE 1 labeled 1100_1" in FIG. 43A use the frequency as in FIG. 43B. Note that, in FIG. 43C, a horizontal axis represents time.

As in FIG. 43C, NR-UE 1 labeled 1100_1 transmits modulation signal 4351_2 addressed to TRP 2 labeled 1101_2 and modulation signal 4351_3 addressed to TRP 3 labeled 1101_3 in the first time. Note that, as described in FIG. 43B, "modulation signal 4351_2 addressed to TRP 2 labeled 1101_2 and modulation signal 4351_3 addressed to TRP 3 labeled 1101_3" are present at first frequency (band) 1201. Therefore, NR-UE 1 labeled 1100_1 performs Spatial Division Multiplexing (SDM).

Further, TRP 1 labeled 1101_1 transmits modulation signal 4391_1 addressed to NR-UE 1 labeled 1100_1 in the first time. Note that, as described in FIG. 43B, modulation signal 4391_1 addressed to NR-UE 1 labeled 1100_1 is present at first frequency (band) 1201.

FIG. 43C is an example, however, modulation signal 4351_2 addressed to TRP 2 labeled 1101_2 may be present other than in the first time. In addition, modulation signal 4351_3 addressed to TRP 3 labeled 1101_3 may be present other than in the first time. Furethermore, modulation signal 4391_1 addressed to NR-UE 1 labeled 1100_1 may be present other than in the first time.

In the manner described above, the NR-UE transmits a modulation signal by SDM and communicates with a TRP, which brings about an effect of improving the transmission quality.

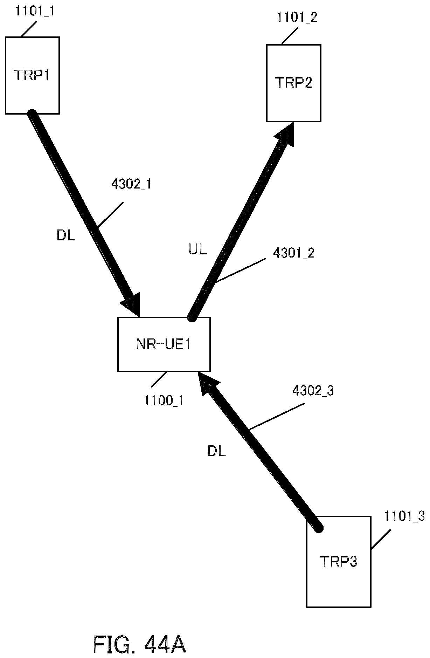

FIG. 44A illustrates an exemplary radio system in the present embodiment. In FIG. 44A, TRP 1 labeled 1101_1 transmits a modulation signal addressed to NR-UE 1 labeled 1100_1 (Downlink (DL)) (4302_1).

NR-UE 1 labeled 1100_1 then receives the modulation signal addressed to NR-UE 1 that has been transmitted by TRP 1 labeled 1101_1.

Moreover, NR-UE 1 labeled 1100_1 transmits a modulation signal addressed to TRP 2 labeled 1101_2 (Uplink (UL)) (4301_2).

TRP 2 labeled 1101_2 then receives the modulation signal addressed to TRP 2 labeled 1101_2 that has been transmitted by NR-UE 1 labeled 1100_1.

TRP 3 labeled 1101_3 transmits a modulation signal addressed to NR-UE 1 labeled 1100_1 (Downlink (DL)) (4302_3).

NR-UE 1 labeled 1100_1 then receives the modulation signal addressed to NR-UE 1 labeled 1100_1 that has been transmitted by TRP 3 labeled 1101_3.

In addition, there may be other uplink transmission/reception and downlink transmission/reception.

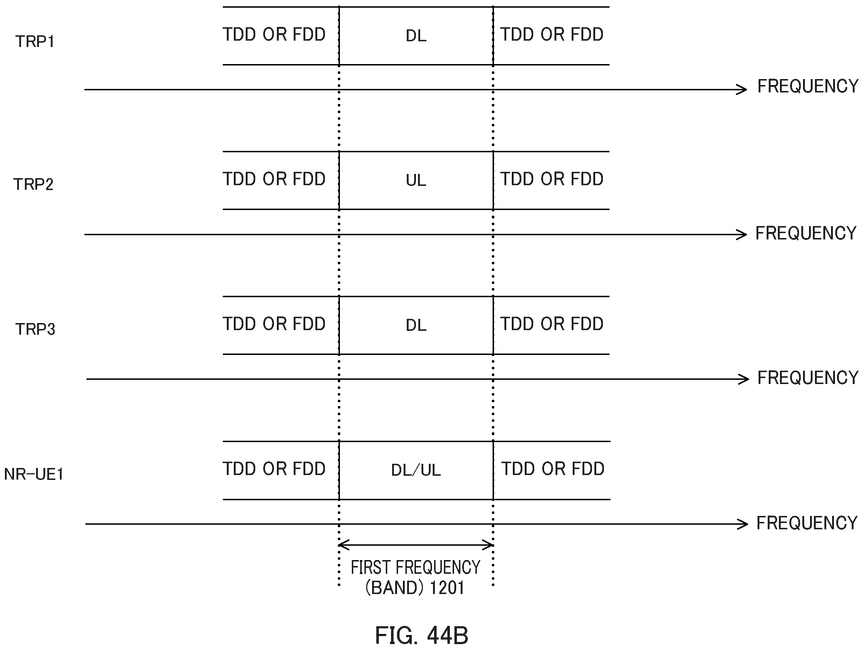

FIG. 44B illustrates exemplary communication statuses of "TRP 1 labeled 1101_1, TRP 2 labeled 1101_2, TRP 3 labeled 1101_3,and NR-UE 1 labeled 1100_1" in a frequency axis in FIG. 44A. Note that, in FIG. 44B, a horizontal axis represents the frequency, and the components that operate in the same manner as the components in FIG. 12 are denoted by the same reference numerals.

TRP 1 labeled 1101_1 uses first frequency (band) 1201 to transmit a modulation signal addressed to NR-UE 1 labeled 1100_1. NR-UE 1 labeled 1100_1 receives this signal, accordingly. Note that, as in FIG. 44B, TRP 1 labeled 1101_1 may perform TDD communication or FDD communication at a frequency (band) other than first frequency (band) 1201, or unlike FIG. 44B, TRP 1 labeled 1101_1 need not perform communication at a frequency (band) other than first frequency (band) 1201.

TRP 2 labeled 1101_2 uses first frequency (band) 1201 to receive a modulation signal for uplink. Accordingly, NR-UE 1 labeled 1100_1 transmits, to TRP 2 labeled 1101_2, the modulation signal for uplink using first frequency (band) 1201. Note that, as in FIG. 44B, TRP 2 labeled 1101_2 may perform TDD communication or FDD communication at a frequency (band) other than first frequency (band) 1201, or unlike FIG. 44B, need not perform communication at a frequency (band) other than first frequency (band) 1201.

TRP 3 labeled 1101_3 uses first frequency (band) 1201 to transmit a modulation signal addressed to NR-UE 1 labeled 1100_1. NR-UE 1 labeled 1100_1 receives this signal, accordingly. Note that, as in FIG. 44B, TRP 3 labeled 1101_3 may perform TDD communication or FDD communication at a frequency (band) other than first frequency (band) 1201, or unlike FIG. 44B, TRP 3 labeled 1101_3 need not perform communication at a frequency (band) other than first frequency (band) 1201.

NR-UE 1 labeled 1100_1 uses first frequency (band) 1201 to receive a modulation signal for downlink and to transmit a modulation signal for uplink. At this time, for example, TRP 2 labeled 1101_2 receives the modulation signal at first frequency (band) 1201 transmitted by NR-UE 1 labeled 1100_1. Meanwhile, NR-UE 1 labeled 1100_1 receives the modulation signal at first frequency (band) 1201 transmitted by TRP 1 labeled 1101_1. NR-UE 1 labeled 1100_1 then receives the modulation signal at first frequency (band) 1201 transmitted by TRP 3 labeled 1101_3. Note that, as in FIG. 44B, NR-UE 1 labeled 1100_1 may perform TDD communication or FDD communication at a frequency (band) other than first frequency (band) 1201. Unlike FIG. 44B, NR-UE 1 labeled 1100_1 need not perform communication at a frequency (band) other than first frequency (band) 1201.

In FIG. 44B, a case has been described where the frequency for "downlink" and the frequency for "uplink" are the same frequency (band), but the present embodiment is not limited to this case, and the frequency for "downlink" and the frequency for "uplink" may be the same frequency (band) partly. Descriptions of TDD and FDD will be omitted because they have already been each described.

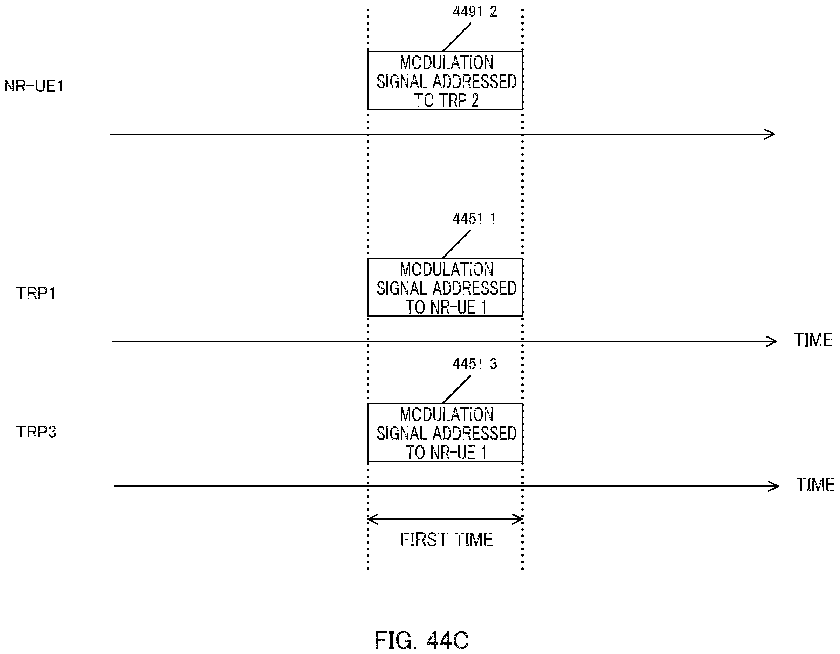

FIG. 44C illustrates transmission statuses of "NR-UE 1 labeled 1100_1, TRP 1 labeled 1101_1, and TRP 3 labeled 1101_3" in a case where "TRP 1 labeled 1101_1, TRP 2 labeled 1101_2, TRP 3 labeled 1101_3, and NR-UE 1 labeled 1100_1" in FIG. 44A use the frequency as in FIG. 44B. Note that, in FIG. 44C, a horizontal axis represents time.

As in FIG. 44C, TRP 1 labeled 1101_1 transmits modulation signal 4451_1 addressed to NR-UE 1 labeled 1100_1 in the first time. Meanwhile, TRP 3 labeled 1101_3 transmits modulation signal 4451_3 addressed to NR-UE 1 labeled 1100_1 in the first time. Note that, as described in FIG. 44B, "modulation signal 4451_1 addressed to NR-UE 1 labeled 1100_1 and modulation signal 4451_3 addressed to NR-UE 1 labeled 1100_1" are present at first frequency (band) 1201. That is, Spatial Division Multiplexing (SDM) is performed.

Further, NR-UE 1 labeled 1100_1 transmits modulation signal 4491_2 addressed to TRP 2 labeled 1101_2 in the first time. Note that, as described in FIG. 44B, modulation signal 4491_2 addressed to TRP 2 labeled 1101_2 is present at first frequency (band) 1201.

FIG. 44C is an example, however, modulation signal 4451_1 addressed to NR-UE 1 labeled 1100_1 may be present other than in the first time. In addition, modulation signal 4451_3 addressed to NR-UE 1 labeled 1100_1 may be present other than in the first time. Furethermore, modulation signal 4491_2 addressed to TRP 2 labeled 1101_2 may be present other than in the first time.

In the manner described above, a modulation signal is transmitted by SDM and communication between the NR-UE and a TRP is thus performed, which brings about an effect of improving the transmission quality.

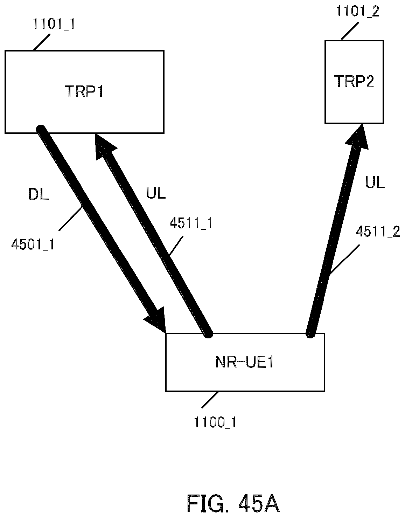

FIG. 45A illustrates an exemplary radio system in the present embodiment. In FIG. 45A, TRP 1 labeled 1101_1 transmits a modulation signal addressed to NR-UE 1 labeled 1100_1 (Downlink (DL)) (4501_1).

NR-UE 1 labeled 1100_1 then receives the modulation signal addressed to NR-UE 1 that has been transmitted by TRP 1 labeled 1101_1.

Moreover, NR-UE 1 labeled 1100_1 transmits a modulation signal addressed to TRP 1 labeled 1101_1 (Uplink (UL)) (4511_1).

TRP 1 labeled 1101_1 then receives the modulation signal addressed to TRP 1 labeled 1101_1 that has been transmitted by NR-UE 1 labeled 1100_1.

NR-UE 1 labeled 1100_1 transmits a modulation signal addressed to TRP 2 labeled 1101_2 (Uplink (UL)) (4511_2).

TRP 2 labeled 1101_2 then receives the modulation signal addressed to TRP 2 labeled 1101_2 that has been transmitted by NR-UE 1 labeled 1100_1.

In addition, there may be other uplink transmission/reception and downlink transmission/reception.

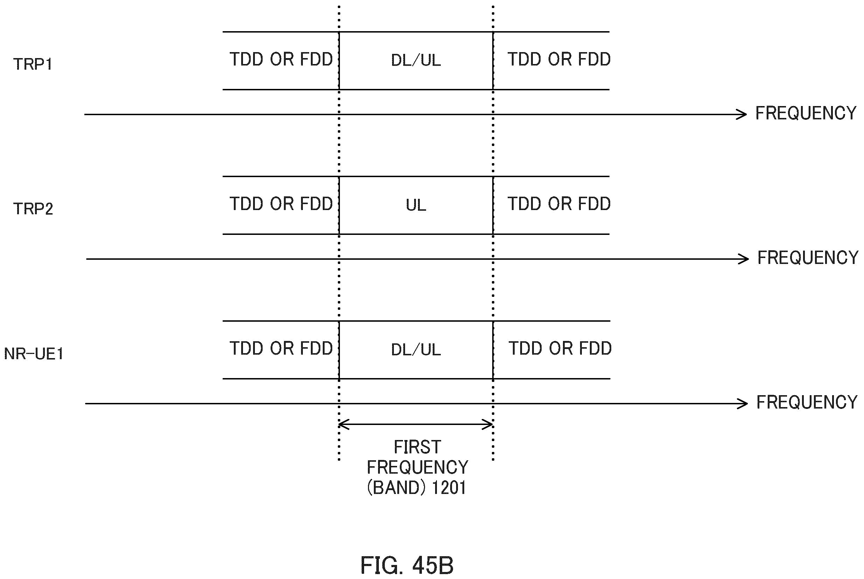

FIG. 45B illustrates exemplary communication statuses of "TRP 1 labeled 1101_1, TRP 2 labeled 1101_2, TRP 3 labeled 1101_3,and NR-UE 1 labeled 1100_1" in a frequency axis in FIG. 45A. Note that, in FIG. 45B, a horizontal axis represents the frequency, and the components that operate in the same manner as the components in FIG. 12 are denoted by the same reference numerals.

TRP 1 labeled 1101_1 uses first frequency (band) 1201 to transmit a modulation signal addressed to NR-UE 1 labeled 1100_1. NR-UE 1 labeled 1100_1 receives this signal, accordingly. Note that, as in FIG. 45B, TRP 1 labeled 1101_1 may perform TDD communication or FDD communication at a frequency (band) other than first frequency (band) 1201, or unlike FIG. 45B, TRP 1 labeled 1101_1 need not perform communication at a frequency (band) other than first frequency (band) 1201.

TRP 1 labeled 1101_1 uses first frequency (band) 1201 to receive a modulation signal for uplink. Accordingly, NR-UE 1 labeled 1100_1 transmits, to TRP 1 labeled 1101_1, the modulation signal for uplink using first frequency (band) 1201. Note that, as in FIG. 45B, TRP 2 labeled 1101_2 may perform TDD communication or FDD communication at a frequency (band) other than first frequency (band) 1201, or unlike FIG. 45B, need not perform communication at a frequency (band) other than first frequency (band) 1201.

TRP 2 labeled 1101_2 uses first frequency (band) 1201 to receive a modulation signal for uplink. Accordingly, NR-UE 1 labeled 1100_1 transmits, to TRP 2 labeled 1101_2, the modulation signal for uplink using first frequency (band) 1201. Note that, as in FIG. 45B, TRP 2 labeled 1101_2 may perform TDD communication or FDD communication at a frequency (band) other than first frequency (band) 1201, or unlike FIG. 45B, need not perform communication at a frequency (band) other than first frequency (band) 1201.

NR-UE 1 labeled 1100_1 uses first frequency (band) 1201 to receive a modulation signal for downlink and to transmit a modulation signal for uplink. At this time, for example, TRP 1 labeled 1101_1 receives the modulation signal at first frequency (band) 1201 transmitted by NR-UE 1 labeled 1100_1. TRP 1 labeled 1101_1 then receives the modulation signal at first frequency (band) 1201 transmitted by NR-UE 1 labeled 1100_1. Further, TRP 2 labeled 1101_2 receives the modulation signal at first frequency (band) 1201 transmitted by NR-UE 1 labeled 1100_1. Note that, as in FIG. 45B, NR-UE 1 labeled 1100_1 may perform TDD communication or FDD communication at a frequency (band) other than first frequency (band) 1201. Unlike FIG. 45B, NR-UE 1 labeled 1100_1 need not perform communication at a frequency (band) other than first frequency (band) 1201.

In FIG. 45B, a case has been described where the frequency for "downlink" and the frequency for "uplink" are the same frequency (band), but the present embodiment is not limited to this case, and the frequency for "downlink" and the frequency for "uplink" may be the same frequency (band) partly. Descriptions of TDD and FDD will be omitted because they have already been each described.

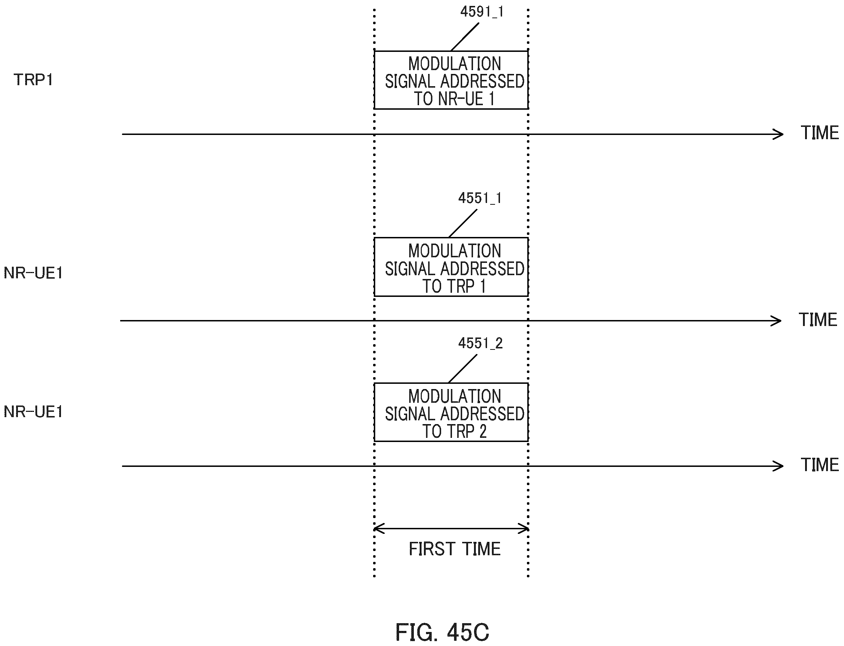

FIG. 45C illustrates transmission statuses of "TRP 1 labeled 1101_1 and NR-UE 1 labeled 1100_1" in a case where "TRP 1 labeled 1101_1, TRP 2 labeled 1101_2, and NR-UE 1 labeled 1100_1" in FIG. 45A use the frequency as in FIG. 45B. Note that, in FIG. 45C, a horizontal axis represents time.

As in FIG. 45C, NR-UE 1 labeled 1100_1 transmits modulation signal 4551_1 addressed to TRP 1 labeled 1101_1 and modulation signal 4551_2 addressed to TRP 2 labeled 1101_2 in the first time. Note that, as described in FIG. 45B, "modulation signal 4551_1 addressed to TRP 1 labeled 1101_1 and modulation signal 4551_2 addressed to TRP 2 labeled 1101_2" are present at first frequency (band) 1201. Therefore, NR-UE 1 labeled 1100_1 performs Spatial Division Multiplexing (SDM).

Further, TRP 1 labeled 1101_1 transmits modulation signal 4591_1 addressed to NR-UE 1 labeled 1100_1 in the first time. Note that, as described in FIG. 45B, modulation signal 4591_1 addressed to NR-UE 1 labeled 1100_1 is present at first frequency (band) 1201.

FIG. 45C is an example, however, modulation signal 4551_1 addressed to TRP 1 labeled 1101_1 may be present other than in the first time. In addition, modulation signal 4551_2 addressed to TRP 2 labeled 1101_2 may be present other than in the first time. Furethermore, modulation signal 4591_1 addressed to NR-UE 1 labeled 1100_1 may be present other than in the first time.

In the manner described above, the NR-UE transmits a modulation signal by SDM and communicates with a TRP, which brings about an effect of improving the transmission quality.

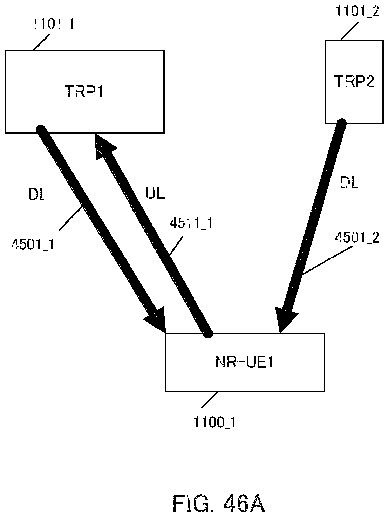

FIG. 46A illustrates an exemplary radio system in the present embodiment. In FIG. 46A, TRP 1 labeled 1101_1 transmits a modulation signal addressed to NR-UE 1 labeled 1100_1 (Downlink (DL)) (4501_1).

NR-UE 1 labeled 1100_1 then receives the modulation signal addressed to NR-UE 1 that has been transmitted by TRP 1 labeled 1101_1.

Moreover, NR-UE 1 labeled 1100_1 transmits a modulation signal addressed to TRP 1 labeled 1101_1 (Uplink (UL)) (4511_1).

TRP 1 labeled 1101_1 then receives the modulation signal addressed to TRP 1 labeled 1101_1 that has been transmitted by NR-UE 1 labeled 1100_1.

TRP 2 labeled 1101_2 transmits a modulation signal addressed to NR-UE 1 labeled 1100_1 (Downlink (DL)) (4501_2).

NR-UE 1 labeled 1100_1 then receives the modulation signal addressed to NR-UE 1 labeled 1100_1 that has been transmitted by TRP 2 labeled 1101_2.

In addition, there may be other uplink transmission/reception and downlink transmission/reception.

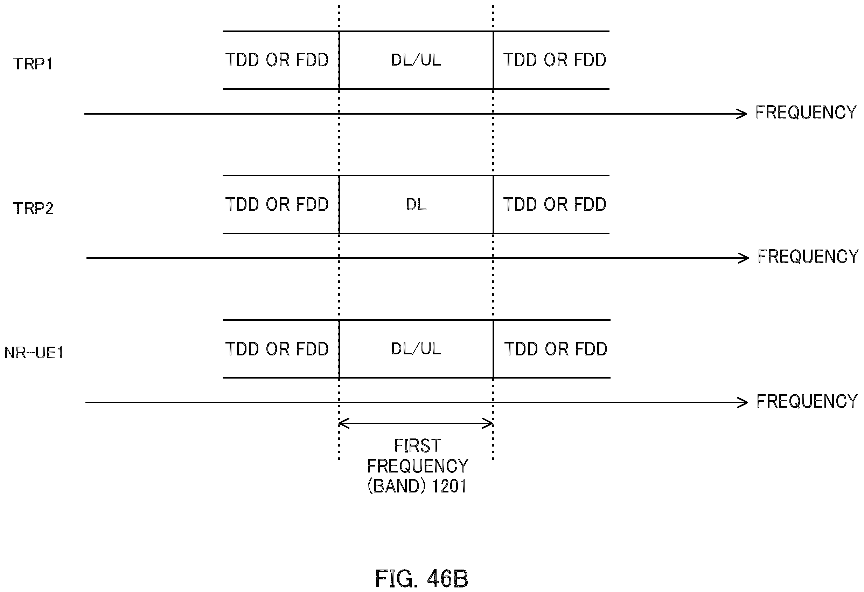

FIG. 46B illustrates exemplary communication statuses of "TRP 1 labeled 1101_1, TRP 2 labeled 1101_2, and NR-UE 1 labeled 1100_1" in a frequency axis in FIG. 46A. Note that, in FIG. 46B, a horizontal axis represents the frequency, and the components that operate in the same manner as the components in FIG. 12 are denoted by the same reference numerals.

TRP 1 labeled 1101_1 uses first frequency (band) 1201 to transmit a modulation signal addressed to NR-UE 1 labeled 1100_1. NR-UE 1 labeled 1100_1 receives this signal, accordingly. Note that, as in FIG. 46B, TRP 1 labeled 1101_1 may perform TDD communication or FDD communication at a frequency (band) other than first frequency (band) 1201, or unlike FIG. 46B, TRP 1 labeled 1101_1 need not perform communication at a frequency (band) other than first frequency (band) 1201.

TRP 1 labeled 1101_1 uses first frequency (band) 1201 to receive a modulation signal for uplink. Accordingly, NR-UE 1 labeled 1100_1 transmits, to TRP 1 labeled 1101_1, the modulation signal for uplink using first frequency (band) 1201.

TRP 2 labeled 1101_2 uses first frequency (band) 1201 to transmit a modulation signal addressed to NR-UE 1 labeled 1100_1. NR-UE 1 labeled 1100_1 receives this signal, accordingly. Note that, as in FIG. 46B, TRP 2 labeled 1101_2 may perform TDD communication or FDD communication at a frequency (band) other than first frequency (band) 1201, or unlike FIG. 46B, TRP 2 labeled 1101_2 need not perform communication at a frequency (band) other than first frequency (band) 1201.

NR-UE 1 labeled 1100_1 uses first frequency (band) 1201 to receive a modulation signal for downlink and to transmit a modulation signal for uplink. At this time, for example, TRP 1 labeled 1101_1 receives the modulation signal at first frequency (band) 1201 transmitted by NR-UE 1 labeled 1100_1. Moreover, NR-UE 1 labeled 1100_1 receives the modulation signal at first frequency (band) 1201 transmitted by TRP 1 labeled 1101_1. NR-UE 1 labeled 1100_1 then receives the modulation signal at first frequency (band) 1201 transmitted by TRP 2 labeled 1101_2. Note that, as in FIG. 46B, NR-UE 1 labeled 1100_1 may perform TDD communication or FDD communication at a frequency (band) other than first frequency (band) 1201. Unlike FIG. 46B, NR-UE 1 labeled 1100_1 need not perform communication at a frequency (band) other than first frequency (band) 1201.

In FIG. 46B, a case has been described where the frequency for "downlink" and the frequency for "uplink" are the same frequency (band), but the present embodiment is not limited to this case, and the frequency for "downlink" and the frequency for "uplink" may be the same frequency (band) partly. Descriptions of TDD and FDD will be omitted because they have already been each described.

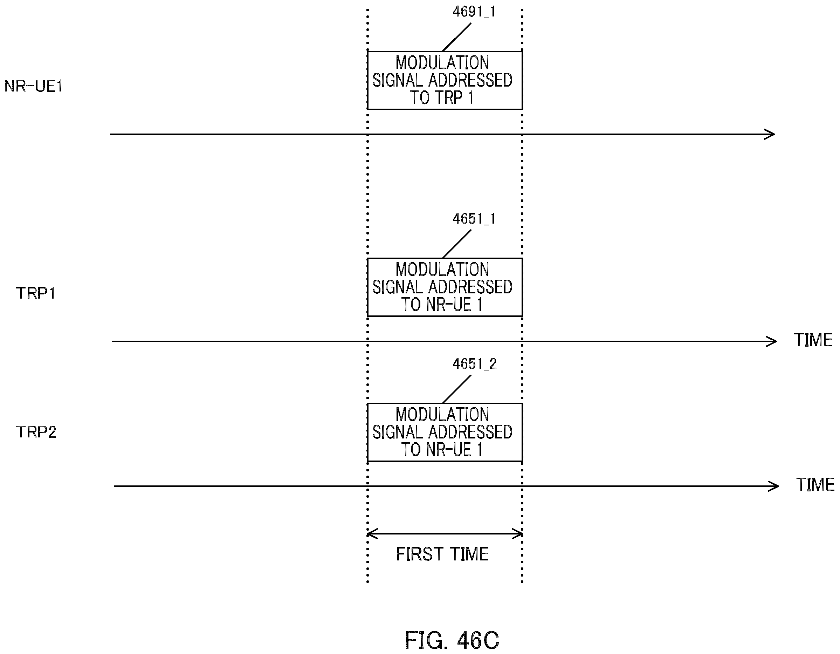

FIG. 46C illustrates transmission statuses of "NR-UE 1 labeled 1100_1 and TRP 1 labeled 1101_1" in a case where "TRP 1 labeled 1101_1, TRP 2 labeled 1101_2, and NR-UE 1 labeled 1100_1" in FIG. 46A use the frequency as in FIG. 46B. Note that, in FIG. 46C, a horizontal axis represents time.

As in FIG. 46C, TRP 1 labeled 1101_1 transmits modulation signal 4651_1 addressed to NR-UE 1 labeled 1100_1 in the first time. Meanwhile, TRP 2 labeled 1101_2 transmits modulation signal 4651_2 addressed to NR-UE 1 labeled 1100_1 in the first time. Note that, as described in FIG. 46B, "modulation signal 4651_1 addressed to NR-UE 1 labeled 1100_1 and modulation signal 4651_2 addressed to NR-UE 1 labeled 1100_1" are present at first frequency (band) 1201. That is, Spatial Division Multiplexing (SDM) is performed.

Further, NR-UE 1 labeled 1100_1 transmits modulation signal 4691_1 addressed to TRP 1 labeled 1101_1 in the first time. Note that, as described in FIG. 46B, modulation signal 4691_1 addressed to TRP 1 labeled 1101_1 is present at first frequency (band) 1201.

FIG. 46C is an example, however, modulation signal 4651_1 addressed to NR-UE 1 labeled 1100_1 may be present other than in the first time. In addition, modulation signal 4651_2 addressed to NR-UE 1 labeled 1100_1 may be present other than in the first time. Furethermore, modulation signal 4691_1 addressed to TRP 1 labeled 1101_1 may be present other than in the first time.

In the manner described above, a modulation signal is transmitted by SDM and communication between the NR-UE and a TRP is thus performed, which brings about an effect of improving the transmission quality.

Incidentally, the communication methods described in the present embodiment may be switched in time and thus performed. For example, a communication method to be performed may be switched in time in such a manner that any of the following communication methods is performed in the first time: "the communication method described with reference to FIG. 34A;" "the communication method described with reference to FIG. 35A;" "the communication method described with reference to FIG. 37A;" "the communication method described with reference to FIG. 38A;" "the communication method described with reference to FIG. 40A;" "the communication method described with reference to FIG. 43A;" "the communication method described with reference to FIG. 44A;" "the communication method described with reference to FIG. 45A;" "the communication method described with reference to FIG. 46A;" and "the communication method described in another embodiment," and then, a communication method different from the communication method performed in the first time is selected from the following communication methods: "the communication method described with reference to FIG. 34A;" "the communication method described with reference to FIG. 35A;" "the communication method described with reference to FIG. 37A;" "the communication method described with reference to FIG. 38A;" "the communication method described with reference to FIG. 40A;" "the communication method described with reference to FIG. 43A;" "the communication method described with reference to FIG. 44A;" "the communication method described with reference to FIG. 45A;" "the communication method described with reference to FIG. 46A;" and "the communication method described in another embodiment," and is performed in the second time.

Note that communication methods to be switched in time are not limited to these examples.

Incidentally, the communication methods described in the present embodiment may be switched by frequency and thus performed. For example, a communication method to be performed may be switched by frequency in such a manner that any of the following communication methods is performed at frequency (band) A: "the communication method described with reference to FIG. 34A;" "the communication method described with reference to FIG. 35A;" "the communication method described with reference to FIG. 37A;" "the communication method described with reference to FIG. 38A;" "the communication method described with reference to FIG. 40A;" "the communication method described with reference to FIG. 43A;" "the communication method described with reference to FIG. 44A;" "the communication method described with reference to FIG. 45A;" "the communication method described with reference to FIG. 46A;" and "the communication method described in another embodiment," and then, a communication method different from the communication method performed at frequency (band) A is selected from the following communication methods: "the communication method described with reference to FIG. 34A;" "the communication method described with reference to FIG. 35A;" "the communication method described with reference to FIG. 37A;" "the communication method described with reference to FIG. 38A;" "the communication method described with reference to FIG. 40A;" "the communication method described with reference to FIG. 43A;" "the communication method described with reference to FIG. 44A;" "the communication method described with reference to FIG. 45A;" "the communication method described with reference to FIG. 46A;" and "the communication method described in another embodiment," and is performed at frequency (band) B.

Note that communication methods to be switched by frequency are not limited to these examples.

Since the configuration of each apparatus in the present embodiment has been described in another embodiment, the description thereof will be omitted. However, the configuration of each apparatus is not limited to the configuration that has already been described. Further, the communication methods that have been described in the present embodiment are exemplary and may be combined with another embodiment and implemented in a modified manner.

(Embodiment 5)

In Embodiment 5, a variation of Embodiment 1 and the like will be described. Note that, since configurations, basic operations, and the like of a gNB and an NR-UE have been described in Embodiment 1, description thereof will be omitted here.

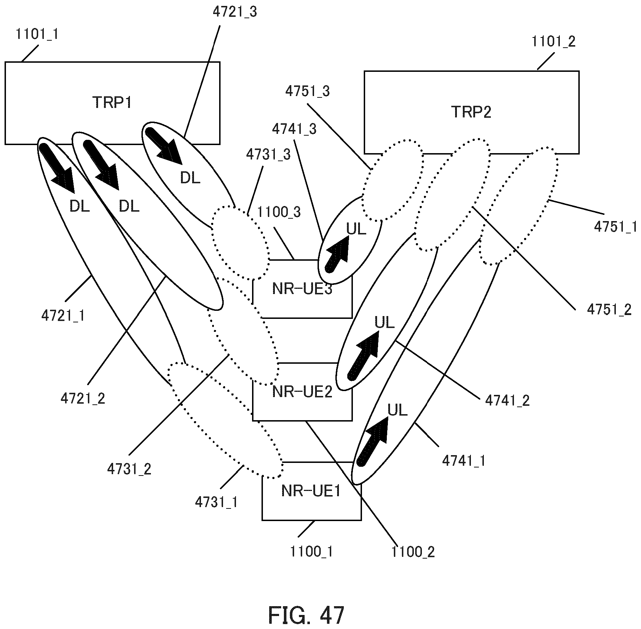

FIG. 47 illustrates an exemplary radio system in the present embodiment. As illustrated in FIG. 47, there are TRP 1 labeled 1101_1, TRP 2 labeled 1101_2, NR-UE 1 labeled 1100_1, NR-UE 2 labeled 1100_2, and NR-UE 3 labeled 1100_3, for example. Note that, in FIG. 47, the components that operate in the same manner as the components in FIG. 11 are denoted by the same reference numerals, and some descriptions thereof will be omitted.

In FIG. 47, TRP 1 labeled 1101_1 generates transmission beam 4721_1 and uses transmission beam 4721_1 to transmit a modulation signal addressed to NR-UE 1 labeled 1100_1 (Downlink (DL)).

NR-UE 1 labeled 1100_1 then generates received beam 4731_1 and uses received beam 4731_1 to receive the modulation signal addressed to NR-UE 1 that has been transmitted by TRP 1 labeled 1101_1.

Moreover, NR-UE 1 labeled 1100_1 generates transmission beam 4741_1 and uses transmission beam 4741_1 to transmit a modulation signal addressed to TRP 2 labeled 1101_2 (Uplink (UL)).

TRP 2 labeled 1101_2 then generates received beam 4751_1 and uses received beam 4751_1 to receive the modulation signal addressed to TRP 2 labeled 1101_2 that has been transmitted by NR-UE 1 labeled 1100_1.

TRP 1 labeled 1101_1 generates transmission beam 4721_2 and uses transmission beam 4721_2 to transmit a modulation signal addressed to NR-UE 2 labeled 1100_2 (Downlink (DL)).

NR-UE 2 labeled 1100_2 then generates received beam 4731_2 and uses received beam 4731_2 to receive the modulation signal addressed to NR-UE 2 that has been transmitted by TRP 1 labeled 1101_1.

Moreover, NR-UE 2 labeled 1100_2 generates transmission beam 4741_2 and uses transmission beam 4741_2 to transmit a modulation signal addressed to TRP 2 labeled 1101_2 (Uplink (UL)).

TRP 2 labeled 1101_2 then generates received beam 4751_2 and uses received beam 4751_2 to receive the modulation signal addressed to TRP 2 labeled 1101_2 that has been transmitted by NR-UE 2 labeled 1100_2.

TRP 1 labeled 1101_1 generates transmission beam 4721_3 and uses transmission beam 4721_3 to transmit a modulation signal addressed to NR-UE 3 labeled 1100_3 (Downlink (DL)).

NR-UE 3 labeled 1100_3 then generates received beam 4731_3 and uses received beam 4731_3 to receive the modulation signal addressed to NR-UE 3 that has been transmitted by TRP 1 labeled 1101_1.

Moreover, NR-UE 3 labeled 1100_3 generates transmission beam 4741_3 and uses transmission beam 4741_3 to transmit a modulation signal addressed to TRP 2 labeled 1101_2 (Uplink (UL)).

TRP 2 labeled 1101_2 then generates received beam 4751_3 and uses received beam 4751_3 to receive the modulation signal addressed to TRP 2 labeled 1101_2 that has been transmitted by NR-UE 3 labeled 1100_3.

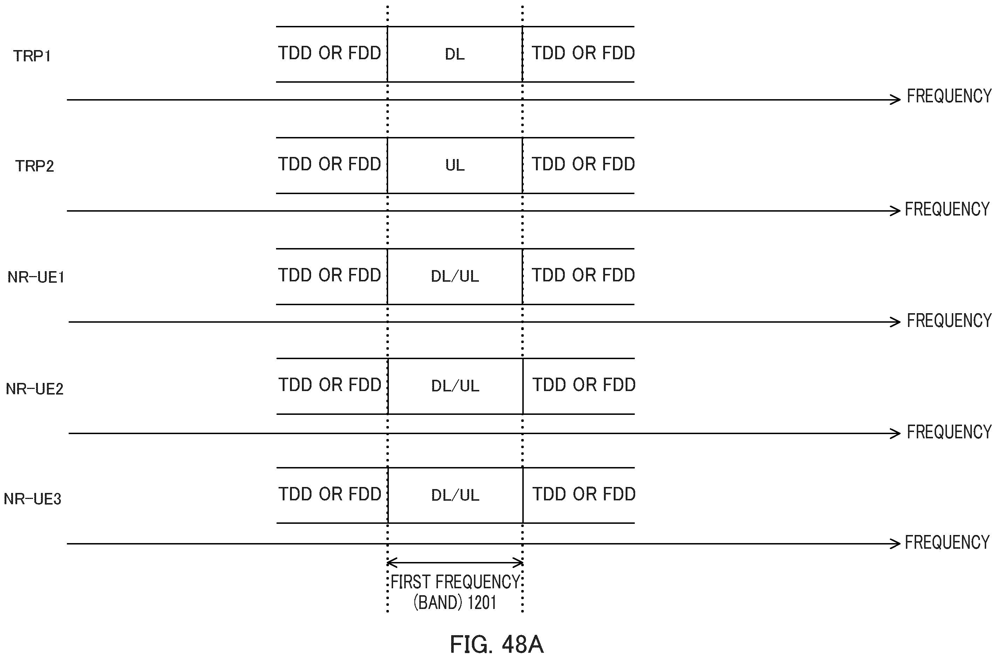

FIG. 48A illustrates exemplary communication statuses of "TRP 1 labeled 1101_1, TRP 2 labeled 1101_2, NR-UE 1 labeled 1100_1, NR-UE 2 labeled 1100_2, NR-UE 3 labeled 1100_3" in a frequency axis in FIG. 47. Note that, in FIG. 48A, a horizontal axis represents the frequency, and the components that operate in the same manner as the components in FIG. 12 are denoted by the same reference numerals.

TRP 1 labeled 1101_1 uses first frequency (band) 1201 to transmit a modulation signal for downlink. At this time, for example, NR-UE 1 labeled 1100_1, NR-UE 2 labeled 1100_2, and NR-UE 3 labeled 1100_3 receive the modulation signal at first frequency (band) 1201 transmitted by TRP 1 labeled 1101_1. Note that, as in FIG. 48A, TRP 1 labeled 1101_1 may perform TDD communication or FDD communication at a frequency (band) other than first frequency (band) 1201, or unlike FIG. 48A, need not perform communication at a frequency (band) other than first frequency (band) 1201.

TRP 2 labeled 1101_2 uses first frequency (band) 1201 to receive a modulation signal for uplink. At this time, TRP 2 labeled 1101_2 receives the "modulation signal transmitted by NR-UE 1 labeled 1100_1, the modulation signal transmitted by NR-UE 2 labeled 1100_2, and the modulation signal transmitted by NR-UE 3 labeled 1100_3" at first frequency (band) 1201. Note that, as in FIG. 48A, TRP 2 labeled 1101_2 may perform TDD communication or FDD communication at a frequency (band) other than first frequency (band) 1201, or unlike FIG. 48A, TRP 2 labeled 1101_2 need not perform communication at a frequency (band) other than first frequency (band) 1201.

NR-UE 1 labeled 1100_1 uses first frequency (band) 1201 to receive a modulation signal for downlink and to transmit a modulation signal for uplink. At this time, for example, TRP 2 labeled 1101_2 receives the modulation signal at first frequency (band) 1201 transmitted by NR-UE 1 labeled 1100_1. NR-UE 1 labeled 1100_1 then receives the modulation signal at first frequency (band) 1201 transmitted by TRP 1 labeled 1101_1. Note that, as in FIG. 48A, NR-UE 1 labeled 1100_1 may perform TDD communication or FDD communication at a frequency (band) other than first frequency (band) 1201. Unlike FIG. 48A, NR-UE 1 labeled 1100_1 need not perform communication at a frequency (band) other than first frequency (band) 1201.

NR-UE 2 labeled 1100_2 uses first frequency (band) 1201 to receive a modulation signal for downlink and to transmit a modulation signal for uplink. At this time, for example, TRP 2 labeled 1101_2 receives the modulation signal at first frequency (band) 1201 transmitted by NR-UE 2 labeled 1100_2. NR-UE 2 labeled 1100_2 then receives the modulation signal at first frequency (band) 1201 transmitted by TRP 1 labeled 1101_1. Note that, as in FIG. 48A, NR-UE 2 labeled 1100_2 may perform TDD communication or FDD communication at a frequency (band) other than first frequency (band) 1201. Unlike FIG. 48A, NR-UE 2 labeled 1100_2 need not perform communication at a frequency (band) other than first frequency (band) 1201.

NR-UE 3 labeled 1100_3 uses first frequency (band) 1201 to receive a modulation signal for downlink and to transmit a modulation signal for uplink. At this time, for example, TRP 2 labeled 1101_2 receives the modulation signal at first frequency (band) 1201 transmitted by NR-UE 3 labeled 1100_3. NR-UE 3 labeled 1100_3 then receives the modulation signal at first frequency (band) 1201 transmitted by TRP 1 labeled 1101_1. Note that, as in FIG. 48A, NR-UE 3 labeled 1100_3 may perform TDD communication or FDD communication at a frequency (band) other than first frequency (band) 1201. Unlike FIG. 48A, NR-UE 3 labeled 1100_3 need not perform communication at a frequency (band) other than first frequency (band) 1201.

In FIG. 48A, a case has been described where the frequency for "downlink" and the frequency for "uplink" are the same frequency (band), but the present embodiment is not limited to this case, and the frequency for "downlink" and the frequency for "uplink" may be the same frequency (band) partly. Descriptions of TDD and FDD will be omitted because they have already been each described.

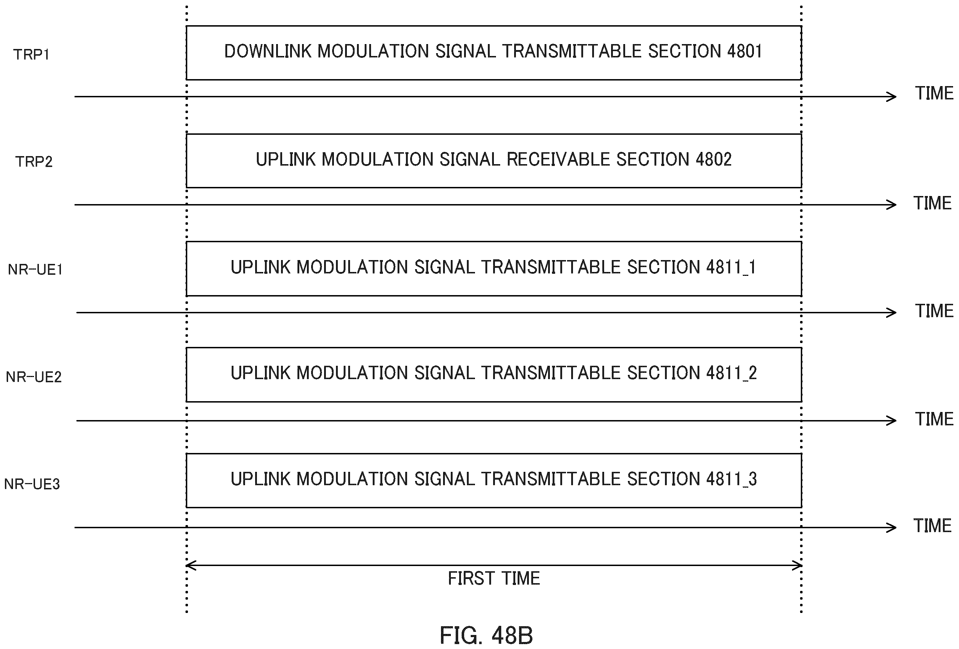

FIG. 48B illustrates exemplary transmission statuses of "TRP 1 labeled 1101_1, TRP 2 labeled 1101_2, NR-UE 1 labeled 1100_1, NR-UE 2 labeled 1100_2, and NR-UE 3 labeled 1100_3" in FIG. 47. Note that, in FIG. 48B, a horizontal axis represents time.

As in FIG. 48B, TRP 1 labeled 1101_1 configures downlink modulation signal transmission section 4801 in the first time. Meanwhile, TRP 2 labeled 1101_2 configures uplink modulation signal reception section 4802 in the first time.

NR-UE 1 labeled 1100_1 configures uplink modulation signal transmission section 4811_1 in the first time. Meanwhile, NR-UE 2 labeled 1100_2 configures uplink modulation signal transmission section 4811_2 in the first time. Further, NR-UE 3 labeled 1100_3 configures uplink modulation signal transmission section 4811_3 in the first time.

Note that downlink modulation signal transmission section 4801 may be placed in other time. Further, uplink modulation signal reception section 4802 may be placed in other time.

Moreover, uplink modulation signal transmission section 4811_1 may be placed in other time. Furthermore, uplink modulation signal transmission section 4811_2 may be placed in other time, and uplink modulation signal transmission section 4811_3 may be placed in other time.

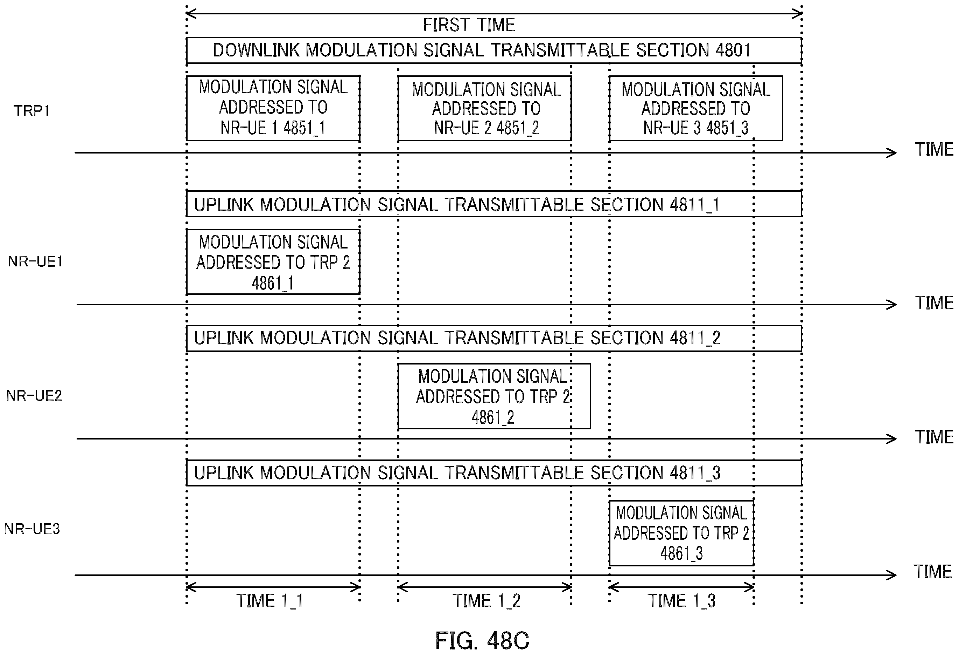

FIG. 48C illustrates an exemplary configuration of each of "downlink modulation signal transmission section 4801," "uplink modulation signal transmission section 4811_1," "uplink modulation signal transmission section 4811_2," and "uplink modulation signal transmission section 4811_3" in FIG. 48B. Note that, in FIG. 48C, a horizontal axis represents time.

In downlink modulation signal transmission section 4801 configured by TRP 1 labeled 1101_1, "modulation signal 4851_1 addressed to NR-UE 1 labeled 1100_1," "modulation signal 4851_2 addressed to NR-UE 2 labeled 1100_2," and "modulation signal 4851_3 addressed to NR-UE 3 labeled 1100_3" are present.

Further, in uplink modulation signal transmission section 4811_1 configured by NR-UE 1 labeled 1100_1, modulation signal 4861_1 addressed to TRP 2 labeled 1101_2 is present.

In uplink modulation signal transmission section 4811_2 configured by NR-UE 2 labeled 1100_2, modulation signal 4861_2 addressed to TRP 2 labeled 1101_2 is present.

In uplink modulation signal transmission section 4811_3 configured by NR-UE 3 labeled 1100_3, modulation signal 4861_3 addressed to TRP 2 labeled 1101_2 is present.

In FIG. 48C, "modulation signal 4851_1 addressed to NR-UE 1 labeled 1100_1" transmitted by TRP 1 labeled 1101_1 and "modulation signal 4861_1 addressed to TRP 2 labeled 1101_2" transmitted by NR-UE 1 labeled 1100_1 are present in time 1_1. Therefore, NR-UE 1 labeled 1100_1 performs a transmission operation and a reception operation in time 1_1.

Note that a time width of "modulation signal 4851_1 addressed to NR-UE 1 labeled 1100_1" and a time width of "modulation signal 4861_1 addressed to TRP 2 labeled 1101_2" are assumed to be equal to each other.

In this manner described above, self-interference may be reduced, which brings about an effect of improving the frequency utilization efficiency in the system.

Further, a transmission start time of "modulation signal 4851_1 addressed to NR-UE 1 labeled 1100_1" and a transmission start time of "modulation signal 4861_1 addressed to TRP 2 labeled 1101_2" are aligned. Thus, for example, when reference signals (RSs) are present in "modulation signal 4851_1 addressed to NR-UE 1 labeled 1100_1" and "modulation signal 4861_1 addressed to TRP 2 labeled 1101_2," it is possible to easily control a positional relation between a reference signal included in "modulation signal 4851_1 addressed to NR-UE 1 labeled 1100_1" and a reference signal included in "modulation signal 4861_1 addressed to TRP 2 labeled 1101_2," whereby each apparatus may obtain an effect of facilitating estimation such as channel estimation, electric field estimation, frequency offset estimation, and phase noise estimation. Note that it is not necessary to align the transmission start time of "modulation signal 4851_1 addressed to NR-UE 1 labeled 1100_1" and the transmission start time of "modulation signal 4861_1 addressed to TRP 2 labeled 1101_2."

In time 1_2, "modulation signal 4851_2 addressed to NR-UE 2 labeled 1100_2" transmitted by TRP 1 labeled 1101_1 and "modulation signal 4861_2 addressed to TRP 2 labeled 1101_2" transmitted by NR-UE 2 labeled 1100_2 are present. Therefore, NR-UE 2 labeled 1100_2 performs a transmission operation and a reception operation in time 1_2.

In this manner described above, self-interference may be reduced, which brings about an effect of improving the frequency utilization efficiency in the system.

Note that a time width of "modulation signal 4851_2 addressed to NR-UE 2 labeled 1100_2" and a time width of "modulation signal 4861_2 addressed to TRP 2 labeled 1101_2" need not be equal to each other.

Further, a transmission start time of "modulation signal 4851_2 addressed to NR-UE 2 labeled 1100_2" and a transmission start time of "modulation signal 4861_2 addressed to TRP 2 labeled 1101_2" are aligned. Thus, for example, when reference signals are present in "modulation signal 4851_2 addressed to NR-UE 2 labeled 1100_2" and "modulation signal 4861_2 addressed to TRP 2 labeled 1101_2," it is possible to easily control a positional relation between a reference signal included in "modulation signal 4851_2 addressed to NR-UE 2 labeled 1100_2" and a reference signal included in "modulation signal 4861_2 addressed to TRP 2 labeled 1101_2," whereby each apparatus may obtain an effect of facilitating estimation such as channel estimation, electric field estimation, frequency offset estimation, and phase noise estimation. Note that it is not necessary to align the transmission start time of "modulation signal 4851_2 addressed to NR-UE 2 labeled 1100_2" and the transmission start time of "modulation signal 4861_2 addressed to TRP 2 labeled 1101_2."

In time 1_3, "modulation signal 4851_3 addressed to NR-UE 3 labeled 1100_3" transmitted by TRP 1 labeled 1101_1 and "modulation signal 4861_3 addressed to TRP 2 labeled 1101_2" transmitted by NR-UE 3 labeled 1100_3 are present. Therefore, NR-UE 3 labeled 1100_3 performs a transmission operation and a reception operation in time 1_3.

In this manner described above, self-interference may be reduced, which brings about an effect of improving the frequency utilization efficiency in the system.

Note that a time width of "modulation signal 4851_3 addressed to NR-UE 3 labeled 1100_3" and a time width of "modulation signal 4861_3 addressed to TRP 2 labeled 1101_2" need not be equal to each other.

Further, a transmission start time of "modulation signal 4851_3 addressed to NR-UE 3 labeled 1100_3" and a transmission start time of "modulation signal 4861_3 addressed to TRP 2 labeled 1101_2" are aligned. Thus, for example, when reference signals are present in "modulation signal 4851_3 addressed to NR-UE 3 labeled 1100_3" and "modulation signal 4861_3 addressed to TRP 2 labeled 1101_2," it is possible to easily control a positional relation between a reference signal included in "modulation signal 4851_3 addressed to NR-UE 3 labeled 1100_3" and a reference signal included in "modulation signal 4861_3 addressed to TRP 2 labeled 1101_2," whereby each apparatus may obtain an effect of facilitating estimation such as channel estimation, electric field estimation, frequency offset estimation, and phase noise estimation. Note that it is not necessary to align the transmission start time of "modulation signal 4851_3 addressed to NR-UE 3 labeled 1100_3" and the transmission start time of "modulation signal 4861_3 addressed to TRP 2 labeled 1101_2."

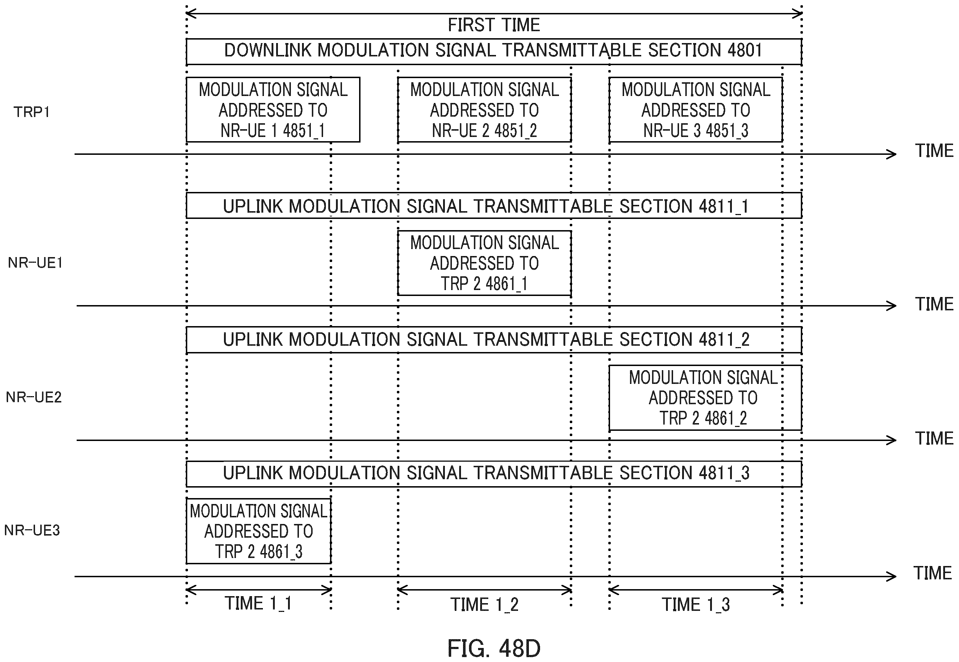

FIG. 48D illustrates an exemplary configuration, which is different from that in FIG. 48C, of each of "downlink modulation signal transmission section 4801," "uplink modulation signal transmission section 4811_1," "uplink modulation signal transmission section 4811_2," and "uplink modulation signal transmission section 4811_3" in FIG. 48B. Note that, in FIG. 48D, a horizontal axis represents time. In FIG. 48D, the components that operate in the same manner as the components in FIG. 48C are denoted by the same reference numerals.

In downlink modulation signal transmission section 4801 configured by TRP 1 labeled 1101_1, "modulation signal 4851_1 addressed to NR-UE 1 labeled 1100_1," "modulation signal 4851_2 addressed to NR-UE 2 labeled 1100_2," and "modulation signal 4851_3 addressed to NR-UE 3 labeled 1100_3" are present.

Further, in uplink modulation signal transmission section 4811_1 configured by NR-UE 1 labeled 1100_1, modulation signal 4861_1 addressed to TRP 2 labeled 1101_2 is present.

In uplink modulation signal transmission section 4811_2 configured by NR-UE 2 labeled 1100_2, modulation signal 4861_2 addressed to TRP 2 labeled 1101_2 is present.

In uplink modulation signal transmission section 4811_3 configured by NR-UE 3 labeled 1100_3, modulation signal 4861_3 addressed to TRP 2 labeled 1101_2 is present.

In FIG. 48D, "modulation signal 4851_1 addressed to NR-UE 1 labeled 1100_1" transmitted by TRP 1 labeled 1101_1 and "modulation signal 4861_3 addressed to TRP 2 labeled 1101_2" transmitted by NR-UE 3 labeled 1100_3 are present in time 1_1. Therefore, NR-UE 1 labeled 1100_1 performs a transmission operation and a reception operation in time 1_1. Thus, it is characterized in that an "NR-UE that is a destination of the modulation signal transmitted by TRP 1 labeled 1101_1" and an "NR-UE that transmits a modulation signal" are different from each other.

In this manner, for example, when a beam direction of "modulation signal 4851_1 addressed to NR-UE 1 labeled 1100_1" and a beam direction of "modulation signal 4861_3 addressed to TRP 2 labeled 1101_2" are different, interference is reduced with each other, thereby bringing about an effect of improving the reception quality of each modulation signal.

Note that a time width of "modulation signal 4851_1 addressed to NR-UE 1 labeled 1100_1" and a time width of "modulation signal 4861_3 addressed to TRP 2 labeled 1101_2" are assumed to be different from each other.

Further, a transmission start time of "modulation signal 4851_1 addressed to NR-UE 1 labeled 1100_1" and a transmission start time of "modulation signal 4861_3 addressed to TRP 2 labeled 1101_2" are aligned. Thus, for example, when reference signals are present in "modulation signal 4851_1 addressed to NR-UE 1 labeled 1100_1" and "modulation signal 4861_3 addressed to TRP 2 labeled 1101_2," it is possible to easily control a positional relation between a reference signal included in "modulation signal 4851_1 addressed to NR-UE 1 labeled 1100_1" and a reference signal included in "modulation signal 4861_3 addressed to TRP 2 labeled 1101_2," whereby each apparatus may obtain an effect of facilitating estimation such as channel estimation, electric field estimation, frequency offset estimation, and phase noise estimation. Note that it is not necessary to align the transmission start time of "modulation signal 4851_1 addressed to NR-UE 1 labeled 1100_1" and the transmission start time of "modulation signal 4861_3 addressed to TRP 2 labeled 1101_2."

In time 1_2, "modulation signal 4851_2 addressed to NR-UE 2 labeled 1100_2" transmitted by TRP 1 labeled 1101_1 and "modulation signal 4861_1 addressed to TRP 2 labeled 1101_2" transmitted by NR-UE 1 labeled 1100_1 are present. Thus, it is characterized in that an "NR-UE that is a destination of the modulation signal transmitted by TRP 1 labeled 1101_1" and an "NR-UE that transmits a modulation signal" are different from each other.

In this manner, for example, when a beam direction of "modulation signal 4851_2 addressed to NR-UE 2 labeled 1100_2" and a beam direction of "modulation signal 4861_1 addressed to TRP 2 labeled 1101_2" are different, interference is reduced with each other, thereby bringing about an effect of improving the reception quality of each modulation signal.

Note that a time width of "modulation signal 4851_2 addressed to NR-UE 2 labeled 1100_2" and a time width of "modulation signal 4861_1 addressed to TRP 2 labeled 1101_2" are equal to each other.

Further, a transmission start time of "modulation signal 4851_2 addressed to NR-UE 2 labeled 1100_2" and a transmission start time of "modulation signal 4861_1 addressed to TRP 2 labeled 1101_2" are aligned. Thus, for example, when reference signals are present in "modulation signal 4851_2 addressed to NR-UE 2 labeled 1100_2" and "modulation signal 4861_1 addressed to TRP 2 labeled 1101_2," it is possible to easily control a positional relation between a reference signal included in "modulation signal 4851_2 addressed to NR-UE 2 labeled 1100_2" and a reference signal included in "modulation signal 4861_1 addressed to TRP 2 labeled 1101_2," whereby each apparatus may obtain an effect of facilitating estimation such as channel estimation, electric field estimation, frequency offset estimation, and phase noise estimation. Note that it is not necessary to align the transmission start time of "modulation signal 4851_2 addressed to NR-UE 2 labeled 1100_2" and the transmission start time of "modulation signal 4861_1 addressed to TRP 2 labeled 1101_2."

In time 1_3, "modulation signal 4851_3 addressed to NR-UE 3 labeled 1100_3" transmitted by TRP 1 labeled 1101_1 and "modulation signal 4861_2 addressed to TRP 2 labeled 1101_2" transmitted by NR-UE 2 labeled 1100_2 are present. Thus, it is characterized in that an "NR-UE that is a destination of the modulation signal transmitted by TRP 1 labeled 1101_1" and an "NR-UE that transmits a modulation signal" are different from each other.

In this manner, for example, when a beam direction of "modulation signal 4851_3 addressed to NR-UE 3 labeled 1100_3" and a beam direction of "modulation signal 4861_2 addressed to TRP 2 labeled 1101_2" are different, interference is reduced with each other, thereby bringing about an effect of improving the reception quality of each modulation signal.

Note that a time width of "modulation signal 4851_3 addressed to NR-UE 3 labeled 1100_3" and a time width of "modulation signal 4861_2 addressed to TRP 2 labeled 1101_2" need not be equal to each other.

Further, a transmission start time of "modulation signal 4851_3 addressed to NR-UE 3 labeled 1100_3" and a transmission start time of "modulation signal 4861_2 addressed to TRP 2 labeled 1101_2" are aligned. Thus, for example, when reference signals are present in "modulation signal 4851_3 addressed to NR-UE 3 labeled 1100_3" and "modulation signal 4861_2 addressed to TRP 2 labeled 1101_2," it is possible to easily control a positional relation between a reference signal included in "modulation signal 4851_3 addressed to NR-UE 3 labeled 1100_3" and a reference signal included in "modulation signal 4861_2 addressed to TRP 2 labeled 1101_2," whereby each apparatus may obtain an effect of facilitating estimation such as channel estimation, electric field estimation, frequency offset estimation, and phase noise estimation. Note that it is not necessary to align the transmission start time of "modulation signal 4851_3 addressed to NR-UE 3 labeled 1100_3" and the transmission start time of "modulation signal 4861_2 addressed to TRP 2 labeled 1101_2."

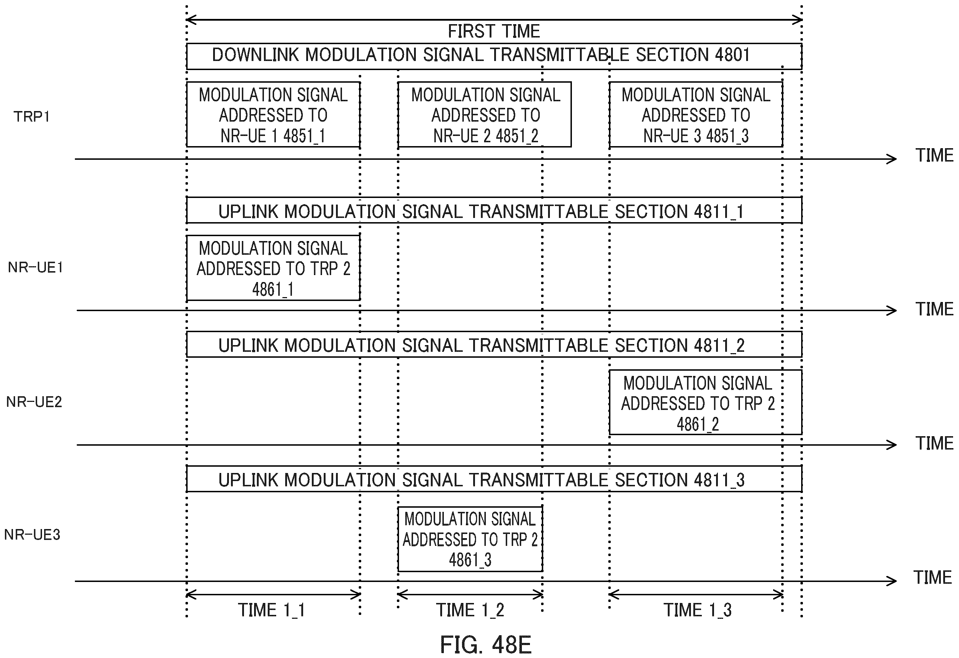

FIG. 48E illustrates an exemplary configuration, which is different from those in FIG. 48C and FIG. 48D, of each of "downlink modulation signal transmission section 4801," "uplink modulation signal transmission section 4811_1," "uplink modulation signal transmission section 4811_2," and "uplink modulation signal transmission section 4811_3" in FIG. 48B. Note that, in FIG. 48E, a horizontal axis represents time. In FIG. 48E, the components that operate in the same manner as the components in FIG. 48C are denoted by the same reference numerals.

In downlink modulation signal transmission section 4801 configured by TRP 1 labeled 1101_1, "modulation signal 4851_1 addressed to NR-UE 1 labeled 1100_1," "modulation signal 4851_2 addressed to NR-UE 2 labeled 1100 2," and "modulation signal 4851_3 addressed to NR-UE 3 labeled 1100_3" are present.

Further, in uplink modulation signal transmission section 4811_1 configured by NR-UE 1 labeled 1100_1, modulation signal 4861_1 addressed to TRP 2 labeled 1101_2 is present.

In uplink modulation signal transmission section 4811_2 configured by NR-UE 2 labeled 1100_2, modulation signal 4861_2 addressed to TRP 2 labeled 1101_2 is present.

In uplink modulation signal transmission section 4811_3 configured by NR-UE 3 labeled 1100_3, modulation signal 4861_3 addressed to TRP 2 labeled 1101_2 is present.

In FIG. 48E, "modulation signal 4851_1 addressed to NR-UE 1 labeled 1100_1" transmitted by TRP 1 labeled 1101_1 and "modulation signal 4861_1 addressed to TRP 2 labeled 1101_2" transmitted by NR-UE 1 labeled 1100_1 are present in time 1_1. Therefore, NR-UE 1 labeled 1100_1 performs a transmission operation and a reception operation in time 1_1.

In this manner described above, self-interference may be reduced, which brings about an effect of improving the frequency utilization efficiency in the system.

Note that a time width of "modulation signal 4851_1 addressed to NR-UE 1 labeled 1100_1" and a time width of "modulation signal 4861_1 addressed to TRP 2 labeled 1101_2" are assumed to be equal to each other.

Further, a transmission start time of "modulation signal 4851_1 addressed to NR-UE 1 labeled 1100_1" and a transmission start time of "modulation signal 4861_1 addressed to TRP 2 labeled 1101_2" are aligned. Thus, for example, when reference signals are present in "modulation signal 4851_1 addressed to NR-UE 1 labeled 1100_1" and "modulation signal 4861_1 addressed to TRP 2 labeled 1101_2," it is possible to easily control a positional relation between a reference signal included in "modulation signal 4851_1 addressed to NR-UE 1 labeled 1100_1" and a reference signal included in "modulation signal 4861_1 addressed to TRP 2 labeled 1101_2," whereby each apparatus may obtain an effect of facilitating estimation such as channel estimation, electric field estimation, frequency offset estimation, and phase noise estimation. Note that it is not necessary to align the transmission start time of "modulation signal 4851_1 addressed to NR-UE 1 labeled 1100_1" and the transmission start time of "modulation signal 4861_1 addressed to TRP 2 labeled 1101_2."

In time 1_2, "modulation signal 4851_2 addressed to NR-UE 2 labeled 1100_2" transmitted by TRP 1 labeled 1101_1 and "modulation signal 4861_3 addressed to TRP 2 labeled 1101_2" transmitted by NR-UE 3 labeled 1100_3 are present. Thus, it is characterized in that an "NR-UE that is a destination of the modulation signal transmitted by TRP 1 labeled 1101_1" and an "NR-UE that transmits a modulation signal" are different from each other.

In this manner, for example, when a beam direction of "modulation signal 4851_2 addressed to NR-UE 2 labeled 1100_2" and a beam direction of "modulation signal 4861_3 addressed to TRP 2 labeled 1101_2" are different, interference is reduced with each other, thereby bringing about an effect of improving the reception quality of each modulation signal.

Note that a time width of "modulation signal 4851_2 addressed to NR-UE 2 labeled 1100_2" and a time width of "modulation signal 4861_3 addressed to TRP 2 labeled 1101_2" need not be equal to each other.

Further, a transmission start time of "modulation signal 4851_2 addressed to NR-UE 2 labeled 1100_2" and a transmission start time of "modulation signal 4861_3 addressed to TRP 2 labeled 1101_2" are aligned. Thus, for example, when reference signals are present in "modulation signal 4851_2 addressed to NR-UE 2 labeled 1100_2" and "modulation signal 4861_3 addressed to TRP 2 labeled 1101_2," it is possible to easily control a positional relation between a reference signal included in "modulation signal 4851_2 addressed to NR-UE 2 labeled 1100_2" and a reference signal included in "modulation signal 4861_3 addressed to TRP 2 labeled 1101_2," whereby each apparatus may obtain an effect of facilitating estimation such as channel estimation, electric field estimation, frequency offset estimation, and phase noise estimation. Note that it is not necessary to align the transmission start time of "modulation signal 4851_2 addressed to NR-UE 2 labeled 1100_2" and the transmission start time of "modulation signal 4861_3 addressed to TRP 2 labeled 1101_2."

In time 1_3, "modulation signal 4851_3 addressed to NR-UE 3 labeled 1100_3" transmitted by TRP 1 labeled 1101_1 and "modulation signal 4861_2 addressed to TRP 2 labeled 1101_2" transmitted by NR-UE 2 labeled 1100_2 are present. Thus, it is characterized in that an "NR-UE that is a destination of the modulation signal transmitted by TRP 1 labeled 1101_1" and an "NR-UE that transmits a modulation signal" are different from each other.

In this manner, for example, when a beam direction of "modulation signal 4851_3 addressed to NR-UE 3 labeled 1100_3" and a beam direction of "modulation signal 4861_2 addressed to TRP 2 labeled 1101_2" are different, interference is reduced with each other, thereby bringing about an effect of improving the reception quality of each modulation signal.

Note that a time width of "modulation signal 4851_3 addressed to NR-UE 3 labeled 1100_3" and a time width of "modulation signal 4861_2 addressed to TRP 2 labeled 1101_2" need not be equal to each other.

Further, a transmission start time of "modulation signal 4851_3 addressed to NR-UE 3 labeled 1100_3" and a transmission start time of "modulation signal 4861_2 addressed to TRP 2 labeled 1101_2" are aligned. Thus, for example, when reference signals are present in "modulation signal 4851_3 addressed to NR-UE 3 labeled 1100_3" and "modulation signal 4861_2 addressed to TRP 2 labeled 1101_2," it is possible to easily control a positional relation between a reference signal included in "modulation signal 4851_3 addressed to NR-UE 3 labeled 1100_3" and a reference signal included in "modulation signal 4861_2 addressed to TRP 2 labeled 1101_2," whereby each apparatus may obtain an effect of facilitating estimation such as channel estimation, electric field estimation, frequency offset estimation, and phase noise estimation. Note that it is not necessary to align the transmission start time of "modulation signal 4851_3 addressed to NR-UE 3 labeled 1100_3" and the transmission start time of "modulation signal 4861_2 addressed to TRP 2 labeled 1101_2."

The examples of FIG. 48C, FIG. 48D, and FIG. 48E have been described as exemplary operations of "TRP 1 labeled 1101_1, TRP 2 labeled 1101_2, NR-UE 1 labeled 1100_1, NR-UE 2 labeled 1100_2, and NR-UE 3 labeled 1100_3" in a time axis in FIG. 47, but the state in FIG. 48C, the state in FIG. 48D, and the state in FIG. 48E may be switched in the time axis. Additionally, in FIG. 47, the number of present TRPs is two, and the number of present NR-UEs is three, but they are each exemplary. The same implementation is possible even when the number of present TRPs is two or more and the number of present NR-UEs is two or more.

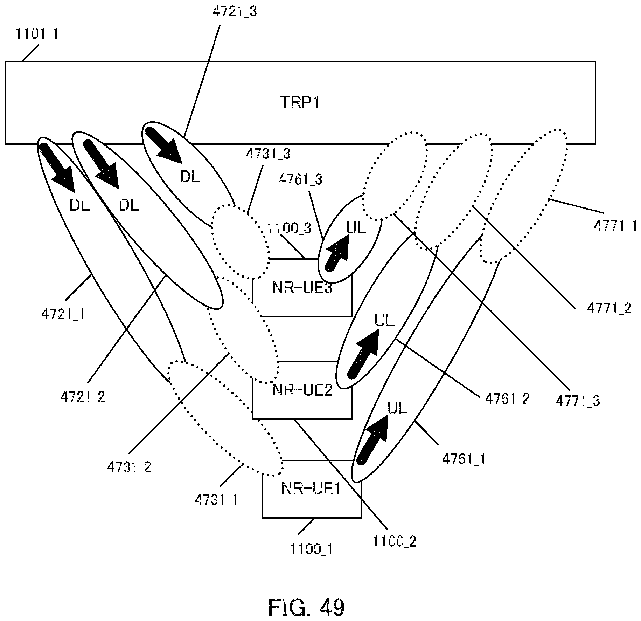

FIG. 49 illustrates an exemplary radio system in the present embodiment, which is different from that in FIG. 47. As illustrated in FIG. 49, there are TRP 1 labeled 1101_1, NR-UE 1 labeled 1100_1, NR-UE 2 labeled 1100_2, and NR-UE 3 labeled 1100_3, for example. Note that, in FIG. 49, the components that operate in the same manner as the components in FIG. 11 are denoted by the same reference numerals, and some descriptions thereof will be omitted.

In FIG. 49, TRP 1 labeled 1101_1 generates transmission beam 4721_1 and uses transmission beam 4721_1 to transmit a modulation signal addressed to NR-UE 1 labeled 1100_1 (Downlink (DL)).

NR-UE 1 labeled 1100_1 then generates received beam 4731_1 and uses received beam 4731_1 to receive the modulation signal addressed to NR-UE 1 that has been transmitted by TRP 1 labeled 1101_1.

Moreover, NR-UE 1 labeled 1100_1 generates transmission beam 4761_1 and uses transmission beam 4761_1 to transmit a modulation signal addressed to TRP 1 labeled 1101_1 (Uplink (UL)).

TRP 1 labeled 1101_1 then generates received beam 4771_1 and uses received beam 4771_1 to receive the modulation signal addressed to TRP 1 labeled 1101_1 that has been transmitted by NR-UE 1 labeled 1100_1.

TRP 1 labeled 1101_1 generates transmission beam 4721_1 and uses transmission beam 4721_1 to transmit a modulation signal addressed to NR-UE 2 labeled 1100_2 (Downlink (DL)).

NR-UE 2 labeled 1100_2 then generates received beam 4731_2 and uses received beam 4731_2 to receive the modulation signal addressed to NR-UE 2 that has been transmitted by TRP 1 labeled 1101_1.

Moreover, NR-UE 2 labeled 1100_2 generates transmission beam 4761_2 and uses transmission beam 4761_2 to transmit a modulation signal addressed to TRP 1 labeled 1101_1 (Uplink (UL)).

TRP 1 labeled 1101_1 then generates received beam 4771_2 and uses received beam 4771_2 to receive the modulation signal addressed to TRP 1 labeled 1101_1 that has been transmitted by NR-UE 2 labeled 1100_2.

TRP 1 labeled 1101_1 generates transmission beam 4721_3 and uses transmission beam 4721_3 to transmit a modulation signal addressed to NR-UE 3 labeled 1100_3 (Downlink (DL)).

NR-UE 3 labeled 1100_3 then generates received beam 4731_3 and uses received beam 4731_3 to receive the modulation signal addressed to NR-UE 3 that has been transmitted by TRP 1 labeled 1101_1.

Moreover, NR-UE 3 labeled 1100_3 generates transmission beam 4761_3 and uses transmission beam 4761_3 to transmit a modulation signal addressed to TRP 1 labeled 1101_1 (Uplink (UL)).

TRP 1 labeled 1101_1 then generates received beam 4771_3 and uses received beam 4771_3 to receive the modulation signal addressed to TRP 1 labeled 1101_1 that has been transmitted by NR-UE 3 labeled 1100_3.

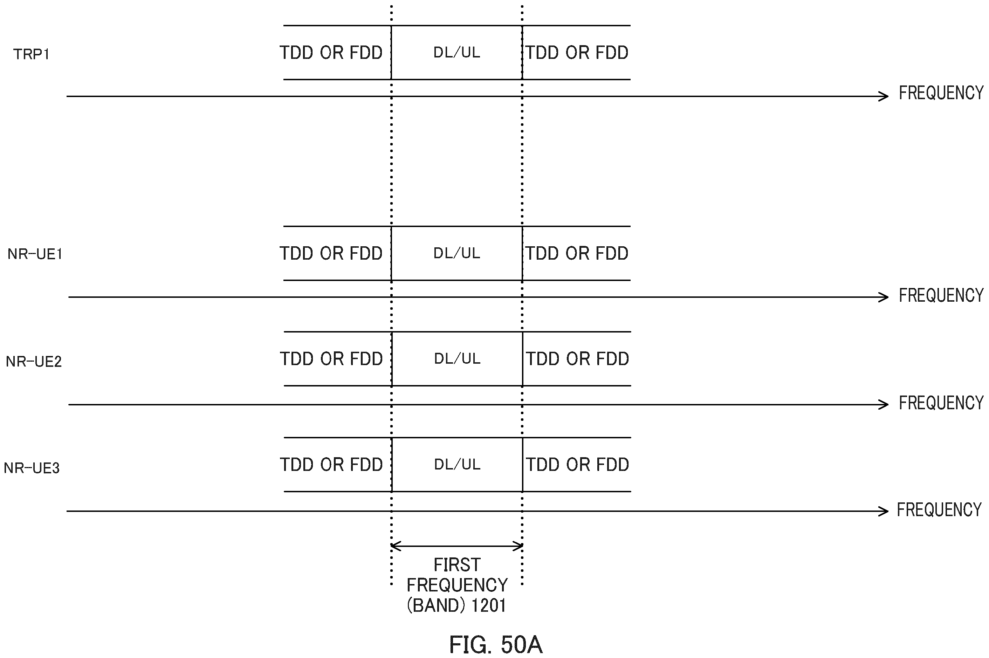

FIG. 50A illustrates exemplary communication statuses of "TRP 1 labeled 1101_1, NR-UE 1 labeled 1100_1, NR-UE 2 labeled 1100_2, and NR-UE 3 labeled 1100_3" in a frequency axis in FIG. 49. Note that, in FIG. 50A, a horizontal axis represents the frequency, and the components that operate in the same manner as the components in FIG. 12 are denoted by the same reference numerals.

TRP 1 labeled 1101_1 uses first frequency (band) 1201 to transmit a modulation signal for downlink. At this time, for example, NR-UE 1 labeled 1100_1, NR-UE 2 labeled 1100_2, and NR-UE 3 labeled 1100_3 receive the modulation signal at first frequency (band) 1201 transmitted by TRP 1 labeled 1101_1. Note that, as in FIG. 50A, TRP 1 labeled 1101_1 may perform TDD communication or FDD communication at a frequency (band) other than first frequency (band) 1201, or unlike FIG. 50A, need not perform communication at a frequency (band) other than first frequency (band) 1201.

Meanwhile, TRP 1 labeled 1101_1 uses first frequency (band) 1201 to receive a modulation signal for uplink. At this time, for example, TRP 1 labeled 1101_1 receives the "modulation signal at first frequency (band) 1201 transmitted by NR-UE 1 labeled 1100_1," the "modulation signal transmitted by NR-UE 2 labeled 1100_2," and the "modulation signal transmitted by NR-UE 3 labeled 1100_3."

NR-UE 1 labeled 1100_1 uses first frequency (band) 1201 to receive a modulation signal for downlink and to transmit a modulation signal for uplink. At this time, for example, TRP 1 labeled 1101_1 receives the modulation signal at first frequency (band) 1201 transmitted by NR-UE 1 labeled 1100_1. NR-UE 1 labeled 1100_1 then receives the modulation signal at first frequency (band) 1201 transmitted by TRP 1 labeled 1101_1. Note that, as in FIG. 50A, NR-UE 1 labeled 1100_1 may perform TDD communication or FDD communication at a frequency (band) other than first frequency (band) 1201. Unlike FIG. 50A, NR-UE 1 labeled 1100_1 need not perform communication at a frequency (band) other than first frequency (band) 1201.

NR-UE 2 labeled 1100_2 uses first frequency (band) 1201 to receive a modulation signal for downlink and to transmit a modulation signal for uplink. At this time, for example, TRP 1 labeled 1101_1 receives the modulation signal at first frequency (band) 1201 transmitted by NR-UE 2 labeled 1100_2. NR-UE 2 labeled 1100_2 then receives the modulation signal at first frequency (band) 1201 transmitted by TRP 1 labeled 1101_1. Note that, as in FIG. 50A, NR-UE 2 labeled 1100_2 may perform TDD communication or FDD communication at a frequency (band) other than first frequency (band) 1201. Unlike FIG. 50A, NR-UE 2 labeled 1100_2 need not perform communication at a frequency (band) other than first frequency (band) 1201.

NR-UE 3 labeled 1100_3 uses first frequency (band) 1201 to receive a modulation signal for downlink and to transmit a modulation signal for uplink. At this time, for example, TRP 1 labeled 1101_1 receives the modulation signal at first frequency (band) 1201 transmitted by NR-UE 3 labeled 1100_3. NR-UE 3 labeled 1100_3 then receives the modulation signal at first frequency (band) 1201 transmitted by TRP 1 labeled 1101_1. Note that, as in FIG. 50A, NR-UE 3 labeled 1100_3 may perform TDD communication or FDD communication at a frequency (band) other than first frequency (band) 1201. Unlike FIG. 50A, NR-UE 3 labeled 1100_3 need not perform communication at a frequency (band) other than first frequency (band) 1201.

In FIG. 50A, a case has been described where the frequency for "downlink" and the frequency for "uplink" are the same frequency (band), but the present embodiment is not limited to this case, and the frequency for "downlink" and the frequency for "uplink" may be the same frequency (band) partly. Descriptions of TDD and FDD will be omitted because they have already been each described.

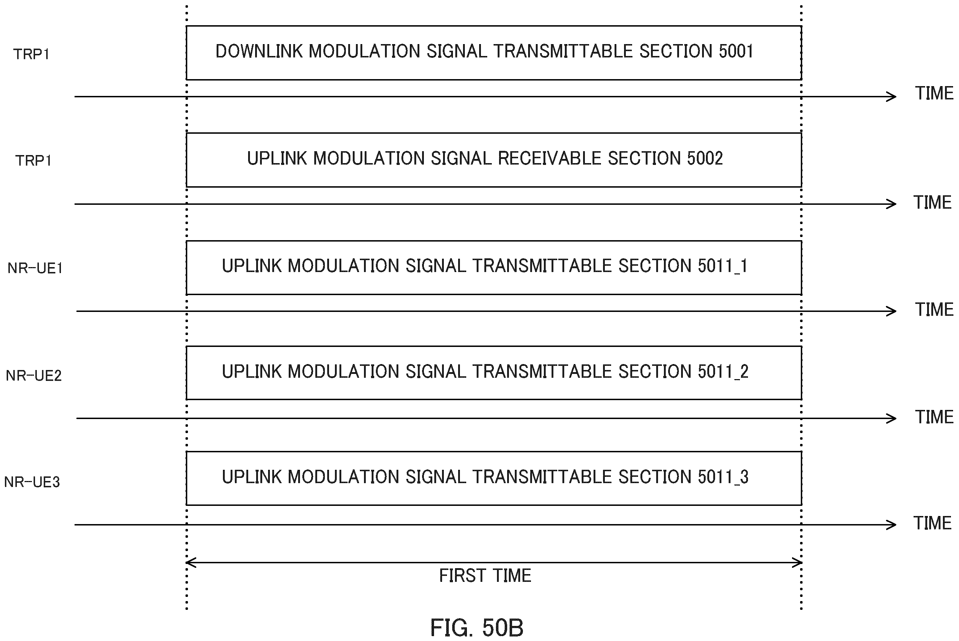

FIG. 50B illustrates exemplary transmission statuses of "TRP 1 labeled 1101_1, NR-UE 1 labeled 1100_1, NR-UE 2 labeled 1100_2, and NR-UE 3 labeled 1100_3" in FIG. 49. Note that, in FIG. 50B, a horizontal axis represents time.

As in FIG. 50B, TRP 1 labeled 1101_1 configures downlink modulation signal transmission section 5001 in the first time. Further, TRP 1 labeled 1101_1 configures uplink modulation signal reception section 5002 in the first time.

NR-UE 1 labeled 1100_1 configures uplink modulation signal transmission section 5011_1 in the first time. Meanwhile, NR-UE 2 labeled 1100_2 configures uplink modulation signal transmission section 5011_2 in the first time. Further, NR-UE 3 labeled 1100_3 configures uplink modulation signal transmission section 5011_3 in the first time.

Note that downlink modulation signal transmission section 5001 may be placed in other time. Further, uplink modulation signal reception section 5002 may be placed in other time.

Moreover, uplink modulation signal transmission section 5011_1 may be placed in other time. Furthermore, uplink modulation signal transmission section 5011_2 may be placed in other time, and uplink modulation signal transmission section 5011_3 may be placed in other time.

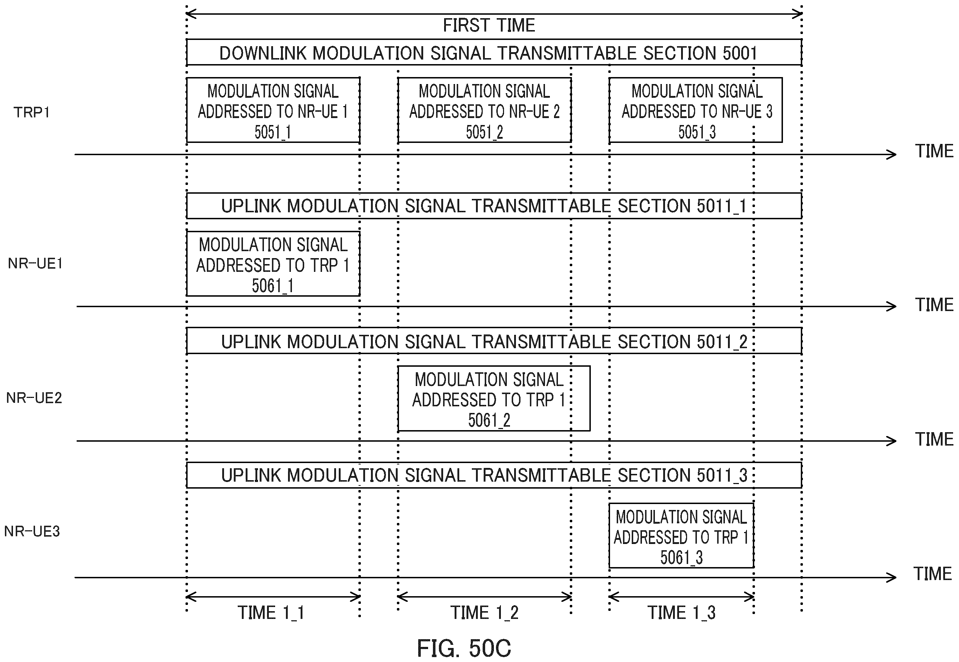

FIG. 50C illustrates an exemplary configuration of each of "downlink modulation signal transmission section 5001," "uplink modulation signal transmission section 5011_1," "uplink modulation signal transmission section 5011_2," and "uplink modulation signal transmission section 5011_3" in FIG. 50B. Note that, in FIG. 50C, a horizontal axis represents time.

In downlink modulation signal transmission section 5001 configured by TRP 1 labeled 1101_1, "modulation signal 5051_1 addressed to NR-UE 1 labeled 1100_1," "modulation signal 5051_2 addressed to NR-UE 2 labeled 1100_2," and "modulation signal 5051_3 addressed to NR-UE 3 labeled 1100_3" are present.

Further, in uplink modulation signal transmission section 5011_1 configured by NR-UE 1 labeled 1100_1, modulation signal 5061_1 addressed to TRP 1 labeled 1101_1 is present.

In uplink modulation signal transmission section 5011_2 configured by NR-UE 2 labeled 1100_2, modulation signal 5061_2 addressed to TRP 1 labeled 1101_1 is present.

In uplink modulation signal transmission section 5011_3 configured by NR-UE 3 labeled 1100_3, modulation signal 5061_3 addressed to TRP 1 labeled 1101_1 is present.

In FIG. 50C, "modulation signal 5051_1 addressed to NR-UE 1 labeled 1100_1" transmitted by TRP 1 labeled 1101_1 and "modulation signal 5061_1 addressed to TRP 1 labeled 1101_1" transmitted by NR-UE 1 labeled 1100_1 are present in time 1_1. Therefore, NR-UE 1 labeled 1100_1 performs a transmission operation and a reception operation in time 1_1.

Note that a time width of "modulation signal 5051_1 addressed to NR-UE 1 labeled 1100_1" and a time width of "modulation signal 5061_1 addressed to TRP 1 labeled 1101_1" are assumed to be equal to each other.

In this manner described above, self-interference may be reduced, which brings about an effect of improving the frequency utilization efficiency in the system.

Further, a transmission start time of "modulation signal 5051_1 addressed to NR-UE 1 labeled 1100_1" and a transmission start time of "modulation signal 5061_1 addressed to TRP 1 labeled 1101_1" are aligned. Thus, for example, when reference signals are present in "modulation signal 5051_1 addressed to NR-UE 1 labeled 1100_1" and "modulation signal 5061_1 addressed to TRP 1 labeled 1101_1," it is possible to easily control a positional relation between a reference signal included in "modulation signal 5051_1 addressed to NR-UE 1 labeled 1100_1" and a reference signal included in "modulation signal 5061_1 addressed to TRP 1 labeled 1101_1," whereby each apparatus may obtain an effect of facilitating estimation such as channel estimation, electric field estimation, frequency offset estimation, and phase noise estimation. Note that it is not necessary to align the transmission start time of "modulation signal 5051_1 addressed to NR-UE 1 labeled 1100_1" and the transmission start time of "modulation signal 5061_1 addressed to TRP 1 labeled 1101_1."

In time 1_2, "modulation signal 5051_2 addressed to NR-UE 2 labeled 1100_2" transmitted by TRP 1 labeled 1101_1 and "modulation signal 5061_2 addressed to TRP 1 labeled 1101_1" transmitted by NR-UE 2 labeled 1100_2 are present. Therefore, NR-UE 2 labeled 1100_2 performs a transmission operation and a reception operation in time 1_2.

In this manner described above, self-interference may be reduced, which brings about an effect of improving the frequency utilization efficiency in the system.

Note that a time width of "modulation signal 5051_2 addressed to NR-UE 2 labeled 1100_2" and a time width of "modulation signal 5061_2 addressed to TRP 1 labeled 1101_1" need not be equal to each other.

Further, a transmission start time of "modulation signal 5051_2 addressed to NR-UE 2 labeled 1100_2" and a transmission start time of "modulation signal 5061_2 addressed to TRP 1 labeled 1101_1" are aligned. Thus, for example, when reference signals are present in "modulation signal 5051_2 addressed to NR-UE 2 labeled 1100_2" and "modulation signal 5061_2 addressed to TRP 1 labeled 1101_1," it is possible to easily control a positional relation between a reference signal included in "modulation signal 5051_2 addressed to NR-UE 2 labeled 1100_2" and a reference signal included in "modulation signal 5061_2 addressed to TRP 1 labeled 1101_1," whereby each apparatus may obtain an effect of facilitating estimation such as channel estimation, electric field estimation, frequency offset estimation, and phase noise estimation. Note that it is not necessary to align the transmission start time of "modulation signal 5051_2 addressed to NR-UE 2 labeled 1100_2" and the transmission start time of "modulation signal 5061_2 addressed to TRP 1 labeled 1101_1."

In time 1_3, "modulation signal 5051_3 addressed to NR-UE 3 labeled 1100_3" transmitted by TRP 1 labeled 1101_1 and "modulation signal 5061_3 addressed to TRP 1 labeled 1101_1" transmitted by NR-UE 3 labeled 1100_3 are present. Therefore, NR-UE 3 labeled 1100_3 performs a transmission operation and a reception operation in time 1_3.

In this manner described above, self-interference may be reduced, which brings about an effect of improving the frequency utilization efficiency in the system.

Note that a time width of "modulation signal 5051_3 addressed to NR-UE 3 labeled 1100_3" and a time width of "modulation signal 5061_3 addressed to TRP 1 labeled 1101_1" need not be equal to each other. Further, a transmission start time of "modulation signal 5051_3 addressed to NR-UE 3 labeled 1100_3" and a transmission start time of "modulation signal 5061_3 addressed to TRP 1 labeled 1101_1" are aligned. Thus, for example, when reference signals are present in "modulation signal 5051_3 addressed to NR-UE 3 labeled 1100_3" and "modulation signal 5061_3 addressed to TRP 1 labeled 1101_1," it is possible to easily control a positional relation between a reference signal included in "modulation signal 5051_3 addressed to NR-UE 3 labeled 1100_3" and a reference signal included in "modulation signal 5061_3 addressed to TRP 1 labeled 1101_1," whereby each apparatus may obtain an effect of facilitating estimation such as channel estimation, electric field estimation, frequency offset estimation, and phase noise estimation. Note that it is not necessary to align the transmission start time of "modulation signal 5051_3 addressed to NR-UE 3 labeled 1100_3" and the transmission start time of "modulation signal 5061_3 addressed to TRP 1 labeled 1101_1."

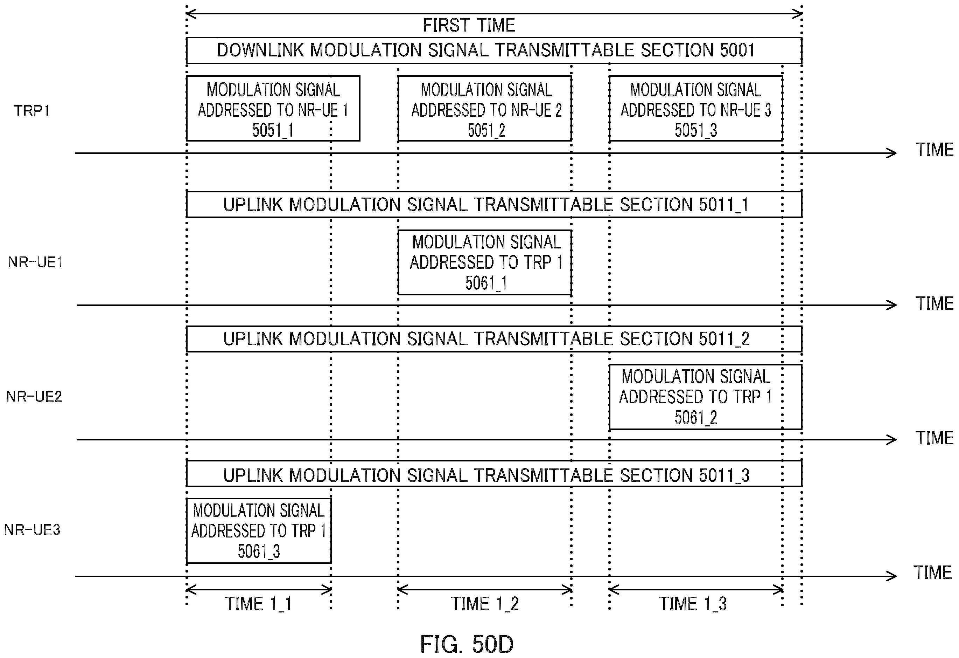

FIG. 50D illustrates an exemplary configuration, which is different from that in FIG. 50C, of each of "downlink modulation signal transmission section 5001," "uplink modulation signal transmission section 5011_1," "uplink modulation signal transmission section 5011_2," and "uplink modulation signal transmission section 5011_3" in FIG. 50B. Note that, in FIG. 50D, a horizontal axis represents time. In FIG. 50D, the components that operate in the same manner as the components in FIG. 50C are denoted by the same reference numerals.

In downlink modulation signal transmission section 5001 configured by TRP 1 labeled 1101_1, "modulation signal 5051_1 addressed to NR-UE 1 labeled 1100_1," "modulation signal 5051_2 addressed to NR-UE 2 labeled 1100 2," and "modulation signal 5051_3 addressed to NR-UE 3 labeled 1100_3" are present.

Further, in uplink modulation signal transmission section 5011_1 configured by NR-UE 1 labeled 1100_1, modulation signal 5061_1 addressed to TRP 1 labeled 1101_1 is present.

In uplink modulation signal transmission section 5011_2 configured by NR-UE 2 labeled 1100_2, modulation signal 5061_2 addressed to TRP 1 labeled 1101_1 is present.

In uplink modulation signal transmission section 5011_3 configured by NR-UE 3 labeled 1100_3, modulation signal 5061_3 addressed to TRP 1 labeled 1101_1 is present.

In FIG. 50D, "modulation signal 5051_1 addressed to NR-UE 1 labeled 1100_1" transmitted by TRP 1 labeled 1101_1 and "modulation signal 5061_3 addressed to TRP 1 labeled 1101_1" transmitted by NR-UE 3 labeled 1100_3 are present in time 1_1. Therefore, NR-UE 1 labeled 1100_1 performs a transmission operation and a reception operation in time 1_1. Thus, it is characterized in that an "NR-UE that is a destination of the modulation signal transmitted by TRP 1 labeled 1101_1" and an "NR-UE that transmits a modulation signal" are different from each other.

In this manner, for example, when a beam direction of "modulation signal 5051_1 addressed to NR-UE 1 labeled 1100_1" and a beam direction of "modulation signal 5061_3 addressed to TRP 1 labeled 1101_1" are different, interference is reduced with each other, thereby bringing about an effect of improving the reception quality of each modulation signal.

Note that a time width of "modulation signal 5051_1 addressed to NR-UE 1 labeled 1100_1" and a time width of "modulation signal 5061_3 addressed to TRP 1 labeled 1101_1" are assumed to be different from each other.

Further, a transmission start time of "modulation signal 5051_1 addressed to NR-UE 1 labeled 1100_1" and a transmission start time of "modulation signal 5061_3 addressed to TRP 1 labeled 1101_1" are aligned. Thus, for example, when reference signals are present in "modulation signal 5051_1 addressed to NR-UE 1 labeled 1100_1" and "modulation signal 5061_3 addressed to TRP 1 labeled 1101_1," it is possible to easily control a positional relation between a reference signal included in "modulation signal 5051_1 addressed to NR-UE 1 labeled 1100_1" and a reference signal included in "modulation signal 5061_3 addressed to TRP 1 labeled 1101_1," whereby each apparatus may obtain an effect of facilitating estimation such as channel estimation, electric field estimation, frequency offset estimation, and phase noise estimation. Note that it is not necessary to align the transmission start time of "modulation signal 5051_1 addressed to NR-UE 1 labeled 1100_1" and the transmission start time of "modulation signal 5061_3 addressed to TRP 1 labeled 1101_1."

In time 1_2, "modulation signal 5051_2 addressed to NR-UE 2 labeled 1100_2" transmitted by TRP 1 labeled 1101_1 and "modulation signal 5061_1 addressed to TRP 1 labeled 1101_1" transmitted by NR-UE 1 labeled 1100_1 are present. Thus, it is characterized in that an "NR-UE that is a destination of the modulation signal transmitted by TRP 1 labeled 1101_1" and an "NR-UE that transmits a modulation signal" are different from each other.

In this manner, for example, when a beam direction of "modulation signal 5051_2 addressed to NR-UE 2 labeled 1100_2" and a beam direction of "modulation signal 5061_1 addressed to TRP 1 labeled 1101_1" are different, interference is reduced with each other, thereby bringing about an effect of improving the reception quality of each modulation signal.

Note that a time width of "modulation signal 5051_2 addressed to NR-UE 2 labeled 1100_2" and a time width of "modulation signal 5061_1 addressed to TRP 1 labeled 1101_1" are equal to each other.

Further, a transmission start time of "modulation signal 5051_2 addressed to NR-UE 2 labeled 1100_2" and a transmission start time of "modulation signal 5061_1 addressed to TRP 1 labeled 1101_1" are aligned. Thus, for example, when reference signals are present in "modulation signal 5051_2 addressed to NR-UE 2 labeled 1100_2" and "modulation signal 5061_1 addressed to TRP 1 labeled 1101_1," it is possible to easily control a positional relation between a reference signal included in "modulation signal 5051_2 addressed to NR-UE 2 labeled 1100_2" and a reference signal included in "modulation signal 5061_1 addressed to TRP 1 labeled 1101_1," whereby each apparatus may obtain an effect of facilitating estimation such as channel estimation, electric field estimation, frequency offset estimation, and phase noise estimation. Note that it is not necessary to align the transmission start time of "modulation signal 5051_2 addressed to NR-UE 2 labeled 1100_2" and the transmission start time of "modulation signal 5061_1 addressed to TRP 1 labeled 1101_1."

In time 1_3, "modulation signal 5051_3 addressed to NR-UE 3 labeled 1100_3" transmitted by TRP 1 labeled 1101_1 and "modulation signal 5061_2 addressed to TRP 1 labeled 1101_1" transmitted by NR-UE 2 labeled 1100_2 are present. Thus, it is characterized in that an "NR-UE that is a destination of the modulation signal transmitted by TRP 1 labeled 1101_1" and an "NR-UE that transmits a modulation signal" are different from each other.

In this manner, for example, when a beam direction of "modulation signal 5051_3 addressed to NR-UE 3 labeled 1100_3" and a beam direction of "modulation signal 5061_2 addressed to TRP 1 labeled 1101_1" are different, interference is reduced with each other, thereby bringing about an effect of improving the reception quality of each modulation signal.

Note that a time width of "modulation signal 5051_3 addressed to NR-UE 3 labeled 1100_3" and a time width of "modulation signal 5061_2 addressed to TRP 1 labeled 1101_1" need not be equal to each other.

Further, a transmission start time of "modulation signal 5051_3 addressed to NR-UE 3 labeled 1100_3" and a transmission start time of "modulation signal 5061_2 addressed to TRP 1 labeled 1101_1" are aligned. Thus, for example, when reference signals are present in "modulation signal 5051_3 addressed to NR-UE 3 labeled 1100_3" and "modulation signal 5061_2 addressed to TRP 1 labeled 1101_1," it is possible to easily control a positional relation between a reference signal included in "modulation signal 5051_3 addressed to NR-UE 3 labeled 1100_3" and a reference signal included in "modulation signal 5061_2 addressed to TRP 1 labeled 1101_1," whereby each apparatus may obtain an effect of facilitating estimation such as channel estimation, electric field estimation, frequency offset estimation, and phase noise estimation. Note that it is not necessary to align the transmission start time of "modulation signal 5051_3 addressed to NR-UE 3 labeled 1100_3" and the transmission start time of "modulation signal 5061_2 addressed to TRP 1 labeled 1101_1."

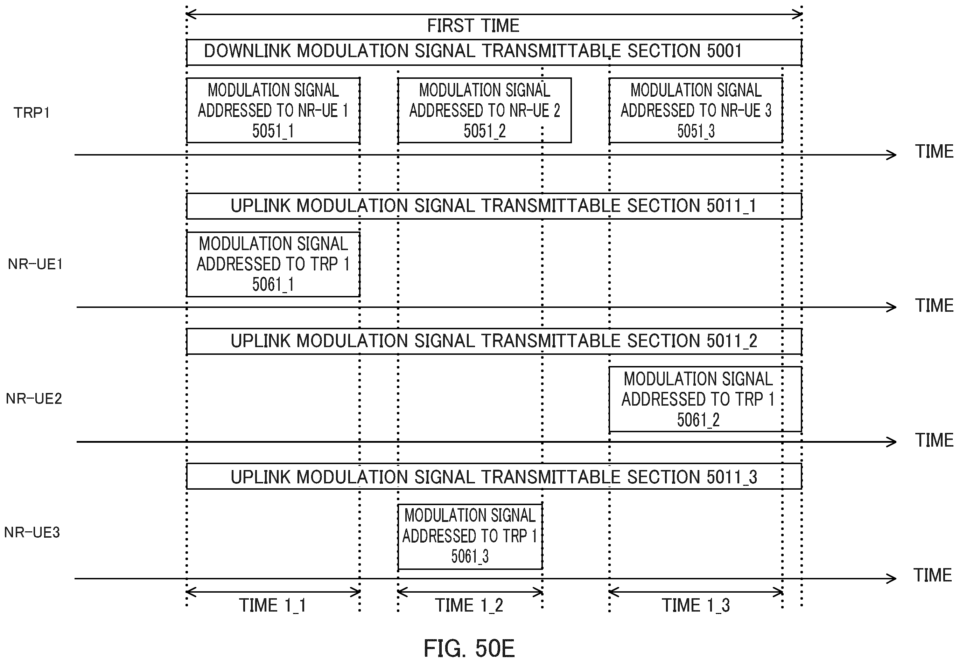

FIG. 50E illustrates an exemplary configuration, which is different from those in FIG. 50C and FIG. 50D, of each of "downlink modulation signal transmission section 5001," "uplink modulation signal transmission section 5011_1," "uplink modulation signal transmission section 5011_2," and "uplink modulation signal transmission section 5011_3" in FIG. 50B. Note that, in FIG. 50E, a horizontal axis represents time. In FIG. 50E, the components that operate in the same manner as the components in FIG. 50C are denoted by the same reference numerals.

In downlink modulation signal transmission section 5001 configured by TRP 1 labeled 1101_1, "modulation signal 5051_1 addressed to NR-UE 1 labeled 1100_1," "modulation signal 5051_2 addressed to NR-UE 2 labeled 1100 2," and "modulation signal 5051_3 addressed to NR-UE 3 labeled 1100_3" are present.

Further, in uplink modulation signal transmission section 5011_1 configured by NR-UE 1 labeled 1100_1, modulation signal 5061_1 addressed to TRP 1 labeled 1101_1 is present.

In uplink modulation signal transmission section 5011_2 configured by NR-UE 2 labeled 1100_2, modulation signal 5061_2 addressed to TRP 1 labeled 1101_1 is present.

In uplink modulation signal transmission section 5011_3 configured by NR-UE 3 labeled 1100_3, modulation signal 5061_3 addressed to TRP 1 labeled 1101_1 is present.

In FIG. 50E, "modulation signal 5051_1 addressed to NR-UE 1 labeled 1100_1" transmitted by TRP 1 labeled 1101_1 and "modulation signal 5061_1 addressed to TRP 1 labeled 1101_1" transmitted by NR-UE 1 labeled 1100_1 are present in time 1_1. Therefore, NR-UE 1 labeled 1100_1 performs a transmission operation and a reception operation in time 1_1.

In this manner described above, self-interference may be reduced, which brings about an effect of improving the frequency utilization efficiency in the system.

Note that a time width of "modulation signal 5051_1 addressed to NR-UE 1 labeled 1100_1" and a time width of "modulation signal 5061_1 addressed to TRP 1 labeled 1101_1" are assumed to be equal to each other.

Further, a transmission start time of "modulation signal 5051_1 addressed to NR-UE 1 labeled 1100_1" and a transmission start time of "modulation signal 5061_1 addressed to TRP 1 labeled 1101_1" are aligned. Thus, for example, when reference signals are present in "modulation signal 5051_1 addressed to NR-UE 1 labeled 1100_1" and "modulation signal 5061_1 addressed to TRP 1 labeled 1101_1," it is possible to easily control a positional relation between a reference signal included in "modulation signal 5051_1 addressed to NR-UE 1 labeled 1100_1" and a reference signal included in "modulation signal 5061_1 addressed to TRP 1 labeled 1101_1," whereby each apparatus may obtain an effect of facilitating estimation such as channel estimation, electric field estimation, frequency offset estimation, and phase noise estimation. Note that it is not necessary to align the transmission start time of "modulation signal 5051_1 addressed to NR-UE 1 labeled 1100_1" and the transmission start time of "modulation signal 5061_1 addressed to TRP 1 labeled 1101_1."

In time 1_2, "modulation signal 5051_2 addressed to NR-UE 2 labeled 1100_2" transmitted by TRP 1 labeled 1101_1 and "modulation signal 5061_3 addressed to TRP 1 labeled 1101_1" transmitted by NR-UE 3 labeled 1100_3 are present. Thus, it is characterized in that an "NR-UE that is a destination of the modulation signal transmitted by TRP 1 labeled 1101_1" and an "NR-UE that transmits a modulation signal" are different from each other.

In this manner, for example, when a beam direction of "modulation signal 5051_2 addressed to NR-UE 2 labeled 1100_2" and a beam direction of "modulation signal 5061_3 addressed to TRP 1 labeled 1101_1" are different, interference is reduced with each other, thereby bringing about an effect of improving the reception quality of each modulation signal.

Note that a time width of "modulation signal 5051_2 addressed to NR-UE 2 labeled 1100_2" and a time width of "modulation signal 5061_3 addressed to TRP 1 labeled 1101_1" need not be equal to each other.

Further, a transmission start time of "modulation signal 5051_2 addressed to NR-UE 2 labeled 1100_2" and a transmission start time of "modulation signal 5061_3 addressed to TRP 1 labeled 1101_1" are aligned. Thus, for example, when reference signals are present in "modulation signal 5051_2 addressed to NR-UE 2 labeled 1100_2" and "modulation signal 5061_3 addressed to TRP 1 labeled 1101_1," it is possible to easily control a positional relation between a reference signal included in "modulation signal 5051_2 addressed to NR-UE 2 labeled 1100_2" and a reference signal included in "modulation signal 5061_3 addressed to TRP 1 labeled 1101_1," whereby each apparatus may obtain an effect of facilitating estimation such as channel estimation, electric field estimation, frequency offset estimation, and phase noise estimation. Note that it is not necessary to align the transmission start time of "modulation signal 5051_2 addressed to NR-UE 2 labeled 1100_2" and the transmission start time of "modulation signal 5061_3 addressed to TRP 1 labeled 1101_1."

In time 1_3, "modulation signal 5051_3 addressed to NR-UE 3 labeled 1100_3" transmitted by TRP 1 labeled 1101_1 and "modulation signal 5061_2 addressed to TRP 1 labeled 1101_1" transmitted by NR-UE 2 labeled 1100_2 are present. Thus, it is characterized in that an "NR-UE that is a destination of the modulation signal transmitted by TRP 1 labeled 1101_1" and an "NR-UE that transmits a modulation signal" are different from each other.

In this manner, for example, when a beam direction of "modulation signal 5051_3 addressed to NR-UE 3 labeled 1100_3" and a beam direction of "modulation signal 5061_2 addressed to TRP 1 labeled 1101_1" are different, interference is reduced with each other, thereby bringing about an effect of improving the reception quality of each modulation signal.

Note that a time width of "modulation signal 5051_3 addressed to NR-UE 3 labeled 1100_3" and a time width of "modulation signal 5061_2 addressed to TRP 1 labeled 1101_1" need not be equal to each other. Further, a transmission start time of "modulation signal 5051_3 addressed to NR-UE 3 labeled 1100_3" and a transmission start time of "modulation signal 5061_2 addressed to TRP 1 labeled 1101_1" are aligned. Thus, for example, when reference signals are present in "modulation signal 5051_3 addressed to NR-UE 3 labeled 1100_3" and "modulation signal 5061_2 addressed to TRP 1 labeled 1101_1," it is possible to easily control a positional relation between a reference signal included in "modulation signal 5051_3 addressed to NR-UE 3 labeled 1100_3" and a reference signal included in "modulation signal 5061_2 addressed to TRP 1 labeled 1101_1," whereby each apparatus may obtain an effect of facilitating estimation such as channel estimation, electric field estimation, frequency offset estimation, and phase noise estimation. Note that it is not necessary to align the transmission start time of "modulation signal 5051_3 addressed to NR-UE 3 labeled 1100_3" and the transmission start time of "modulation signal 5061_2 addressed to TRP 1 labeled 1101_1."

The examples of FIG. 50C, FIG. 50D, and FIG. 50E have been described as exemplary operations of "TRP 1 labeled 1101_1, NR-UE 1 labeled 1100_1, NR-UE 2 labeled 1100_2, and NR-UE 3 labeled 1100_3" in a time axis in FIG. 49, but the state in FIG. 50C, the state in FIG. 50D, and the state in FIG. 50E may be switched in the time axis. Additionally, in FIG. 49, the number of present TRPs is two, and the number of present NR-UEs is three, but they are each exemplary. The same implementation is possible even when the number of present TRPs is two or more and the number of present NR-UEs is two or more.

The communication methods described in the present embodiment may be switched in time and thus performed. For example, a communication method to be performed may be switched in time in such a manner that any of the following communication methods is performed in the first time: "the communication method described with reference to FIG. 48C;" "the communication method described with reference to FIG. 48D;" "the communication method described with reference to FIG. 48E;" "the communication method described with reference to FIG. 50C;" "the communication method described with reference to FIG. 50D;" "the communication method described with reference to FIG. 50E;" and "the communication method described in another embodiment," and then, a communication method different from the communication method performed in the first time is selected from the following communication methods: "the communication method described with reference to FIG. 48C;" "the communication method described with reference to FIG. 48D;" "the communication method described with reference to FIG. 48E;" "the communication method described with reference to FIG. 50C;" "the communication method described with reference to FIG. 50D;" "the communication method described with reference to FIG. 50E;" and "the communication method described in another embodiment," and is performed in the second time.

Note that communication methods to be switched in time are not limited to these examples.

Further, the communication methods described in the present embodiment may be switched by frequncy and thus performed. For example, a communication method to be performed may be switched by frequncy in such a manner that any of the following communication methods is performed at frequency (band) A: "the communication method described with reference to FIG. 48C;" "the communication method described with reference to FIG. 48D;" "the communication method described with reference to FIG. 48E;" "the communication method described with reference to FIG. 50C;" "the communication method described with reference to FIG. 50D;" "the communication method described with reference to FIG. 50E;" and "the communication method described in another embodiment," and then, a communication method different from the communication method performed at frequency (band) A is selected from the following communication methods: "the communication method described with reference to FIG. 48C;" "the communication method described with reference to FIG. 48D;" "the communication method described with reference to FIG. 48E;" "the communication method described with reference to FIG. 50C;" "the communication method described with reference to FIG. 50D;" "the communication method described with reference to FIG. 50E;" and "the communication method described in another embodiment," and is performed at frequency (band) B.

Note that communication methods to be switched by frequency are not limited to these examples.

Since the configuration of each apparatus in the present embodiment has been described in another embodiment, the description thereof will be omitted. However, the configuration of each apparatus is not limited to the configuration that has already been described. Further, the communication methods that have been described in the present embodiment are exemplary and may be combined with another embodiment and implemented in a modified manner.

(Embodiment 6)

In Embodiment 6, a description will be given of an example relating to a transmission power control method in a communication method described in another embodiment and the like.

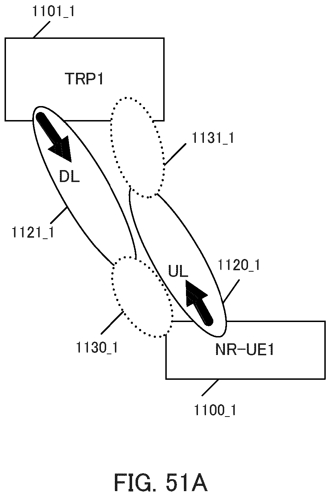

FIG. 51A illustrates an exemplary radio system in the present embodiment. As illustrated in FIG. 51A, there are TRP 1 labeled 1101_1 and NR-UE 1 labeled 1100_1, for example. Note that, in FIG. 51A, the components that operate in the same manner as the components in FIG. 11 are denoted by the same reference numerals, and some descriptions thereof will be omitted.

In FIG. 51A, TRP 1 labeled 1101_1 generates transmission beam 1121_1 and uses transmission beam 1121_1 to transmit a modulation signal addressed to NR-UE 1 labeled 1100_1 (Downlink (DL)).

NR-UE 1 labeled 1100_1 then generates received beam 1130_1 and uses received beam 1130_1 to receive the modulation signal addressed to NR-UE 1 that has been transmitted by TRP 1 labeled 1101_1.

Moreover, NR-UE 1 labeled 1100_1 generates transmission beam 1120_1 and uses transmission beam 1120_1 to transmit a modulation signal addressed to TRP 1 labeled 1101_1 (Uplink (UL)).

TRP 1 labeled 1101_1 then generates received beam 1131_1 and uses received beam 1131_1 to receive the modulation signal addressed to TRP 1 that has been transmitted by NR-UE 1 labeled 1100_1.

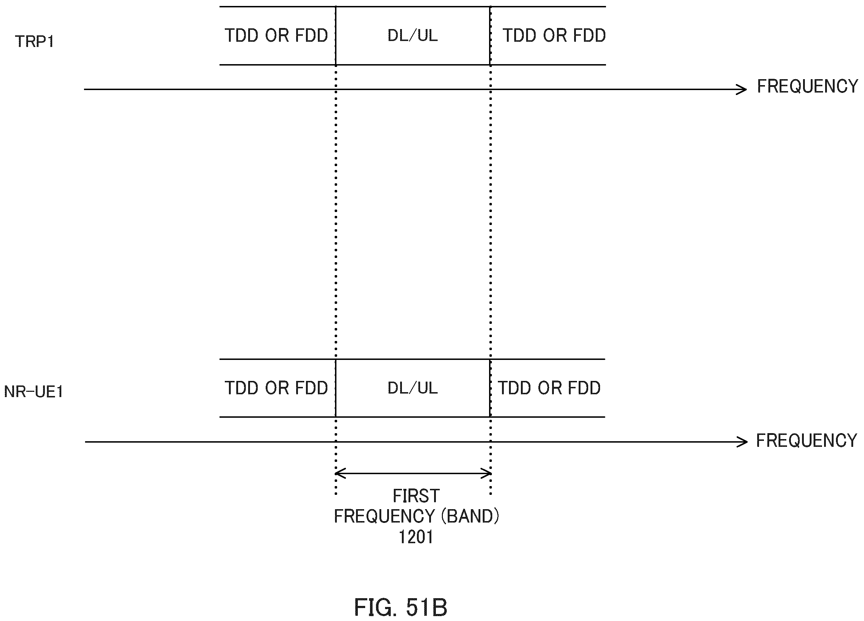

FIG. 51B illustrates exemplary communication statuses of "TRP 1 labeled 1101_1 and NR-UE 1 labeled 1100_1" in a frequency axis in FIG. 51A. Note that, in FIG. 51B, a horizontal axis represents the frequency, and the components that operate in the same manner as the components in FIG. 12 are denoted by the same reference numerals.

TRP 1 labeled 1101_1 uses first frequency (band) 1201 to transmit a modulation signal for downlink. At this time, for example, NR-UE 1 labeled 1100_1 receives the modulation signal at first frequency (band) 1201 transmitted by TRP 1 labeled 1101_1. Note that, as in FIG. 51B, TRP 1 labeled 1101_1 may perform TDD communication or FDD communication at a frequency (band) other than first frequency (band) 1201, or unlike FIG. 51B, TRP 1 labeled 1101_1 need not perform communication at a frequency (band) other than first frequency (band) 1201.

NR-UE 1 labeled 1100_1 uses first frequency (band) 1201 to receive a modulation signal for downlink and to transmit a modulation signal for uplink. At this time, for example, TRP 1 labeled 1101_1 receives the modulation signal at first frequency (band) 1201 transmitted by NR-UE 1 labeled 1100_1. NR-UE 1 labeled 1100_1 then receives the modulation signal at first frequency (band) 1201 transmitted by TRP 1 labeled 1101_1. Note that, as in FIG. 51B, NR-UE 1 labeled 1100_1 may perform TDD communication or FDD communication at a frequency (band) other than first frequency (band) 1201. Unlike FIG. 51B, NR-UE 1 labeled 1100_1 need not perform communication at a frequency (band) other than first frequency (band) 1201.

In FIG. 51B, a case has been described where the frequency for "downlink" and the frequency for "uplink" are the same frequency (band), but the present embodiment is not limited to this case, and the frequency for "downlink" and the frequency for "uplink" may be the same frequency (band) partly. Descriptions of TDD and FDD will be omitted because they have already been each described.

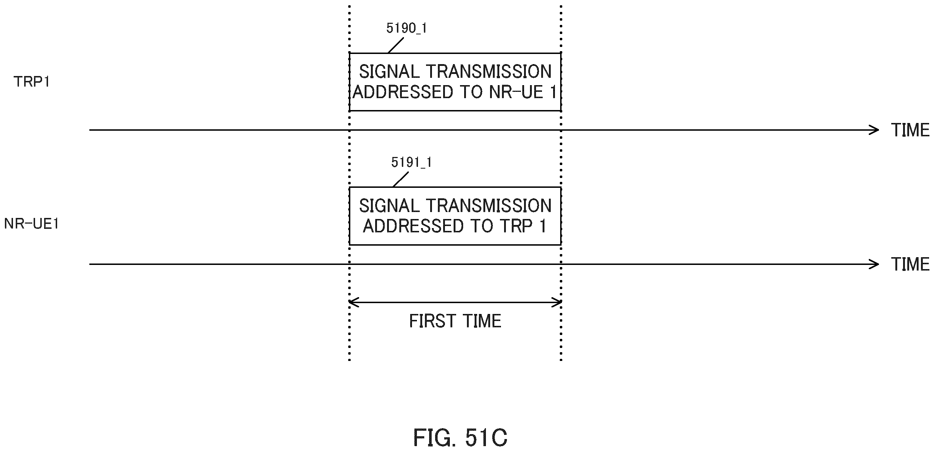

FIG. 51C illustrates exemplary communication statuses of NR-UE 1 labeled 1100_1 and TRP 1 labeled 1101_1 in time in FIG. 51A. In FIG. 51C, a horizontal axis represents time. Note that, FIG. 51C indicates communication statuses at first frequency (band) 1201 in FIG. 51B.

As illustrated in FIG. 51C, NR-UE 1 labeled 1100_1 transmits a signal addressed to TRP 1 labeled 1101_1 for "communication at first frequency (band) 1201 of FIG. 51B" in the first time (5191_1).

Further, as illustrated in FIG. 51C, TRP 1 labeled 1101_1 transmits a signal addressed to NR-UE 1 labeled 1100_1 for "communication at first frequency (band) 1201 of FIG. 51B" in the first time (5190_1).

Therefore, both NR-UE 1 labeled 1100_1 and TRP 1 labeled 1101_1 perform transmission/reception of a modulation signal simultaneously.

Note that the signal addressed to TRP 1 labeled 1101_1 transmitted by NR-UE 1 labeled 1100_1 may be present in time other than the first time. Moreover, the signal addressed to NR-UE 1 labeled 1100_1 transmitted by TRP 1 labeled 1101_1 may be present in time other than the first time.

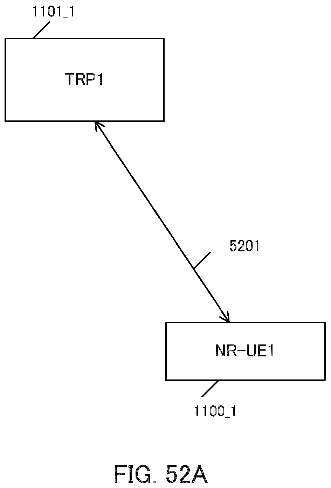

FIG. 52A illustrates an exemplary radio system in the present embodiment, which is different from that in FIG. 51A. As illustrated in FIG. 52A, there are TRP 1 labeled 1101_1 and NR-UE 1 labeled 1100_1, for example. Note that, in FIG. 52A, the components that operate in the same manner as the components in FIG. 11 are denoted by the same reference numerals, and some descriptions thereof will be omitted.

NR-UE 1 labeled 1100_1 and TRP 1 labeled 1101_1 perform communication by "TDD or FDD" (5201).

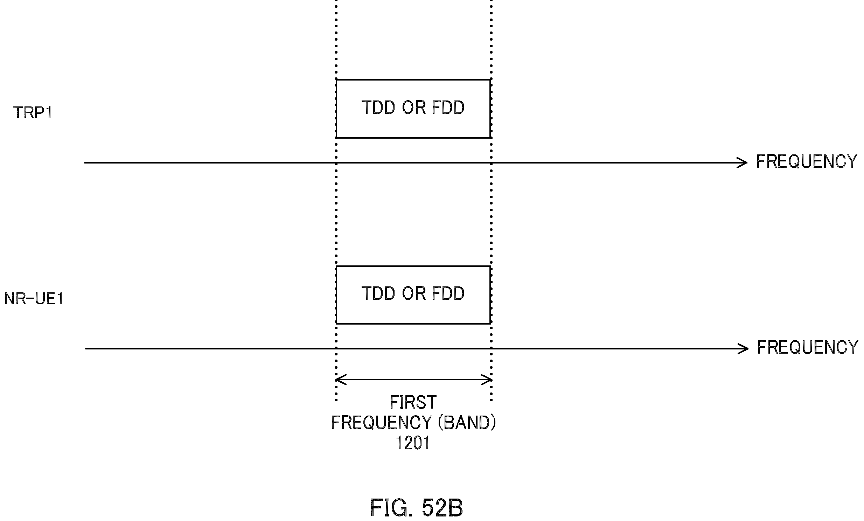

FIG. 52B illustrates exemplary communication statuses of "TRP 1 labeled 1101_1 and NR-UE 1 labeled 1100_1" in a frequency axis in FIG. 52A. Note that, in FIG. 52B, a horizontal axis represents the frequency, and the components that operate in the same manner as the components in FIG. 12 are denoted by the same reference numerals.

NR-UE 1 labeled 1100_1 and TRP 1 labeled 1101_1 use first frequency (band) 1201 to perform communication by "TDD or FDD." Note that NR-UE 1 labeled 1100_1 and TRP 1 labeled 1101_1 may use a frequency other than first frequency (band) 1201 for this communication, or as in FIG. 52B, NR-UE 1 labeled 1100_1 and TRP 1 labeled 1101_1 need not use a frequency other than first frequency (band) 1201.

FIG. 51C illustrates exemplary communication statuses of NR-UE 1 labeled 1100_1 and TRP 1 labeled 1101_1 in time in FIG. 51A. In FIG. 51C, a horizontal axis represents time.

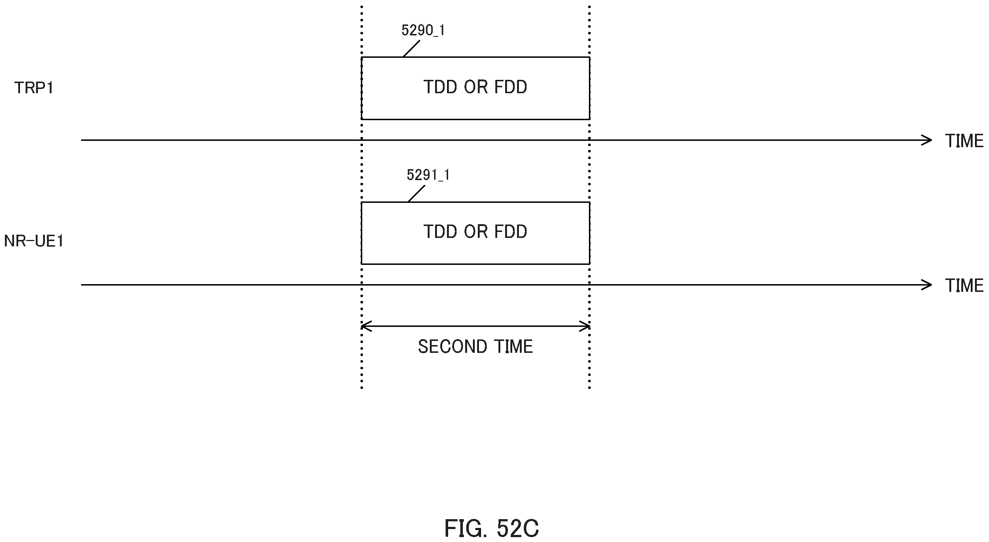

As illustrated in FIG. 52C, NR-UE 1 labeled 1100_1 and TRP 1 labeled 1101_1 perform communication in the second time as indicated in FIG. 51A (5290_1 and 5291_1).

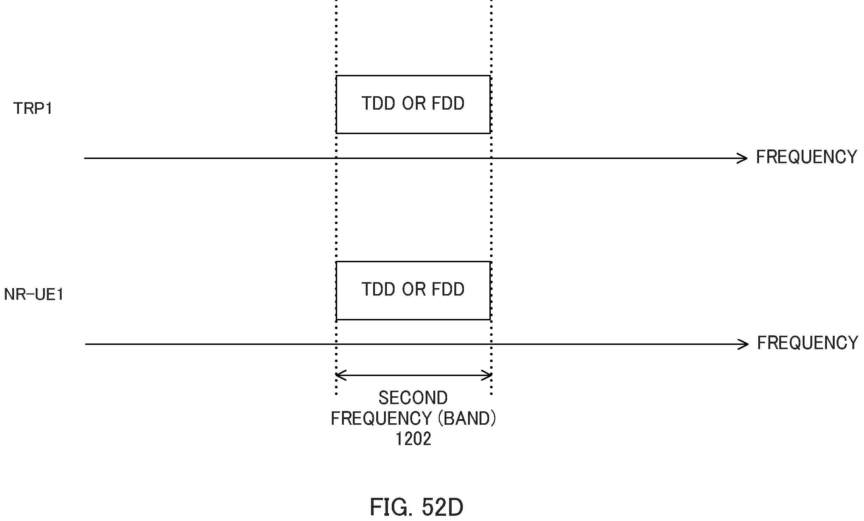

Note that NR-UE 1 labeled 1100_1 and TRP 1 labeled 1101_1 may perform communication in time other than the second time. Further, NR-UE 1 labeled 1100_1 and TRP 1 labeled 1101_1 may use the frequency as described in FIG. 52B or FIG. 52D. FIG. 52D will be described below.

FIG. 52D illustrates exemplary communication statuses of "TRP 1 labeled 1101_1 and NR-UE 1 labeled 1100_1" in a frequency axis in FIG. 52A. Note that, in FIG. 52D, a horizontal axis represents the frequency.

NR-UE 1 labeled 1100_1 and TRP 1 labeled 1101_1 use second frequency (band) 1202 to perform communication by "TDD or FDD."

Note that NR-UE 1 labeled 1100_1 and TRP 1 labeled 1101_1 may use a frequency other than second frequency (band) 1202 for this communication, or as in FIG. 52D, NR-UE 1 labeled 1100_1 and TRP 1 labeled 1101_1 need not use a frequency other than second frequency (band) 1202.

The following two cases are discussed.

Case 1:
The "communication methods described with reference to FIG. 51A, FIG. 51B, and FIG. 51C" are performd in the first time, whereas, the "communication methods described with reference to FIG. 52A, FIG. 52B, and FIG. 52C" are performd in the second time.

Case 2:
The "communication methods described with reference to FIG. 51A, FIG. 51B, and FIG. 51C" are performd in the first time, whereas, the "communication methods described with reference to FIG. 52A, FIG. 52C, and FIG. 52D" are performd in the first time or the second time.

In Case 1 and Case 2, NR-UE 1 labeled 1100_1 and TRP 1 labeled 1101_1 communicate with each other. At this time, for example, the configuration in FIG. 13A is possible as an exemplary configuration of TRP 1 labeled 1101_1. However, the configuration of TRP 1 labeled 1101_1 is not limited to the configuration in FIG. 13A and may be, for example, a configuration that includes no transmission antenna group 1305 in FIG. 13A.

Further, for example, the configuration in FIG. 14 is possible as an exemplary configuration of NR-UE 1 labeled 1100_1. However, the configuration of NR-UE 1 labeled 1100_1 is not limited to the configuration in FIG. 14 and may be, for example, a configuration that does not include one or more of transmission antenna group 1405, reception antenna group 1416, and transmission/recption antenna group 1454 in FIG. 14.

At this time, TRP 1 labeled 1101_1 having the configuration in FIG. 13A includes, in communication apparatus 1302, a "transmission power controller" that controls transmission (electric) power, and NR-UE 1 labeled 1100_1 having the configuration in FIG. 14 includes, in communication apparatus 1402, a "transmission power controller" for that controls transmission (electric) power.

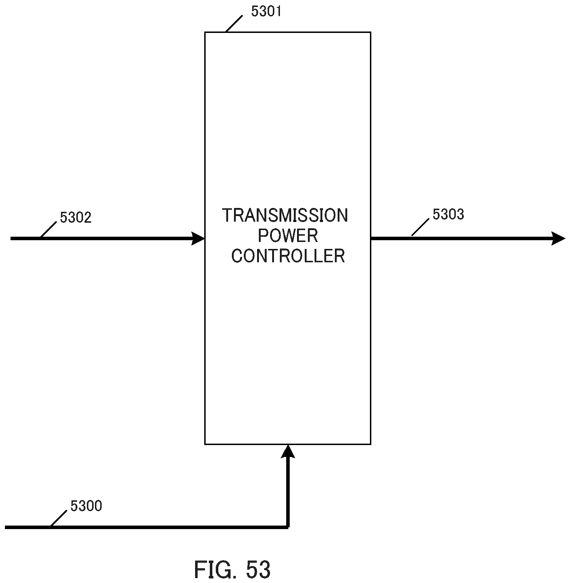

FIG. 53 illustrates an exemplary configuration of the "transmission power controller" included in TRP 1 labeled 1101_1 having the configuration in FIG. 13A or the "transmission power controller" included in NR-UE 1 labeled 1100_1 having the configuration in FIG. 14.

As illustrated in FIG. 53, transmission power controller 5301 inputs modulation signal 5302 and control signal 5300, controls transmission (electric) power of modulation signal 5302, based on control signal 5300, and then outputs modulation signal 5303 after the transmission power control.

In Case 1, Let A be transmission (electric) power configured for NR-UE 1 labeled 1100_1 by the transmission (electric) power control.

When the "communication methods described with reference to FIG. 51A, FIG. 51B, and FIG. 51C" are performed in the first time of Case 1, let F be the maximum value of the transmission (electric) power of NR-UE 1 labeled 1100_1 (in units, for example, dBm). Accordingly, A is set to be less than or equal to F in the first time.

When the "communication methods described with reference to FIG. 52A, FIG. 52B, and FIG. 52C" are performed in the second time of Case 2, let G be the maximum value of the transmission (electric) power of NR-UE 1 labeled 1100_1 (in units, for example, dBm). Accordingly, A is set to be less than or equal to G in the second time.

When the "communication methods described with reference to FIG. 51A, FIG. 51B, and FIG. 51C" are performed in the first time of Case 1, transmission (electric) power A is controlled such that the reception quality of data in both TRP 1 labeled 1101_1 and NR-UE 1 labeled 1100_1 is improved (Because TRP 1 labeled 1101_1 and NR-UE 1 labeled 1100_1 perform reception operation in the first time). The maximum value of the transmission (electric) power is set to F based on this.

On the other hand, when "communication methods described with reference to FIG. 52A, FIG. 52B, and FIG. 52C" are performed in the second time of Case 1, transmission (electric) power A is controlled such that the reception quality of data in TRP 1 labeled 1101_1 is improved. The maximum value of the transmission (electric) power is set to G based on this.

Therefore, a requirement for setting the maximum value F of the transmission (electric) power in the first time and a requirement for setting the maximum value G of the transmission (electric) power in the second time are different from each other. Making F and G different values (F≠G) brings about an effect of improving the reception quality of data in each apparatus.

Let B be transmission (electric) power configured for TRP 1 labeled 1101_1 by the transmission (electric) power control.

When the "communication methods described with reference to FIG. 51A, FIG. 51B, and FIG. 51C" are performed in the first time of Case 1, let H be the maximum value of the transmission (electric) power of TRP 1 labeled 1101_1 (in units, for example, dBm). Accordingly, B is set to be less than or equal to H in the first time.

When the "communication methods described with reference to FIG. 52A, FIG. 52B, and FIG. 52C" are performed in the second time of Case 1, let I be the maximum value of the transmission (electric) power of TRP 1 labeled 1101_1 (in units, for example, dBm). Accordingly, B is set to be less than or equal to I in the second time.

When the "communication methods described with reference to FIG. 51A, FIG. 51B, and FIG. 51C" are performed in the first time of Case 1, transmission (electric) power B is controlled such that the reception quality of data in both TRP 1 labeled 1101_1 and NR-UE 1 labeled 1100_1 is improved (Because TRP 1 labeled 1101_1 and NR-UE 1 labeled 1100_1 perform reception operation in the first time). The maximum value of the transmission (electric) power is set to H based on this.

On the other hand, when "communication methods described with reference to FIG. 52A, FIG. 52B, and FIG. 52C" are performed in the second time of Case 1, transmission (electric) power B is controlled such that the reception quality of data in NR-UE 1 labeled 1100_1 is improved. The maximum value of the transmission (electric) power is set to I based on this.

Therefore, a requirement for setting the maximum value H of the transmission (electric) power in the first time and a requirement for setting the maximum value I of the transmission (electric) power in the second time are different from each other. Making H and I different values (H≠I) brings about an effect of improving the reception quality of data in each apparatus.

In Case 2, Let C be transmission (electric) power configured for NR-UE 1 labeled 1100_1 by the transmission (electric) power control.

When the "communication methods described with reference to FIG. 51A, FIG. 51B, and FIG. 51C" are performed in the first time of Case 2, let J be the maximum value of the transmission (electric) power of NR-UE 1 labeled 1100_1 (in units, for example, dBm). Accordingly, C for the "communication methods described with reference to FIG. 51A, FIG. 51B, and FIG. 51C" is set to be less than or equal to J.

When the "communication methods described with reference to FIG. 52A, FIG. 52C, and FIG. 52D" are performed in the first time or the second time of Case 2, let K be the maximum value of the transmission (electric) power of NR-UE 1 labeled 1100_1 (in units, for example, dBm). Accordingly, C for the "communication methods described with reference to FIG. 52A, FIG. 52C, and FIG. 52D" is set to be less than or equal to K.

When the "communication methods described with reference to FIG. 51A, FIG. 51B, and FIG. 51C" are performed in the first time of Case 2, transmission (electric) power C is controlled such that the reception quality of data in both TRP 1 labeled 1101_1 and NR-UE 1 labeled 1100_1 is improved (Because TRP 1 labeled 1101_1 and NR-UE 1 labeled 1100_1 perform reception operation in "communication methods described with reference to FIG. 51A, FIG. 51B, and FIG. 51C"). The maximum value of the transmission (electric) power is set to J based on this.

On the other hand, when "communication methods described with reference to FIG. 52A, FIG. 52C, and FIG. 52D" are performed in the first time or the second time of Case 2, transmission (electric) power C is controlled such that the reception quality of data in TRP 1 labeled 1101_1 is improved. The maximum value of the transmission (electric) power is set to K based on this.

Therefore, a requirement for setting the maximum value J of the transmission (electric) power in the "communication methods described with reference to FIG. 51A, FIG. 51B, and FIG. 51C" and a requirement for setting the maximum value K of the transmission (electric) power in the "communication methods described with reference to FIG. 52A, FIG. 52C, and FIG.

52D" are different from each other. Making J and K different values (J≠K) brings about an effect of improving the reception quality of data in each apparatus.

Let D be transmission (electric) power configured for TRP 1 labeled 1101_1 by the transmission (electric) power control.

When the "communication methods described with reference to FIG. 51A, FIG. 51B, and FIG. 51C" are performed in the first time of Case 2, let L be the maximum value of the transmission (electric) power of TRP 1 labeled 1101_1 (in units, for example, dBm). Accordingly, D for the "communication methods described with reference to FIG. 51A, FIG. 51B, and FIG. 51C" is set to be less than or equal to L.

When the "communication methods described with reference to FIG. 52A, FIG. 52C, and FIG. 52D" are performed in the first time or the second time of Case 2, let M be the maximum value of the transmission (electric) power of TRP 1 labeled 1101_1 (in units, for example, dBm). Accordingly, D for the "communication methods described with reference to FIG. 52A, FIG. 52C, and FIG. 52D" is set to be less than or equal to M.

When the "communication methods described with reference to FIG. 51A, FIG. 51B, and FIG. 51C" are performed in the first time of Case 2, transmission (electric) power D is controlled such that the reception quality of data in both TRP 1 labeled 1101_1 and NR-UE 1 labeled 1100_1 is improved (Because TRP 1 labeled 1101_1 and NR-UE 1 labeled 1100_1 perform reception operation in "communication methods described with reference to FIG. 51A, FIG. 51B, and FIG. 51C"). The maximum value of the transmission (electric) power is set to L based on this.

On the other hand, when "communication methods described with reference to FIG. 52A, FIG. 52C, and FIG. 52D" are performed in the first time or the second time of Case 2, transmission (electric) power D is controlled such that the reception quality of data in NR-UE 1 labeled 1100_1 is improved. The maximum value of the transmission (electric) power is set to M based on this.

Therefore, a requirement for setting the maximum value L of the transmission (electric) power in the "communication methods described with reference to FIG. 51A, FIG. 51B, and FIG. 51C" and a requirement for setting the maximum value M of the transmission (electric) power in the "communication methods described with reference to FIG. 52A, FIG. 52C, and FIG. 52D" are different from each other. Making L and M different values (L≠M) brings about an effect of improving the reception quality of data in each apparatus.

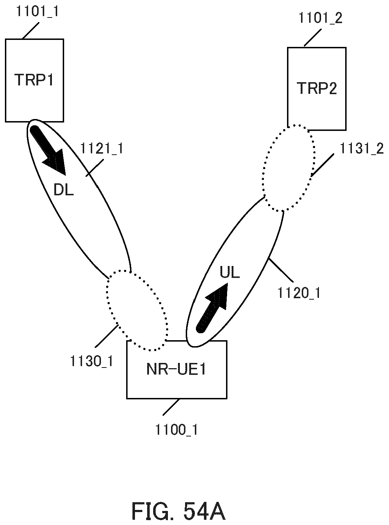

FIG. 54A illustrates an exemplary radio system in the present embodiment, which is different from that in FIG. 51A. As illustrated in FIG. 54A, there are TRP 1 labeled 1101_1, TRP 2 labeled 1101_2, and NR-UE 1 labeled 1100_1, for example. Note that, in FIG. 54A, the components that operate in the same manner as the components in FIG. 11 are denoted by the same reference numerals, and some descriptions thereof will be omitted.

In FIG. 54A, TRP 1 labeled 1101_1 generates transmission beam 1121_1 and uses transmission beam 1121_1 to transmit a modulation signal addressed to NR-UE 1 labeled 1100_1 (Downlink (DL)).

NR-UE 1 labeled 1100_1 then generates received beam 1130_1 and uses received beam 1130_1 to receive the modulation signal addressed to NR-UE 1 that has been transmitted by TRP 1 labeled 1101_1.

Moreover, NR-UE 1 labeled 1100_1 generates transmission beam 1120_1 and uses transmission beam 1120_1 to transmit a modulation signal addressed to TRP 2 labeled 1101_2 (Uplink (UL)).

TRP 2 labeled 1101_2 then generates received beam 1131_2 and uses received beam 1131_2 to receive the modulation signal addressed to TRP 2 that has been transmitted by NR-UE 1 labeled 1100_1.

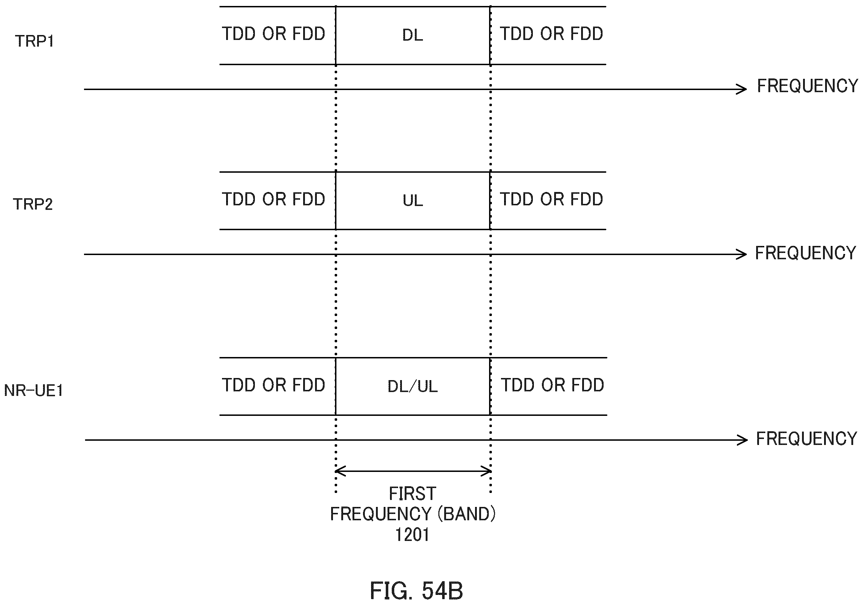

FIG. 54B illustrates exemplary communication statuses of "TRP 1 labeled 1101_1, TRP 2 labeled 1101_2, and NR-UE 1 labeled 1100_1" in a frequency axis in FIG. 54A. Note that, in FIG. 54B, a horizontal axis represents the frequency.

TRP 1 labeled 1101_1 uses first frequency (band) 1201 to transmit a modulation signal for downlink. At this time, for example, NR-UE 1 labeled 1100_1 receives the modulation signal transmitted by TRP 1 labeled 1101_1. Note that, as in FIG. 54B, TRP 1 labeled 1101_1 may perform TDD communication or FDD communication at a frequency (band) other than first frequency (band) 1201. Unlike FIG. 54B, TRP 1 labeled 1101_1 need not perform communication at a frequency (band) other than first frequency (band) 1201.

TRP 2 labeled 1101_2 uses first frequency (band) 1201 to receive a modulation signal for uplink. At this time, TRP 2 labeled 1101_2 receives the modulation signal at first frequency (band) 1201 transmitted by NR-UE 1 labeled 1100_1. Note that, as in FIG. 54B, TRP 2 labeled 1101_2 may perform TDD communication or FDD communication at a frequency (band) other than first frequency (band) 1201. Unlike FIG. 54B, TRP 2 labeled 1101_2 need not perform communication at a frequency (band) other than first frequency (band) 1201.

NR-UE 1 labeled 1100_1 uses first frequency (band) 1201 to receive a modulation signal for downlink and to transmit a modulation signal for uplink. At this time, for example, TRP 2 labeled 1101_2 receives the modulation signal transmitted by NR-UE 1 labeled 1100_1. NR-UE 1 labeled 1100_1 then receives the modulation signal at first frequency (band) 1201 transmitted by TRP 1 labeled 1101_1. Note that, as in FIG. 54B, NR-UE 1 labeled 1100_1 may perform TDD communication or FDD communication at a frequency (band) other than first frequency (band) 1201. Unlike FIG. 54B, NR-UE 1 labeled 1100_1 need not perform communication at a frequency (band) other than first frequency (band) 1201.

In FIG. 54B, a case has been described where the frequency for "downlink" and the frequency for "uplink" are the same frequency (band), but the present embodiment is not limited to this case, and the frequency for "downlink" and the frequency for "uplink" may be the same frequency (band) partly. Descriptions of TDD and FDD will be omitted because they have already been each described.

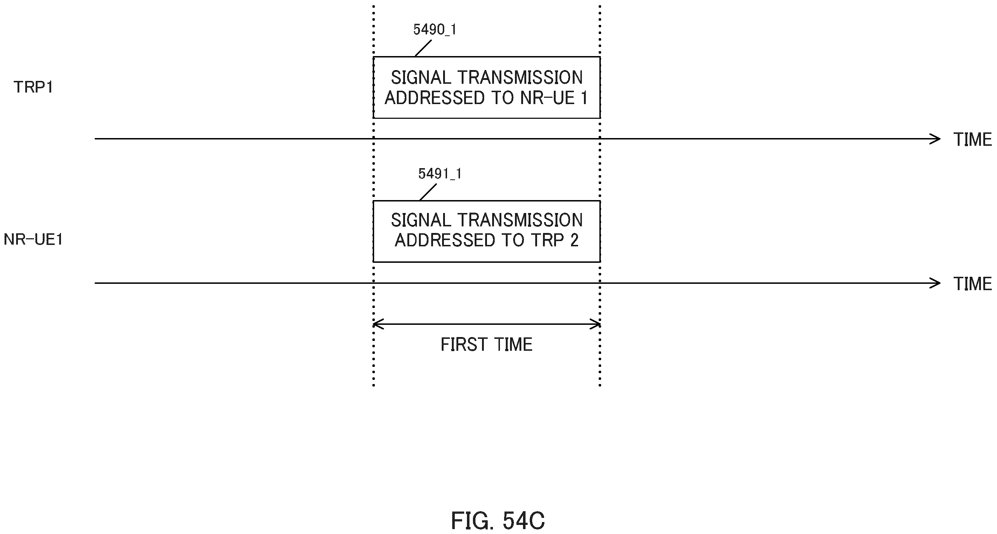

FIG. 54C illustrates exemplary communication statuses of NR-UE 1 labeled 1100_1 and TRP 1 labeled 1101_1 in time in FIG. 54A. In FIG. 54C, a horizontal axis represents time. Note that, FIG. 54C indicates communication statuses at first frequency (band) 1201 in FIG. 54B.

As illustrated in FIG. 54C, NR-UE 1 labeled 1100_1 transmits a signal addressed to TRP 2 labeled 1101_2 for "communication at first frequency (band) 1201 of FIG. 54B" in the first time (5491_1).

Further, as illustrated in FIG. 54C, TRP 1 labeled 1101_1 transmits a signal addressed to NR-UE 1 labeled 1100_1 for "communication at first frequency (band) 1201 of FIG. 54B" in the first time (5490_1).

Therefore, NR-UE 1 labeled 1100_1 performs transmission/reception of a modulation signal simultaneously.

Note that the signal addressed to TRP 2 labeled 1101_2 transmitted by NR-UE 1 labeled 1100_1 may be present in time other than the first time. Moreover, the signal addressed to NR-UE 1 labeled 1100_1 transmitted by TRP 1 labeled 1101_1 may be present in time other than the first time.

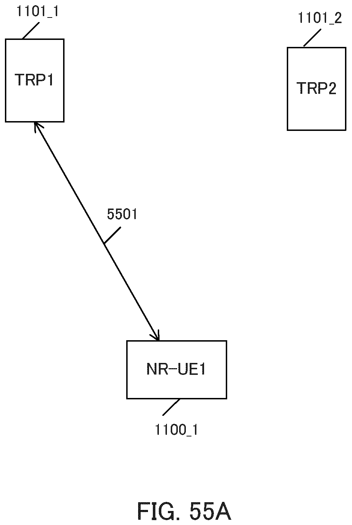

FIG. 55A illustrates an exemplary radio system in the present embodiment, which is different from that in FIG. 54A. As illustrated in FIG. 55A, there are TRP 1 labeled 1101_1, TRP 2 labeled 1101_2, and NR-UE 1 labeled 1100_1, for example. Note that, in FIG. 55A, the components that operate in the same manner as the components in FIG. 11 are denoted by the same reference numerals, and some descriptions thereof will be omitted.

NR-UE 1 labeled 1100_1 and TRP 1 labeled 1101_1 perform communication by "TDD or FDD" (5501).

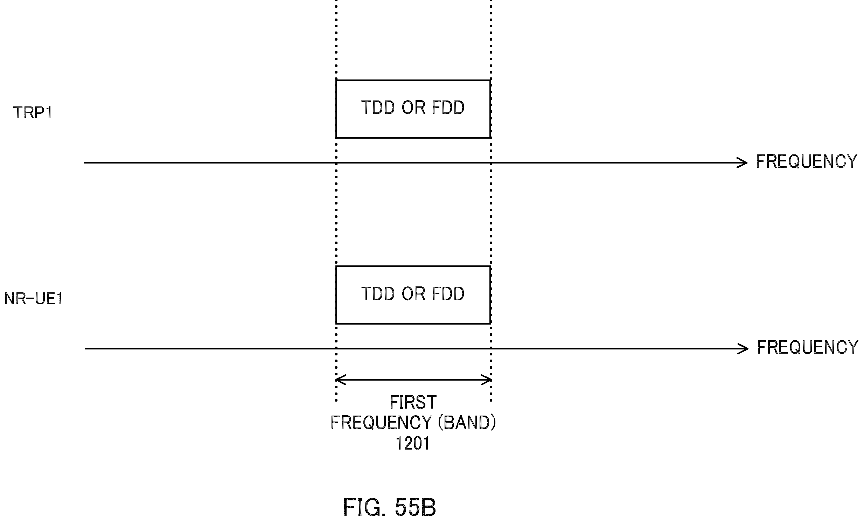

FIG. 55B illustrates exemplary communication statuses of "TRP 1 labeled 1101_1 and NR-UE 1 labeled 1100_1" in a frequency axis in FIG. 55A. Note that, in FIG. 55B, a horizontal axis represents the frequency, and the components that operate in the same manner as the components in FIG. 12 are denoted by the same reference numerals.

NR-UE 1 labeled 1100_1 and TRP 1 labeled 1101_1 use first frequency (band) 1201 to perform communication by "TDD or FDD." Note that NR-UE 1 labeled 1100_1 and TRP 1 labeled 1101_1 may use a frequency other than first frequency (band) 1201 for this communication, or as in FIG. 55B, NR-UE 1 labeled 1100_1 and TRP 1 labeled 1101_1 need not use a frequency other than first frequency (band) 1201.

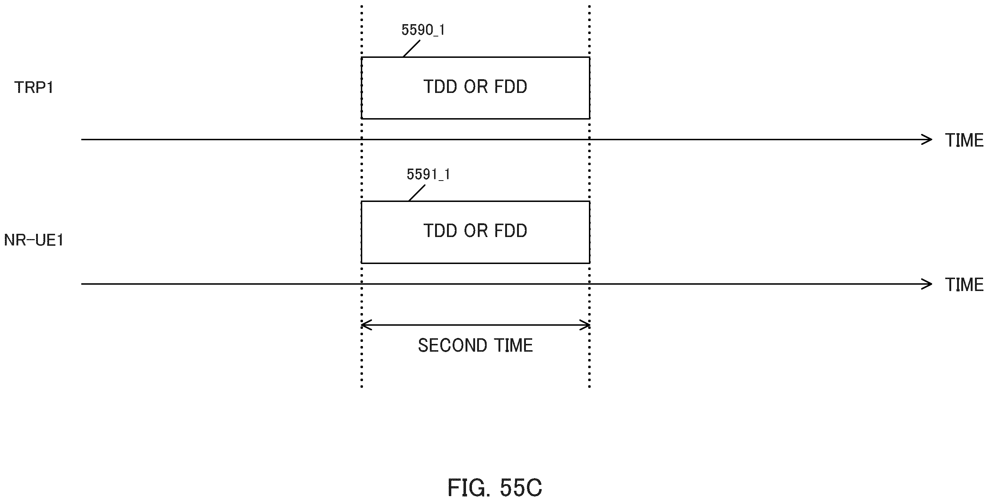

FIG. 55C illustrates exemplary communication statuses of NR-UE 1 labeled 1100_1 and TRP 1 labeled 1101_1 in time in FIG. 55A. In FIG. 55C, a horizontal axis represents time.

As illustrated in FIG. 55C, NR-UE 1 labeled 1100_1 and TRP 1 labeled 1101_1 perform communication in the second time as indicated in FIG. 55A (5590_1 and 5591_1).

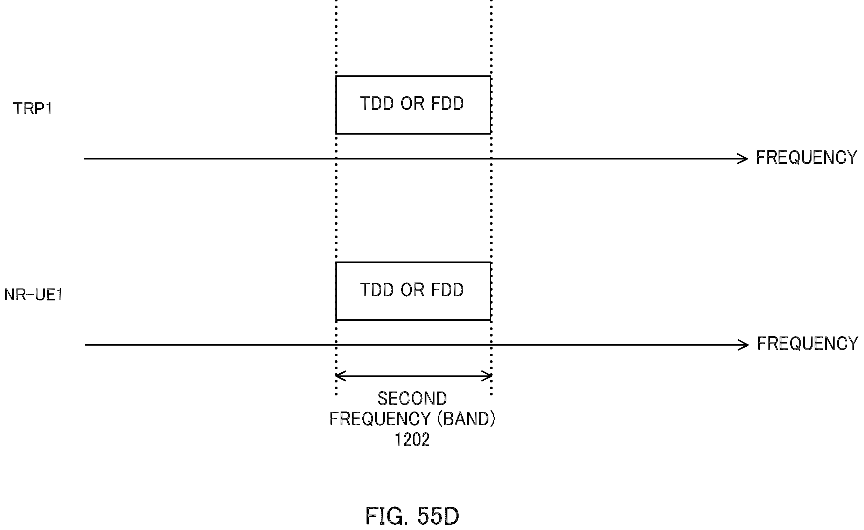

Note that NR-UE 1 labeled 1100_1 and TRP 1 labeled 1101_1 may perform communication in time other than the second time. Further, NR-UE 1 labeled 1100_1 and TRP 1 labeled 1101_1 may use the frequency as described in FIG. 55B or 55D. FIG. 55D will be described below.

FIG. 55D illustrates exemplary communication statuses of "TRP 1 labeled 1101_1 and NR-UE 1 labeled 1100_1" in a frequency axis in FIG. 55A. Note that, in FIG. 55D, a horizontal axis represents the frequency.

NR-UE 1 labeled 1100_1 and TRP 1 labeled 1101_1 use second frequency (band) 1202 to perform communication by "TDD or FDD."

Note that NR-UE 1 labeled 1100_1 and TRP 1 labeled 1101_1 may use a frequency other than second frequency (band) 1202 for this communication, or as in FIG. 55D, NR-UE 1 labeled 1100_1 and TRP 1 labeled 1101_1 need not use a frequency other than second frequency (band) 1202.

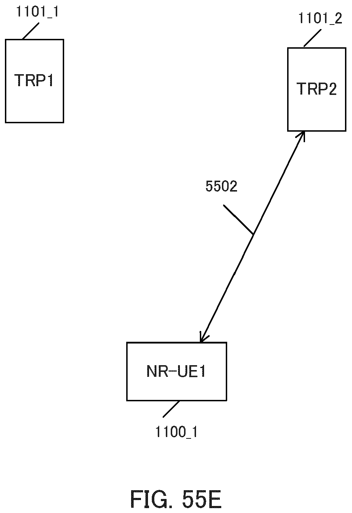

FIG. 55E illustrates an exemplary radio system in the present embodiment, which is different from that in FIG. 55A. As illustrated in FIG. 55E, there are TRP 1 labeled 1101_1, TRP 2 labeled 1101_2, and NR-UE 1 labeled 1100_1, for example. Note that, in FIG. 55E, the components that operate in the same manner as the components in FIG. 11 are denoted by the same reference numerals, and some descriptions thereof will be omitted.

NR-UE 1 labeled 1100_1 and TRP 2 labeled 1101_2 perform communication by "TDD or FDD" (5502).

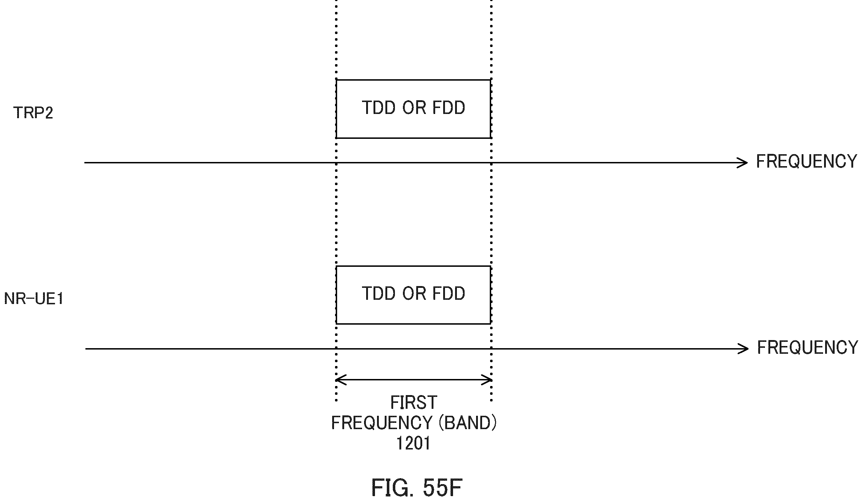

FIG. 55F illustrates exemplary communication statuses of "TRP 2 labeled 1101_2 and NR-UE 1 labeled 1100_1" in a frequency axis in FIG. 55E. Note that, in FIG. 55F, a horizontal axis represents the frequency, and the components that operate in the same manner as the components in FIG. 12 are denoted by the same reference numerals.

NR-UE 1 labeled 1100_1 and TRP 2 labeled 1101_2 use first frequency (band) 1201 to perform communication by "TDD or FDD." Note that NR-UE 1 labeled 1100_1 and TRP 2 labeled 1101_2 may use a frequency other than first frequency (band) 1201 for this communication, or as in FIG. 55F, NR-UE 1 labeled 1100_1 and TRP 2 labeled 1101_2 need not use a frequency other than first frequency (band) 1201.

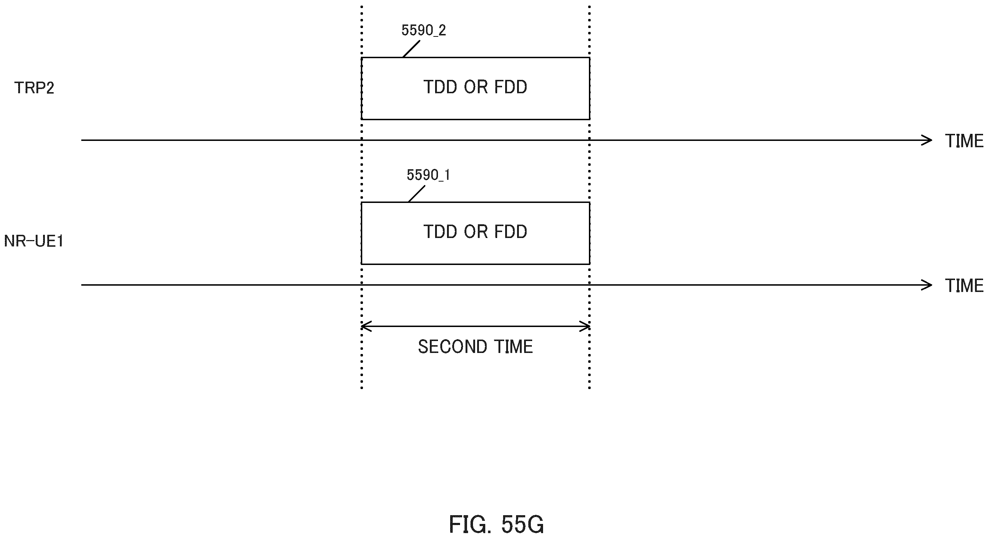

FIG. 55G illustrates exemplary communication statuses of NR-UE 1 labeled 1100_1 and TRP 2 labeled 1101_2 in time in FIG. 55E. In FIG. 55G, a horizontal axis represents time.

As illustrated in FIG. 55G, NR-UE 1 labeled 1100_1 and TRP 2 labeled 1101_2 perform communication in the second time as indicated in FIG. 55E (5590_2 and 5591_1).

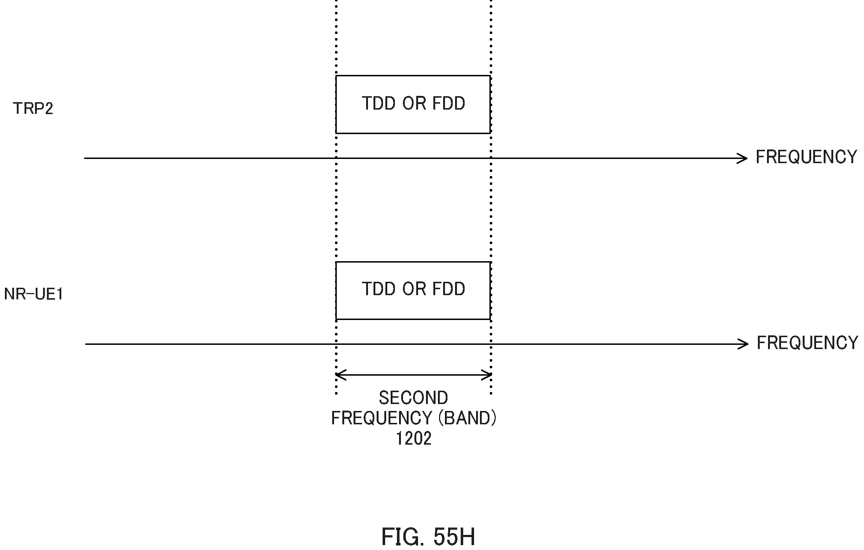

Note that NR-UE 1 labeled 1100_1 and TRP 2 labeled 1101_2 may perform communication in time other than the second time. Further, NR-UE 1 labeled 1100_1 and TRP 2 labeled 1101_2 may use the frequency as described in FIG. 55F or FIG. 55H. FIG. 55H will be described below.

FIG. 55H illustrates exemplary communication statuses of "TRP 2 labeled 1101_2 and NR-UE 1 labeled 1100_1" in a frequency axis in FIG. 55E. Note that, in FIG. 55H, a horizontal axis represents the frequency.

NR-UE 1 labeled 1100_1 and TRP 2 labeled 1101_2 use second frequency (band) 1202 to perform communication by "TDD or FDD."

Note that NR-UE 1 labeled 1100_1 and TRP 2 labeled 1101_2 may use a frequency other than second frequency (band) 1202 for this communication, or as in FIG. 55H, NR-UE 1 labeled 1100_1 and TRP 2 labeled 1101_2 need not use a frequency other than second frequency (band) 1202.

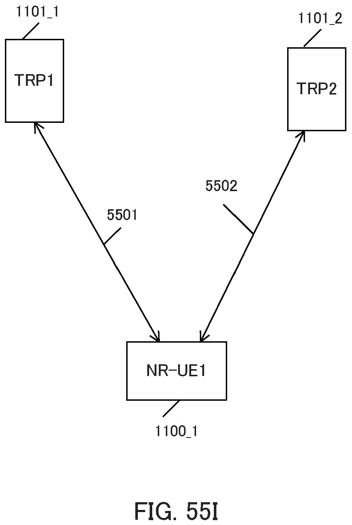

FIG. 55I illustrates an exemplary radio system in the present embodiment, which is different from those in FIG. 55A and FIG. 55E. As illustrated in FIG. 55I, there are TRP 1 labeled 1101_1, TRP 2 labeled 1101_2, and NR-UE 1 labeled 1100_1, for example. Note that, in FIG. 55I, the components that operate in the same manner as the components in FIG. 11 are denoted by the same reference numerals, and some descriptions thereof will be omitted.

NR-UE 1 labeled 1100_1 and TRP 1 labeled 1101_1 are assumed to perform communication by "TDD or FDD" (5501), meanwhile, NR-UE 1 labeled 1100_1 and TRP 2 labeled 1101_2 perform communication by "TDD or FDD" (5502).

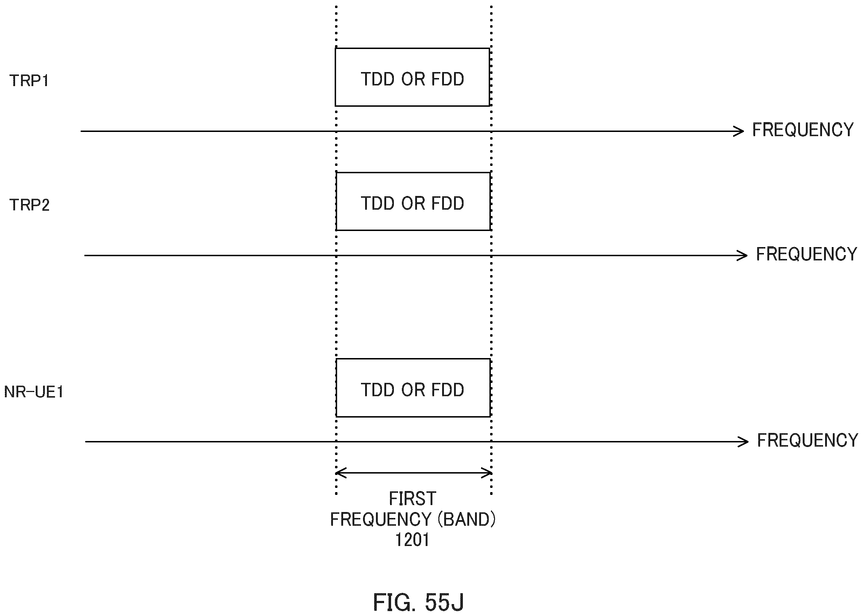

FIG. 55J illustrates exemplary communication statuses of "TRP 1 labeled 1101_1, TRP 2 labeled 1101_2, and NR-UE 1 labeled 1100_1" in a frequency axis in FIG. 55I. Note that, in FIG. 55J, a horizontal axis represents the frequency, and the components that operate in the same manner as the components in FIG. 12 are denoted by the same reference numerals.

NR-UE 1 labeled 1100_1 and TRP 1 labeled 1101_1 use first frequency (band) 1201 to perform communication by "TDD or FDD." Moreover, NR-UE 1 labeled 1100_1 and TRP 2 labeled 1101_2 use first frequency (band) 1201 to perform communication by "TDD or FDD."

Note that NR-UE 1 labeled 1100_1 and TRP 1 labeled 1101_1 may use a frequency other than first frequency (band) 1201 for this communication, or as in FIG. 55J, NR-UE 1 labeled 1100_1 and TRP 1 labeled 1101_1 need not use a frequency other than first frequency (band) 1201.

Note that NR-UE 1 labeled 1100_1 and TRP 2 labeled 1101_2 may use a frequency other than first frequency (band) 1201 for this communication, or as in FIG. 55J, NR-UE 1 labeled 1100_1 and TRP 2 labeled 1101_2 need not use a frequency other than first frequency (band) 1201.

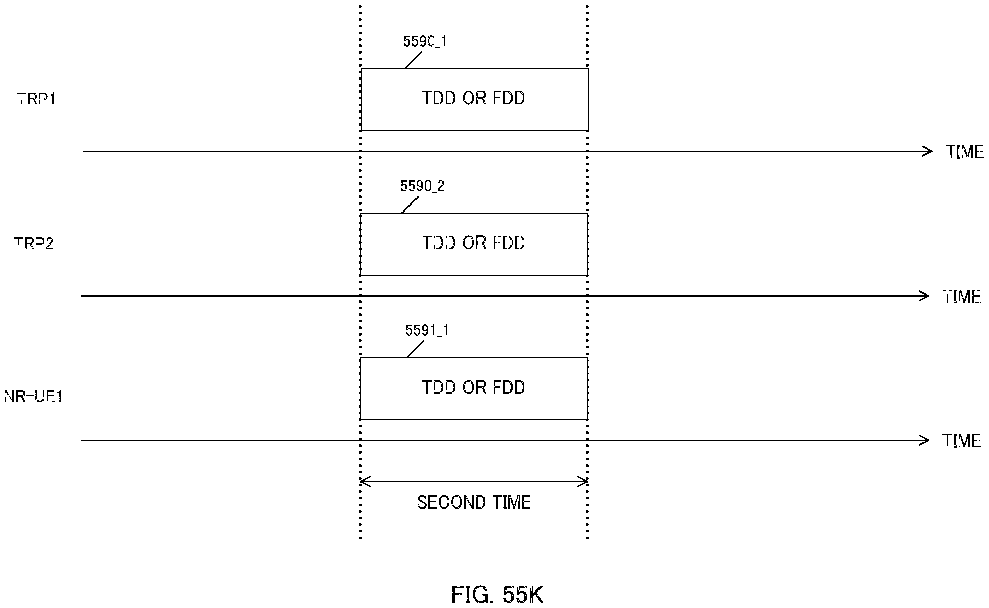

FIG. 55K illustrates exemplary communication statuses of NR-UE 1 labeled 1100_1, TRP 1 labeled 1101_1, and TRP 2 labeled 1101_2 in time in FIG. 55I. In FIG. 55K, a horizontal axis represents time.

As illustrated in FIG. 55K, NR-UE 1 labeled 1100_1 and TRP 1 labeled 1101_1 perform communication in the second time as indicated in FIG. 55I (5590_1 and 5591_1).

Further, as illustrated in FIG. 55K, NR-UE 1 labeled 1100_1 and TRP 2 labeled 1101_2 perform communication in the second time as indicated in FIG. 55I (5590_2 and 5591_1).

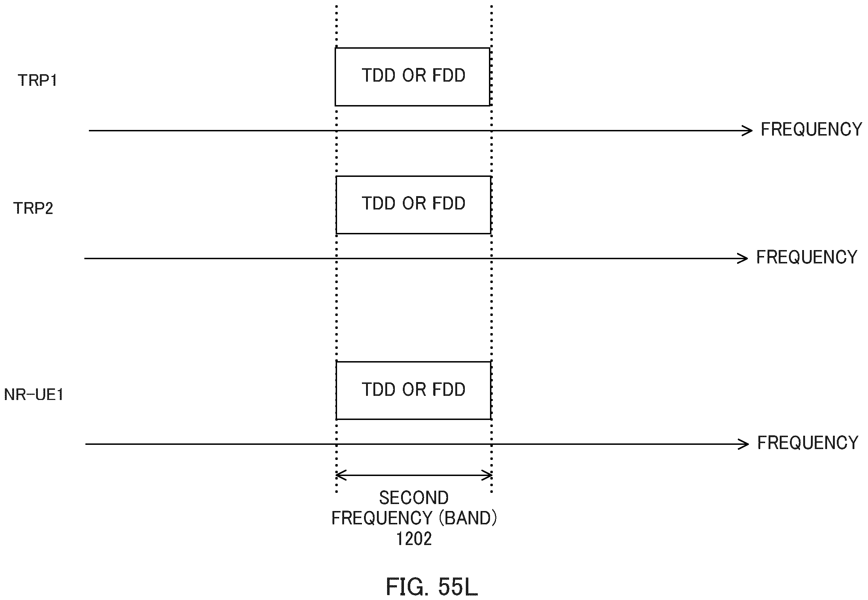

Note that NR-UE 1 labeled 1100_1 and TRP 1 labeled 1101_1 may perform communication in time other than the second time. Further, NR-UE 1 labeled 1100_1 and TRP 1 labeled 1101_1 may use the frequency as described in FIG. 55J or FIG. 55L.

Note that NR-UE 1 labeled 1100_1 and TRP 2 labeled 1101_2 may perform communication in time other than the second time. Further, NR-UE 1 labeled 1100_1 and TRP 2 labeled 1101_2 may use the frequency as described in FIG. 55J or FIG. 55L. FIG. 55L will be described below.

FIG. 55L illustrates exemplary communication statuses of "TRP 1 labeled 1101_1, TRP 2 labeled 1101_2, and NR-UE 1 labeled 1100_1" in a frequency axis in FIG. 55I. Note that, in FIG. 55L, a horizontal axis represents the frequency.

NR-UE 1 labeled 1100_1 and TRP 1 labeled 1101_1 use second frequency (band) 1202 to perform communication by "TDD or FDD."

Moreover, NR-UE 1 labeled 1100_1 and TRP 2 labeled 1101_2 use second frequency (band) 1202 to perform communication by "TDD or FDD."

Note that NR-UE 1 labeled 1100_1 and TRP 1 labeled 1101_1 may use a frequency other than second frequency (band) 1202 for this communication, or as in FIG. 55L, NR-UE 1 labeled 1100_1 and TRP 1 labeled 1101_1 need not use a frequency other than second frequency (band) 1202.

Note that NR-UE 1 labeled 1100_1 and TRP 2 labeled 1101_2 may use a frequency other than second frequency (band) 1202 for this communication, or as in FIG. 55L, NR-UE 1 labeled 1100_1 and TRP 2 labeled 1101_2 need not use a frequency other than second frequency (band) 1202.

Descriptions will be given of variations of FIG. 55J and FIG. 55L of the "frequency-utilization method in the communication between NR-UE 1 labeled 1100_1 and TRP 1 labeled 1101_1" and the "frequency-utilization method in the communication between NR-UE 1 labeled 1100_1 and TRP 2 labeled 1101_2" in FIG. 55I.

For example, first frequency (band) 1201 may be used for the "communication between NR-UE 1 labeled 1100_1 and TRP 1 labeled 1101_1," and second frequency (band) 1202 may be used for the "communication between NR-UE 1 labeled 1100_1 and TRP 2 labeled 1101_2."

As another example, second frequency (band) 1202 may be used for the "communication between NR-UE 1 labeled 1100_1 and TRP 1 labeled 1101_1," and first frequency (band) 1201 may be used for the "communication between NR-UE 1 labeled 1100_1 and TRP 2 labeled 1101_2."

Descriptions will be given of variations of FIG. 55K of the "temporal arrangement in the communication between NR-UE 1 labeled 1100_1 and TRP 1 labeled 1101_1" and "temporal arrangement in the communication between NR-UE 1 labeled 1100_1 and TRP 2 labeled 1101_2" in FIG. 55I.

For example, the second time may be used for "communication between NR-UE 1 labeled 1100_1 and TRP 1 labeled 1101_1," and the third time may be used for "communication between NR-UE 1 labeled 1100_1 and TRP 2 labeled 1101_2."

As another example, the third time may be used for "communication between NR-UE 1 labeled 1100_1 and TRP 1 labeled 1101_1," and the second time may be used for "communication between NR-UE 1 labeled 1100_1 and TRP 2 labeled 1101_2."

The following two cases are discussed.

Case 3:
The "communication methods described with reference to 54A, FIG. 54B, and FIG. 54C" are performd in the first time, whereas, the "communication methods described with reference to FIG. 55A, FIG. 55B, and FIG. 55C" are performd in the second time.

Case 4:
The "communication methods described with reference to FIG. 54A, FIG. 54B, and FIG. 54C" are performd in the first time, whereas, the "communication methods described with reference to FIG. 55A, FIG. 55C, and FIG. 55D" are performd in the first time or the second time.

In Case 3 and Case 4, TRP 1 labeled 1101_1 and NR-UE 1 labeled 1100_1 communicate with each other. At this time, for example, the configuration in FIG. 13A is possible as an exemplary configuration of TRP 1 labeled 1101_1. However, the configuration of TRP 1 labeled 1101_1 is not limited to the configuration in FIG. 13A.

For example, the configuration in FIG. 14 is possible as an exemplary configuration of NR-UE 1 labeled 1100_1. However, the configuration of NR-UE 1 labeled 1100_1 is not limited to the configuration in FIG. 14 and may be, for example, a configuration that does not include one or more of transmission antenna group 1405, reception antenna group 1416, and transmission/recption antenna group 1454 in FIG. 14.

Further, in Case 3 and Case 4, TRP 2 labeled 1101_2 and NR-UE 1 labeled 1100_1 communicate with each other. At this time, for example, the configuration in FIG. 13B is possible as an exemplary configuration of TRP 2 labeled 1101_2. However, the configuration of TRP 2 labeled 1101_2 is not limited to the configuration in FIG. 13B.

TRP 1 labeled 1101_1 having the configuration in FIG. 13A includes, in communication apparatus 1302, a "transmission power controller" that controls transmission (electric) power, and NR-UE 1 labeled 1100_1 having the configuration in FIG. 14 includes, in communication apparatus 1402, a "transmission power controller" for that controls transmission (electric) power.

An exemplary configuration of each of the "transmission power controller" included in TRP 1 labeled 1101_1 having the configuration in FIG. 13A and the "transmission power controller" included in NR-UE 1 labeled 1100_1 having the configuration in FIG. 14 is as illustrated in FIG. 53 and has already been described, some descriptions thereof will be thus omitted.

In Case 3, Let a be transmission (electric) power configured for NR-UE 1 labeled 1100_1 by the transmission (electric) power control.

When the "communication methods described with reference to FIG. 54A, FIG. 54B, and FIG. 54C" are performed in the first time of Case 3, let f be the maximum value of the transmission (electric) power of NR-UE 1 labeled 1100_1 (in units, for example, dBm). Accordingly, a is set to be less than or equal to f in the first time.

When the "communication methods described with reference to FIG. 55A, FIG. 55B, and FIG. 55C" are performed in the second time of Case 3, let g be the maximum value of the transmission (electric) power of NR-UE 1 labeled 1100_1 (in units, for example, dBm). Accordingly, a is set to be less than or equal to g in the second time.

When the "communication methods described with reference to FIG. 54A, FIG. 54B, and FIG. 54C" are performed in the first time of Case 3, transmission (electric) power a is controlled such that the reception quality of data in both TRP 2 labeled 1101_2 and NR-UE 1 labeled 1100_1 is improved (Because TRP 2 labeled 1101_2 and NR-UE 1 labeled 1100_1 perform reception operation in the first time). The maximum value of the transmission (electric) power is set to f based on this.

On the other hand, when "communication methods described with reference to FIG. 55A, FIG. 55B, and FIG. 55C" are performed in the second time of Case 3, transmission (electric) power a is controlled such that the reception quality of data in TRP 1 labeled 1101_1 is improved. The maximum value of the transmission (electric) power is set to g based on this.

Therefore, a requirement for setting the maximum value f of the transmission (electric) power in the first time and a requirement for setting the maximum value g of the transmission (electric) power in the second time are different from each other. Making f and g different values ($f \neq g$) brings about an effect of improving the reception quality of data in each apparatus.

Let b be transmission (electric) power configured for TRP 1 labeled 1101_1 by the transmission (electric) power control.

When the "communication methods described with reference to FIG. 54A, FIG. 54B, and FIG. 54C" are performed in the first time of Case 3, let h be the maximum value of the transmission (electric) power of TRP 1 labeled 1101_1 (in units, for example, dBm). Accordingly, b is set to be less than or equal to h in the first time.

When the "communication methods described with reference to FIG. 55A, FIG. 55B, and FIG. 55C" are performed in the second time of Case 3, let i be the maximum value of the transmission (electric) power of TRP 1 labeled 1101_1 (in units, for example, dBm). Accordingly, b is set to be less than or equal to i in the second time.

When the "communication methods described with reference to FIG. 54A, FIG. 54B, and FIG. 54C" are performed in the first time of Case 3, transmission (electric) power b is controlled such that the reception quality of data in both TRP 2 labeled 1101_2 and NR-UE 1 labeled 1100_1 is improved (Because TRP 2 labeled 1101_2 and NR-UE 1 labeled 1100_1 perform reception operation in the first time). The maximum value of the transmission (electric) power is set to h based on this.

On the other hand, when "communication methods described with reference to FIG. 55A, FIG. 55B, and FIG. 55C" are performed in the second time of Case 3, transmission (electric) power b is controlled such that the reception quality of data in NR-UE 1 labeled 1100_1 is improved. The maximum value of the transmission (electric) power is set to i based on this.

Therefore, a requirement for setting the maximum value h of the transmission (electric) power in the first time and a requirement for setting the maximum value i of the transmission (electric) power in the second time are different from each other. Making h and i different values (h≠i) brings about an effect of improving the reception quality of data in each apparatus.

In Case 4, Let c be transmission (electric) power configured for NR-UE 1 labeled 1100_1 by the transmission (electric) power control.

When the "communication methods described with reference to FIG. 54A, FIG. 54B, and FIG. 54C" are performed in the first time of Case 4, let j be the maximum value of the transmission (electric) power of NR-UE 1 labeled 1100_1 (in units, for example, dBm). Accordingly, c for the "communication methods described with reference to FIG. 54A, FIG. 54B, and FIG. 54C" is set to be less than or equal to j.

When the "communication methods described with reference to FIG. 55A, FIG. 55C, and FIG. 55D" are performed in the first time or the second time of Case 4, let k be the maximum value of the transmission (electric) power of NR-UE 1 labeled 1100_1 (in units, for example, dBm). Accordingly, c for the "communication methods described with reference to FIG. 55A, FIG. 55C, and FIG. 55D" is set to be less than or equal to k.

When the "communication methods described with reference to FIG. 54A, FIG. 54B, and FIG. 54C" are performed in the first time of Case 4, transmission (electric) power c is controlled such that the reception quality of data in both TRP 2 labeled 1101_2 and NR-UE 1 labeled 1100_1 is improved (Because TRP 2 labeled 1101_2 and NR-UE 1 labeled 1100_1 perform reception operation in "communication methods described with reference to FIG. 54A, FIG. 54B, and FIG. 54C"). The maximum value of the transmission (electric) power is set to j based on this.

On the other hand, when "communication methods described with reference to FIG. 55A, FIG. 55C, and FIG. 55D" are performed in the first time or the second time of Case 4, transmission (electric) power c is controlled such that the reception quality of data in TRP 1 labeled 1101_1 is improved. The maximum value of the transmission (electric) power is set to k based on this.

Therefore, a requirement for setting the maximum value j of the transmission (electric) power in the "communication methods described with reference to FIG. 54A, FIG. 54B, and FIG. 54C" and a requirement for setting the maximum value k of the transmission (electric) power in the "communication methods described with reference to FIG. 55A, FIG. 55C, and FIG. 55D" are different from each other. Making j and k different values (j≠k) brings about an effect of improving the reception quality of data in each apparatus.

Let d be transmission (electric) power configured for TRP 1 labeled 1101_1 by the transmission (electric) power control.

When the "communication methods described with reference to FIG. 54A, FIG. 54B, and FIG. 54C" are performed in the first time of Case 4, let z be the maximum value of the transmission (electric) power of TRP 1 labeled 1101_1 (in units, for example, dBm). Accordingly, d for the "communication methods described with reference to FIG. 54A, FIG. 54B, and FIG. 54C" is set to be less than or equal to z.

When the "communication methods described with reference to FIG. 55A, FIG. 55C, and FIG. 55D" are performed in the first time or the second time of Case 4, let m be the maximum value of the transmission (electric) power of TRP 1 labeled 1101_1 (in units, for example, dBm). Accordingly, d for the "communication methods described with reference to FIG. 55A, FIG. 55C, and FIG. 55D"" is set to be less than or equal to m.

When the "communication methods described with reference to FIG. 54A, FIG. 54B, and FIG. 54C" are performed in the first time of Case 4, transmission (electric) power d is controlled such that the reception quality of data in both TRP 2 labeled 1101_2 and NR-UE 1 labeled 1100_1 is improved (Because TRP 2 labeled 1101_2 and NR-UE 1 labeled 1100_1 perform reception operation in "communication methods described with reference to FIG. 54A, FIG. 54B, and FIG. 54C"). The maximum value of the transmission (electric) power is set to z based on this.

On the other hand, when "communication methods described with reference to FIG. 55A, FIG. 55C, and FIG. 55D" are performed in the first time or the second time of Case 4, transmission (electric) power d is controlled such that the reception quality of data in NR-UE 1 labeled 1100_1 is improved. The maximum value of the transmission (electric) power is set to m based on this.

Therefore, a requirement for setting the maximum value z of the transmission (electric) power in the "communication methods described with reference to FIG. 54A, FIG. 54B, and FIG. 54C" and a requirement for setting the maximum value m of the transmission (electric) power in the "communication methods described with reference to FIG. 55A, FIG. 55C, and FIG. 55D" are different from each other. Making z and m different values (z≠m) brings about an effect of improving the reception quality of data in each apparatus.

Further, the following two cases are discussed.

    Case 5:
    The "communication methods described with reference to 54A, FIG. 54B, and FIG. 54C" are performd in the first time, whereas, the "communication methods described with reference to FIG. 55E, FIG. 55F, and FIG. 55G" are performd in the second time.
    Case 6:
    The "communication methods described with reference to 54A, FIG. 54B, and FIG. 54C" are performd in the first time, whereas, the "communication methods described with reference to FIG. 55E, FIG. 55F, and FIG. 55H" are performd in the first time or the second time.

In Case 5 and Case 6, TRP 1 labeled 1101_1 and NR-UE 1 labeled 1100_1 communicate with each other. At this time, for example, the configuration in FIG. 13A is possible as an exemplary configuration of TRP 1 labeled 1101_1. However, the configuration of TRP 1 labeled 1101_1 is not limited to the configuration in FIG. 13A.

For example, the configuration in FIG. 14 is possible as an exemplary configuration of NR-UE 1 labeled 1100_1. However, the configuration of NR-UE 1 labeled 1100_1 is not limited to the configuration in FIG. 14 and may be, for example, a configuration that does not include one or more of transmission antenna group 1405, reception antenna group 1416, and transmission/recption antenna group 1454 in FIG. 14.

Further, in Case 5 and Case 6, TRP 2 labeled 1101_2 and NR-UE 1 labeled 1100_1 communicate with each other. At this time, for example, the configuration in FIG. 13B is possible as an exemplary configuration of TRP 2 labeled 1101_2. However, the configuration of TRP 2 labeled 1101_2 is not limited to the configuration in FIG. 13B.

TRP 1 labeled 1101_1 having the configuration in FIG. 13A includes, in communication apparatus 1302, a "transmission power controller" that controls transmission (electric) power, TRP 2 labeled 1101_2 having the configuration in FIG. 13B includes, in communication apparatus 1302, a "transmission power controller" that controls transmission (electric) power, and NR-UE 1 labeled 1100_1 having the configuration in FIG. 14 includes, in communication apparatus 1402, a "transmission power controller" for that controls transmission (electric) power.

An exemplary configuration of each of the "transmission power controller" included in TRP 1 labeled 1101_1 having the configuration in FIG. 13A, the "transmission power controller" included in TRP 2 labeled 1101_2 having the configuration in FIG. 13B, and the "transmission power controller" included in NR-UE 1 labeled 1100_1 having the configuration in FIG. 14 is as illustrated in FIG. 53 and has already been described, some descriptions thereof will be thus omitted.

In Case 5, Let a_P be transmission (electric) power configured for NR-UE 1 labeled 1100_1 by the transmission (electric) power control.

When the "communication methods described with reference to FIG. 54A, FIG. 54B, and FIG. 54C" are performed in the first time of Case 5, let f_P be the maximum value of the transmission (electric) power of NR-UE 1 labeled 1100_1 (in units, for example, dBm). Accordingly, a_P is set to be less than or equal to f_P in the first time.

When the "communication methods described with reference to FIG. 55E, FIG. 55F, and FIG. 55G " are performed in the second time of Case 5, let g_P be the maximum value of the transmission (electric) power of NR-UE 1 labeled 1100_1 (in units, for example, dBm). Accordingly, a_P is set to be less than or equal to g_P in the second time.

When the "communication methods described with reference to FIG. 54A, FIG. 54B, and FIG. 54C" are performed in the first time of Case 5, transmission (electric) power a_P is controlled such that the reception quality of data in both TRP 2 labeled 1101_2 and NR-UE 1 labeled 1100_1 is improved (Because TRP 2 labeled 1101_2 and NR-UE 1 labeled 1100_1 perform reception operation in the first time). The maximum value of the transmission (electric) power is set to f_P based on this.

On the other hand, when "communication methods described with reference to F FIG. 55E, FIG. 55F, and FIG. 55G" are performed in the second time of Case 5, transmission (electric) power a_P is controlled such that the reception quality of data in TRP 2 labeled 1101_2 is improved. The maximum value of the transmission (electric) power is set to g_P based on this.

Therefore, a requirement for setting the maximum value f_P of the transmission (electric) power in the first time and a requirement for setting the maximum value g_P of the transmission (electric) power in the second time are different from each other. Making f_P and g_P different values (f_P≠g_P) brings about an effect of improving the reception quality of data in each apparatus.

Let b_P be transmission (electric) power configured for TRP 1 labeled 1101_1 by the transmission (electric) power control.

When the "communication methods described with reference to FIG. 54A, FIG. 54B, and FIG. 54C" are performed in the first time of Case 5, let $h\_P$ be the maximum value of the transmission (electric) power of TRP 1 labeled 1101_1 (in units, for example, dBm). Accordingly, $b\_P$ is set to be less than or equal to $h\_P$ in the first time.

Let $n\_P$ be transmission (electric) power configured for TRP 2 labeled 1101_2 by the transmission (electric) power control.

When the "communication methods described with reference to FIG. 55E, FIG. 55F, and FIG. 55G" are performed in the second time of Case 5, let $i\_P$ be the maximum value of the transmission (electric) power of TRP 2 labeled 1101_2 (in units, for example, dBm). Accordingly, $n\_P$ is set to be less than or equal to $i\_P$ in the second time.

When the "communication methods described with reference to FIG. 54A, FIG. 54B, and FIG. 54C" are performed in the first time of Case 5, transmission (electric) power $b\_P$ is controlled such that the reception quality of data in both TRP 2 labeled 1101_2 and NR-UE 1 labeled 1100_1 is improved (Because TRP 2 labeled 1101_2 and NR-UE 1 labeled 1100_1 perform reception operation in the first time). The maximum value of the transmission (electric) power is set to $h\_P$ based on this.

On the other hand, when "communication methods described with reference to F FIG. 55E, FIG. 55F, and FIG. 55G" are performed in the second time of Case 5, transmission (electric) power $n\_P$ is controlled such that the reception quality of data in NR-UE 1 labeled 1100_1 is improved. The maximum value of the transmission (electric) power is set to $i\_P$ based on this.

Therefore, a requirement for setting the maximum value $h\_P$ of the transmission (electric) power in the first time and a requirement for setting the maximum value $i\_P$ of the transmission (electric) power in the second time are different from each other. Making $h\_P$ and $i\_P$ different values ($h\_P \neq i\_P$) brings about an effect of improving the reception quality of data in each apparatus.

In Case 6, Let $c\_P$ be transmission (electric) power configured for NR-UE 1 labeled 1100_1 by the transmission (electric) power control.

When the "communication methods described with reference to FIG. 54A, FIG. 54B, and FIG. 54C" are performed in the first time of Case 6, let $j\_P$ be the maximum value of the transmission (electric) power of NR-UE 1 labeled 1100_1 (in units, for example, dBm). Accordingly, $c\_P$ for the "communication methods described with reference to FIG. 54A, FIG. 54B, and FIG. 54C" is set to be less than or equal to $j\_P$.

When the "communication methods described with reference to FIG. 55E, FIG. 55F, and FIG. 55H" are performed in the first time or the second time of Case 6, let $k\_P$ be the maximum value of the transmission (electric) power of NR-UE 1 labeled 1100_1 (in units, for example, dBm). Accordingly, $c\_P$ for the "communication methods described with reference to FIG. 55E, FIG. 55F, and FIG. 55H" is set to be less than or equal to $k\_P$.

When the "communication methods described with reference to FIG. 54A, FIG. 54B, and FIG. 54C" are performed in the first time of Case 6, transmission (electric) power $c\_P$ is controlled such that the reception quality of data in both TRP 2 labeled 1101_2 and NR-UE 1 labeled 1100_1 is improved (Because TRP 2 labeled 1101_2 and NR-UE 1 labeled 1100_1 perform reception operation in "communication methods described with reference to FIG. 54A, FIG. 54B, and FIG. 54C"). The maximum value of the transmission (electric) power is set to $j\_P$ based on this.

On the other hand, when "communication methods described with reference to FIG. 55E, FIG. 55F, and FIG. 55H" are performed in the first time or the second time of Case 6, transmission (electric) power $c\_P$ is controlled such that the reception quality of data in TRP 2 labeled 1101_2 is improved. The maximum value of the transmission (electric) power is set to $k\_P$ based on this.

Therefore, a requirement for setting the maximum value $j\_P$ of the transmission (electric) power in the "communication methods described with reference to FIG. 54A, FIG. 54B, and FIG. 54C" and a requirement for setting the maximum value $k\_P$ of the transmission (electric) power in the "communication methods described with reference to FIG. 55E, FIG. 55F, and FIG. 55H" are different from each other. Making $j\_P$ and $k\_P$ different values ($j\_P + \neq k\_P$) brings about an effect of improving the reception quality of data in each apparatus.

Let $d\_P$ be transmission (electric) power configured for TRP 1 labeled 1101_1 by the transmission (electric) power control.

When the "communication methods described with reference to FIG. 54A, FIG. 54B, and FIG. 54C" are performed in the first time of Case 6, let $z\_P$ be the maximum value of the transmission (electric) power of TRP 1 labeled 1101_1 (in units, for example, dBm). Accordingly, $d\_P$ for the "communication methods described with reference to FIG. 54A, FIG. 54B, and FIG. 54C" is set to be less than or equal to $z\_P$.

Let $p\_P$ be transmission (electric) power configured for TRP 2 labeled 1101_2 by the transmission (electric) power control.

When the "communication methods described with reference to FIG. 55E, FIG. 55F, and FIG. 55H" are performed in the first time or the second time of Case 6, let $m\_P$ be the maximum value of the transmission (electric) power of TRP 2 labeled 1101_2 (in units, for example, dBm). Accordingly, $p\_P$ for the "communication methods described with reference to FIG. 55E, FIG. 55F, and FIG. 55H" is set to be less than or equal to $m\_P$.

When the "communication methods described with reference to FIG. 54A, FIG. 54B, and FIG. 54C" are performed in the first time of Case 6, transmission (electric) power $d\_P$ is controlled such that the reception quality of data in both TRP 2 labeled 1101_2 and NR-UE 1 labeled 1100_1 is improved (Because TRP 2 labeled 1101_2 and NR-UE 1 labeled 1100_1 perform reception operation in "communication methods described with reference to FIG. 54A, FIG. 54B, and FIG. 54C"). The maximum value of the transmission (electric) power is set to z_P based on this.

On the other hand, when "communication methods described with reference to FIG. 55E, FIG. 55F, and FIG. 55H" are performed in the first time or the second time of Case 6, transmission (electric) power p_P is controlled such that the reception quality of data in NR-UE 1 labeled 1100_1 is improved. The maximum value of the transmission (electric) power is set to m_P based on this.

Therefore, a requirement for setting the maximum value z_P of the transmission (electric) power in the "communication methods described with reference to FIG. 54A, FIG. 54B, and FIG. 54C" and a requirement for setting the maximum value m_P of the transmission (electric) power in the "communication methods described with reference to FIG. 55E, FIG. 55F, and FIG. 55H" are different from each other. Making z_P and m_P different values (z_P≠m_P) brings about an effect of improving the reception quality of data in each apparatus.

Further, the following two cases are discussed.

Case 7:

The "communication methods described with reference to 54A, FIG. 54B, and FIG. 54C" are performd in the first time, whereas, the "communication methods described with reference to FIG. 55I, FIG. 55J, and FIG. 55K (or communication methods in variations described above)" are performd in the second time.

Case 8:

The "communication methods described with reference to 54A, FIG. 54B, and FIG. 54C" are performd in the first time, whereas, the "communication methods described with reference to FIG. 55I, FIG. 55J, and FIG. 55L (or communication methods in variations described above)" are performd in he first time or the second time.

In Case 7 and Case 8, TRP 1 labeled 1101_1 and NR-UE 1 labeled 1100_1 communicate with each other. At this time, for example, the configuration in FIG. 13A is possible as an exemplary configuration of TRP 1 labeled 1101_1. However, the configuration of TRP 1 labeled 1101_1 is not limited to the configuration in FIG. 13A.

For example, the configuration in FIG. 14 is possible as an exemplary configuration of NR-UE 1 labeled 1100_1. However, the configuration of NR-UE 1 labeled 1100_1 is not limited to the configuration in FIG. 14 and may be, for example, a configuration that does not include one or more of transmission antenna group 1405, reception antenna group 1416, and transmission/recption antenna group 1454 in FIG. 14.

Further, in Case 7 and Case 8, TRP 2 labeled 1101_2 and NR-UE 1 labeled 1100_1 communicate with each other. At this time, for example, the configuration in FIG. 13B is possible as an exemplary configuration of TRP 2 labeled 1101_2. However, the configuration of TRP 2 labeled 1101_2 is not limited to the configuration in FIG. 13B.

TRP 1 labeled 1101_1 having the configuration in FIG. 13A includes, in communication apparatus 1302, a "transmission power controller" that controls transmission (electric) power, TRP 2 labeled 1101_2 having the configuration in FIG. 13B includes, in communication apparatus 1302, a "transmission power controller" that controls transmission (electric) power, and NR-UE 1 labeled 1100_1 having the configuration in FIG. 14 includes, in communication apparatus 1402, a "transmission power controller" for that controls transmission (electric) power.

An exemplary configuration of each of the "transmission power controller" included in TRP 1 labeled 1101_1 having the configuration in FIG. 13A, the "transmission power controller" included in TRP 2 labeled 1101_2 having the configuration in FIG. 13B, and the "transmission power controller" included in NR-UE 1 labeled 1100_1 having the configuration in FIG. 14 is as illustrated in FIG. 53 and has already been described, some descriptions thereof will be thus omitted.

In Case 7, Let a_Q be transmission (electric) power configured for NR-UE 1 labeled 1100_1 by the transmission (electric) power control.

When the "communication methods described with reference to FIG. 54A, FIG. 54B, and FIG. 54C" are performed in the first time of Case 7, let f_Q be the maximum value of the transmission (electric) power of NR-UE 1 labeled 1100_1 (in units, for example, dBm). Accordingly, a_Q is set to be less than or equal to f_Q in the first time.

When the "communication methods described with reference to FIG. 55I, FIG. 55J, and FIG. 55K" are performed in the second time of Case 7, let g_Q be the maximum value of the transmission (electric) power of NR-UE 1 labeled 1100_1 (in units, for example, dBm). Accordingly, a_Q is set to be less than or equal to g_Q in the second time.

When the "communication methods described with reference to FIG. 54A, FIG. 54B, and FIG. 54C" are performed in the first time of Case 7, transmission (electric) power a_Q is controlled such that the reception quality of data in both TRP 2 labeled 1101_2 and NR-UE 1 labeled 1100_1 is improved (Because TRP 2 labeled 1101_2 and NR-UE 1 labeled 1100_1 perform reception operation in the first time). The maximum value of the transmission (electric) power is set to f_Q based on this.

On the other hand, when the "communication methods described with reference to FIG. 55I, FIG. 55J, and FIG. 55K" are performed in the second time of Case 7, transmission (electric) power a_Q of a modulation signal to be transmitted to TRP 1 labeled 1101_1 and transmission (electric) power a_Q of a modulation signal to be transmitted to TRP 2 labeled 1101_2 are controlled such that the reception qualities of data in TRP 1 labeled 1101_1 and TRP 2 labeled 1101_2 are improved. The maximum value of the transmission (electric) power is set to g_Q based on this.

Therefore, a requirement for setting the maximum value f_Q of the transmission (electric) power in the first time and a requirement for setting the maximum value g_Q of the transmission (electric) power in the second time are different from each other. Making f_Q and g_Q different values (f_Q≠g_Q) brings about an effect of improving the reception quality of data in each apparatus.

Let b_Q be transmission (electric) power configured for TRP 1 labeled 1101_1 by the transmission (electric) power control.

When the "communication methods described with reference to FIG. 54A, FIG. 54B, and FIG. 54C" are performed in the first time of Case 7, let h_Q be the maximum value of the transmission (electric) power of TRP 1 labeled 1101_1 (in units, for example, dBm). Accordingly, b_Q is set to be less than or equal to h_Q in the first time.

When the "communication methods described with reference to FIG. 55I, FIG. 55J, and FIG. 55K" are performed in the second time of Case 7, let i_Q be the maximum value of the transmission (electric) power of TRP 1 labeled 1101_1 (in units, for example, dBm). Accordingly, b_Q is set to be less than or equal to i_Q in the second time.

Let n_Q be transmission (electric) power configured for TRP 2 labeled 1101_2 by the transmission (electric) power control.

When the "communication methods described with reference to FIG. 55I, FIG. 55J, and FIG. 55K" are performed in the second time of Case 7, let i_Q be the maximum value of the transmission (electric) power of TRP 2 labeled 1101_2 (in units, for example, dBm). Accordingly, n_Q is set to be less than or equal to i_Q in the second time.

When the "communication methods described with reference to FIG. 54A, FIG. 54B, and FIG. 54C" are performed in the first time of Case 7, transmission (electric) power b_Q is controlled such that the reception quality of data in both TRP 2 labeled 1101_2 and NR-UE 1 labeled 1100_1 is improved (Because TRP 2 labeled 1101_2 and NR-UE 1 labeled 1100_1 perform reception operation in the first time). The maximum value of the transmission (electric) power is set to h_Q based on this.

On the other hand, when "communication methods described with reference to FIG. 55I, FIG. 55J, and FIG. 55K" are performed in the second time of Case 7, transmission (electric) power b_Q and n_Q is controlled such that the reception quality of data in NR-UE 1 labeled 1100_1 is improved. The maximum value of the transmission (electric) power is set to i_Q based on this.

Therefore, a requirement for setting the maximum value h_Q of the transmission (electric) power in the first time and a requirement for setting the maximum value i_Q of the transmission (electric) power in the second time are different from each other. Making h_Q and i_Q different values (h_Q≠i_Q) brings about an effect of improving the reception quality of data in each apparatus.

In Case 8, Let c_Q be transmission (electric) power configured for NR-UE 1 labeled 1100_1 by the transmission (electric) power control.

When the "communication methods described with reference to FIG. 54A, FIG. 54B, and FIG. 54C" are performed in the first time of Case 8, let j_Q be the maximum value of the transmission (electric) power of NR-UE 1 labeled 1100_1 (in units, for example, dBm). Accordingly, c_Q for the "communication methods described with reference to FIG. 54A, FIG. 54B, and FIG. 54C" is set to be less than or equal to j_Q.

When the "communication methods described with reference to FIG. 55I, FIG. 55J, and FIG. 55L" are performed in the first time or the second time of Case 8, let k_Q be the maximum value of the transmission (electric) power of NR-UE 1 labeled 1100_1 (in units, for example, dBm). Accordingly, c_Q for the "communication methods described with reference to FIG. 55I, FIG. 55J, and FIG. 55L" is set to be less than or equal to k_Q.

When the "communication methods described with reference to FIG. 54A, FIG. 54B, and FIG. 54C" are performed in the first time of Case 8, transmission (electric) power c_Q is controlled such that the reception quality of data in both TRP 2 labeled 1101_2 and NR-UE 1 labeled 1100_1 is improved (Because TRP 2 labeled 1101_2 and NR-UE 1 labeled 1100_1 perform reception operation in "communication methods described with reference to FIG. 54A, FIG. 54B, and FIG. 54C"). The maximum value of the transmission (electric) power is set to j_Q based on this.

On the other hand, when the "communication methods described with reference to FIG. 55I, FIG. 55J, and FIG. 55L" are performed in the first time or the second time of Case 8, transmission (electric) power c_Q of a modulation signal to be transmitted to TRP 1 labeled 1101_1 and transmission (electric) power c_Q of a modulation signal to be transmitted to TRP 2 labeled 1101_2 are controlled such that the reception qualities of data in TRP 1 labeled 1101_1 and TRP 2 labeled 1101_2 are improved. The maximum value of the transmission (electric) power is set to k_Q based on this.

Therefore, a requirement for setting the maximum value j_Q of the transmission (electric) power in the "communication methods described with reference to FIG. 54A, FIG. 54B, and FIG. 54C" and a requirement for setting the maximum value k_Q of the transmission (electric) power in the "communication methods described with reference to FIG. 55I, FIG. 55J, and FIG. 55L" are different from each other. Making j_Q and k_Q different values (j_Q≠k_Q) brings about an effect of improving the reception quality of data in each apparatus.

Let d_Q be transmission (electric) power configured for TRP 1 labeled 1101_1 by the transmission (electric) power control.

When the "communication methods described with reference to FIG. 54A, FIG. 54B, and FIG. 54C" are performed in the first time of Case 8, let z_Q be the maximum value of the transmission (electric) power of TRP 1 labeled 1101_1 (in units, for example, dBm). Accordingly, d_Q for the "communication methods described with reference to FIG. 54A, FIG. 54B, and FIG. 54C" is set to be less than or equal to z_Q.

When the "communication methods described with reference to FIG. 55I, FIG. 55J, and FIG. 55L" are performed in the first time or the second time of Case 8, let m_Q be the maximum value of the transmission (electric) power of TRP 1 labeled 1101_1 (in units, for example, dBm). Accordingly, d_Q for the "communication methods described with reference to FIG. 55I, FIG. 55J, and FIG. 55L" is set to be less than or equal to m_Q.

Let p_Q be transmission (electric) power configured for TRP 2 labeled 1101_2 by the transmission (electric) power control.

When the "communication methods described with reference to FIG. 55I, FIG. 55J, and FIG. 55L" are performed in the first time or the second time of Case 8, let m_Q be the maximum value of the transmission (electric) power of TRP 2 labeled 1101_2 (in units, for example, dBm). Accordingly, p_Q for the "communication methods described with reference to FIG. 55I, FIG. 55J, and FIG. 55L" is set to be less than or equal to m_Q.

When the "communication methods described with reference to FIG. 54A, FIG. 54B, and FIG. 54C" are performed in the first time of Case 8, transmission (electric) power d_Q is controlled such that the reception quality of data in both TRP 2 labeled 1101_2 and NR-UE 1 labeled 1100_1 is improved (Because TRP 2 labeled 1101_2 and NR-UE 1 labeled 1100_1 perform reception operation in "communication methods described with reference to FIG. 54A, FIG. 54B, and FIG. 54C"). The maximum value of the transmission (electric) power is set to z_Q based on this.

On the other hand, when "communication methods described with reference to FIG. 55I, FIG. 55J, and FIG. 55L" are performed in the first time or the second time of Case 8, transmission (electric) power p_Q is controlled such that the reception quality of data in NR-UE 1 labeled 1100_1 is improved. The maximum value of the transmission (electric) power is set to m_Q based on this.

Therefore, a requirement for setting the maximum value z_Q of the transmission (electric) power in the "communication methods described with reference to FIG. 54A, FIG. 54B, and FIG. 54C" and a requirement for setting the maximum value m_Q of the transmission (electric) power in the "communication methods described with reference to FIG. 55I, FIG. 55J, and FIG. 55L" are different from each other. Making z_Q and m_Q different values (z_Q≠m_Q) brings about an effect of improving the reception quality of data in each apparatus.

In the above, the maximum value of the transmission power when a TRP performs transmission power control and the maximum value of the transmission power when an NR-UE performs transmission power control have been descibed. In the following, a description will be given of an exemplary procedure of the transmission power control performed by the TRP and NR-UE.

First, as illustrated in FIG. 52A, a description will be given of a transmission power control method when NR-UE 1 labeled 1100_1 and TRP 1 labeled 1101_1 perform communication by TDD or FDD.

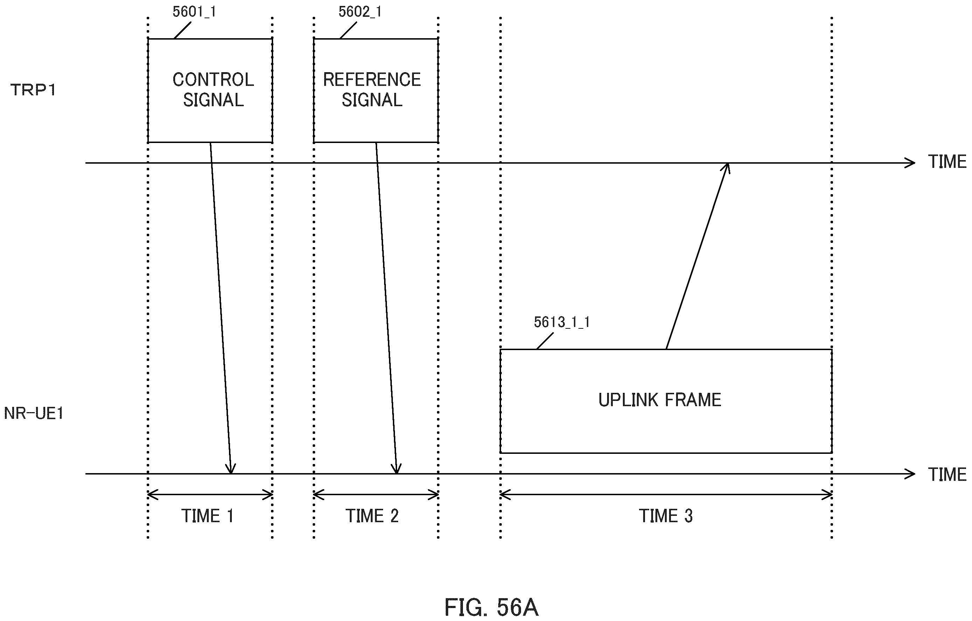

FIG. 56A illustrates an example of the exchange between NR-UE 1 labeled 1100_1 and TRP 1 labeled 1101_1 for performing open loop transmission power control in NR-UE 1 labeled 1100_1 when NR-UE 1 labeled 1100_1 and TRP 1 labeled 1101_1 perform communication by TDD or FDD. Note that, in FIG. 56A, a horizontal axis represents time.

As illustrated in FIG. 56A, TRP 1 labeled 1101_1 transmits control signal 5601_1 in time 1. In addition, TRP 1 labeled 1101_1 transmits reference signal 5602_1 in time 2.

At this time, control signal 5601_1 includes for example, a parameter for transmission power to be indicated to a terminal (NR-UE 1 labeled 1100_1) with a relatively long cycle, and NR-UE 1 labeled 1100_1 receives reference signal 5602_1 transmitted by TRP 1 labeled 1101_1 and thus measures a communication status (e.g., estimaes propagation loss, reception field strength, and Signal to Interference plus Noise power Ratio (SINR), and the like). NR-UE 1 labeled 1100_1 then determines the transmission (electric) power for transmitting a modulation signal, based on, for example, the parameter for the transmission power included in control signal 5601_1 and the measured communication status. In time 3, NR-UE 1 labeled 1100_1 transmits uplink frame 5613_1_1 to TRP 1 labeled 1101_1 with the determined transmission (electric) power.

Performing the transmission power control as described above brings about an effect of improving the reception quality of data.

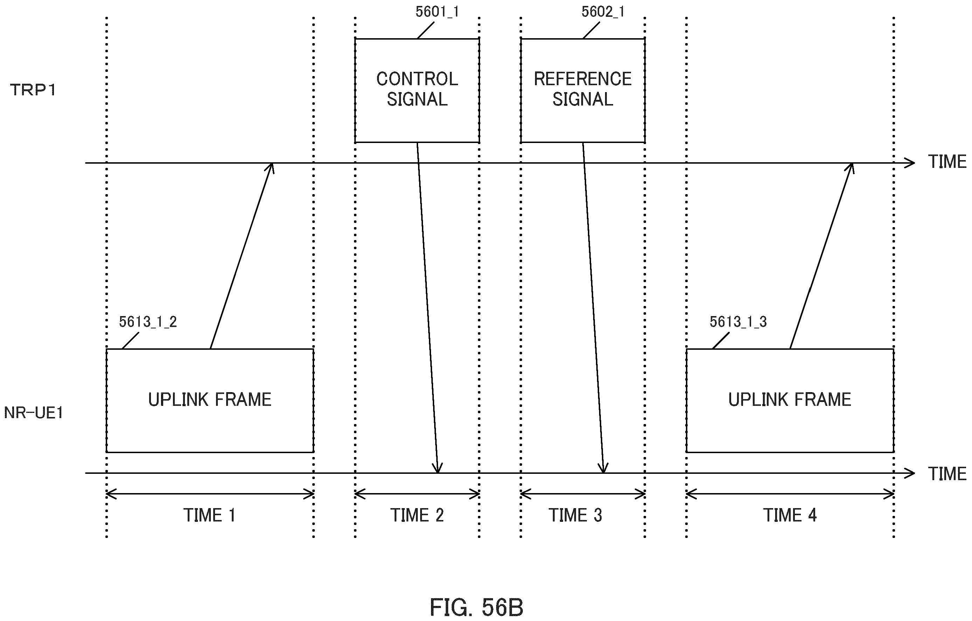

FIG. 56B illustrates an example of the exchange between NR-UE 1 labeled 1100_1 and TRP 1 labeled 1101_1 for performing closed loop transmission power control in NR-UE 1 labeled 1100_1 when NR-UE 1 labeled 1100_1 and TRP 1 labeled 1101_1 perform communication by TDD or FDD. Note that, in FIG. 56B, a horizontal axis represents time.

As illustrated in FIG. 56B, in time 1, NR-UE 1 labeled 1100_1 transmits uplink frame 5613_1_2 to TRP 1 labeled 1101_1. Then, TRP 1 labeled 1101_1 estimates a communication status such as SINR using uplink frame 5613_1_2 that has been received. Note that, when estimating the communication status such as SINR, TRP 1 labeled 1101_1 may use a reference signal included in uplink frame 5613_1_2 or another signal included in uplink frame 5613_1_2.

TRP 1 labeled 1101_1 generates, based on an estimation result of the communication status such as SINR, information (e.g., TransmitPowerControl (TPC) command) on a value to set transmission (electric) power of a signal to be transmitted by NR-UE 1 labeled 1100_1. TRP 1 labeled 1101_1 then transmits, to NR-UE 1 labeled 1100_1, control signal 5601_1 that includes the information on the value to set the transmission (electric) power, in time 2. Further, in time 3, TRP 1 labeled 1101_1 transmits reference signal 5602_1 to NR-UE 1 labeled 1100_1.

NR-UE 1 labeled 1100_1 determines the transmission (electric) power for transmitting a modulation signal, based on the information on the value to set the transmission (electric) power included in control signal 5601_1. In time 4, NR-UE 1 labeled 1100_1 transmits uplink frame 5613_1_3 to TRP 1 labeled 1101_1 with the determined transmission (electric) power.

Performing the transmission power control as described above brings about an effect of improving the reception quality of data.

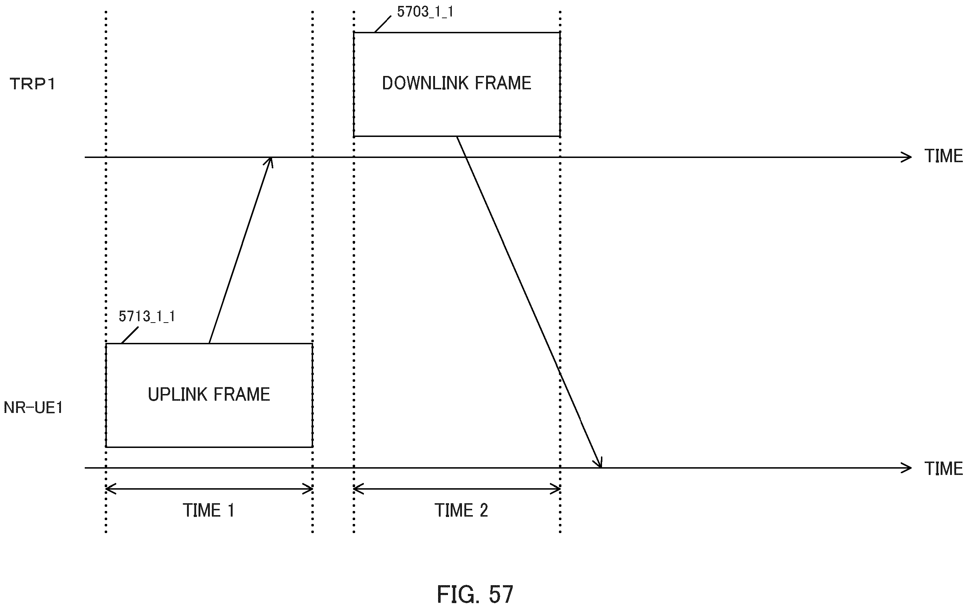

FIG. 57 illustrates an example of the exchange between NR-UE 1 labeled 1100_1 and TRP 1 labeled 1101_1 for performing open loop transmission power control in TRP 1 labeled 1101_1 when NR-UE 1 labeled 1100_1 and TRP 1 labeled 1101_1 perform communication by TDD or FDD. Note that, in FIG. 57, a horizontal axis represents time.

As illustrated in FIG. 57, in time 1, NR-UE 1 labeled 1100_1 transmits uplink frame 5713_1_1 to TRP 1 labeled 1101_1. Then, TRP 1 labeled 1101_1 estimates a communication status such as SINR using uplink frame 5713_1_1 that has been received. Note that, when estimating the communication status such as SINR, TRP 1 labeled 1101_1 may use a reference signal included in uplink frame 5713_1_1 or another signal included in uplink frame 5713_1_1.

TRP 1 labeled 1101_1 determines the transmission (electric) power for itself, based on an estimation result of the communication status such as SINR. TRP 1 labeled 1101_1 then transmits downlink frame 5703_1 having the determined transmission (electric) power.

Performing the transmission power control as described above brings about an effect of improving the reception quality of data.

Next, as illustrated with reference to FIG. 51A and the like, a description will be given of a transmission power control method when NR-UE 1 labeled 1100_1 and TRP 1 labeled 1101_1 perform communication.

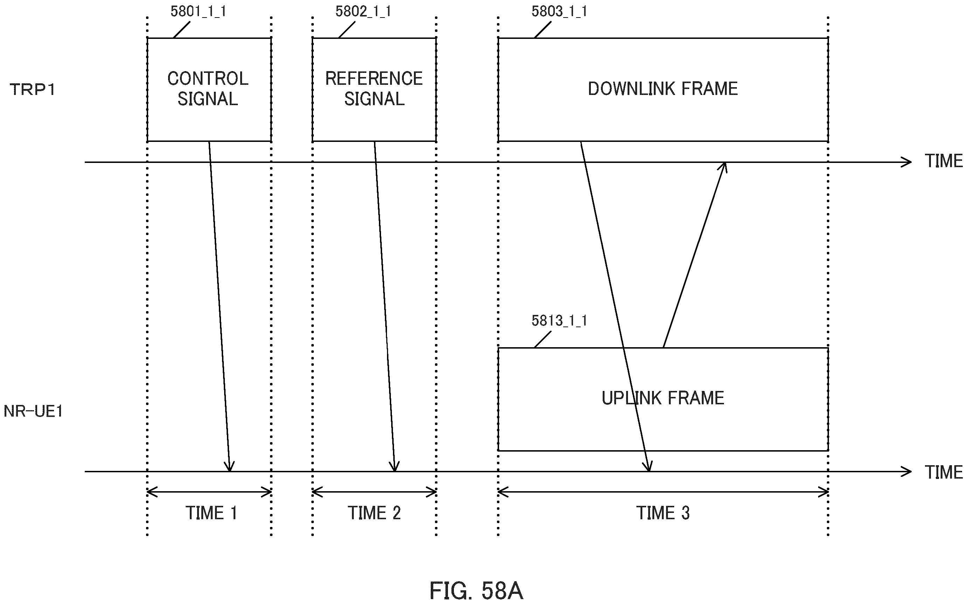

FIG. 58A illustrates an example of the exchange between NR-UE 1 labeled 1100_1 and TRP 1 labeled 1101_1 for performing open loop transmission power control in NR-UE 1 labeled 1100_1 when NR-UE 1 labeled 1100_1 and TRP 1 labeled 1101_1 perform communication based on FIG. 51A and the like. Note that, in FIG. 58A, a horizontal axis represents time.

As illustrated in FIG. 58A, TRP 1 labeled 1101_1 transmits control signal 5801_1_1 in time 1. In addition, TRP 1 labeled 1101_1 transmits reference signal 5802_1_1 in time 2.

At this time, control signal 5801_1_1 includes for example, a parameter for transmission power to be indicated to a terminal (NR-UE 1 labeled 1100_1) with a relatively long cycle, and NR-UE 1 labeled 1100_1 receives reference signal 5802_1_1 transmitted by TRP 1 labeled 1101_1 and thus measures a communication status (e.g., estimaes propagation loss, reception field strength, SINR, and the like). NR-UE 1 labeled 1100_1 then determines transmission (electric) power for transmitting a modulation signal, based on, for example, the parameter for the transmission power included in control signal 5801_1_1 and the measured communication status. In time 3, NR-UE 1 labeled 1100_1 transmits uplink frame 5813_1_1 to TRP 1 labeled 1101_1 with the determined transmission (electric) power.

Note that, as illustrated in FIG. 58A, TRP 1 labeled 1101_1 trasnmits downlink frame 5803_1_1 to NR-UE 1 labeled 1100_1 in time 3. Incidentally, the downlink frame may be present other than in time 3, and the uplink frame may be present other than in time 3 as well.

Performing the transmission power control as described above brings about an effect of improving the reception quality of data.

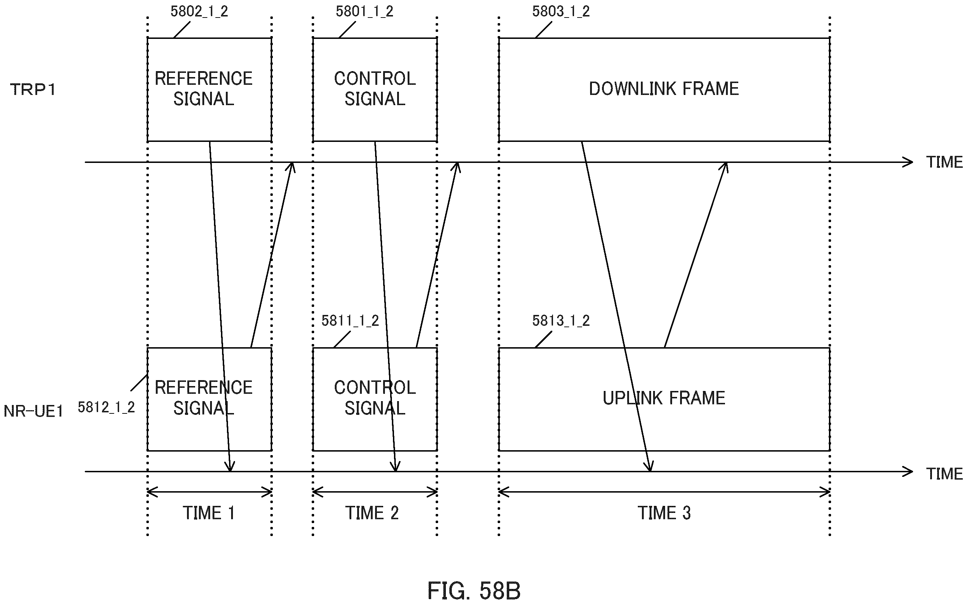

FIG. 58B illustrates an example of the exchange between NR-UE 1 labeled 1100_1 and TRP 1 labeled 1101_1 for performing closed loop transmission power control in NR-UE 1 labeled 1100_1 and/or open loop transmission power control and closed loop transmission power control in TRP 1 labeled 1101_1 when NR-UE 1 labeled 1100_1 and TRP 1 labeled 1101_1 perform communication based on FIG. 51A and the like. Note that, in FIG. 58B, a horizontal axis represents time.

Transmission Power Control in NR-UE:

As illustrated in FIG. 58B, NR-UE 1 labeled 1100_1 trasnmits reference signal 5812_1_2 to TRP 1 labeled 1101_1 in time 1. Meanwhile, TRP 1 labeled 1101_1 trasnmits reference signal 5802_1_2 to NR-UE 1 labeled 1100_1 in time 1.

TRP 1 labeled 1101_1 then estimates a communication status such as SINR using the received "reference signal 5812_1_2 and reference signal 5802_1_2." This allows TRP 1 labeled 1101_1 to obtain an effect of being capable of SINR estimation taking into account the signal transmitted by the TRP itself.

TRP 1 labeled 1101_1 generates, based on an estimation result of the communication status such as SINR, information (e.g., TPC command) on a value to set transmission (electric) power of a signal to be transmitted by NR-UE 1 labeled 1100_1. TRP 1 labeled 1101_1 then transmits, to NR-UE 1 labeled 1100_1, control signal 5801_1_2 that includes the information on the value to set the transmission (electric) power, in time 2. Note that, as illustrated in FIG. 58B, NR-UE 1 labeled 1100_1 may transmit control signal 5811_1_2 to TRP 1 labeled 1101_1, in time 2.

NR-UE 1 labeled 1100_1 determines the transmission (electric) power for transmitting a modulation signal, based on the information on the value to set the transmission (electric) power included in control signal 5801_2. In time 3, NR-UE 1 labeled 1100_1 transmits uplink frame 5813_1_2 to TRP 1 labeled 1101_1 with the determined transmission (electric) power.

Note that, as illustrated in FIG. 58B, TRP 1 labeled 1101_1 trasnmits downlink frame 5803_1_2 to NR-UE 1 labeled 1100_1 in time 3. Incidentally, the downlink frame may be present other than in time 3, and the uplink frame may be present other than in time 3 as well.

Performing the transmission power control as described above brings about an effect of improving the reception quality of data.

Open Loop Transmission Power Control in TRP:

As illustrated in FIG. 58B, NR-UE 1 labeled 1100_1 trasnmits reference signal 5812_1_2 to TRP 1 labeled 1101_1 in time 1. Meanwhile, TRP 1 labeled 1101_1 trasnmits reference signal 5802_1_2 to NR-UE 1 labeled 1100_1 in time 1.

TRP 1 labeled 1101_1 then estimates a communication status such as SINR using the received "reference signal 5812_1_2 and reference signal 5802_1_2." This allows TRP 1 labeled 1101_1 to obtain an effect of being capable of SINR estimation taking into account the signal transmitted by the TRP itself.

TRP 1 labeled 1101_1 determines the transmission (electric) power of a modulation signal to be transmitted by the TRP itself, based on an estimation result of the communication status such as SINR. TRP 1 labeled 1101_1 then transmits, to NR-UE 1 labeled 1100_1, downlink frame 5803_1_2 having the determined transmission (electric) power, in time 3.

Note that, as illustrated in FIG. 58B, NR-UE 1 labeled 1100_1 trasnmits uplink frame 5813_1_2 to TRP 1 labeled 1101_1 in time 3. Incidentally, the downlink frame may be present other than in time 3, and the uplink frame may be present other than in time 3 as well.

Performing the transmission power control as described above brings about an effect of improving the reception quality of data.

Closed Loop Transmission Power Control in TRP:

As illustrated in FIG. 58B, NR-UE 1 labeled 1100_1 trasnmits reference signal 5812_1_2 to TRP 1 labeled 1101_1 in time 1. Meanwhile, TRP 1 labeled 1101_1 trasnmits reference signal 5802_1_2 to NR-UE 1 labeled 1100_1 in time 1.

NR-UE 1 labeled 1100_1 then estimates a communication status such as SINR using the received "reference signal 5812_1_2 and reference signal 5802_1_2." This allows NR-UE 1 labeled 1100_1 to obtain an effect of being capable of SINR estimation taking into account the signal transmitted by the NR-UE itself.

NR-UE 1 labeled 1100_1 generates, based on an estimation result of the communication status such as SINR, information for controlling transmission (electric) power of a signal to be transmitted by TRP 1 labeled 1101_1 (e.g., estimation information on communication status such as SINR). NR-UE 1 labeled 1100_1 then transmits, to TRP 1 labeled 1101_1, control signal 5811_1_2 that includes the information for controlling the transmission (electric) power, in time 2. Note that, as illustrated in FIG. 58B, TRP 1 labeled 1101_1 may transmit control signal 5801_1_2 to NR-UE 1 labeled 1100_1, in time 2.

TRP 1 labeled 1101_1 determines the transmission (electric) power for transmitting a modulation signal, based on the information for controlling the transmission (electric) power included in control signal 5811_1_2. In time 3, TRP 1 labeled 1101_1 transmits downlink frame 5803_1_2 to NR-UE 1 labeled 1100_1 with the determined transmission (electric) power.

Note that, as illustrated in FIG. 58B, NR-UE 1 labeled 1100_1 trasnmits uplink frame 5813_1_2 to TRP 1 labeled 1101_1 in time 3. Incidentally, the downlink frame may be present other than in time 3, and the uplink frame may be present other than in time 3 as well.

Performing the transmission power control as described above brings about an effect of improving the reception quality of data.

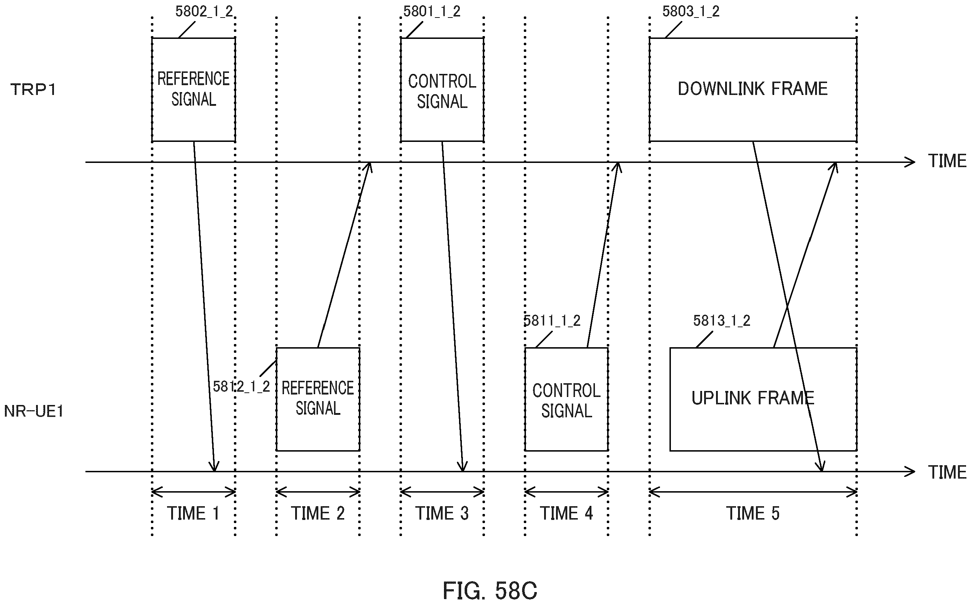

FIG. 58C illustrates an example, which is different from that in FIG. 58B, of the exchange between NR-UE 1 labeled 1100_1 and TRP 1 labeled 1101_1 for performing closed loop transmission power control in NR-UE 1 labeled 1100_1 and/or open loop transmission power control and closed loop transmission power control in TRP 1 labeled 1101_1 when NR-UE 1 labeled 1100_1 and TRP 1 labeled 1101_1 perform communication based on FIG. 51A and the like. Note that, in FIG. 58C, a horizontal axis represents time. In FIG. 58C, the components that operate in the same manner as the components in FIG. 58B are denoted by the same reference numerals, and some descriptions thereof will be omitted.

Transmission Power Control in NR-UE:

As illustrated in FIG. 58C, TRP 1 labeled 1101_1 trasnmits reference signal 5802_1_2 to NR-UE 1 labeled 1100_1 in time 1. Meanwhile, NR-UE 1 labeled 1100_1 trasnmits reference signal 5812_1_2 to TRP 1 labeled 1101_1 in time 2.

TRP 1 labeled 1101_1 then estimates a communication status such as SINR using the received "reference signal 5812_1_2 in time 2 and reference signal 5802_1_2 in time 1." This allows TRP 1 labeled 1101_1 to obtain an effect of being capable of SINR estimation taking into account the signal transmitted by the TRP itself.

TRP 1 labeled 1101_1 generates, based on an estimation result of the communication status such as SINR, information (e.g., TPC command) on a value to set transmission (electric) power of a signal to be transmitted by NR-UE 1 labeled 1100_1. TRP 1 labeled 1101_1 then transmits, to NR-UE 1 labeled 1100_1, control signal 5801_1_2 that includes the information on the value to set the transmission (electric) power, in time 3. Note that, as illustrated in FIG. 58C, in time 4, NR-UE 1 labeled 1100_1 may transmit control signal 5811_1_2 to TRP 1 labeled 1101_1.

NR-UE 1 labeled 1100_1 determines the transmission (electric) power for transmitting a modulation signal, based on the information on the value to set the transmission (electric) power included in control signal 5801_2. In time 5, NR-UE 1 labeled 1100_1 transmits uplink frame 5813_1_2 to TRP 1 labeled 1101_1 with the determined transmission (electric) power.

Note that, as illustrated in FIG. 58C, TRP 1 labeled 1101_1 trasnmits downlink frame 5803_1_2 to NR-UE 1 labeled 1100_1 in time 5. Incidentally, the downlink frame may be present other than in time 5, and the uplink frame may be present other than in time 5 as well.

Performing the transmission power control as described above brings about an effect of improving the reception quality of data.

Open Loop Transmission Power Control in TRP:

As illustrated in FIG. 58C, TRP 1 labeled 1101_1 trasnmits reference signal 5802_1_2 to NR-UE 1 labeled 1100_1 in time 1. Meanwhile, NR-UE 1 labeled 1100_1 trasnmits reference signal 5812_1_2 to TRP 1 labeled 1101_1 in time 2.

TRP 1 labeled 1101_1 then estimates a communication status such as SINR using the received "reference signal 5812_1_2 in time 2 and reference signal 5802_1_2 in time 1." This allows TRP 1 labeled 1101_1 to obtain an effect of being capable of SINR estimation taking into account the signal transmitted by the TRP itself.

TRP 1 labeled 1101_1 determines the transmission (electric) power of a modulation signal to be transmitted by the TRP itself, based on an estimation result of the communication status such as SINR. TRP 1 labeled 1101_1 then transmits, to NR-UE 1 labeled 1100_1, downlink frame 5803_1_2 having the determined transmission (electric) power, in time 5.

Note that, as illustrated in FIG. 58C, NR-UE 1 labeled 1100_1 trasnmits uplink frame 5813_1_2 to TRP 1 labeled 1101_1 in time 5. Incidentally, the downlink frame may be present other than in time 5, and the uplink frame may be present other than in time 5 as well.

Performing the transmission power control as described above brings about an effect of improving the reception quality of data.

Closed Loop Transmission Power Control in TRP:

As illustrated in FIG. 58C, TRP 1 labeled 1101_1 trasnmits reference signal 5802_1_2 to NR-UE 1 labeled 1100_1 in time 1. Meanwhile, NR-UE 1 labeled 1100_1 trasnmits reference signal 5812_1_2 to TRP 1 labeled 1101_1 in time 2.

NR-UE 1 labeled 1100_1 then estimates a communication status such as SINR using the received "reference signal 5812_1_2 in time 2 and reference signal 5802_1_2 in time 1." This allows NR-UE 1 labeled 1100_1 to obtain an effect of being capable of SINR estimation taking into account the signal transmitted by the NR-UE itself.

NR-UE 1 labeled 1100_1 generates, based on an estimation result of the communication status such as SINR, information for controlling transmission (electric) power of a signal to be transmitted by TRP 1 labeled 1101_1 (e.g., estimation information on communication status such as SINR). NR-UE 1 labeled 1100_1 then transmits, to TRP 1 labeled 1101_1, control signal 5811_1_2 that includes the information for controlling the transmission (electric) power, in time 4. Note that, as illustrated in FIG. 58C, TRP 1 labeled 1101_1 may transmit control signal 5801_1_2 to NR-UE 1 labeled 1100_1, in time 3.

TRP 1 labeled 1101_1 determines the transmission (electric) power for transmitting a modulation signal, based on the information for controlling the transmission (electric) power included in control signal 5811_1_2. In time 5, TRP 1 labeled 1101_1 transmits downlink frame 5803_1_2 to NR-UE 1 labeled 1100_1 with the determined transmission (electric) power.

Note that, as illustrated in FIG. 58C, NR-UE 1 labeled 1100_1 trasnmits uplink frame 5813_1_2 to TRP 1 labeled 1101_1 in time 5. Incidentally, the downlink frame may be present other than in time 5, and the uplink frame may be present other than in time 5 as well.

Performing the transmission power control as described above brings about an effect of improving the reception quality of data.

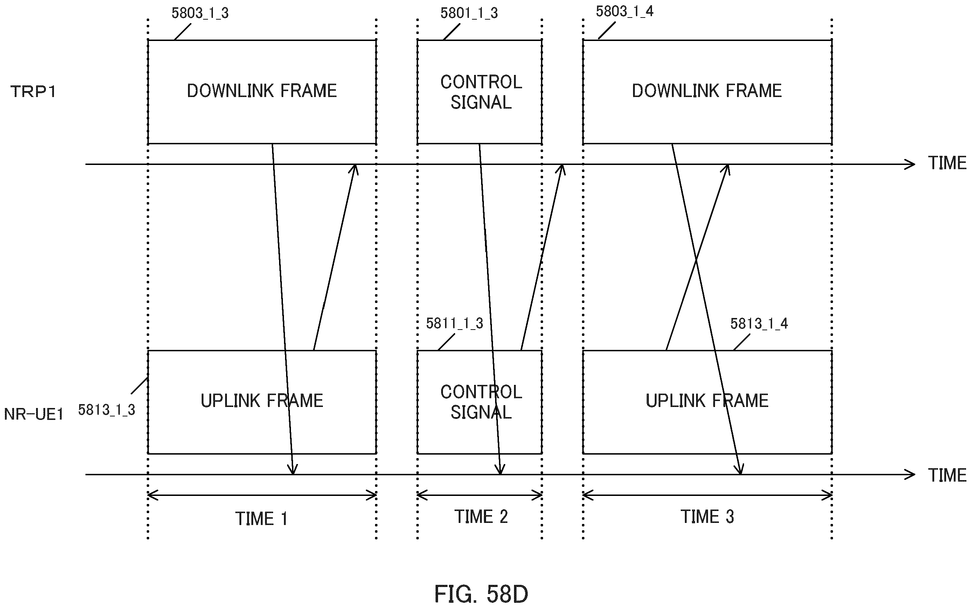

FIG. 58D illustrates an example, which is different from those in FIG. 58B and FIG. 58C, of the exchange between NR-UE 1 labeled 1100_1 and TRP 1 labeled 1101_1 for performing closed loop transmission power control in NR-UE 1 labeled 1100_1 and/or open loop transmission power control and closed loop transmission power control in TRP 1 labeled 1101_1 when NR-UE 1 labeled 1100_1 and TRP 1 labeled 1101_1 perform communication based on FIG. 51A and the like. Note that, in FIG. 58D, a horizontal axis represents time. In FIG. 58D, the components that operate in the same manner as the components in FIG. 58B are denoted by the same reference numerals, and some descriptions thereof will be omitted.

Transmission Power Control in NR-UE:

As illustrated in FIG. 58D, NR-UE 1 labeled 1100_1 trasnmits uplink frame 5813_1_3 to TRP 1 labeled 1101_1 in time 1. Meanwhile, TRP 1 labeled 1101_1 trasnmits downlink frame 5803_1_3 to NR-UE 1 labeled 1100_1 in time 1.

TRP 1 labeled 1101_1 then estimates a communication status such as SINR using the received "uplink frame 5813_1_3 and downlink frame 5803_1_3." This allows TRP 1 labeled 1101_1 to obtain an effect of being capable of SINR estimation taking into account the signal transmitted by the TRP itself. Note that, when estimating the communication status such as SINR, TRP 1 labeled 1101_1 may use a reference signal included in uplink frame 5813_1_3 or another signal included in uplink frame 5813_1_3. Further, when estimating the communication status such as SINR, TRP 1 labeled 1101_1 may use a reference signal included in downlink frame 5803_1_3 or another signal included in downlink frame 5803_1_3.

TRP 1 labeled 1101_1 generates, based on an estimation result of the communication status such as SINR, information (e.g., TPC command) on a value to set transmission (electric) power of a signal to be transmitted by NR-UE 1 labeled 1100_1. TRP 1 labeled 1101_1 then transmits, to NR-UE 1 labeled 1100_1, control signal 5801_1_3 that includes the information on the value to set the transmission (electric) power, in time 2. Note that, as illustrated in FIG. 58D, NR-UE 1 labeled 1100_1 may transmit control signal 5811_1_3 to TRP 1 labeled 1101_1, in time 2.

NR-UE 1 labeled 1100_1 determines the transmission (electric) power for transmitting a modulation signal, based on the information on the value to set the transmission (electric) power included in control signal 5801_3. In time 3, NR-UE 1 labeled 1100_1 transmits uplink frame 5813_1_4 to TRP 1 labeled 1101_1 with the determined transmission (electric) power.

Note that, as illustrated in FIG. 58D, TRP 1 labeled 1101_1 trasnmits downlink frame 5803_1_4 to NR-UE 1 labeled 1100_1 in time 3. Incidentally, the downlink frame may be present other than in time 3, and the uplink frame may be present other than in time 3 as well.

Performing the transmission power control as described above brings about an effect of improving the reception quality of data.

Open Loop Transmission Power Control in TRP:

As illustrated in FIG. 58D, NR-UE 1 labeled 1100_1 trasnmits uplink frame 5813_1_3 to TRP 1 labeled 1101_1 in time 1. Meanwhile, TRP 1 labeled 1101_1 trasnmits downlink frame 5803_1_3 to NR-UE 1 labeled 1100_1 in time 1.

TRP 1 labeled 1101_1 then estimates a communication status such as SINR using the received "uplink frame 5813_1_3 and downlink frame 5803_1_3." This allows TRP 1 labeled 1101_1 to obtain an effect of being capable of SINR estimation taking into account the signal transmitted by the TRP itself. Note that, when estimating the communication status such as SINR, TRP 1 labeled 1101_1 may use a reference signal included in uplink frame 5813_1_3 or another signal included in uplink frame 5813_1_3. Further, when estimating the communication status such as SINR, TRP 1 labeled 1101_1 may use a reference signal included in downlink frame 5803_1_3 or another signal included in downlink frame 5803_1_3.

TRP 1 labeled 1101_1 determines the transmission (electric) power of a modulation signal to be transmitted by the TRP itself, based on an estimation result of the communication status such as SINR. TRP 1 labeled 1101_1 then transmits, to NR-UE 1 labeled 1100_1, downlink frame 5803_1_4 having the determined transmission (electric) power, in time 3.

Note that, as illustrated in FIG. 58D, NR-UE 1 labeled 1100_1 trasnmits uplink frame 5813_1_4 to TRP 1 labeled 1101_1 in time 3. Incidentally, the downlink frame may be present other than in time 3, and the uplink frame may be present other than in time 3 as well.

Performing the transmission power control as described above brings about an effect of improving the reception quality of data.

Closed Loop Transmission Power Control in TRP:

As illustrated in FIG. 58D, NR-UE 1 labeled 1100_1 trasnmits uplink frame 5813_1_3 to TRP 1 labeled 1101_1 in time 1. Meanwhile, TRP 1 labeled 1101_1 trasnmits downlink frame 5803_1_3 to NR-UE 1 labeled 1100_1 in time 1.

NR-UE 1 labeled 1100_1 then estimates a communication status such as SINR using the received "uplink frame 5813_1_3 and downlink frame 5803_1_3." This allows NR-UE 1 labeled 1100_1 to obtain an effect of being capable of SINR estimation taking into account the signal transmitted by the NR-UE itself. Note that, when estimating the communication status such as SINR, NR-UE 1 labeled 1100_1 may use a reference signal included in uplink frame 5813_1_3 or another signal included in uplink frame 5813_1_3. Further, when estimating the communication status such as SINR, NR-UE 1 labeled 1100_1 may use a reference signal included in downlink frame 5803_1_3 or another signal included in downlink frame 5803_1_3.

NR-UE 1 labeled 1100_1 generates, based on an estimation result of the communication status such as SINR, information for controlling transmission (electric) power of a signal to be transmitted by TRP 1 labeled 1101_1 (e.g., estimation information on communication status such as SINR). NR-UE 1 labeled 1100_1 then transmits, to TRP 1 labeled 1101_1, control signal 5811_1_3 that includes the information for controlling the transmission (electric) power, in time 2. Note that, as illustrated in FIG. 58D, TRP 1 labeled 1101_1 may transmit control signal 5801_1_3 to NR-UE 1 labeled 1100_1, in time 2.

TRP 1 labeled 1101_1 determines the transmission (electric) power for transmitting a modulation signal, based on the information for controlling the transmission (electric) power included in control signal 5811_1_3. In time 3, TRP 1 labeled 1101_1 transmits downlink frame 5803_1_4 to NR-UE 1 labeled 1100_1 with the determined transmission (electric) power.

Note that, as illustrated in FIG. 58D, NR-UE 1 labeled 1100_1 trasnmits uplink frame 5813_1_4 to TRP 1 labeled 1101_1 in time 3. Incidentally, the downlink frame may be present other than in time 3, and the uplink frame may be present other than in time 3 as well.

Performing the transmission power control as described above brings about an effect of improving the reception quality of data.

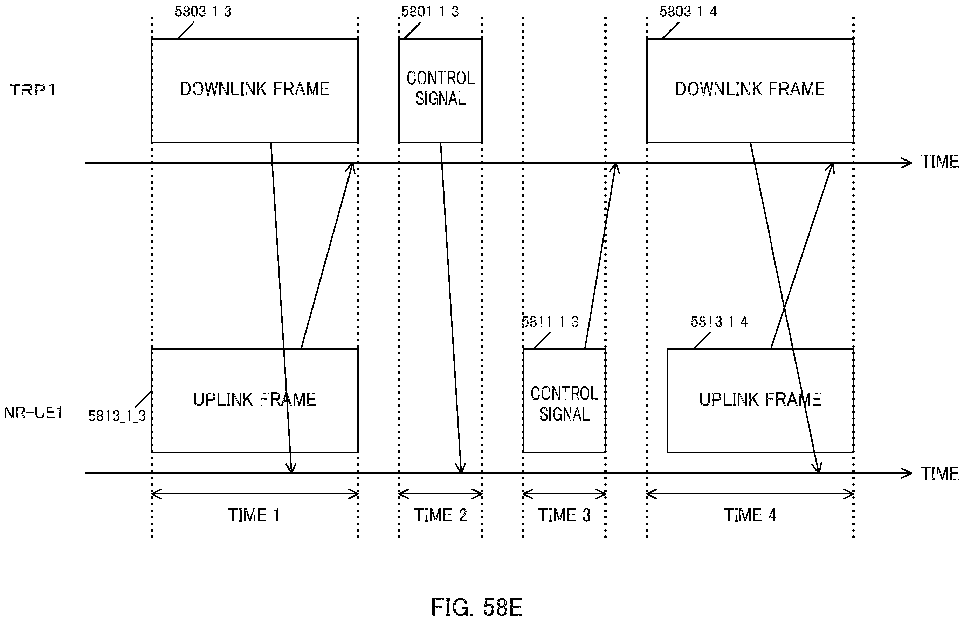

FIG. 58E illustrates an example, which is different from those in FIG. 58B, FIG. 58C, and FIG. 58D, of the exchange between NR-UE 1 labeled 1100_1 and TRP 1 labeled 1101_1 for performing closed loop transmission power control in NR-UE 1 labeled 1100_1 and/or open loop transmission power control and closed loop transmission power control in TRP 1 labeled 1101_1 when NR-UE 1 labeled 1100_1 and TRP 1 labeled 1101_1 perform communication based on FIG. 51A and the like. Note that, in FIG. 58E, a horizontal axis represents time. In FIG. 58E, the components that operate in the same manner as the components in FIG. 58D are denoted by the same reference numerals, and some descriptions thereof will be omitted.

Transmission Power Control in NR-UE:

As illustrated in FIG. 58E, NR-UE 1 labeled 1100_1 trasnmits uplink frame 5813_1_3 to TRP 1 labeled 1101_1 in time 1. Meanwhile, TRP 1 labeled 1101_1 trasnmits downlink frame 5803_1_3 to NR-UE 1 labeled 1100_1 in time 1.

TRP 1 labeled 1101_1 then estimates a communication status such as SINR using the received "uplink frame 5813_1_3 and downlink frame 5803_1_3." This allows TRP 1 labeled 1101_1 to obtain an effect of being capable of SINR estimation taking into account the signal transmitted by the TRP itself. Note that, when estimating the communication status such as SINR, TRP 1 labeled 1101_1 may use a reference signal included in uplink frame 5813_1_3 or another signal included in uplink frame 5813_1_3. Further, when estimating the communication status such as SINR, TRP 1 labeled 1101_1 may use a reference signal included in downlink frame 5803_1_3 or another signal included in downlink frame 5803_1_3.

TRP 1 labeled 1101_1 generates, based on an estimation result of the communication status such as SINR, information (e.g., TPC command) on a value to set transmission (electric) power of a signal to be transmitted by NR-UE 1 labeled 1100_1. TRP 1 labeled 1101_1 then transmits, to NR-UE 1 labeled 1100_1, control signal 5801_1_3 that includes the information on the value to set the transmission (electric) power, in time 2. Note that, as illustrated in FIG. 58E, NR-UE 1 labeled 1100_1 may transmit control signal 5811_1_3 to TRP 1 labeled 1101_1, in time 3.

NR-UE 1 labeled 1100_1 determines the transmission (electric) power for transmitting a modulation signal, based on the information on the value to set the transmission (electric) power included in control signal 5801_1_3. In time 4, NR-UE 1 labeled 1100_1 transmits uplink frame 5813_1_4 to TRP 1 labeled 1101_1 with the determined transmission (electric) power.

Note that, as illustrated in FIG. 58E, TRP 1 labeled 1101_1 trasnmits downlink frame 5803_1_4 to NR-UE 1 labeled 1100_1 in time 4. Incidentally, the downlink frame may be present other than in time 4, and the uplink frame may be present other than in time 4 as well.

Performing the transmission power control as described above brings about an effect of improving the reception quality of data.

Open Loop Transmission Power Control in TRP:

As illustrated in FIG. 58E, NR-UE 1 labeled 1100_1 trasnmits uplink frame 5813_1_3 to TRP 1 labeled 1101_1 in time 1. Meanwhile, TRP 1 labeled 1101_1 trasnmits downlink frame 5803_1_3 to NR-UE 1 labeled 1100_1 in time 1.

TRP 1 labeled 1101_1 then estimates a communication status such as SINR using the received "uplink frame 5813_1_3 and downlink frame 5803_1_3." This allows TRP 1 labeled 1101_1 to obtain an effect of being capable of SINR estimation taking into account the signal transmitted by the TRP itself. Note that, when estimating the communication status such as SINR, TRP 1 labeled 1101_1 may use a reference signal included in uplink frame 5813_1_3 or another signal included in uplink frame 5813_1_3. Further, when estimating the communication status such as SINR, TRP 1 labeled 1101_1 may use a reference signal included in downlink frame 5803_1_3 or another signal included in downlink frame 5803_1_3.

TRP 1 labeled 1101_1 determines the transmission (electric) power of a modulation signal to be transmitted by the TRP itself, based on an estimation result of the communication status such as SINR. TRP 1 labeled 1101_1 then transmits, to NR-UE 1 labeled 1100_1, downlink frame 5803_1_4 having the determined transmission (electric) power, in time 4.

Note that, as illustrated in FIG. 58E, NR-UE 1 labeled 1100_1 trasnmits uplink frame 5813_1_4 to TRP 1 labeled 1101_1 in time 4. Incidentally, the downlink frame may be present other than in time 4, and the uplink frame may be present other than in time 4 as well.

Performing the transmission power control as described above brings about an effect of improving the reception quality of data.

Closed Loop Transmission Power Control in TRP:

As illustrated in FIG. 58E, TRP 1 labeled 1101_1 trasnmits downlink frame 5803_1_3 to NR-UE 1 labeled 1100_1 in time 1. Meanwhile, NR-UE 1 labeled 1100_1 trasnmits uplink frame 5813_1_3 to TRP 1 labeled 1101_1 in time 1.

NR-UE 1 labeled 1100_1 then estimates a communication status such as SINR using the received "uplink frame 5813_1_3 and downlink frame 5803_1_3." This allows NR-UE 1 labeled 1100_1 to obtain an effect of being capable of SINR estimation taking into account the signal transmitted by the NR-UE itself.

NR-UE 1 labeled 1100_1 generates, based on an estimation result of the communication status such as SINR, information for controlling transmission (electric) power of a signal to be transmitted by TRP 1 labeled 1101_1 (e.g., estimation information on communication status such as SINR). NR-UE 1 labeled 1100_1 then transmits, to TRP 1 labeled 1101_1, control signal 5811_1_3 that includes the information for controlling the transmission (electric) power, in time 3. Note that, as illustrated in FIG. 58E, TRP 1 labeled 1101_1 may transmit control signal 5801_1_3 to NR-UE 1 labeled 1100_1, in time 2.

TRP 1 labeled 1101_1 determines the transmission (electric) power for transmitting a modulation signal, based on the information for controlling the transmission (electric) power included in control signal 5811_1_3. In time 4, TRP 1 labeled 1101_1 transmits downlink frame 5803_1_4 to NR-UE 1 labeled 1100_1 with the determined transmission (electric) power.

Note that, as illustrated in FIG. 58E, NR-UE 1 labeled 1100_1 trasnmits uplink frame 5813_1_4 to TRP 1 labeled 1101_1 in time 4. Incidentally, the downlink frame may be present other than in time 4, and the uplink frame may be present other than in time 4 as well.

Performing the transmission power control as described above brings about an effect of improving the reception quality of data.

Incidentally, as described with reference to FIG. 51A and the like, FIG. 58B, FIG. 58C, FIG. 58D, and FIG. 58E have been each described as the exchange between "NR-UE 1 labeled 1100_1 and TRP 1 labeled 1101_1" in a time axis at the time of the transmission power control when NR-UE 1 labeled 1100_1 and TRP 1 labeled 1101_1 perform communication, but the transmission power control may be performed with at least one of the methods in FIG. 58B, FIG. 58C, FIG. 58D, and FIG. 58E, as the exchange between "NR-UE 1 labeled 1100_1 and TRP 1 labeled 1101_1 " in a time axis at the time of the transmission power control. Alternatively, any of the methods in FIG. 58B, FIG. 58C, FIG. 58D, and FIG. 58E may be selected depending on time in order to perform the transmission power control, as the exchange between "NR-UE 1 labeled 1100_1 and TRP 1 labeled 1101_1" in a time axis at the time of the transmission power control. This brings about the effects as already mentioned in the same way.

Next, as illustrated with reference to FIG. 54A and the like, a description will be given of a transmission power control method when NR-UE 1 labeled 1100_1, TRP 1 labeled 1101_1, and TRP 2 labeled 1101_2 perform communication.

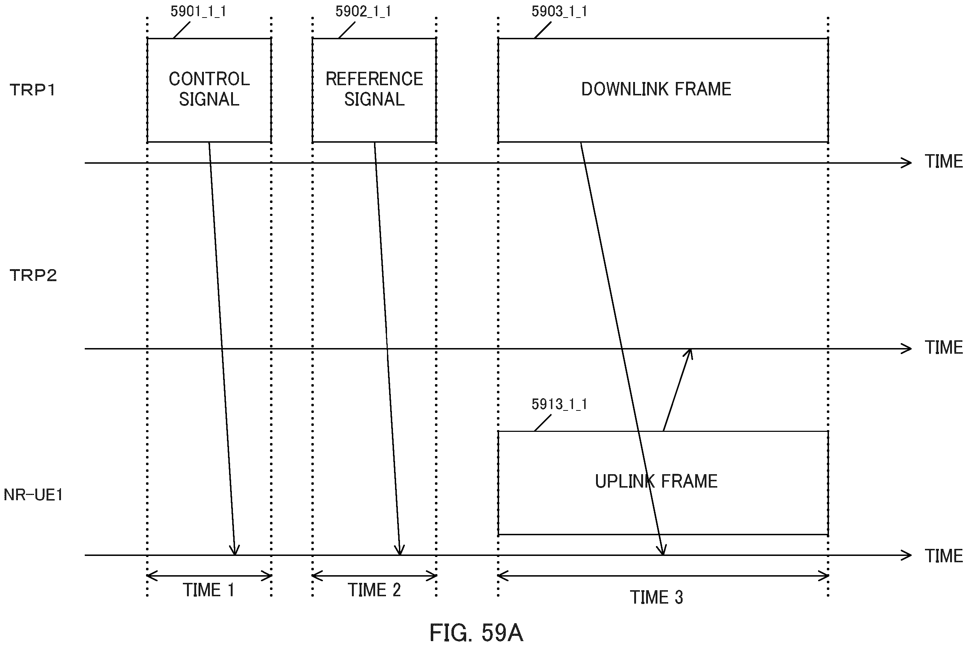

FIG. 59A illustrates an example of the exchange between "NR-UE 1 labeled 1100_1, TRP 1 labeled 1101_1, and TRP 2 labeled 1101_2" for performing open loop transmission power control in NR-UE 1 labeled 1100_1 when NR-UE 1 labeled 1100_1, TRP 1 labeled 1101_1, and TRP 2 labeled 1101_2 perform communication based on FIG. 54A and the like. Note that, in FIG. 59A, a horizontal axis represents time.

As illustrated in FIG. 59A, TRP 1 labeled 1101_1 transmits control signal 5901_1_1 in time 1. In addition, TRP 1 labeled 1101_1 transmits reference signal 5902_1_1 in time 2.

At this time, control signal 5901_1_1 includes for example, a parameter for transmission power to be indicated to a terminal (NR-UE 1 labeled 1100_1) with a relatively long cycle, and NR-UE 1 labeled 1100_1 receives reference signal 5902_1_1 transmitted by TRP 1 labeled 1101_1 and thus measures a communication status (e.g., estimaes propagation loss, reception field strength, SINR, and the like). NR-UE 1 labeled 1100_1 then determines transmission (electric) power for transmitting a modulation signal, based on, for example, the parameter for the transmission power included in control signal 5901_1_1 and the measured communication status. In time 3, NR-UE 1 labeled 1100_1 transmits uplink frame 5913_1_1 to TRP 2 labeled 1101_2 with the determined transmission (electric) power.

Note that, as illustrated in FIG. 59A, TRP 1 labeled 1101_1 trasnmits downlink frame 5903_1_1 to NR-UE 1 labeled 1100_1 in time 3. Incidentally, the downlink frame may be present other than in time 3, and the uplink frame may be present other than in time 3 as well.

Performing the transmission power control as described above brings about an effect of improving the reception quality of data.

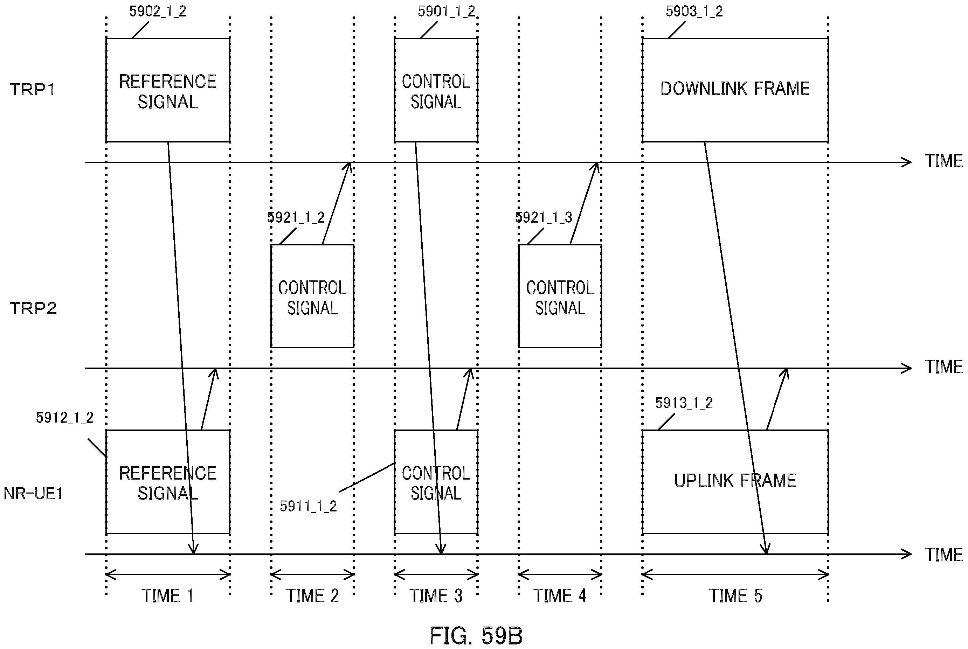

FIG. 59B illustrates an example of the exchange between "NR-UE 1 labeled 1100_1, TRP 1 labeled 1101_1, and TRP 2 labeled 1101_2" for performing closed loop transmission power control in NR-UE 1 labeled 1100_1 and/or open loop transmission power control and closed loop transmission power control in TRP 1 labeled 1101_1 when NR-UE 1 labeled 1100_1, TRP 1 labeled 1101_1, and TRP 2 labeled 1101_2 perform communication based on FIG. 54A and the like. Note that, in FIG. 59B, a horizontal axis represents time.

Transmission Power Control in NR-UE:

As illustrated in FIG. 59B, NR-UE 1 labeled 1100_1 trasnmits reference signal 5912_1_2 to TRP 2 labeled 1101_2 in time 1. Meanwhile, TRP 1 labeled 1101_1 trasnmits reference signal 5902_1_2 to NR-UE 1 labeled 1100_1.

TRP 2 labeled 1101_2 then estimates a communication status such as SINR using the received "reference signal 5912_1_2 and reference signal 5902_1_2." This allows TRP 2 labeled 1101_2 to obtain an effect of being capable of SINR estimation taking into account the signal transmitted by NR-UE 1 labeled 1100_1 and the signal transmitted by TRP 1 labeled 1101_1.

TRP 2 labeled 1101_2 generates, based on an estimation result of the communication status such as SINR, information (e.g., TPC command) on a value to set transmission (electric) power of a signal to be transmitted by NR-UE 1 labeled 1100_1. TRP 2 labeled 1101_2 then transmits, to TRP 1 labeled 1101_1, control signal 5921_1_2 that includes the information on the value to set the transmission (electric) power of a signal to be transmitted by NR-UE 1 labeled 1100_1, in time 2. Note that, the communication between TRP 1 labeled 1101_1 and TRP 2 labeled 1101_2 may be radio communication or wired communication. Further, TRP 1 labeled 1101_1 and TRP 2 labeled 1101_2 may be one system.

TRP 1 labeled 1101_1 receives control signal 5921_1_2 transmitted by TRP 2 labeled 1101_2 and thus obtains information on a value to set transmission (electric) power of a signal to be transmitted by NR-UE 1 labeled 1100_1. TRP 1 labeled 1101_1 then transmits, to NR-UE 1 labeled 1100_1, control signal 5901_1_2 that includes the information on the value to set the transmission (electric) power, in time 3. Note that, as illustrated in FIG. 59B, in time 3, NR-UE 1 labeled 1100_1 may transmit control signal 5911_1_2 to TRP 2 labeled 1101_2.

NR-UE 1 labeled 1100_1 determines the transmission (electric) power for transmitting a modulation signal, based on the information on the value to set the transmission (electric) power included in control signal 5901_2. In time 5, NR-UE 1 labeled 1100_1 transmits uplink frame 5913_1_2 to TRP 2 labeled 1101_2 with the determined transmission (electric) power.

Note that, as illustrated in FIG. 59B, TRP 1 labeled 1101_1 trasnmits downlink frame 5903_1_2 to NR-UE 1 labeled 1100_1 in time 5. Incidentally, the downlink frame may be present other than in time 5, and the uplink frame may be present other than in time 5 as well.

Performing the transmission power control as described above brings about an effect of improving the reception quality of data.

Open Loop Transmission Power Control in TRP:

As illustrated in FIG. 59B, NR-UE 1 labeled 1100_1 trasnmits reference signal 5912_1_2 to TRP 2 labeled 1101_2 in time 1. Meanwhile, TRP 1 labeled 1101_1 trasnmits reference signal 5902_1_2 to NR-UE 1 labeled 1100_1.

TRP 2 labeled 1101_2 then estimates a communication status such as SINR using the received "reference signal 5912_1_2 and reference signal 5902_1_2." This allows TRP 2 labeled 1101_2 to obtain an effect of being capable of SINR estimation taking into account the signal transmitted by NR-UE 1 labeled 1100_1 and the signal transmitted by TRP 1 labeled 1101_1.

TRP 2 labeled 1101_2 generates, based on an estimation result of the communication status such as SINR, information on a value to set transmission (electric) power of a signal to be transmitted by TRP 1 labeled 1101_1. TRP 2 labeled 1101_2 then transmits, to TRP 1 labeled 1101_1, control signal 5921_1_2 that includes the information on the value to set the transmission (electric) power of a signal to be transmitted by TRP 1 labeled 1101_1, in time 2. Note that, the communication between TRP 1 labeled 1101_1 and TRP 2 labeled 1101_2 may be radio communication or wired communication. Further, TRP 1 labeled 1101_1 and TRP 2 labeled 1101_2 may be one system.

TRP 1 labeled 1101_1 determines the transmission (electric) power of a modulation signal to be transmitted, based on the information, which is obtained from TRP 2 labeled 1101_2, on the value to set the transmission (electric) power of a signal to be transmitted by TRP 1 labeled 1101_1. TRP 1 labeled 1101_1 then transmits, to NR-UE 1 labeled 1100_1, downlink frame 5903_1_2 having the determined transmission (electric) power, in time 4.

Note that, as illustrated in FIG. 59B, NR-UE 1 labeled 1100_1 trasnmits uplink frame 5913_1_2 to TRP 2 labeled 1101_2 in time 5. Incidentally, the downlink frame may be present other than in time 5, and the uplink frame may be present other than in time 5 as well.

Performing the transmission power control as described above brings about an effect of improving the reception quality of data.

Closed Loop Transmission Power Control in TRP:

As illustrated in FIG. 59B, NR-UE 1 labeled 1100_1 trasnmits reference signal 5912_1_2 to TRP 2 labeled 1101_2 in time 1. Meanwhile, TRP 1 labeled 1101_1 trasnmits reference signal 5902_1_2 to NR-UE 1 labeled 1100_1.

NR-UE 1 labeled 1100_1 then estimates a communication status such as SINR using the received "reference signal 5912_1_2 and reference signal 5902_1_2." This allows NR-UE 1 labeled 1100_1 to obtain an effect of being capable of SINR estimation taking into account the signal transmitted by the NR-UE itself.

NR-UE 1 labeled 1100_1 generates, based on an estimation result of the communication status such as SINR, information for controlling transmission (electric) power of a signal to be transmitted by TRP 1 labeled 1101_1 (e.g., estimation information on communication status such as SINR). NR-UE 1 labeled 1100_1 then transmits, to TRP 2 labeled 1101_2, control signal 5911_1_2 that includes the information for controlling the transmission (electric) power, in time 3. Note that, as illustrated in FIG. 59B, TRP 1 labeled 1101_1 may transmit control signal 5901_1_2 to NR-UE 1 labeled 1100_1, in time 3.

In time 4, TRP 2 labeled 1101_2 then transmits, to TRP 1 labeled 1101_1, control signal 5921_1_3 that includes the information, which is obtained from NR-UE 1 labeled 1100_1, for controlling the transmission (electric) power of a signal to be transmitted by TRP 1 labeled 1101_1. Note that, the communication between TRP 1 labeled 1101_1 and TRP 2 labeled 1101_2 may be radio communication or wired communication. Further, TRP 1 labeled 1101_1 and TRP 2 labeled 1101_2 may be one system.

TRP 1 labeled 1101_1 determines the transmission (electric) power for transmitting a modulation signal, based on the information for controlling the transmission (electric) power included in control signal 5921_1_3. In time 5, TRP 1 labeled 1101_1 transmits downlink frame 5903_1_2 to NR-UE 1 labeled 1100_1 with the determined transmission (electric) power.

Note that, as illustrated in FIG. 59B, NR-UE 1 labeled 1100_1 trasnmits uplink frame 5913_1_2 to TRP 1 labeled 1101_1 in time 5. Incidentally, the downlink frame may be present other than in time 5, and the uplink frame may be present other than in time 5 as well.

Performing the transmission power control as described above brings about an effect of improving the reception quality of data.

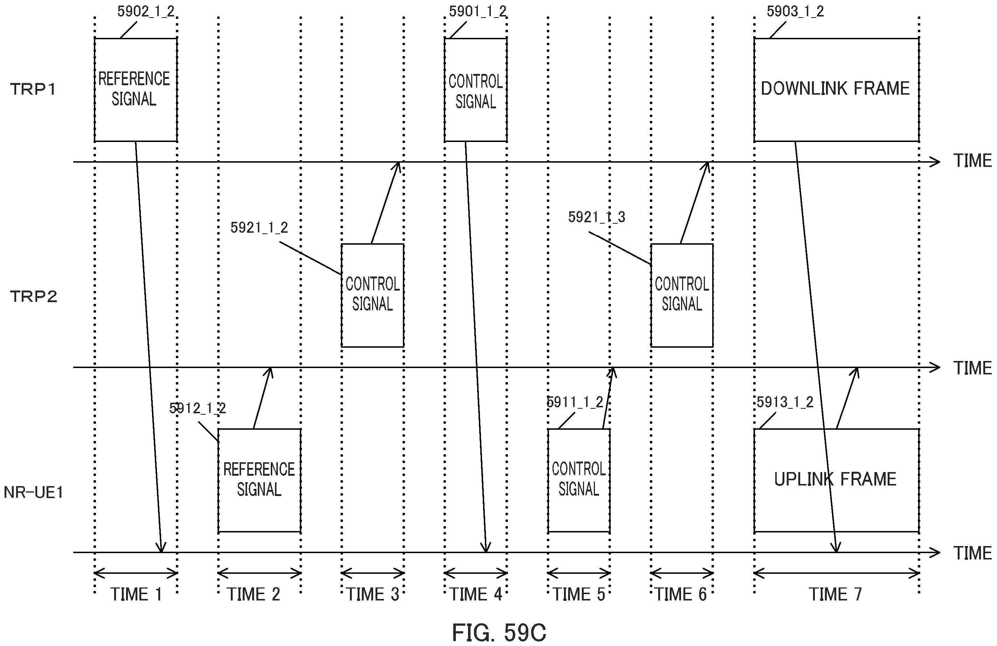

FIG. 59C illustrates an example, which is different from that in FIG. 59B, of the exchange between "NR-UE 1 labeled 1100_1, TRP 1 labeled 1101_1, and TRP 2 labeled 1101_2" for performing closed loop transmission power control in NR-UE 1 labeled 1100_1 and/or open loop transmission power control and closed loop transmission power control in TRP 1 labeled 1101_1 when NR-UE 1 labeled 1100_1, TRP 1 labeled 1101_1, and TRP 2 labeled 1101_2 perform communication based on FIG. 54A and the like. Note that, in FIG. 59C, a horizontal axis represents time. In FIG. 59C, the components that operate in the same manner as the components in FIG. 59B are denoted by the same reference numerals, and some descriptions thereof will be omitted.

Transmission Power Control in NR-UE:

As illustrated in FIG. 59C, TRP 1 labeled 1101_1 trasnmits reference signal 5902_1_2 to NR-UE 1 labeled 1100_1 in time 1. Meanwhile, NR-UE 1 labeled 1100_1 trasnmits reference signal 5912_1_2 to TRP 2 labeled 1101_2 in time 2.

TRP 2 labeled 1101_2 then estimates a communication status such as SINR using the received "reference signal 5912_1_2 and reference signal 5902_1_2." This allows TRP 2 labeled 1101_2 to obtain an effect of being capable of SINR estimation taking into account the signal transmitted by NR-UE 1 labeled 1100_1 and the signal transmitted by TRP 1 labeled 1101_1.

TRP 2 labeled 1101_2 generates, based on an estimation result of the communication status such as SINR, information (e.g., TPC command) on a value to set transmission (electric) power of a signal to be transmitted by NR-UE 1 labeled 1100_1. TRP 2 labeled 1101_2 then transmits, to TRP 1 labeled 1101_1, control signal 5921_1_2 that includes the information on the value to set the transmission (electric) power of a signal to be transmitted by NR-UE 1 labeled 1100_1, in time 3. Note that, the communication between TRP 1 labeled 1101_1 and TRP 2 labeled 1101_2 may be radio communication or wired communication. Further, TRP 1 labeled 1101_1 and TRP 2 labeled 1101_2 may be one system.

TRP 1 labeled 1101_1 receives control signal 5921_1_2 transmitted by TRP 2 labeled 1101_2 and thus obtains information on a value to set transmission (electric) power of a signal to be transmitted by NR-UE 1 labeled 1100_1. TRP 1 labeled 1101_1 then transmits, to NR-UE 1 labeled 1100_1, control signal 5901_1_2 that includes the information on the value to set the transmission (electric) power, in time 4. Note that, as illustrated in FIG. 59C, in time 5, NR-UE 1 labeled 1100_1 may transmit control signal 5911_1_2 to TRP 2 labeled 1101_2.

NR-UE 1 labeled 1100_1 determines the transmission (electric) power for transmitting a modulation signal, based on the information on the value to set the transmission (electric) power included in control signal 5901_2. In time 7, NR-UE 1 labeled 1100_1 transmits uplink frame 5913_1_2 to TRP 2 labeled 1101_2 with the determined transmission (electric) power.

Note that, as illustrated in FIG. 59C, TRP 1 labeled 1101_1 trasnmits downlink frame 5903_1_2 to NR-UE 1 labeled 1100_1 in time 7. Incidentally, the downlink frame may be present other than in time 7, and the uplink frame may be present other than in time 7 as well.

Performing the transmission power control as described above brings about an effect of improving the reception quality of data.

Open Loop Transmission Power Control in TRP:

As illustrated in FIG. 59C, TRP 1 labeled 1101_1 trasnmits reference signal 5902_1_2 to NR-UE 1 labeled 1100_1 in time 1. Meanwhile, NR-UE 1 labeled 1100_1 trasnmits reference signal 5912_1_2 to TRP 2 labeled 1101_2 in time 2.

TRP 2 labeled 1101_2 then estimates a communication status such as SINR using the received "reference signal 5912_1_2 and reference signal 5902_1_2." This allows TRP 2 labeled 1101_2 to obtain an effect of being capable of SINR estimation taking into account the signal transmitted by NR-UE 1 labeled 1100_1 and the signal transmitted by TRP 1 labeled 1101_1.

TRP 2 labeled 1101_2 generates, based on an estimation result of the communication status such as SINR, information on a value to set transmission (electric) power of a signal to be transmitted by TRP 1 labeled 1101_1. TRP 2 labeled 1101_2 then transmits, to TRP 1 labeled 1101_1, control signal 5921_1_2 that includes the information on the value to set the transmission (electric) power of a signal to be transmitted by TRP 1 labeled 1101_1, in time 2. Note that, the communication between TRP 1 labeled 1101_1 and TRP 2 labeled 1101_2 may be radio communication or wired communication. Further, TRP 1 labeled 1101_1 and TRP 2 labeled 1101_2 may be one system.

TRP 1 labeled 1101_1 determines the transmission (electric) power of a modulation signal to be transmitted, based on the information, which is obtained from TRP 2 labeled 1101_2, on the value to set the transmission (electric) power of a signal to be transmitted by TRP 1 labeled 1101_1. TRP 1 labeled 1101_1 then transmits, to NR-UE 1 labeled 1100_1, downlink frame 5903_1_2 having the determined transmission (electric) power, in time 7.

Note that, as illustrated in FIG. 59C, NR-UE 1 labeled 1100_1 trasnmits uplink frame 5913_1_2 to TRP 1 labeled 1101_1 in time 7. Incidentally, the downlink frame may be present other than in time 7, and the uplink frame may be present other than in time 7 as well.

Performing the transmission power control as described above brings about an effect of improving the reception quality of data.

Closed Loop Transmission Power Control in TRP:

As illustrated in FIG. 59C, TRP 1 labeled 1101_1 trasnmits reference signal 5902_1_2 to NR-UE 1 labeled 1100_1 in time 1. Meanwhile, NR-UE 1 labeled 1100_1 trasnmits reference signal 5912_1_2 to TRP 2 labeled 1101_2 in time 2.

NR-UE 1 labeled 1100_1 then estimates a communication status such as SINR using the received "reference signal 5912_1_2 and reference signal 5902_1_2." This allows NR-UE 1 labeled 1100_1 to obtain an effect of being capable of SINR estimation taking into account the signal transmitted by NR-UE 1 labeled 1100_1 and the signal transmitted by TRP 1 labeled 1101_1.

NR-UE 1 labeled 1100_1 generates, based on an estimation result of the communication status such as SINR, information for controlling transmission (electric) power of a signal to be transmitted by TRP 1 labeled 1101_1 (e.g., estimation information on communication status such as SINR). NR-UE 1 labeled 1100_1 then transmits, to TRP 2 labeled 1101_2, control signal 5911_1_2 that includes the information for controlling the transmission (electric) power, in time 5. Note that, as illustrated in FIG. 59C, TRP 1 labeled 1101_1 may transmit control signal 5901_1_2 to NR-UE 1 labeled 1100_1, in time 4.

In time 6, TRP 2 labeled 1101_2 then transmits, to TRP 1 labeled 1101_1, control signal 5921_1_3 that includes the information, which is obtained from NR-UE 1 labeled 1100_1, for controlling the transmission (electric) power of a signal to be transmitted by TRP 1 labeled 1101_1. Note that, the communication between TRP 1 labeled 1101_1 and TRP 2 labeled 1101_2 may be radio communication or wired communication. Further, TRP 1 labeled 1101_1 and TRP 2 labeled 1101_2 may be one system.

TRP 1 labeled 1101_1 determines the transmission (electric) power for transmitting a modulation signal, based on the information for controlling the transmission (electric) power included in control signal 5921_1_3. In time 7, TRP 1 labeled 1101_1 transmits downlink frame 5903_1_2 to NR-UE 1 labeled 1100_1 with the determined transmission (electric) power.

Note that, as illustrated in FIG. 59C, NR-UE 1 labeled 1100_1 trasnmits uplink frame 5913_1_2 to TRP 2 labeled 1101_2 in time 7. Incidentally, the downlink frame may be present other than in time 7, and the uplink frame may be present other than in time 7 as well.

Performing the transmission power control as described above brings about an effect of improving the reception quality of data.

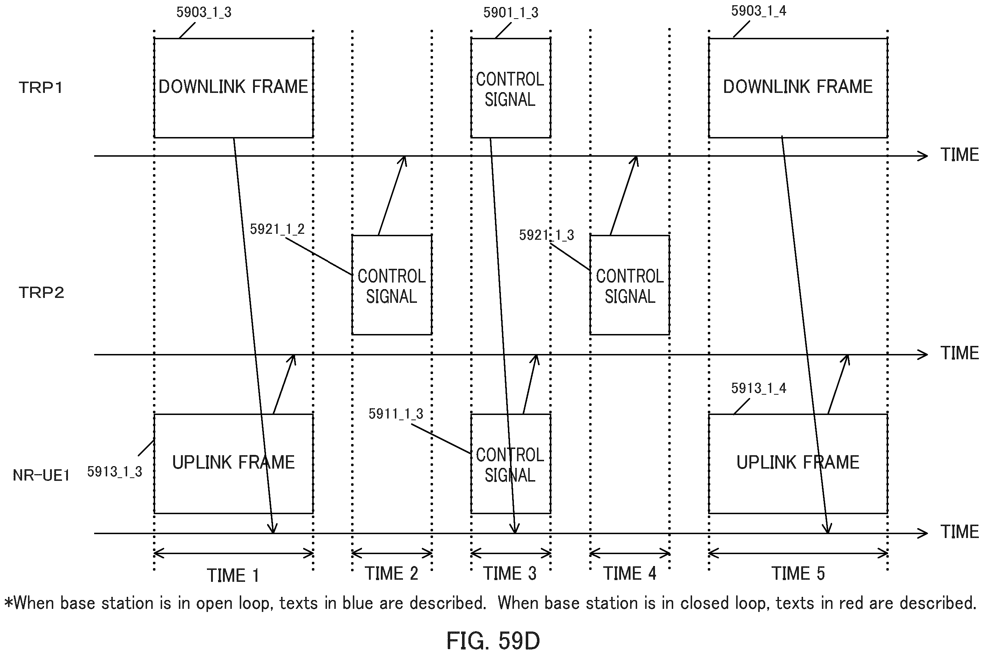

FIG. 59D illustrates an example, which is different from those in FIG. 59B and FIG. 59C, of the exchange between "NR-UE 1 labeled 1100_1, TRP 1 labeled 1101_1, and TRP 2 labeled 1101_2" for performing closed loop transmission power control in NR-UE 1 labeled 1100_1 and/or open loop transmission power control and closed loop transmission power control in TRP 1 labeled 1101_1 when NR-UE 1 labeled 1100_1, TRP 1 labeled 1101_1, and TRP 2 labeled 1101_2 perform communication based on FIG. 54A and the like. Note that, in FIG. 59D, a horizontal axis represents time. In FIG. 59D, the components that operate in the same manner as the components in FIG. 59B are denoted by the same reference numerals, and some descriptions thereof will be omitted.

Transmission Power Control in NR-UE:

As illustrated in FIG. 59D, NR-UE 1 labeled 1100_1 trasnmits uplink frame 5913_1_3 to TRP 2 labeled 1101_2 in time 1. Meanwhile, TRP 1 labeled 1101_1 trasnmits downlink frame 5903_1_3 to NR-UE 1 labeled 1100_1 in time 1.

TRP 2 labeled 1101_2 then estimates a communication status such as SINR using the received "uplink frame 5913_1_3 and downlink frame 5903_1_3." This allows TRP 2 labeled 1101_2 to obtain an effect of being capable of SINR estimation taking into account the signal transmitted by NR-UE 1 labeled 1100_1 and the signal transmitted by TRP 1 labeled 1101_1. Note that, when estimating the communication status such as SINR, TRP 2 labeled 1101_2 may use a reference signal included in uplink frame 5913_1_3 or another signal included in uplink frame 5913_1_3. Further, when estimating the communication status such as SINR, TRP 2 labeled 1101_2 may use a reference signal included in downlink frame 5903_1_3 or another signal included in downlink frame 5903_1_3.

TRP 2 labeled 1101_2 generates, based on an estimation result of the communication status such as SINR, information (e.g., TPC command) on a value to set transmission (electric) power of a signal to be transmitted by NR-UE 1 labeled 1100_1. TRP 2 labeled 1101_2 then transmits, to TRP 1 labeled 1101_1, control signal 5921_1_2 that includes the information on the value to set the transmission (electric) power of a signal to be transmitted by NR-UE 1 labeled 1100_1, in time 2. Note that, the communication between TRP 1 labeled 1101_1 and TRP 2 labeled 1101_2 may be radio communication or wired communication. Further, TRP 1 labeled 1101_1 and TRP 2 labeled 1101_2 may be one system.

TRP 1 labeled 1101_1 receives control signal 5921_1_2 transmitted by TRP 2 labeled 1101_2 and thus obtains information on a value to set transmission (electric) power of a signal to be transmitted by NR-UE 1 labeled 1100_1. TRP 1 labeled 1101_1 then transmits, to NR-UE 1 labeled 1100_1, control signal 5901_1_3 that includes the information on the value to set the transmission (electric) power, in time 3. Note that, as illustrated in FIG. 59D, in time 3, NR-UE 1 labeled 1100_1 may transmit control signal 5911_1_3 to TRP 2 labeled 1101_2.

NR-UE 1 labeled 1100_1 determines the transmission (electric) power for transmitting a modulation signal, based on the information on the value to set the transmission (electric) power included in control signal 5901_3. In time 5, NR-UE 1 labeled 1100_1 transmits uplink frame 5913_1_4 to TRP 2 labeled 1101_2 with the determined transmission (electric) power.

Note that, as illustrated in FIG. 59D, TRP 1 labeled 1101_1 trasnmits downlink frame 5903_1_4 to NR-UE 1 labeled 1100_1 in time 5. Incidentally, the downlink frame may be present other than in time 5, and the uplink frame may be present other than in time 5 as well.

Performing the transmission power control as described above brings about an effect of improving the reception quality of data.

Open Loop Transmission Power Control in TRP:

As illustrated in FIG. 59D, NR-UE 1 labeled 1100_1 trasnmits uplink frame 5913_1_3 to TRP 2 labeled 1101_2 in time 1. Meanwhile, TRP 1 labeled 1101_1 trasnmits downlink frame 5903_1_3 to NR-UE 1 labeled 1100_1 in time 1.

TRP 2 labeled 1101_2 then estimates a communication status such as SINR using the received "uplink frame 5913_1_3 and downlink frame 5903_1_3." This allows TRP 2 labeled 1101_2 to obtain an effect of being capable of SINR estimation taking into account the signal transmitted by NR-UE 1 labeled 1100_1 and the signal transmitted by TRP 1 labeled 1101_1. Note that, when estimating the communication status such as SINR, TRP 2 labeled 1101_2 may use a reference signal included in uplink frame 5913_1_3 or another signal included in uplink frame 5913_1_3. Further, when estimating the communication status such as SINR, TRP 2 labeled 1101_2 may use a reference signal included in downlink frame 5903_1_3 or another signal included in downlink frame 5903_1_3.

TRP 2 labeled 1101_2 generates, based on an estimation result of the communication status such as SINR, information on a value to set transmission (electric) power of a signal to be transmitted by TRP 1 labeled 1101_1. TRP 2 labeled 1101_2 then transmits, to TRP 1 labeled 1101_1, control signal 5921_1_2 that includes the information on the value to set the transmission (electric) power of a signal to be transmitted by TRP 1 labeled 1101_1, in time 2. Note that, the communication between TRP 1 labeled 1101_1 and TRP 2 labeled 1101_2 may be radio communication or wired communication. Further, TRP 1 labeled 1101_1 and TRP 2 labeled 1101_2 may be one system.

TRP 1 labeled 1101_1 determines the transmission (electric) power of a modulation signal to be transmitted, based on the information, which is obtained from TRP 2 labeled 1101_2, on the value to set the transmission (electric) power of a signal to be transmitted by TRP 1 labeled 1101_1. TRP 1 labeled 1101_1 then transmits, to NR-UE 1 labeled 1100_1, downlink frame 5903_1_4 having the determined transmission (electric) power, in time 5.

Note that, as illustrated in FIG. 59D, NR-UE 1 labeled 1100_1 trasnmits uplink frame 5913_1_4 to TRP 2 labeled 1101_2 in time 5. Incidentally, the downlink frame may be present other than in time 5, and the uplink frame may be present other than in time 5 as well.

Performing the transmission power control as described above brings about an effect of improving the reception quality of data.

Closed Loop Transmission Power Control in TRP:

As illustrated in FIG. 59D, NR-UE 1 labeled 1100_1 trasnmits uplink frame 5913_1_3 to TRP 2 labeled 1101_2 in time 1. Meanwhile, TRP 1 labeled 1101_1 trasnmits downlink frame 5903_1_3 to NR-UE 1 labeled 1100_1 in time 1.

NR-UE 1 labeled 1100_1 then estimates a communication status such as SINR using the received "uplink frame 5913_1_3 and downlink frame 5903_1_3." This allows NR-UE 1 labeled 1100_1 to obtain an effect of being capable of SINR estimation taking into account the signal transmitted by the NR-UE itself. Note that, when estimating the communication status such as SINR, NR-UE 1 labeled 1100_1 may use a reference signal included in uplink frame 5913_1_3 or another signal included in uplink frame 5913_1_3. Further, when estimating the communication status such as SINR, NR-UE 1 labeled 1100_1 may use a reference signal included in downlink frame 5903_1_3 or another signal included in downlink frame 5903_1_3.

NR-UE 1 labeled 1100_1 generates, based on an estimation result of the communication status such as SINR, information for controlling transmission (electric) power of a signal to be transmitted by TRP 1 labeled 1101_1 (e.g., estimation information on communication status such as SINR). NR-UE 1 labeled 1100_1 then transmits, to TRP 2 labeled 1101_2, control signal 5911_1_3 that includes the information for controlling the transmission (electric) power, in time 3. Note that, as illustrated in FIG. 59D, TRP 1 labeled 1101_1 may transmit control signal 5901_1_3 to NR-UE 1 labeled 1100_1, in time 3.

In time 4, TRP 2 labeled 1101_2 then transmits, to TRP 1 labeled 1101_1, control signal 5921_1_3 that includes the information, which is obtained from NR-UE 1 labeled 1100_1, for controlling the transmission (electric) power of a signal to be transmitted by TRP 1 labeled 1101_1. Note that, the communication between TRP 1 labeled 1101_1 and TRP 2 labeled 1101_2 may be radio communication or wired communication. Further, TRP 1 labeled 1101_1 and TRP 2 labeled 1101_2 may be one system.

TRP 1 labeled 1101_1 determines the transmission (electric) power for transmitting a modulation signal, based on the information for controlling the transmission (electric) power included in control signal 5921_1_3. In time 5, TRP 1 labeled 1101_1 transmits downlink frame 5903_1_4 to NR-UE 1 labeled 1100_1 with the determined transmission (electric) power.

Note that, as illustrated in FIG. 59D, NR-UE 1 labeled 1100_1 trasnmits uplink frame 5913_1_4 to TRP 1 labeled 1101_1 in time 5. Incidentally, the downlink frame may be present other than in time 5, and the uplink frame may be present other than in time 5 as well.

Performing the transmission power control as described above brings about an effect of improving the reception quality of data.

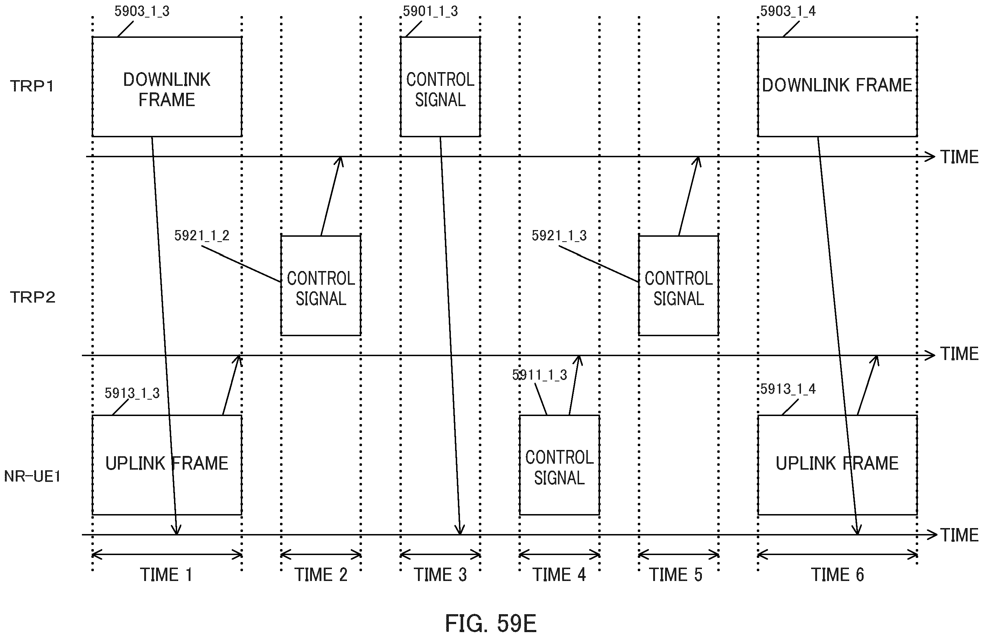

FIG. 59E illustrates an example, which is different from those in FIG. 59B, FIG. 59C, and FIG. 59D, of the exchange between "NR-UE 1 labeled 1100_1, TRP 1 labeled 1101_1, and TRP 2 labeled 1101_2" for performing closed loop transmission power control in NR-UE 1 labeled 1100_1 and/or open loop transmission power control and closed loop transmission power control in TRP 1 labeled 1101_1 when NR-UE 1 labeled 1100_1, TRP 1 labeled 1101_1, and TRP 2 labeled 1101_2 perform communication based on FIG. 54A and the like. Note that, in FIG. 59E, a horizontal axis represents time. In FIG. 59E, the components that operate in the same manner as the components in FIG. 59B are denoted by the same reference numerals, and some descriptions thereof will be omitted.

Transmission Power Control in NR-UE:

As illustrated in FIG. 59E, NR-UE 1 labeled 1100_1 trasnmits uplink frame 5913_1_3 to TRP 2 labeled 1101_2 in time 1. Meanwhile, TRP 1 labeled 1101_1 trasnmits ownlink frame 5903_1_3 to NR-UE 1 labeled 1100_1.

TRP 2 labeled 1101_2 then estimates a communication status such as SINR using the received "uplink frame 5913_1_3 and downlink frame 5903_1_3." This allows TRP 2 labeled 1101_2 to obtain an effect of being capable of SINR estimation taking into account the signal transmitted by NR-UE 1 labeled 1100_1 and the signal transmitted by TRP 1 labeled 1101_1. Note that, when estimating the communication status such as SINR, TRP 2 labeled 1101_2 may use a reference signal included in uplink frame 5913_1_3 or another signal included in uplink frame 5913_1_3. Further, when estimating the communication status such as SINR, TRP 2 labeled 1101_2 may use a reference signal included in downlink frame 5903_1_3 or another signal included in downlink frame 5903_1_3.

TRP 2 labeled 1101_2 generates, based on an estimation result of the communication status such as SINR, information (e.g., TPC command) on a value to set transmission (electric) power of a signal to be transmitted by NR-UE 1 labeled 1100_1. TRP 2 labeled 1101_2 then transmits, to TRP 1 labeled 1101_1, control signal 5921_1_2 that includes the information on the value to set the transmission (electric) power of a signal to be transmitted by NR-UE 1 labeled 1100_1, in time 2. Note that, the communication between TRP 1 labeled 1101_1 and TRP 2 labeled 1101_2 may be radio communication or wired communication. Further, TRP 1 labeled 1101_1 and TRP 2 labeled 1101_2 may be one system.

TRP 1 labeled 1101_1 receives control signal 5921_1_2 transmitted by TRP 2 labeled 1101_2 and thus obtains information on a value to set transmission (electric) power of a signal to be transmitted by NR-UE 1 labeled 1100_1. TRP 1 labeled 1101_1 then transmits, to NR-UE 1 labeled 1100_1, control signal 5901_1_3 that includes the information on the value to set the transmission (electric) power, in time 3. Note that, as illustrated in FIG. 59E, in time 4, NR-UE 1 labeled 1100_1 may transmit control signal 5911_1_3 to TRP 2 labeled 1101_2.

NR-UE 1 labeled 1100_1 determines the transmission (electric) power for transmitting a modulation signal, based on the information on the value to set the transmission (electric) power included in control signal 5901_3. In time 6, NR-UE 1 labeled 1100_1 transmits uplink frame 5913_1_4 to TRP 2 labeled 1101_2 with the determined transmission (electric) power.

Note that, as illustrated in FIG. 59E, TRP 1 labeled 1101_1 trasnmits downlink frame 5903_1_4 to NR-UE 1 labeled 1100_1 in time 6. Incidentally, the downlink frame may be present other than in time 6, and the uplink frame may be present other than in time 6 as well.

Performing the transmission power control as described above brings about an effect of improving the reception quality of data.

Open Loop Transmission Power Control in TRP:

As illustrated in FIG. 59E, NR-UE 1 labeled 1100_1 trasnmits uplink frame 5913_1_3 to TRP 2 labeled 1101_2 in time 1. Meanwhile, TRP 1 labeled 1101_1 trasnmits ownlink frame 5903_1_3 to NR-UE 1 labeled 1100_1.

TRP 2 labeled 1101_2 then estimates a communication status such as SINR using the received "uplink frame 5913_1_3 and downlink frame 5903_1_3." This allows TRP 2 labeled 1101_2 to obtain an effect of being capable of SINR estimation taking into account the signal transmitted by NR-UE 1 labeled 1100_1 and the signal transmitted by TRP 1 labeled 1101_1. Note that, when estimating the communication status such as SINR, TRP 2 labeled 1101_2 may use a reference signal included in uplink frame 5913_1_3 or another signal included in uplink frame 5913_1_3. Further, when estimating the communication status such as SINR, TRP 2 labeled 1101_2 may use a reference signal included in downlink frame 5903_1_3 or another signal included in downlink frame 5903_1_3.

TRP 2 labeled 1101_2 generates, based on an estimation result of the communication status such as SINR, information on a value to set transmission (electric) power of a signal to be transmitted by TRP 1 labeled 1101_1. TRP 2 labeled 1101_2 then transmits, to TRP 1 labeled 1101_1, control signal 5921_1_2 that includes the information on the value to set the transmission (electric) power of a signal to be transmitted by TRP 1 labeled 1101_1, in time 2. Note that, the communication between TRP 1 labeled 1101_1 and TRP 2 labeled 1101_2 may be radio communication or wired communication. Further, TRP 1 labeled 1101_1 and TRP 2 labeled 1101_2 may be one system.

TRP 1 labeled 1101_1 determines the transmission (electric) power of a modulation signal to be transmitted, based on the information, which is obtained from TRP 2 labeled 1101_2, on the value to set the transmission (electric) power of a signal to be transmitted by TRP 1 labeled 1101_1. TRP 1 labeled 1101_1 then transmits, to NR-UE 1 labeled 1100_1, downlink frame 5903_1_4 having the determined transmission (electric) power, in time 6.

Note that, as illustrated in FIG. 59E, NR-UE 1 labeled 1100_1 trasnmits uplink frame 5913_1_4 to TRP 2 labeled 1101_2 in time 6. Incidentally, the downlink frame may be present other than in time 6, and the uplink frame may be present other than in time 6 as well.

Performing the transmission power control as described above brings about an effect of improving the reception quality of data.

Closed Loop Transmission Power Control in TRP:

As illustrated in FIG. 59E, NR-UE 1 labeled 1100_1 trasnmits uplink frame 5913_1_3 to TRP 2 labeled 1101_2 in time 1. Meanwhile, TRP 1 labeled 1101_1 trasnmits ownlink frame 5903_1_3 to NR-UE 1 labeled 1100_1.

NR-UE 1 labeled 1100_1 then estimates a communication status such as SINR using the received "uplink frame 5913_1_3 and downlink frame 5903_1_3." This allows NR-UE 1 labeled 1100_1 to obtain an effect of being capable of SINR estimation taking into account the signal transmitted by the NR-UE itself. Note that, when estimating the communication status such as SINR, NR-UE 1 labeled 1100_1 may use a reference signal included in uplink frame 5913_1_3 or another signal included in uplink frame 5913_1_3. Further, when estimating the communication status such as SINR, NR-UE 1 labeled 1100_1 may use a reference signal included in downlink frame 5903_1_3 or another signal included in downlink frame 5903_1_3.

NR-UE 1 labeled 1100_1 generates, based on an estimation result of the communication status such as SINR, information for controlling transmission (electric) power of a signal to be transmitted by TRP 1 labeled 1101_1 (e.g., estimation information on communication status such as SINR). NR-UE 1 labeled 1100_1 then transmits, to TRP 2 labeled 1101_2, control signal 5911_1_3 that includes the information for controlling the transmission (electric) power, in time 4. Note that, as illustrated in FIG. 59E, TRP 1 labeled 1101_1 may transmit control signal 5901_1_3 to NR-UE 1 labeled 1100_1, in time 3.

In time 5, TRP 2 labeled 1101_2 then transmits, to TRP 1 labeled 1101_1, control signal 5921_1_3 that includes the information, which is obtained from NR-UE 1 labeled 1100_1, for controlling the transmission (electric) power of a signal to be transmitted by TRP 1 labeled 1101_1. Note that, the communication between TRP 1 labeled 1101_1 and TRP 2 labeled 1101_2 may be radio communication or wired communication. Further, TRP 1 labeled 1101_1 and TRP 2 labeled 1101_2 may be one system.

TRP 1 labeled 1101_1 determines the transmission (electric) power for transmitting a modulation signal, based on the information for controlling the transmission (electric) power included in control signal 5921_1_3. In time 6, TRP 1 labeled 1101_1 transmits downlink frame 5903_1_4 to NR-UE 1 labeled 1100_1 with the determined transmission (electric) power.

Note that, as illustrated in FIG. 59E, NR-UE 1 labeled 1100_1 trasnmits uplink frame 5913_1_4 to TRP 2 labeled 1101_2 in time 6. Incidentally, the downlink frame may be present other than in time 6, and the uplink frame may be present other than in time 6 as well.

Performing the transmission power control as described above brings about an effect of improving the reception quality of data.

Incidentally, as described with reference to FIG. 54A and the like, FIG. 59B, FIG. 59C, FIG. 59D, and FIG. 59E have been each described as the exchange between "NR-UE 1 labeled 1100_1, TRP 1 labeled 1101_1, and TRP 2 labeled 1101_2" in a time axis at the time of the transmission power control when NR-UE 1 labeled 1100_1, TRP 1 labeled 1101_1, and TRP 2 labeled 1101_2 perform communication, but the transmission power control may be performed with at least one of the methods in FIG. 59B, FIG. 59C, FIG. 59D, and FIG. 59E, as the exchange between "NR-UE 1 labeled 1100_1, TRP 1 labeled 1101_1, and TRP 2 labeled 1101_2" in a time axis at the time of the transmission power control. Alternatively, any of the methods in FIG. 59B, FIG. 59C, FIG. 59D, and FIG. 59E may be selected depending on time in order to perform the transmission power control, as the exchange between "NR-UE 1 labeled 1100_1, TRP 1 labeled 1101_1, and TRP 2 labeled 1101_2" in a time axis at the time of the transmission power control. This brings about the effects as already mentioned in the same way.

In FIG. 56A, FIG. 56B, FIG. 57, FIG. 58A, FIG. 58B, FIG. 58C, FIG. 58D, FIG. 58E, FIG. 59A, FIG. 59B, FIG. 59C, FIG. 59D, and FIG. 59E, "a signal transmitted by an NR-UE, e.g., an uplink frame, a reference signal, and a control signal" may be included in any of UL-SCH, PUCCH, PUSCH, PRACH, and the like.

In FIG. 56A, FIG. 56B, FIG. 57, FIG. 58A, FIG. 58B, FIG. 58C, FIG. 58D, FIG. 58E, FIG. 59A, FIG. 59B, FIG. 59C, FIG. 59D, and FIG. 59E, "a signal transmitted by a TRP, e.g., a downlink frame, a reference signal, and a control signal" may be included in PCH, BCH, DL-SCH, BCCH, PCCH, CCCH, a common search space, PBCH, SS, PDCCH, PDSCH, and the like.

Complementary descriptions will be given of the present embodiments and FDD in the present specification. For example, with reference to a plurality of drawings, when a communication apparatus performs the FDD communication using first frequency (or, e.g., second frequency) (band), the following some cases are possible.

First Case:

A communication apparatus uses the first frequency (or, e.g., second frequency (band)) when transmitting a modulation signal.

Second Case:

A communication counterpart of the communication apparatus uses the first frequency (or, e.g., second frequency) (band) to transmit a modulation signal, and the communication apparatus receives this modulation signal.

Third Case:

First frequency (or, e.g., second frequency) (band) is devided into frequency A and frequency B. A communication apparatus uses frequency A when transmitting a modulation signal. Meanwhile, a communication counterpart of the communication apparatus uses frequency B qhen transmitting a modulation signal.

The three cases have been each described above, but an example in which "a communication apparatus performs the FDD communication using the first frequency (or, e.g., second frequency) (band)" is not limited to these cases as long as the communication apparatus performs transmission or reception using part of the first frequency (or, e.g., second frequency) (band).

When "NR-UE 1 labeled 1100_1, TRP 1 labeled 1101_1, and TRP 2 labeled 1101_2 perform communication as illustrated with reference to FIG. 54A and the like," NR-UE 1 labeled 1100_1 performs the transmission power control on a modulation signal to be transmitted by NR-UE 1 labeled 1100_1, and TRP 1 labeled 1101_1 performs the transmission power control on a modulation signal to be transmitted by TRP 1 labeled 1101_1, as described with reference to FIG. 59A, FIG. 59B, FIG. 59C, FIG. 59D, and FIG. 59E.

In order that TRP 1 labeled 1101_1 performs the transmission power control on a modulation signal to be transmitted by TRP 1 labeled 1101_1, NR-UE 1 labeled 1100_1 transmits, to TRP 2 labeled 1101_2, "information on the modulation signal transmitted by TRP 1 labeled 1101_1," for example, "information for controlling transmission (electric) power of a signal to be transmitted by TRP 1 labeled 1101_1 (e.g., estimation information on communication status such as SINR)." At this time, since the destination is TRP 2 labeled 1101_2 that is not TRP 1 labeled 1101_1, NR-UE 1 labeled 1100_1 need to transmit, together with the "information on the modulation signal transmitted by TRP 1 labeled 1101_1," information indicating that TRP 1 labeled 1101_1 is the destination of the "information on the modulation signal transmitted by TRP 1 labeled 1101_1."

This allows TRP 2 labeled 1101_2 to correctly transmit, to TRP 1 labeled 1101_1, the "information on the modulation signal transmitted by TRP 1 labeled 1101_1."

Meanwhile, in order that NR-UE 1 labeled 1100_1 performs the transmission power control on a modulation signal to be transmitted by NR-UE 1 labeled 1100_1, TRP 2 labeled 1101_2 transmits, to TRP 1 labeled 1101_1, "information on a value to set transmission (electric) power of a signal to be transmitted by NR-UE 1 labeled 1100_1 (e.g., TPC command)." At this time, since NR-UE 1 labeled 1100_1 transmits no modulation signal to TRP 1 labeled 1101_1, TRP 2 labeled 1101_2 need to transmit, together with the "information on the value to set the transmission (electric) power of the signal to be transmitted by NR-UE 1 labeled 1100_1," information on NR-UE 1 labeled 1100_1 to TRP 1 labeled 1101_1.

This allows TRP 1 labeled 1101_1 to correctly transmit, to NR-UE 1 labeled 1100_1, the "information on the modulation signal transmitted by NR-UE 1 labeled 1100_1."

In the above description, a description has been given with reference to a TRP, but the same implementation is possible even when the TRP is replaced with any of "a base station, a repeater, an access point, a broadcast station, a gNodeB (gNB), an eNodeB (eNB), a node, a server, a satellite, a movable apparatus (e.g., electricity-based movable apparatus such as "electric vehicle, motor bike (e-bike), electric-powered vehicle, movable robot, electric-powered scooter, electric-assisted bicycle, and electric-assisted scooter," automobile, motorcycle, bicycle, vessel, aircraft, airplane), a terminal, a mobile phone, a smart phone, a tablet, a laptop, a personal computer, a home appliance (household electric appliance), an apparatus in a factory, communication equipment or broadcast equipment such as IoT equipment, and the like." Accordingly, the TRP in the present embodiment may be referred to as "a base station, a repeater, an access point, a broadcast station, a gNB, an eNB, a node, a server, a satellite, a movable apparatus as mentioned above, a terminal, a mobile phone, a smart phone, a tablet, a laptop, a personal computer, a home appliance, an apparatus in a factory, communication equipment or broadcast equipment such as IoT equipment, and the like."

In the above description, a description has been given with reference to an NR-UE, but the same implementation is possible even when the NR-UE is replaced with any of "a TRP, a base station, a repeater, an access point, a broadcast station, a gNB, an eNB, a node, a server, a satellite, a movable apparatus as mentioned above, a terminal, a mobile phone, a smart phone, a tablet, a laptop, a personal computer, a home appliance, an apparatus in a factory, communication equipment or broadcast equipment such as IoT equipment, and the like." Accordingly, the NR-UE in the present embodiment may be referred to as "a TRP, a base station, a repeater, an access point, a broadcast station, a gNB, an eNB, a node, a server, a satellite, a movable apparatus as mentioned above, a terminal, a mobile phone, a smart phone, a tablet, a laptop, a personal computer, a home appliance, an apparatus in a factory, communication equipment or broadcast equipment such as IoT equipment, and the like."

As above, for example, performing the transmission power control in a TRP and/or the transmission power control in an NR-UE described in the present embodiments allows a communication counterpart to obtain an effect of improving the reception quality.

Note that, in a radio system described in the present embodiments, the number of present TRPs is one or two, but the implementation is possible with at least one TRP, or two or more TRPs.

Further, in a radio system described in the present embodiments, the number of present NR-UEs is one or two, but the implementation is possible with at least one NR-UE, or two or more NR-UEs.

Since the configuration of each apparatus in the present embodiment has been described in another embodiment, the description thereof is omitted. However, the configuration of each apparatus is not limited to the configuration that has already been described. Further, the communication methods that have been described in the present embodiment are exemplary and may be combined with another embodiment and implemented in a modified manner.

(Supplement 1)

The embodiments described in the present specification may be implemented while combined with each other or combined with other contents.

Further, the embodiments and other contents are examples. For example, even though the "modulation scheme, error correction coding scheme (error correction code, code length, coding rate, and the like for use), control information, and the like" are illustrated as the examples, it is possible to implement the embodiments with a similar configuration even when a "modulation scheme, error correction coding scheme (error correction code, code length, coding rate, and the like for use), control information, and the like" different from those in the examples are applied.

Regarding the modulation scheme, the embodiments and other contents described in the present specification can be implemented also by using modulation schemes other than the modulation schemes described in the present specification. For example, amplitude phase shift keying (APSK) (e.g., 16APSK, 64APSK, 128APSK, 256APSK, 1024APSK, 4096APSK), pulse amplitude modulation (PAM) (e.g., 4PAM, 8PAM, 16PAM, 64PAM, 128PAM, 256PAM, 1024PAM, 4096PAM), phase shift keying (PSK) (e.g., BPSK, QPSK, 8PSK, 16PSK, 64PSK, 128PSK, 256PSK, 1024PSK, 4096PSK), quadrature amplitude modulation (QAM) (e.g., 4QAM, 8QAM, 16QAM, 64QAM, 128QAM, 256QAM, 1024QAM, 4096QAM), or the like may be applied, or uniform mapping and non-uniform mapping may be applied for each of the modulation schemes. The number of signal points in in-phase (I)-quadrature (phase) (Q) is not limited to those in the examples above, and may be an integer equal to or greater than 3.

In addition, the method of arranging signal points (e.g., 2, 4, 8, 16, 64, 128, 256, or 1024 signal points) on the I-Q plane (modulation scheme with 2, 4, 8, 16, 64, 128, 256, 1024, or other numbers of signal points) is not particularly limited to the signal point arrangement methods of the modulation schemes described in the present specification. Thus, the function of outputting an in-phase component and a quadrature component based on a plurality of bits is a function in a mapper, and performing a matrix operation (e.g., precoding) to perform MIMO transmission and phase changing for a baseband signal after the outputting function is one of the effective functions of the present disclosure.

In addition, when "$\forall$" and "$\exists$" are present in the present specification, "$\forall$" represents a universal quantifier, and "$\exists$" represents an existential quantifier.

Further, when the present specification describes a complex plane, the unit of phase, such as, e.g., an argument, is "radian."

The use of the complex plane allows representation of complex numbers in polar form as a representation of the complex numbers using polar coordinates. Letting a point (a, b) on the complex plane correspond to a complex number z = a + jb (where both of "a" and "b" are real numbers and "j" is an imaginary unit), a = r × cosθ and b = r × sinθ when this point is expressed as [r, θ] with the polar coordinates. [1]

$$ r = \sqrt{a^2 + b^2} \qquad \text{... (Equation 1)} $$

holds true. The character "r" is the absolute value of z (r= | z|) and θ is the argument. Then, z = a + jb is expressed as r × e$^{jθ}$.

In the present specification, the "gNB, NR-UE, terminal, base station, access point, gateway, etc." may each have a configuration in which a reception apparatus and an antenna of which are separate from each other. For example, the reception apparatus includes an interface for inputting, through a cable, a signal received by the antenna or a signal received by the antenna and subjected to frequency conversion, and the reception apparatus performs subsequent processing. Further, the data and information obtained by the reception apparatus are then converted into a video and sound, and displayed on a display (monitor), or outputted from a speaker in the case of sound. Further, the data and information obtained by the reception apparatus may be subjected to signal processing relevant to the video and sound (such signal processing does not have to be performed), and outputted from an RCA terminal (a video terminal and a sound terminal), universal serial bus (USB), high-definition multimedia interface (HDMI) (registered trademark), digital terminal, or the like provided in the reception apparatus.

It is contemplated that the transmission apparatus and/or transmitter in the present specification is included in, for example, communication equipment/broadcasting equipment such as a broadcasting station, base station, access point, terminal, mobile phone, smartphone, tablet, laptop PC, server, PC, personal computer, television, home appliance (household electrical machinery equipment), factory apparatus, and Internet of Things (IoT) equipment or the like, g Node B (gNB), repeater, node, vehicle, bicycle, motorcycle, ship, satellite, airplane, drone, mobile equipment, robot, transmission (Tx)/reception (Rx) point (TRP), or NR-UE. Meanwhile, it is contemplated that the reception apparatus and/or receiver is included in, for example, communication equipment such as a radio, terminal, personal computer, mobile phone, access point, and base station, communication equipment/broadcasting equipment such as a smartphone, tablet, laptop PC, server, PC, personal computer, television, home appliance (household electrical machinery equipment), factory apparatus, and Internet of Things (IoT) equipment or the like, g Node B (gNB), repeater, node, vehicle, bicycle, motorcycle, ship, satellite, airplane, drone, mobile equipment, robot, transmission (Tx)/reception (Rx) point (TRP), or NR-UE. Further, it is considered that the transmission apparatus and the reception apparatus in the present disclosure are devices having a communication function, and the devices are configured to be capable of connecting via a certain interface to an apparatus for executing an application of a television, a radio, a personal computer, a mobile phone, or the like. Further, it is considered that the communication apparatus in the present specification is included in, for example, communication equipment/broadcasting equipment such as a broadcasting station, base station, access point, terminal, mobile phone, smartphone, tablet, laptop PC, server, PC, personal computer, television, home appliance (household electrical machinery equipment), factory apparatus, and Internet of Things (IoT) equipment or the like, g Node B (gNB), repeater, node, vehicle, bicycle, motorcycle, ship, satellite, airplane, drone, mobile equipment, robot, transmission (Tx)/reception (Rx) point (TRP), or NR-UE.

In addition, symbols other than a data symbol (for example, a reference signal (preamble, unique word, postamble, reference symbol, pilot symbol, pilot signal, and the like), a control information symbol, a sector sweep, etc.) may be mapped in any manner in a frame in the present embodiments. Although the present specification uses the terms "reference signal," "control information symbol," and "sector sweep," the important part is the function itself. The sector sweep may be replaced by a sector-level sweep, for example.

It is contemplated that the reference signal and/or a signal relevant to sector sweep are, for example, known symbols modulated using PSK modulation by the transmitter and receiver (alternatively, the receiver may be capable of knowing a symbol transmitted by the transmitter by synchronization by the receiver), non-zero power signals, zero power signals, signals known to the transmitter and receiver, or the like. The receiver performs, using these signals, frequency synchronization, time synchronization, channel estimation (estimation of channel state information (CSI)) (for each modulation signal), signal detection, estimation of a reception state, estimation of a transmission state, or the like.

Further, the control information symbol is also a symbol for transmitting information (e.g., a modulation scheme, an error correction coding scheme, and a coding rate of the error correction coding scheme; configuration information in a higher layer; a modulation and coding scheme (MCS); a frame configuration; channel information; information on a using frequency band; information on the number of using channels; and the like used for communication) that needs to be transmitted to a communication counterpart to achieve communication (of an application or the like) other than data communication.

The transmission apparatus and/or reception apparatus sometimes need to be notified of a transmission method (MIMO, single-input single-output (SISO), multiple-input single-output (MISO), single-input multiple-output (SIMO), space-time block code, interleaving scheme, MCS, etc.), modulation scheme, and error correction coding scheme. This description may be omitted in some of the embodiments.

The terms such as "precoding," "precoding weight," etc. are sometimes used in the present specification, but they may be called in any manner and the important part is the signal processing itself in the present disclosure.

Although the MIMO transmission has been described in the present specification, a variation of the MIMO transmission may include a method of transmitting a plurality of symbols using a plurality of antennas by sharing some frequencies in the same time.

Regarding both the transmission panel antenna of the transmission apparatus and the reception panel antenna of the reception apparatus, a single antenna illustrated in the drawings may be composed of one antenna or a plurality of antennas.

Further, in the explanation of the embodiments and the like, the transmission panel antenna and the reception panel antenna may be described separately; however, a configuration of "transmission/reception panel antenna" serving as both of the transmission panel antenna and the reception panel antenna may be used.

In addition, the transmission panel antenna, reception panel antenna, and transmission/reception panel antenna may be referred to, for example, as an antenna port. The transmission panel antenna, reception panel antenna, and transmission/reception panel antenna may be referred to as another name, and a method of configuring the transmission panel antenna with one or more antennas or a plurality of antennas is conceivable. Additionally, a method of configuring the reception panel antenna with one or more antennas or a plurality of antennas is conceivable. Also, a method of configuring the transmission/reception panel antenna with one or more antennas or a plurality of antennas is conceivable. Further, an apparatus may be configured for each transmission panel antenna, an apparatus may be configured for each reception panel antenna, and an apparatus may be configured for each transmission/reception panel antenna. That is, it may be regarded as a multiple transmitter (TX)/receiver (RX) point (TRP) (multi TRP).

The antenna port may be a logical antenna (antenna group) composed of one or more physical antennas. That is, the antenna port does not necessarily refer to one physical antenna, but may refer to an array antenna or the like composed of a plurality of antennas. For example, the number of physical antennas composing the antenna port is not specified, but the number of physical antennas may be specified as the minimum unit in which a terminal station is capable of transmitting a reference signal. Further, the antenna port may also be specified as a unit or a minimum unit for multiplication by a precoding vector or a weight of a precoding matrix.

There are a plurality of methods of generating a modulation signal by a single-carrier scheme in the present specification, and the present embodiments can be implemented by using any of the schemes. For example, examples of the single-carrier scheme include "discrete Fourier transform (DFT)-spread orthogonal frequency division multiplexing (OFDM)" (DFT-S OFDM), "trajectory constrained DFT-spread OFDM," "constrained DFT-spread OFDM" (constrained DFT-S OFDM), "OFDM based single carrier (SC)," "single carrier (SC)-frequency division multiple access (FDMA)," "guard interval DFT-spread OFDM," a time-domain implementation single carrier scheme (e.g., single carrier (SC)-QAM), and the like.

In the present specification, the ID of the transmission panel antenna and the ID of beamforming are described separately from each other; however, an ID may be assigned without distinguishing between the two.

For example, "ID 0 of beamforming by using transmission panel antenna #1" may be referred to as ID b0, "ID 1 of beamforming by using transmission panel antenna #1" may be referred to as ID b1, "ID 0 of beamforming by using transmission panel antenna #2" may be referred to as ID b2, "ID 1 of beamforming by using transmission panel antenna #2" may be referred to as ID b3, and so forth.

Thus, a signal for sector sweep may be generated based on the IDs, and the base station and the terminal may transmit information including the IDs.

It has been indicated above that the waveforms of the modulation signal transmitted by the communication apparatus herein may be either the single-carrier scheme or the multi-carrier scheme such as OFDM. In a case of using the multi-carrier scheme such as OFDM, a frame also includes a symbol on the frequency axis.

In the present specification, a "sector sweep reference signal transmitted by a base station" described in the embodiments, for example, may be included in a "synchronization signal (SS) block," "physical broadcast channel (PBCH) block," or SS/PBCH block. In this case, it need not be called the "sector sweep reference signal." In addition, a "feedback signal transmitted by a base station and feedback signal group transmitted by a base station" described in the embodiments, for example, may be included in a "synchronization signal (SS) block," "physical broadcast channel (PBCH) block," or SS/PBCH block. In this case, it need not be called the "feedback signal and feedback signal group "

Although it has been explained that a sector sweep reference signal includes the ID of a transmission panel antenna when a base station transmits the sector sweep reference signal, the sector sweep reference signal may include the ID of a sector antenna and/or information of an antenna port number as "the ID of a transmission panel antenna." Likewise, although it has been explained that a sector sweep reference signal includes the ID of a transmission panel antenna when a terminal transmits the sector sweep reference signal, the sector sweep reference signal may include the ID of a sector antenna and/or information of an antenna port number as "the ID of a transmission panel antenna."

The configurations of the transmission panel antenna and the reception panel antenna of the communication apparatus in the present disclosure are not limited to the configurations in FIGS. 3 and 4. The transmission panel antenna and the reception panel antenna may be composed of one or more antennas and/or antenna elements and may be composed of two or more antennas and/or antenna elements.

Additionally, the antennas illustrated in FIGS. 3 and 4 may be composed of one or more antennas and/or antenna elements or may be composed of two or more antennas and/or antenna elements.

In the present specification, the embodiments have been described using OFDM as an example of multi-carrier schemes, but the embodiments in the present specification can be similarly implemented using another multi-carrier scheme.

By way of example, multi-carrier transmission may be implemented by assigning a "single-carrier scheme using a single frequency band" and assigning a "single-carrier scheme using one or more frequency bands" to the frequency band described in the present specification.

As another example, multi-carrier transmission may be implemented by assigning one or more carriers or two or more carriers to the frequency band described in the present specification. Note that the multi-carrier transmission scheme is not limited to the above examples.

In the present specification, a "sector sweep reference signal transmitted by a base station" described in the embodiments for example, may be included in a "physical downlink control channel (PDCCH)." In this case, it need not be called the "sector sweep reference signal."

For example, it is assumed that information A is present as one piece of information in PDCCH. It is also assumed that a "sector sweep reference signal subjected to beamforming #1," "sector sweep reference signal subjected to beamforming #2," ..., "sector sweep reference signal subjected to beamforming #N" are present as the "sector sweep reference signals transmitted by a base station." Note that N is an integer equal to or greater than 1 or an integer equal to or greater than 2.

At this time, information A is included in the ""sector sweep reference signal subjected to beamforming #1," "sector sweep reference signal subjected to beamforming #2," ..., "sector sweep reference signal subjected to beamforming #N."" This produces an effect that a terminal is more likely to obtain information A.

A "sector sweep reference signal transmitted by a terminal" described in the embodiments of the present specification may be included in a "physical uplink control channel (PUCCH)." In this case, it need not be called the "sector sweep reference signal."

For example, it is assumed that information B is present as one piece of information in PUCCH. It is also assumed that a "sector sweep reference signal subjected to beamforming $1," "sector sweep reference signal subjected to beamforming $2," ..., "sector sweep reference signal subjected to beamforming $M" are present as the "sector sweep reference signals transmitted by a terminal." Note that M is an integer equal to or greater than 1 or an integer equal to or greater than 2.

At this time, information B is included in the ""sector sweep reference signal subjected to beamforming $1," "sector sweep reference signal subjected to beamforming $2," ..., "sector sweep reference signal subjected to beamforming $M."" This produces an effect that a base station is more likely to obtain information B.

Note that, in the present specification, "sections of describing configurations and operations of a base station or a gNB" may be considered as "configurations and operations of a terminal, an NR-UE, an AP, or a repeater." Likewise, "sections of describing configurations and operations of a terminal or an NR-UE" may be considered as "configurations and operations of a base station, a gNB, an AP, or a repeater."

In the present specification, a server may provide an application related to processing relevant to the reception apparatus and the receiver, and the terminal may implement the functions of the reception apparatus described in the present specification by installing this application. Note that the application may be provided to the terminal by connection of a communication apparatus including the transmission apparatus described in the present specification to the server via a network, or the application may be provided to the terminal by connection of a communication apparatus having another transmission function to the server via the network.

Likewise, in the present specification, a server may provide an application related to processing relevant to the transmission apparatus and the transmitter, and the communication apparatus may implement the functions of the transmission apparatus described in the present specification by installing this application. Note that a method can be envisaged in which this communication apparatus is provided with the application by connection of another communication apparatus to the server via the network.

Note that the present disclosure is not limited to the embodiments and can be implemented with various modifications. For example, the embodiments are performed by a communication apparatus in the description, but the present invention is not limited to this and the communication methods can be realized by software.

In addition, a program for performing the above communication methods may be stored in read only memory (ROM) in advance, for example, and the program may be executed by a central processor unit (CPU).

Further, a program for performing the communication method may be stored in a computer-readable storage medium, and the program stored in the storage medium may be recorded in a random access memory (RAM) of the computer so that the computer operates according to the program.

Each configuration in the each of the embodiments described above can be typically realized by a large scale integration (LSI), which is an integrated circuit. The LSI may be individually formed as chips, or one chip may be formed so as to include a part or all of the configurations in each embodiment. The LSI here may be referred to as an integrated circuit (IC), a system LSI, a super LSI, or an ultra LSI depending on a difference in the degree of integration. In addition, the technique of implementing an integrated circuit is not limited to the LSI and may be realized by using a dedicated circuit or a general-purpose processor. A field programmable gate array (FPGA) that can be programmed after the manufacture of the LSI or a reconfigurable processor in which the connections and the settings of circuit cells disposed inside the LSI can be reconfigured may be used.

Note that at least one of the FPGA and the CPU may be configured to download all or some of software required for implementing the communication methods described in the present disclosure by radio communication or wired communication. Further, at least one of the FPGA and the CPU may be configured to download all or some of software for updating by radio communication or wired communication. Then, the downloaded software may be stored in storage, and at least one of the FPGA and the CPU may be operated based on the stored software to execute the digital signal processing described in the present disclosure.

The device including at least one of the FPGA and the CPU may be connected to a communication modem by radio or wire, and the communication methods described in the present disclosure may be implemented by the device and the communication modem.

For example, a communication apparatus such as the base station, AP, and terminal described in the present specification may include at least one of the FPGA and the CPU, and the communication apparatus may include an interface for externally obtaining software for operating at least one of the FPGA and the CPU. Further, the communication apparatus may include storage for storing the externally-obtained software, and the FPGA and/or the CPU may be operated based on the stored software to implement the signal processing described in the present disclosure.

If future integrated circuit technology replaces LSIs as a result of the advancement of semiconductor technology or other derivative technology, the functional blocks could be integrated using the future integrated circuit technology. Biotechnology can also be applied.

The present disclosure is widely applicable to radio systems for transmitting different modulation signals from a plurality of antennas, respectively. It is also applicable to the case of using MIMO transmission in wired communication systems with a plurality of transmission points (e.g., power line communication (PLC) system, optical communication system, and digital subscriber line (DSL) system). The communication apparatus may be referred to as a radio apparatus.

The "data," "data symbol," and "data frame" may be, for example, a physical downlink shared channel (PDSCH) or a physical uplink shared channel (PUSCH).

In the present disclosure, it has been explained that the gNB and NR-UE form transmit beams, but not all the transmit beams need to be the same polarization. In a case where the gNB and NR-UE can generate transmit beam #1, transmit beam #2, transmit beam #3, and so forth, it may be configured so that transmit beam #1 is the first polarization, transmit beam #2 is the second polarization other than the first polarization, and so forth.

In addition, it has been explained that the gNB and NR-UE form receive beams, but not all the receive beams need to be the same polarization. In a case where the gNB and NR-UE can generate receive beam #1, receive beam #2, receive beam #3, and so forth, it may be configured so that receive beam #1 is the first polarization, receive beam #2 is the second polarization other than the first polarization, and so forth.

It has been explained that the gNB and NR-UE form transmit beams in the present disclosure, and the polarization of a transmit beam may be changed as time passes. For example, the first polarization is used for transmit beam #1 at the beginning and may be later changed to the second polarization other than the first polarization.

In addition, it has been explained that the gNB and NR-UE form receive beams, and the polarization of a receive beam may be changed as time passes. For example, the first polarization is used for receive beam #1 at the beginning and may be later changed to the second polarization other than the first polarization.

Note that "A and/or B" in the present specification may be interpreted as "A and B" or may also be interpreted as "A or B." Although apparatuses in FIGS. 1A, 1B, 1C, 9, 10, and the like have been described as a configuration of NR apparatus such as gNB and NR-UE in the present specification, the configuration is not limited to these. For example, the NR apparatus may be an apparatus that includes "one or more or two or more transmission antennas" and "one or more or two or more reception antennas," transmits one or more modulation signals, and receives one or more modulation signals. The transmission antenna and the reception antenna may be a transmission and reception sharing antenna.

Further, in the present specification, the apparatus, the parts composing the apparatus, the signals, the symbols have been described with particular names, but the names are not limited to these, and the respective functions themselves are important.

The disclosure of Japanese Patent Application No. 2022-071808, filed on April 25, 2022, including the specification, drawings and abstract, is incorporated herein by reference in its entirety.

Industrial Applicability

The present disclosure is widely applicable to radio systems for transmitting modulation signals from one or more antennas, and is suitable for the application to, for example, a communication system using a single carrier and a communication system using a multi-carrier transmission scheme such as OFDM. The present disclosure is also applicable to wired communication systems such as, e.g., a power line communication (PLC) system, an optical communication system, and a digital subscriber line (DSL) system.

Reference Signs List

100 Control signal
101_i i-th data
102_i i-th transmitter
103_i i-th modulation signal
104 First processor
105_j j-th transmission signal
106_j Transmission panel antenna j
151_i Reception panel antenna i
152_i i-th received signal
153 Second processor
154 j-th signal-processing-subjected signal
155_j j-th receiver
156_j j-th control data
157_j j-th data
158 Third processor
200 Control signal
201 Data
202 Data symbol generator
203 Data symbol modulation signal
204 Sector sweep reference signal generator
205 Sector sweep reference signal
206 Other-signal generator
207 Other signals
251 Processor
252 Frame configuration-based modulation signal
300 Control signal
301 Transmission signal
302 Distributor
303_1 First transmission signal
303_2 Second transmission signal
303_3 Third transmission signal
303_4 Fourth transmission signal
304_1, 304_2, 304_3, 304_4 Multiplier
305_1 Coefficient-multiplication-subjected first transmission signal
305_2 Coefficient-multiplication-subjected second transmission signal
305_3 Coefficient-multiplication-subjected third transmission signal
305_4 Coefficient-multiplication-subjected fourth transmission signal

306_1, 306_2, 306_3, 306_4 Antenna
400 Control signal
401_1, 401_2, 401_3, 401_4 Antenna
402_1 First received signal
402_2 Second received signal
402_3 Third received signal
402_4 Fourth received signal
403_1, 403_2, 403_3, 403_4 Multiplier
404_1 Coefficient-multiplication-subjected first received signal
404_2 Coefficient-multiplication-subjected second received signal
404_3 Coefficient-multiplication-subjected third received signal
404_4 Coefficient-multiplication-subjected fourth received signal
405 Coupler/combiner
406 Modulation signal
501 Constellation mapper
502 Serial/parallel converter
503 IFFT
601 Rx FE processing
602 FFT
603 Parallel/serial converter
604 Demapper
701 Rx FE processing
702 CP removal
703 FFT
704 Tone demapping
705 FDE
706 DFT
707 Demapper
801 Rx FE processing
802 Down-sampling and match filtering
803 TDE
804 CP removal
805 Demapper
1100_i NR-UE
1101_i TRP (TRP:Tx (Transmission)/Rx (Reception) point)
1120_i, 1121_i, 1122_i, 3420_i, 3440_i, 3720_i, 3721_i, 4721_i, 4741_i, 4761_i Transmission beam
1130_i, 1131_i, 1132_i, 3430_i, 3450_i, 3730_i, 3731_i, 4731_i, 4751_i, 4671_i Received beam
1201 First frequency (band)
1202 Second frequency (band)
1203 Third frequency (band)
1251, 1252, 1253, 1261, 1262, 1263, 2501_i, 2511_i Frame
1301, 1351, 1401, 1451 Data
1302, 1402 Communication apparatus
1303, 1352, 1403, 1452, 5302, 5303 Modulation signal (group)
1304, 1314, 1353, 1404, 1414, 1453, 5300, 5601_i, 5801_i, 5811_i, 5901_i, 5911_i, 5921_i Control signal
1305, 1405 Transmission antenna (group)
1313, 1371, 1413, 1471 Received signal

1315, 1372, 1415, 1472 Received data
1316, 1416 Reception antenna (group)
1354, 1454 Transmission/reception antenna (group)
2001, 2021, 2041 Control symbol
2002, 2042 Reference symbol
2003, 2043 Data symbol
2101, 4001_i, 4101_i, 4111_i, 4121_i, 5201, 5290_i,
5291_i, 5501, 5590_i, 5591_i, 5502
TDD communication or FDD communication
2751, 2761 Modulation signal presence section
2801_i, 3001_i, 3201_i, 4451_i, 4491_i, 4651_i,
4691_iModulation signal
2811_i Transmission signal
2901_i, 4302_i, 4501_i Downlink
2911_i, 4301_i, 4511_i Uplink
3601_i, 3611_i, 3621_i, 3681, 3691, 3901_i, 3911_i,
3921_i, 3981, 3991, 5190_i, 5191_i,
5490_i, 5491_i Signal
4801, 4811_i, 5001, 5011_i Modulation signal transmittable section
4802, 5002 Modulation signal receivable section
4851_i, 4861_i, 5051_i, 5061_i Modulation signal
5301 Power controller
5602_i, 5802_i, 5812_i, 5902_i, 5912_i Reference signal
5613_i_j, 5713_i_j, 5813_i_j, 5913_i_j Uplink frame
5703_i_j, 5803_i_j, 5903_i_j Downlink frame

**Claims**

1. A communication apparatus performing communication with a plurality of communication counterpart apparatuses, the communication apparatus comprising:

   a receiver that generates a received beam and receives, using the received beam, a modulation signal transmitted by any of the plurality of communication counterpart apparatuses; and
   a transmitter that generates a transmission beam and transmits, using the transmission beam, a modulation signal to any of the plurality of communication counterpart apparatuses, wherein:

   the receiver receives, using the received beam, a modulation signal from a first communication counterpart apparatus in a first time of a first frequency band, and
   the transmitter transmits, using the transmission beam, a modulation signal to a second communication counterpart apparatus in the first time of the first frequency band.

2. The communication apparatus according to claim 1, wherein the receiver and the transmitter perform communication by Time Division Duplex (TDD) or communication by Frequency Division Duplex (FDD), using a second frequency band that is different from the first frequency band.

3. The communication apparatus according to claim 1, wherein:

   the receiver receives, using a received beam, a modulation signal from the second communication counterpart apparatus in a second time different from the first time of the first frequency band, and
   the transmitter transmits, using a transmission beam, a modulation signal to the first communication counterpart apparatus in the second time of the first frequency band.

4. The communication apparatus according to claim 1, wherein the receiver receives a modulation signal from a third communication counterpart apparatus in the first time of the first frequency band.

5. The communication apparatus according to claim 1, wherein the transmitter transmits a modulation signal to a third communication counterpart apparatus in the first time of the first frequency band.

6. A communication method for a communication apparatus performing communication with a plurality of communication counterpart apparatuses, the communication method comprising:

   generating a received beam and receiving, using the received beam, a modulation signal transmitted by any of the plurality of communication counterpart apparatuses; and
   generating a transmission beam and transmitting, using the transmission beam, a modulation signal to any of the plurality of communication counterpart apparatuses, wherein, when communication is performed:

   receiving, using the received beam, a modulation signal from a first communication counterpart apparatus in a first time of a first frequency band, and
   transmitting, using the transmission beam, a modulation signal to a second communication counterpart apparatus in the first time of the first frequency band.

TRANSMISSION PANEL ANTENNA 1

106_1

106_M

TRANSMISSION PANEL ANTENNA M

151_1

RECEPTION PANEL ANTENNA 1

151_m

RECEPTION PANEL ANTENNA m

105_1

105_M

152_1

152_m

153

FIRST PROCESSOR

SECOND PROCESSOR

104

199

103_1

103_N

154_1

154_n

155_1

FIRST RECEIVER

n-th RECEIVER

102_1

102_N

FIRST TRANSMITTER

N-th TRANSMITTER

156_1

157_1

155_n

157_n

156_n

THIRD PROCESSOR

158

101_1

101_N

100

FIG. 1A

FIG. 1B

FIG. 1C

FIG. 2

EP 4 518 183 A1

FIG. 3

EP 4 518 183 A1

FIG. 4

501 Constellation mapper

502 SERIAL/PARALLEL CONVERTER

503 IFFT

FIG. 5

EP 4 518 183 A1

604 | Demapper | ← 603 | PARALLEL/ SERIAL CONVERTER | ← 602 | FFT | ← 601 | Rx FE processing | ←

FIG. 6

705 704 703 702 701

FDE ← Tone demapping ← FFT ← CP Removal ← Rx FE processing ←

DFT → Demapper →

706 707

FIG. 7

801 Rx FE processing

802 Down-sampling and match filtering

803 TDE

804 CP removal

805 Demapper

FIG. 8

x700

x701

TRANSMISSION/RECEPTION APPARATUS

x702_1

TRANSMISSION/
RECEPTION PANEL
ANTENNA 1

x705_1

x704

x702_M

TRANSMISSION/
RECEPTION PANEL
ANTENNA M

x705_M

x703

FIG. 9

FIG. 10

EP 4 518 183 A1

1101_1

TRP1

1101_2

TRP2

1121_1

DL

1131_2

UL

1120_1

1130_1

NR-UE1

1100_1

FIG. 11

TRP1 | TDD OR FDD | DL | TDD OR FDD

→ FREQUENCY

TRP2 | TDD OR FDD | UL | TDD OR FDD

→ FREQUENCY

NR-UE1 | TDD OR FDD | DL/UL | TDD OR FDD

→ FREQUENCY

FIRST FREQUENCY (BAND)
1201

FIG. 12A

EP 4 518 183 A1

TRP1  FRAME (ADDRESSED TO NR-UE 1)   1251

TIME

NR-UE1  FRAME (ADDRESSED TO TRP 2) OR
FRAME (ADDRESSED TO TRP 1)   1261

TIME

FIRST TIME

FIG. 12B

EP 4 518 183 A1

TRP1

1251

FRAME (ADDRESSED TO NR-UE 1)

TIME

1261

NR-UE1

FRAME (ADDRESSED TO TRP 2) OR
FRAME (ADDRESSED TO TRP 1)

TIME

FIRST TIME

FIG. 12C

EP 4 518 183 A1

TRP1

```
                    1251
        ┌──────────────────────────────────────────┐
        │     FRAME (ADDRESSED TO NR-UE 1)          │
        └──────────────────────────────────────────┘
```

──────────────────────────────────────────────────────→ TIME

NR-UE1

```
                    1261
        ┌──────────────────────────────────────────┐
        │  FRAME (ADDRESSED TO TRP 2) OR            │
        │  FRAME (ADDRESSED TO TRP 1)               │
        └──────────────────────────────────────────┘
```

──────────────────────────────────────────────────────→ TIME

|←────────────────────────────────────→|

FIRST TIME

FIG. 12D

TRP1

1251

FRAME (ADDRESSED TO NR-UE 1)

TIME

NR-UE1

1261

FRAME (ADDRESSED TO TRP 2) OR
FRAME (ADDRESSED TO TRP 1)

TIME

FIRST TIME

FIG. 12E

EP 4 518 183 A1

1251

TRP1      FRAME (ADDRESSED TO NR-UE 1)

→ TIME

1261

NR-UE1      FRAME (ADDRESSED TO TRP 2) OR
FRAME (ADDRESSED TO TRP 1)

→ TIME

FIRST TIME

FIG. 12F

1302

1301 →

1303 → TRANSMISSION ANTENNA GROUP 1305

1304 →

COMMUNICATION APPARATUS

1351 →

1352 → TRANSMISSION/ RECEPTION ANTENNA GROUP 1354

1372 ←

1371 ←

1353 →

FIG. 13A

FIG. 13B

1302 COMMUNICATION APPARATUS

1316 RECEPTION ANTENNA GROUP

1354 TRANSMISSION/RECEPTION ANTENNA GROUP

1313

1314

1352

1371

1353

1315

1351

1372

FIG. 14

FIG. 15

EP 4 518 183 A1

| TRP1 | TDD OR FDD | DL | TDD OR FDD |  | TDD OR FDD | UL | TDD OR FDD |
|---|---|---|---|---|---|---|---|

→ FREQUENCY

| TRP2 | TDD OR FDD | UL | TDD OR FDD |  | TDD OR FDD | DL | TDD OR FDD |
|---|---|---|---|---|---|---|---|

→ FREQUENCY

| NR–UE1 | TDD OR FDD | DL/UL | TDD OR FDD |
|---|---|---|---|

→ FREQUENCY

| NR–UE2 | TDD OR FDD | DL/UL | TDD OR FDD |
|---|---|---|---|

→ FREQUENCY

| NR–UE3 | TDD OR FDD | DL/UL | TDD OR FDD |
|---|---|---|---|

→ FREQUENCY

FIRST FREQUENCY (BAND) 1201

SECOND FREQUENCY (BAND) 1202

FIG. 16A

EP 4 518 183 A1

TRP

1252

FRAME (ADDRESSED TO NR-UE 2)

TIME

1262

NR-UE2

FRAME (ADDRESSED TO TRP 1)

TIME

SECOND TIME

FIG. 16B

TRP

1252

FRAME (ADDRESSED TO NR-UE 2)

TIME

1262

NR-UE2

FRAME (ADDRESSED TO TRP 1)

TIME

SECOND TIME

FIG. 16C

EP 4 518 183 A1

EP 4 518 183 A1

1252

TRP | FRAME (ADDRESSED TO NR-UE 2) |

→ TIME

1262

NR-UE2 | FRAME (ADDRESSED TO TRP 1) |

→ TIME

SECOND TIME

FIG. 16D

EP 4 518 183 A1

TRP

1252

FRAME (ADDRESSED TO NR-UE 2)

→ TIME

1262

NR-UE2

FRAME (ADDRESSED TO TRP 1)

→ TIME

SECOND TIME

FIG. 16E

FIG. 16F

EP 4 518 183 A1

TRP2     1253

FRAME (ADDRESSED TO NR-UE 3)

TIME

NR-UE3     1263

FRAME (ADDRESSED TO TRP)

TIME

THIRD TIME

FIG. 16G

EP 4 518 183 A1

1253

TRP2

FRAME (ADDRESSED TO NR-UE 3)

TIME

1263

NR-UE3

FRAME (ADDRESSED TO TRP)

TIME

THIRD TIME

FIG. 16H

TRP2 | FRAME (ADDRESSED TO NR-UE 3) — 1253

→ TIME

NR-UE3 | FRAME (ADDRESSED TO TRP) — 1263

→ TIME

THIRD TIME

FIG. 16I

EP 4 518 183 A1

TRP2

1253

FRAME (ADDRESSED TO NR-UE 3)

TIME

1263

NR-UE3

FRAME (ADDRESSED TO TRP)

TIME

THIRD TIME

FIG. 16J

EP 4 518 183 A1

1253

TRP2

FRAME (ADDRESSED TO NR-UE 3)

TIME

1263

NR-UE3

FRAME (ADDRESSED TO TRP)

TIME

THIRD TIME

FIG. 16K

EP 4 518 183 A1

| TRP1 | | | | | | |
|---|---|---|---|---|---|---|
| | TDD OR FDD | DL | TDD OR FDD | TDD OR FDD | UL | TDD OR FDD |

→ FREQUENCY

| TRP2 | | | |
|---|---|---|---|
| TDD OR FDD | UL | TDD OR FDD | |

| TDD OR FDD | DL | TDD OR FDD |
|---|---|---|

→ FREQUENCY

| NR- UE1 | | |
|---|---|---|
| TDD OR FDD | DL/UL | TDD OR FDD |

→ FREQUENCY

| NR- UE2 | | |
|---|---|---|
| TDD OR FDD | DL/UL | TDD OR FDD |

→ FREQUENCY

| NR- UE3 | | |
|---|---|---|
| TDD OR FDD | DL/UL | TDD OR FDD |

→ FREQUENCY

FIRST FREQUENCY
(BAND)
1201

SECOND FREQUENCY
(BAND)
1202

THIRD FREQUENCY
(BAND)
1203

FIG. 17

EP 4 518 183 A1

| TRP1 | TDD OR FDD | DL/UL | TDD OR FDD |
|------|------------|-------|------------|

→ FREQUENCY

| TRP2 | TDD OR FDD | DL/UL | TDD OR FDD |
|------|------------|-------|------------|

→ FREQUENCY

| NR-UE1 | TDD OR FDD | DL/UL | TDD OR FDD |
|--------|------------|-------|------------|

→ FREQUENCY

| NR-UE2 | TDD OR FDD | DL/UL | TDD OR FDD |
|--------|------------|-------|------------|

→ FREQUENCY

| NR-UE3 | TDD OR FDD | DL/UL | TDD OR FDD |
|--------|------------|-------|------------|

→ FREQUENCY

FIRST FREQUENCY
(BAND)
1201

FIG. 18

FIG. 19

FIG. 20A

EP 4 518 183 A1

FIG. 20B

FIG. 20C

TRP X

2002  REFERENCE SYMBOL

2003  DATA SYMBOL

TIME

TRP Y

2021  CONTROL SYMBOL

TIME

NR-UE Z

2041  CONTROL SYMBOL

2042  REFERENCE SYMBOL

2043  DATA SYMBOL

TIME

FIRST TIME | SECOND TIME | THIRD TIME | FOURTH TIME

EP 4 518 183 A1

135

FIG. 21

TRP1

TDD OR FDD | DL/UL | TDD OR FDD

FREQUENCY

TRP2

TDD OR FDD

FREQUENCY

NR-UE1

TDD OR FDD | DL/UL | TDD OR FDD

FREQUENCY

FIRST FREQUENCY (BAND) 1201

SECOND FREQUENCY (BAND) 1202

FIG. 22

| TRP1 | TDD OR FDD | DL/UL | TDD OR FDD |
|---|---|---|---|

→ FREQUENCY

| NR-UE1 | TDD OR FDD | DL/UL | TDD OR FDD |
|---|---|---|---|

→ FREQUENCY

FIRST FREQUENCY (BAND)
1201

FIG. 23A

TRP2

TDD OR FDD

FREQUENCY

NR-UE1

TDD OR FDD

FREQUENCY

FIRST FREQUENCY (BAND)
1201

FIG. 23B

EP 4 518 183 A1

139

FIG. 23C

EP 4 518 183 A1

NR-UE

2401_1

FIRST FRAME OF UPLINK
MODULATION SIGNAL
USING FREQUENCY
(BAND) A

2401_2

SECOND FRAME OF
UPLINK MODULATION
SIGNAL USING
FREQUENCY (BAND) A

→ TIME

TRP

2411_1

FIRST FRAME OF
DOWNLINK MODULATION
SIGNAL USING
FREQUENCY (BAND) A

2411_2

SECOND FRAME OF
DOWNLINK MODULATION
SIGNAL USING
FREQUENCY (BAND) A

→ TIME

| FIRST TIME | SECOND TIME | THIRD TIME | FOURTH TIME |

FIG. 24

FIG. 25A

NR-UE

2501_1
FIRST FRAME OF UPLINK MODULATION SIGNAL USING FREQUENCY (BAND) A

2501_2
SECOND FRAME OF UPLINK MODULATION SIGNAL USING FREQUENCY (BAND) A

TIME

TRP

2511_1
FIRST FRAME OF DOWNLINK MODULATION SIGNAL USING FREQUENCY (BAND) B

2511_2
SECOND FRAME OF DOWNLINK MODULATION SIGNAL USING FREQUENCY (BAND) B

TIME

FIRST TIME

SECOND TIME

THIRD TIME

FOURTH TIME

NR-UE

2501_1

FIRST FRAME OF UPLINK MODULATION SIGNAL
USING FREQUENCY (BAND) A

TIME

TRP

2511_1

FIRST FRAME OF DOWNLINK MODULATION SIGNAL
USING FREQUENCY (BAND) B

TIME

FIRST TIME

FIG. 25B

NR-UE

2501_1

FIRST FRAME OF UPLINK MODULATION
SIGNAL USING FREQUENCY (BAND) A

TIME

TRP

2511_1

FIRST FRAME OF DOWNLINK MODULATION SIGNAL
USING FREQUENCY (BAND) B

TIME

FIRST TIME

FIG. 25C

EP 4 518 183 A1

NR-UE

2501_1

FIRST FRAME OF UPLINK MODULATION SIGNAL
USING FREQUENCY (BAND) A

→ TIME

2511_1

TRP

FIRST FRAME OF DOWNLINK MODULATION
SIGNAL USING FREQUENCY (BAND) B

→ TIME

FIRST TIME

FIG. 25D

FIG. 26

| | | | |
|---|---|---|---|
| TRP1 | TDD OR FDD | DL | TDD OR FDD |

FREQUENCY

| | | | |
|---|---|---|---|
| TRP2 | TDD OR FDD | UL | TDD OR FDD |

FREQUENCY

| | | | |
|---|---|---|---|
| NR-UE1 | TDD OR FDD | DL/UL | TDD OR FDD |

FREQUENCY

| | | | |
|---|---|---|---|
| NR-UE4 | TDD OR FDD | DL/UL | TDD OR FDD |

FREQUENCY

| | | | |
|---|---|---|---|
| NR-UE5 | TDD OR FDD | DL/UL | TDD OR FDD |

FREQUENCY

FIRST FREQUENCY
(BAND)
1201

FIG. 27A

EP 4 518 183 A1

FIG. 27B

DOWNLINK

2751

DOWNLINK MODULATION SIGNAL PRESENCE SECTION

TIME

2761

UPLINK

UPLINK MODULATION SIGNAL PRESENCE SECTION

TIME

FIRST TIME

FIG. 27C

EP 4 518 183 A1

2751

DOWNLINK | DOWNLINK MODULATION SIGNAL PRESENCE SECTION

TIME

2761

UPLINK | UPLINK MODULATION SIGNAL PRESENCE SECTION

TIME

FIRST TIME

FIG. 27D

EP 4 518 183 A1

DOWNLINK

2751

DOWNLINK MODULATION
SIGNAL PRESENCE SECTION

TIME

2761

UPLINK

UPLINK MODULATION SIGNAL
PRESENCE SECTION

TIME

FIRST TIME

FIG. 27E

FIG. 27F

FIG. 28

EP 4 518 183 A1

FIG. 29

EP 4 518 183 A1

FIRST FREQUENCY
(BAND)

3001_1

MODULATION SIGNAL ADDRESSED
TO NR-UE 1

TIME

FIRST FREQUENCY
(BAND)

3001_2

MODULATION SIGNAL ADDRESSED
TO NR-UE 2

TIME

FIRST TIME

FIG. 30A

EP 4 518 183 A1

FIRST FREQUENCY
(BAND)

3001_1

MODULATION SIGNAL ADDRESSED TO NR-UE 1

TIME

FIRST FREQUENCY
(BAND)

3001_2

MODULATION SIGNAL ADDRESSED TO NR-UE 2

TIME

FIRST TIME

FIG. 30B

EP 4 518 183 A1

FIRST FREQUENCY
(BAND)

3001_1

| MODULATION SIGNAL ADDRESSED TO NR-UE 1 |

TIME

FIRST FREQUENCY
(BAND)

3001_2

| MODULATION SIGNAL ADDRESSED TO NR-UE 2 |

TIME

FIRST TIME

FIG. 30C

3001_1

FIRST FREQUENCY
(BAND)

MODULATION SIGNAL ADDRESSED
TO NR-UE 1

TIME

3001_2

FIRST FREQUENCY
(BAND)

MODULATION SIGNAL ADDRESSED TO NR-UE 2

TIME

FIRST TIME

FIG. 30D

FIG. 30E

EP 4 518 183 A1

EP 4 518 183 A1

FIRST FREQUENCY
(BAND)

3001_1

| MODULATION SIGNAL
ADDRESSED TO NR-UE 1 |

→ TIME

FIRST FREQUENCY
(BAND)

3001_4

| MODULATION SIGNAL
ADDRESSED TO NR-UE 4 |

→ TIME

FIRST TIME

SECOND TIME

FIG. 31A

3001_1

MODULATION SIGNAL
ADDRESSED TO NR-UE 1

→ FREQUENCY

3001_4

MODULATION SIGNAL
ADDRESSED TO NR-UE 4

→ FREQUENCY

FIRST FREQUENCY
(BAND) 1201

SECOND FREQUENCY
(BAND) 1202

FIG. 31B

FIG. 32A

FIRST FREQUENCY
(BAND)

3201_1

MODULATION SIGNAL TRANSMITTED BY NR-UE 1

TIME

3201_3

FIRST FREQUENCY
(BAND)

MODULATION SIGNAL
TRANSMITTED BY NR-UE 3

TIME

FIRST TIME

FIG. 32B

EP 4 518 183 A1

EP 4 518 183 A1

FIRST FREQUENCY
(BAND)

3201_1

| MODULATION SIGNAL TRANSMITTED BY NR-UE 1 |

→ TIME

FIRST FREQUENCY
(BAND)

3201_3

| MODULATION SIGNAL TRANSMITTED BY NR-UE 3 |

→ TIME

FIRST TIME

FIG. 32C

EP 4 518 183 A1

FIRST FREQUENCY
(BAND)

3201_1

MODULATION SIGNAL
TRANSMITTED BY NR-UE 1

TIME

FIRST FREQUENCY
(BAND)

3201_3

MODULATION SIGNAL TRANSMITTED BY NR-UE 3

TIME

FIRST TIME

FIG. 32D

EP 4 518 183 A1

FIRST FREQUENCY
(BAND)

3201_1

| MODULATION SIGNAL TRANSMITTED BY NR-UE 1 |

TIME

FIRST FREQUENCY
(BAND)

3201_3

| MODULATION SIGNAL TRANSMITTED BY NR-UE 3 |

TIME

FIRST TIME

FIG. 32E

EP 4 518 183 A1

FIRST FREQUENCY
(BAND)

3201_1

| MODULATION SIGNAL TRANSMITTED BY NR-UE 1 |

——————————————————————————————→ TIME

FIRST FREQUENCY
(BAND)

3201_5

| MODULATION SIGNAL TRANSMITTED BY NR-UE 5 |

——————————————————————————————→ TIME

|←————— FIRST TIME —————→|  |←————— SECOND TIME —————→|

FIG. 33A

EP 4 518 183 A1

FIG. 33B

FIG. 34A

TRP1

| TDD OR FDD | DL | TDD OR FDD |

→ FREQUENCY

TRP2

| TDD OR FDD | UL | TDD OR FDD |

→ FREQUENCY

NR-UE1

| TDD OR FDD | DL/UL | TDD OR FDD |

→ FREQUENCY

FIRST FREQUENCY
(BAND) 1201

FIG. 34B

EP 4 518 183 A1

FIG. 35A

TRP1

| TDD OR FDD | UL | TDD OR FDD |

⟶ FREQUENCY

TRP2

| TDD OR FDD | DL | TDD OR FDD |

⟶ FREQUENCY

NR-UE1

| TDD OR FDD | DL/UL | TDD OR FDD |

⟶ FREQUENCY

FIRST FREQUENCY
(BAND) 1201

FIG. 35B

TRP1

3601_1

SIGNAL TRANSMISSION
ADDRESSED TO NR-UE 1

→ TIME

NR-UE1

3611_1

SIGNAL TRANSMISSION
ADDRESSED TO TRP 2

3611_2

SIGNAL TRANSMISSION
ADDRESSED TO TRP 1

→ TIME

TRP2

3621_2

SIGNAL TRANSMISSION
ADDRESSED TO NR-UE 1

→ TIME

FIRST TIME

SECOND TIME

FIG. 36A

TRP X

3681

| SIGNAL TRANSMISSION ADDRESSED TO NR-UE 1 |

→ TIME

NR-UE1

3691

| SIGNAL TRANSMISSION ADDRESSED TO TRP Y |

→ TIME

←————————— Z-th TIME —————————→

FIG. 36B

FIG. 36C

EP 4 518 183 A1

EP 4 518 183 A1

3681

TRP X

SIGNAL TRANSMISSION
ADDRESSED TO NR-UE 1

→ TIME

3691

NR-UE1

SIGNAL TRANSMISSION ADDRESSED TO TRP Y

→ TIME

←——————— Z-th TIME ———————→

FIG. 36D

EP 4 518 183 A1

TRP X

SIGNAL TRANSMISSION ADDRESSED TO NR-UE 1

3681

TIME

NR-UE1

SIGNAL TRANSMISSION
ADDRESSED TO TRP Y

3691

TIME

Z-th TIME

FIG. 36E

FIG. 37A

TRP1

| TDD OR FDD | DL/UL | TDD OR FDD |
|---|---|---|

→ FREQUENCY

TRP2

→ FREQUENCY

NR-UE1

| TDD OR FDD | DL/UL | TDD OR FDD |
|---|---|---|

→ FREQUENCY

FIRST FREQUENCY
(BAND) 1201

FIG. 37B

TRP1

| TDD OR FDD | DL/UL | TDD OR FDD |

→ FREQUENCY

TRP2

TDD OR FDD

→ FREQUENCY

NR-UE1

| TDD OR FDD | DL/UL | | TDD OR FDD |

→ FREQUENCY

FIRST
FREQUENCY
(BAND) 1201

SECOND
FREQUENCY
(BAND) 1202

FIG. 37C

EP 4 518 183 A1

FIG. 38A

TRP1

→ FREQUENCY

TRP2

| TDD OR FDD | DL/UL | TDD OR FDD |

→ FREQUENCY

NR-UE1

| TDD OR FDD | DL/UL | TDD OR FDD |

→ FREQUENCY

FIRST FREQUENCY
(BAND) 1201

FIG. 38B

182

FIG. 38C

EP 4 518 183 A1

FIG. 39A

EP 4 518 183 A1

EP 4 518 183 A1

3981

TRP X

SIGNAL TRANSMISSION ADDRESSED TO NR-UE 1

TIME

3991

NR-UE1

SIGNAL TRANSMISSION ADDRESSED TO TRP X

TIME

Z-th TIME

FIG. 39B

EP 4 518 183 A1

TRP X

3981

SIGNAL TRANSMISSION ADDRESSED TO NR-UE 1

TIME

NR-UE1

3991

SIGNAL TRANSMISSION ADDRESSED TO TRP X

TIME

Z-th TIME

FIG. 39C

3981

TRP X

SIGNAL TRANSMISSION
ADDRESSED TO NR-UE 1

→ TIME

3991

NR-UE1

SIGNAL TRANSMISSION ADDRESSED TO TRP X

→ TIME

Z-th TIME

FIG. 39D

TRP X

SIGNAL TRANSMISSION ADDRESSED TO NR-UE 1

3981

TIME

NR-UE1

SIGNAL TRANSMISSION
ADDRESSED TO TRP X

3991

TIME

Z-th TIME

FIG. 39E

FIG. 40A

EP 4 518 183 A1

|  | | |
|---|---|---|
| TRP1 | TDD OR FDD | TDD OR FDD | TDD OR FDD |

→ FREQUENCY

| TRP2 | TDD OR FDD | TDD OR FDD | TDD OR FDD |

→ FREQUENCY

| NR-UE1 | TDD OR FDD | TDD OR FDD | TDD OR FDD |

→ FREQUENCY

FIRST FREQUENCY
(BAND) 1201

FIG. 40B

FIG. 41A

FIG. 41B

TRP1

3601_1 — SIGNAL TRANSMISSION ADDRESSED TO NR-UE 1

4101_2 — TDD OR FDD

TIME

NR-UE1

3611_1 — SIGNAL TRANSMISSION ADDRESSED TO TRP 2

4111_2 — TDD OR FDD

TIME

TRP2

4121_2 — TDD OR FDD

TIME

FIRST TIME

SECOND TIME

FIG. 41C

FIG. 42A

**TRP1**

3601_1
| SIGNAL TRANSMISSION ADDRESSED TO NR-UE 1 |
|---|

→ TIME

**NR-UE1**

| 3611_1 | 4111_2 | 3611_3 |
|---|---|---|
| SIGNAL TRANSMISSION ADDRESSED TO TRP 2 | TDD OR FDD | SIGNAL TRANSMISSION ADDRESSED TO TRP 1 |

→ TIME

**TRP2**

| 4121_2 | 3621_3 |
|---|---|
| TDD OR FDD | SIGNAL TRANSMISSION ADDRESSED TO NR-UE 1 |

→ TIME

|←— FIRST TIME —→| |←— SECOND TIME —→| |←— THIRD TIME —→|

FIG. 42B

**TRP1**

3601_1
SIGNAL TRANSMISSION ADDRESSED TO NR-UE 1

4101_2
TDD OR FDD

→ TIME

**NR-UE1**

3611_1
SIGNAL TRANSMISSION ADDRESSED TO TRP 2

4111_2
TDD OR FDD

3611_3
SIGNAL TRANSMISSION ADDRESSED TO TRP 1

→ TIME

**TRP2**

4121_2
TDD OR FDD

3621_3
SIGNAL TRANSMISSION ADDRESSED TO NR-UE 1

→ TIME

|← FIRST TIME →| |← SECOND TIME →| |← THIRD TIME →|

FIG. 42C

FIG. 43A

EP 4 518 183 A1

| TRP1 | TDD OR FDD | DL | TDD OR FDD |

→ FREQUENCY

| TRP2 | TDD OR FDD | UL | TDD OR FDD |

→ FREQUENCY

| TRP3 | TDD OR FDD | UL | TDD OR FDD |

→ FREQUENCY

| NR-UE1 | TDD OR FDD | DL/UL | TDD OR FDD |

→ FREQUENCY

FIRST
FREQUENCY
(BAND) 1201

FIG. 43B

FIG. 43C

FIG. 44A

| TRP1 | TDD OR FDD | DL | TDD OR FDD |
|------|------------|-----|------------|

→ FREQUENCY

| TRP2 | TDD OR FDD | UL | TDD OR FDD |
|------|------------|-----|------------|

→ FREQUENCY

| TRP3 | TDD OR FDD | DL | TDD OR FDD |
|------|------------|-----|------------|

→ FREQUENCY

| NR-UE1 | TDD OR FDD | DL/UL | TDD OR FDD |
|--------|------------|-------|------------|

→ FREQUENCY

FIRST FREQUENCY
(BAND) 1201

FIG. 44B

EP 4 518 183 A1

NR-UE1

4491_2

MODULATION
SIGNAL ADDRESSED
TO TRP 2

TRP1

4451_1

MODULATION
SIGNAL ADDRESSED
TO NR-UE 1

TIME

TRP3

4451_3

MODULATION
SIGNAL ADDRESSED
TO NR-UE 1

TIME

FIRST TIME

FIG. 44C

FIG. 45A

FIG. 45B

TRP1

4591_1

MODULATION
SIGNAL ADDRESSED
TO NR-UE 1

→ TIME

NR-UE1

4551_1

MODULATION
SIGNAL ADDRESSED
TO TRP 1

→ TIME

NR-UE1

4551_2

MODULATION
SIGNAL ADDRESSED
TO TRP 2

→ TIME

←——— FIRST TIME ———→

FIG. 45C

FIG. 46A

TRP1

| TDD OR FDD | DL/UL | TDD OR FDD |

→ FREQUENCY

TRP2

| TDD OR FDD | DL | TDD OR FDD |

→ FREQUENCY

NR-UE1

| TDD OR FDD | DL/UL | TDD OR FDD |

→ FREQUENCY

FIRST
FREQUENCY
(BAND) 1201

FIG. 46B

FIG. 46C

FIG. 47

| | | | |
|---|---|---|---|
| TRP1 | TDD OR FDD | DL | TDD OR FDD |

→ FREQUENCY

| | | | |
|---|---|---|---|
| TRP2 | TDD OR FDD | UL | TDD OR FDD |

→ FREQUENCY

| | | | |
|---|---|---|---|
| NR-UE1 | TDD OR FDD | DL/UL | TDD OR FDD |

→ FREQUENCY

| | | | |
|---|---|---|---|
| NR-UE2 | TDD OR FDD | DL/UL | TDD OR FDD |

→ FREQUENCY

| | | | |
|---|---|---|---|
| NR-UE3 | TDD OR FDD | DL/UL | TDD OR FDD |

→ FREQUENCY

FIRST FREQUENCY
(BAND) 1201

FIG. 48A

EP 4 518 183 A1

| | | |
|---|---|---|
| TRP1 | DOWNLINK MODULATION SIGNAL TRANSMITTABLE SECTION 4801 | → TIME |
| TRP2 | UPLINK MODULATION SIGNAL RECEIVABLE SECTION 4802 | → TIME |
| NR-UE1 | UPLINK MODULATION SIGNAL TRANSMITTABLE SECTION 4811_1 | → TIME |
| NR-UE2 | UPLINK MODULATION SIGNAL TRANSMITTABLE SECTION 4811_2 | → TIME |
| NR-UE3 | UPLINK MODULATION SIGNAL TRANSMITTABLE SECTION 4811_3 | → TIME |

FIRST TIME

FIG. 48B

FIG. 48C

EP 4 518 183 A1

FIG. 48D

FIG. 48E

FIRST TIME

DOWNLINK MODULATION SIGNAL TRANSMITTABLE SECTION 4801

MODULATION SIGNAL ADDRESSED TO NR-UE 1 4851_1

MODULATION SIGNAL ADDRESSED TO NR-UE 2 4851_2

MODULATION SIGNAL ADDRESSED TO NR-UE 3 4851_3

UPLINK MODULATION SIGNAL TRANSMITTABLE SECTION 4811_1

MODULATION SIGNAL ADDRESSED TO TRP 2 4861_1

UPLINK MODULATION SIGNAL TRANSMITTABLE SECTION 4811_2

MODULATION SIGNAL ADDRESSED TO TRP 2 4861_2

UPLINK MODULATION SIGNAL TRANSMITTABLE SECTION 4811_3

MODULATION SIGNAL ADDRESSED TO TRP 2 4861_3

TRP1

NR-UE1

NR-UE2

NR-UE3

TIME

TIME

TIME

TIME

TIME 1_1

TIME 1_2

TIME 1_3

214

FIG. 49

EP 4 518 183 A1

TRP1

| TDD OR FDD | DL/UL | TDD OR FDD |

→ FREQUENCY

NR-UE1

| TDD OR FDD | DL/UL | TDD OR FDD |

→ FREQUENCY

NR-UE2

| TDD OR FDD | DL/UL | TDD OR FDD |

→ FREQUENCY

NR-UE3

| TDD OR FDD | DL/UL | TDD OR FDD |

→ FREQUENCY

↔
FIRST
FREQUENCY
(BAND) 1201

FIG. 50A

EP 4 518 183 A1

TRP1 | DOWNLINK MODULATION SIGNAL TRANSMITTABLE SECTION 5001

→ TIME

TRP1 | UPLINK MODULATION SIGNAL RECEIVABLE SECTION 5002

→ TIME

NR-UE1 | UPLINK MODULATION SIGNAL TRANSMITTABLE SECTION 5011_1

→ TIME

NR-UE2 | UPLINK MODULATION SIGNAL TRANSMITTABLE SECTION 5011_2

→ TIME

NR-UE3 | UPLINK MODULATION SIGNAL TRANSMITTABLE SECTION 5011_3

→ TIME

←————————————— FIRST TIME —————————————→

FIG. 50B

FIRST TIME

DOWNLINK MODULATION SIGNAL TRANSMITTABLE SECTION 5001

TRP1

| MODULATION SIGNAL ADDRESSED TO NR-UE 1 5051_1 | MODULATION SIGNAL ADDRESSED TO NR-UE 2 5051_2 | MODULATION SIGNAL ADDRESSED TO NR-UE 3 5051_3 |

TIME

UPLINK MODULATION SIGNAL TRANSMITTABLE SECTION 5011_1

NR-UE1

MODULATION SIGNAL ADDRESSED TO TRP 1 5061_1

TIME

UPLINK MODULATION SIGNAL TRANSMITTABLE SECTION 5011_2

NR-UE2

MODULATION SIGNAL ADDRESSED TO TRP 1 5061_2

TIME

UPLINK MODULATION SIGNAL TRANSMITTABLE SECTION 5011_3

NR-UE3

MODULATION SIGNAL ADDRESSED TO TRP 1 5061_3

TIME

TIME 1_1    TIME 1_2    TIME 1_3

FIG. 50C

FIG. 50D

FIRST TIME

DOWNLINK MODULATION SIGNAL TRANSMITTABLE SECTION 5001

TRP1

| MODULATION SIGNAL ADDRESSED TO NR-UE 1 5051_1 | MODULATION SIGNAL ADDRESSED TO NR-UE 2 5051_2 | MODULATION SIGNAL ADDRESSED TO NR-UE 3 5051_3 |

TIME

UPLINK MODULATION SIGNAL TRANSMITTABLE SECTION 5011_1

NR-UE1

MODULATION SIGNAL ADDRESSED TO TRP 1 5061_1

TIME

UPLINK MODULATION SIGNAL TRANSMITTABLE SECTION 5011_2

NR-UE2

MODULATION SIGNAL ADDRESSED TO TRP 1 5061_2

TIME

UPLINK MODULATION SIGNAL TRANSMITTABLE SECTION 5011_3

NR-UE3

MODULATION SIGNAL ADDRESSED TO TRP 1 5061_3

TIME

TIME 1_1     TIME 1_2     TIME 1_3

FIG. 50E

EP 4 518 183 A1

FIG. 51A

FIG. 51B

TRP1

5190_1

SIGNAL TRANSMISSION
ADDRESSED TO NR-UE 1

TIME

NR-UE1

5191_1

SIGNAL TRANSMISSION
ADDRESSED TO TRP 1

TIME

FIRST TIME

FIG. 51C

EP 4 518 183 A1

1101_1

TRP1

5201

NR-UE1

1100_1

FIG. 52A

EP 4 518 183 A1

TRP1

TDD OR FDD

→ FREQUENCY

NR-UE1

TDD OR FDD

→ FREQUENCY

FIRST
FREQUENCY (BAND)
1201

FIG. 52B

EP 4 518 183 A1

TRP1

5290_1

TDD OR FDD

TIME

NR-UE1

5291_1

TDD OR FDD

TIME

SECOND TIME

FIG. 52C

TRP1

FREQUENCY

TDD OR FDD

NR–UE1

FREQUENCY

TDD OR FDD

SECOND FREQUENCY (BAND) 1202

FIG. 52D

227

FIG. 53

FIG. 54A

| TRP1 | TDD OR FDD | DL | TDD OR FDD |
|------|-----------|-----|-----------|

→ FREQUENCY

| TRP2 | TDD OR FDD | UL | TDD OR FDD |
|------|-----------|-----|-----------|

→ FREQUENCY

| NR-UE1 | TDD OR FDD | DL/UL | TDD OR FDD |
|--------|-----------|-------|-----------|

→ FREQUENCY

FIRST
FREQUENCY (BAND)
1201

FIG. 54B

TRP1

5490_1

SIGNAL TRANSMISSION
ADDRESSED TO NR-UE 1

→ TIME

NR-UE1

5491_1

SIGNAL TRANSMISSION
ADDRESSED TO TRP 2

→ TIME

FIRST TIME

FIG. 54C

1101_1

TRP1

1101_2

TRP2

5501

NR-UE1

1100_1

FIG. 55A

EP 4 518 183 A1

TRP1

TDD OR FDD

→ FREQUENCY

NR-UE1

TDD OR FDD

→ FREQUENCY

FIRST
FREQUENCY (BAND)
1201

FIG. 55B

EP 4 518 183 A1

TRP1

5590_1

TDD OR FDD

TIME

NR-UE1

5591_1

TDD OR FDD

TIME

SECOND TIME

FIG. 55C

TRP1

TDD OR FDD

→ FREQUENCY

NR-UE1

TDD OR FDD

→ FREQUENCY

SECOND
FREQUENCY (BAND)
1202

FIG. 55D

FIG. 55E

TRP2

TDD OR FDD

→ FREQUENCY

NR–UE1

TDD OR FDD

→ FREQUENCY

FIRST
FREQUENCY (BAND)
1201

FIG. 55F

EP 4 518 183 A1

TRP2

5590_2

TDD OR FDD

TIME

NR-UE1

5590_1

TDD OR FDD

TIME

SECOND TIME

FIG. 55G

TRP2

TDD OR FDD

FREQUENCY

NR–UE1

TDD OR FDD

FREQUENCY

SECOND
FREQUENCY (BAND)
1202

FIG. 55H

EP 4 518 183 A1

FIG. 55I

TRP1

FREQUENCY

TDD OR FDD

TRP2

FREQUENCY

TDD OR FDD

NR‑UE1

FREQUENCY

TDD OR FDD

FIRST
FREQUENCY (BAND)
1201

FIG. 55J

FIG. 55K

TRP1

TDD OR FDD

FREQUENCY

TRP2

TDD OR FDD

FREQUENCY

NR–UE1

TDD OR FDD

FREQUENCY

SECOND
FREQUENCY (BAND)
1202

FIG. 55L

EP 4 518 183 A1

TRP1

5601_1
CONTROL
SIGNAL

5602_1
REFERENCE
SIGNAL

TIME

NR-UE1

5613_1_1
UPLINK FRAME

TIME

TIME 1    TIME 2    TIME 3

FIG. 56A

TRP1

NR-UE1

TIME

TIME

5602_1

REFERENCE SIGNAL

5601_1

CONTROL SIGNAL

5613_1_3

UPLINK FRAME

5613_1_2

UPLINK FRAME

TIME 1

TIME 2

TIME 3

TIME 4

FIG. 56B

FIG. 57

EP 4 518 183 A1

5801_1_1

5802_1_1

5803_1_1

TRP1

| CONTROL SIGNAL | REFERENCE SIGNAL | DOWNLINK FRAME |

TIME

5813_1_1

| UPLINK FRAME |

NR-UE1

TIME

TIME 1    TIME 2    TIME 3

FIG. 58A

FIG. 58B

FIG. 58C

EP 4 518 183 A1

5803_1_3

5801_1_3

5803_1_4

TRP1

DOWNLINK FRAME

CONTROL
SIGNAL

DOWNLINK FRAME

→ TIME

5811_1_3

5813_1_4

NR-UE1  5813_1_3

UPLINK FRAME

CONTROL
SIGNAL

UPLINK FRAME

→ TIME

TIME 1

TIME 2

TIME 3

FIG. 58D

FIG. 58E

FIG. 59A

EP 4 518 183 A1

FIG. 59B

EP 4 518 183 A1

FIG. 59C

TRP1

5902_1_2 REFERENCE SIGNAL

5901_1_2 CONTROL SIGNAL

5921_1_2 CONTROL SIGNAL

5921_1_3 CONTROL SIGNAL

5903_1_2 DOWNLINK FRAME

TIME

TRP2

TIME

NR-UE1

5912_1_2 REFERENCE SIGNAL

5911_1_2 CONTROL SIGNAL

5913_1_2 UPLINK FRAME

TIME

TIME 1  TIME 2  TIME 3  TIME 4  TIME 5  TIME 6  TIME 7

FIG. 59D

*When base station is in open loop, texts in blue are described. When base station is in closed loop, texts in red are described.

FIG. 59E

EP 4 518 183 A1

## INTERNATIONAL SEARCH REPORT

International application No.

**PCT/JP2023/008142**

### A. CLASSIFICATION OF SUBJECT MATTER

*H04B 7/08*(2006.01)i; *H04B 7/06*(2006.01)i; *H04L 5/02*(2006.01)i; *H04W 16/28*(2009.01)i; *H04W 88/02*(2009.01)i
FI: H04B7/08 800; H04B7/06 950; H04L5/02; H04W16/28; H04W88/02 140

According to International Patent Classification (IPC) or to both national classification and IPC

### B. FIELDS SEARCHED

Minimum documentation searched (classification system followed by classification symbols)

H04B7/08; H04B7/06; H04L5/02; H04W16/28; H04W88/02

Documentation searched other than minimum documentation to the extent that such documents are included in the fields searched

Published examined utility model applications of Japan 1922-1996
Published unexamined utility model applications of Japan 1971-2023
Registered utility model specifications of Japan 1996-2023
Published registered utility model applications of Japan 1994-2023

Electronic data base consulted during the international search (name of data base and, where practicable, search terms used)

3GPP TSG RAN WG1-4, SA WG1-4, CT WG1, 4

### C. DOCUMENTS CONSIDERED TO BE RELEVANT

| Category* | Citation of document, with indication, where appropriate, of the relevant passages | Relevant to claim No. |
|---|---|---|
| X | WO 2020/243018 A1 (QUALCOMM INCORPORATED) 03 December 2020 (2020-12-03) paragraphs [0051]-[0207], fig. 3 | 1-3, 6 |
| Y | | 4-5 |
| Y | JP 2013-4997 A (SHARP CORPORATION) 07 January 2013 (2013-01-07) paragraphs [0036]-[0090] | 4-5 |
| A | INTEL CORPORATION. Multi-TRP enhancements for beam management [online]. 3GPP TSG RAN WG1 #107-e R1-2111479. 06 November 2021, [retrieved on 09 May 2023], Internet <URL: https://www.3gpp.org/ftp/tsg_ran/WG1_RL1/TSGR1_107-e/Docs/R1-2111479.zip> section 1-3 | 1-6 |
| A | SONY. Enhancements on beam management for multi-TRP [online]. 3GPP TSG RAN WG1 #106b-e R1-2109774. 01 October 2021, [retrieved on 09 May 2023], Internet <URL: https://www.3gpp.org/ftp/tsg_ran/WG1_RL1/TSGR1_106b-e/Docs/R1-2109774.zip> section 1-5 | 1-6 |

☑ Further documents are listed in the continuation of Box C. ☑ See patent family annex.

| | | | |
|---|---|---|---|
| * | Special categories of cited documents: | "T" | later document published after the international filing date or priority date and not in conflict with the application but cited to understand the principle or theory underlying the invention |
| "A" | document defining the general state of the art which is not considered to be of particular relevance | | |
| "E" | earlier application or patent but published on or after the international filing date | "X" | document of particular relevance; the claimed invention cannot be considered novel or cannot be considered to involve an inventive step when the document is taken alone |
| "L" | document which may throw doubts on priority claim(s) or which is cited to establish the publication date of another citation or other special reason (as specified) | "Y" | document of particular relevance; the claimed invention cannot be considered to involve an inventive step when the document is combined with one or more other such documents, such combination being obvious to a person skilled in the art |
| "O" | document referring to an oral disclosure, use, exhibition or other means | | |
| "P" | document published prior to the international filing date but later than the priority date claimed | "&" | document member of the same patent family |

| Date of the actual completion of the international search | Date of mailing of the international search report |
|---|---|
| **09 May 2023** | **16 May 2023** |

| Name and mailing address of the ISA/JP | Authorized officer |
|---|---|
| **Japan Patent Office (ISA/JP)**<br>**3-4-3 Kasumigaseki, Chiyoda-ku, Tokyo 100-8915**<br>**Japan** | |
| | Telephone No. |

Form PCT/ISA/210 (second sheet) (January 2015)

**INTERNATIONAL SEARCH REPORT**

| International application No. |
|---|
| **PCT/JP2023/008142** |

| C. | DOCUMENTS CONSIDERED TO BE RELEVANT | | |
|---|---|---|---|
| Category* | Citation of document, with indication, where appropriate, of the relevant passages | | Relevant to claim No. |
| A | ZTE. Enhancements on beam management for multi-TRP [online]. 3GPP TSG RAN WG1 #106b-e R1-2108873. 01 October 2021, [retrieved on 09 May 2023], Internet <URL: https://www.3gpp.org/ftp/tsg_ran/WG1_RL1/TSGR1_106b-e/Docs/R1-2108873.zip> section 1-4 | | 1-6 |
| A | 秋元陽介, 標準化の概要(Rel.17の動向およびRel.18/5G-Advancedへの展望) Part1(下位レイヤ/RAN1), 電子情報通信学会2022年総合大会講演論文集 通信1, 01 March 2022, SS-17 to SS-20, ISSN: 1349-1369, (Proceedings of the 2022 IEICE General Conference.), non-official translation (AKIMOTO, Yosuke. Outline of Standardization (Trends of Rel.17 and Prospects for Rel.18/5G-Advanced) Part1 (Lower Layer/RAN1).) particularly, section 4.2 複信方式の改善, fig. 4, non-official translation (Improved duplexing) | | 1-6 |

Form PCT/ISA/210 (second sheet) (January 2015)

INTERNATIONAL SEARCH REPORT
Information on patent family members

International application No.

**PCT/JP2023/008142**

| Patent document cited in search report | Publication date (day/month/year) | Patent family member(s) | Publication date (day/month/year) |
|---|---|---|---|
| WO 2020/243018 A1 | 03 December 2020 | JP 2022-534946 A paragraphs [0040]-[0196], fig. 3 US 10608678 B1 CN 113826336 A KR 10-2022-0015389 A | |
| JP 2013-4997 A | 07 January 2013 | (Family: none) | |

Form PCT/ISA/210 (patent family annex) (January 2015)

**EP 4 518 183 A1**

## REFERENCES CITED IN THE DESCRIPTION

*This list of references cited by the applicant is for the reader's convenience only. It does not form part of the European patent document. Even though great care has been taken in compiling the references, errors or omissions cannot be excluded and the EPO disclaims all liability in this regard.*

**Patent documents cited in the description**

- JP 2018152723 W
- JP 2022071808 A